(19)

Europäisches
Patentamt
European
Patent Office
Office européen
des brevets

(11)  **EP 3 664 064 A1**

(12)  **EUROPEAN PATENT APPLICATION**
published in accordance with Art. 153(4) EPC

(43) Date of publication:
**10.06.2020  Bulletin 2020/24**

(21) Application number: **18841063.3**

(22) Date of filing: **14.06.2018**

(51) Int Cl.:
*G08G 1/16* (2006.01)       *B60Q 1/00* (2006.01)
*B60Q 1/04* (2006.01)       *B60Q 1/14* (2006.01)
*B60Q 1/24* (2006.01)       *B60W 40/02* (2006.01)
*G01S 17/93* (2020.01)

(86) International application number:
**PCT/JP2018/022790**

(87) International publication number:
**WO 2019/026438 (07.02.2019 Gazette 2019/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.08.2017  JP 2017150693
03.08.2017  JP 2017150694
03.08.2017  JP 2017150695
12.10.2017  JP 2017198532
12.10.2017  JP 2017198533
26.10.2017  JP 2017207498**

(71) Applicant: **Koito Manufacturing Co., Ltd.
Tokyo 108-8711 (JP)**

(72) Inventors:
• **KATO Yasuyuki**
  **Shizuoka-shi**
  **Shizuoka 424-8764 (JP)**
• **MATSUMOTO Akinori**
  **Shizuoka-shi**
  **Shizuoka 424-8764 (JP)**
• **KANAMORI Akitaka**
  **Shizuoka-shi**
  **Shizuoka 424-8764 (JP)**
• **YAMAMOTO Teruaki**
  **Shizuoka-shi**
  **Shizuoka 424-8764 (JP)**
• **FUSHIMI Yoshiaki**
  **Shizuoka-shi**
  **Shizuoka 424-8764 (JP)**

(74) Representative: **Grünecker Patent- und
Rechtsanwälte
PartG mbB
Leopoldstraße 4
80802 München (DE)**

(54)  **VEHICULAR LIGHTING SYSTEM, VEHICLE SYSTEM, AND VEHICLE**

(57)      This vehicle system is provided in a vehicle capable of traveling in an autonomous driving mode, and comprises: a sensor configured to acquire detection data indicating the surrounding environment of the vehicle; a generation unit configured to generate surrounding environment information indicating the surrounding environment of the vehicle, on the basis of the detection data; and a frequency-of-use setting unit configured to set the frequency of use of the sensor, on the basis of predetermined information associated with the vehicle or the surrounding environment of the vehicle.

FIG. 2

EP 3 664 064 A1

**Description**

Technical Field

The present disclosure relates to a vehicle lighting system, a vehicle system, and a vehicle. In particular, the present disclosure relates to a vehicle lighting system and a vehicle system that are provided on a vehicle capable of running in an autonomous driving mode. In addition, the present disclosure relates to a vehicle including the vehicle system.

Background Art

Currently, autonomous driving techniques for motor vehicles have vigorously been carried out in several countries, which then triggers studies on making regulations for vehicles (hereinafter, "vehicles" refer to motor vehicles.) to run on a public road in an autonomous driving mode. In the autonomous driving mode, a vehicle system automatically controls the driving of a vehicle. Specifically speaking, in the autonomous driving mode, the vehicle system automatically performs at least one of a steering control (a control for controlling the traveling direction of the vehicle), a brake control, and an accelerator control (controls for controlling the braking, and acceleration or deceleration of the vehicle) based on information indicating the surrounding environment of the vehicle which is obtained from sensors such as a camera, a radar (for example, a laser radar and a millimeter wave radar) and the like. On the other hand, in a manual drive mode which will be described below, as in many conventional-type vehicles, a driver controls the driving of a vehicle. Specifically speaking, in the manual drive mode, the driving of the vehicle is controlled in accordance with various operations (a steering operation, a brake operation, an accelerator operation) performed by the driver, and a vehicle system does not automatically perform the steering control, the brake control, and accelerator control. The driving mode of a vehicle is not an idea existing only for certain types of vehicles but is an idea existing for all types of vehicles including the conventional types of vehicles that do not have an autonomous driving function. The driving mode is classified by vehicle controlling methods or the like.
Thus, in the future, a scene is anticipated to occur in which a vehicle running in the autonomous driving mode (hereinafter, referred to as an "autonomous driving vehicle") and a vehicle running in the manual drive mode (hereinafter, referred to as a "manual driving vehicle") are running together on the same public road.
As an example of an autonomous driving technique, Patent document 1 discloses an automatic distance controlling and tracking driving system in which a following vehicle automatically follows a preceding vehicle while controlling a distance therebetween and tracking the preceding vehicle. In the automatic distance controlling and tracking driving system, the preceding vehicle and the following vehicle both have their own lighting systems, so that text massage is displayed on the lighting system of the preceding vehicle for preventing a third vehicle from cutting in between the preceding and following vehicles, and text message is displayed on the lighting system of the following vehicle, indicating that it is driving in the automatic distance controlling and tracking mode.

CITATION LIST

PATENT DOCUMENT

Patent document 1: JP-A-9-277887

SUMMARY OF INVENTION

TECHNICAL PROBLEM

Incidentally, as the autonomous driving technology has been developing, a problem to be tackled with is how to improve remarkably recognition accuracy with which surrounding environment of a vehicle is recognized. A main object of the present disclosure is to improve recognition accuracy with which surrounding environment of a vehicle is recognized by use of detection data acquired by a plurality of sensors (a camera, a laser radar, a millimeter wave radar, and the like) mounted on the vehicle.

MEANS FOR SOLVING THE PROBLEM

A vehicle system according to one aspect of the present disclosure is provided in a vehicle that is capable of running in an autonomous driving mode.
The vehicle system comprises:

a sensor configured to acquire detection data indicating a surrounding environment of the vehicle;
a generator configured to generate surrounding environment information indicating a surrounding environment of the vehicle, based on the detection data; and
a use frequency setting module configured to set a use frequency for the sensor, based on predetermined information related to the vehicle or surrounding environment of the vehicle.

According to the configuration described above, the use frequency for the sensor is set based on the predetermined information related to the vehicle or the surrounding environment of the vehicle. As a result, not only can the consumed power that is consumed by the sensor and/or the generator (an electronic control unit) be reduced, but also the arithmetic calculation load given to the generator can be reduced by reducing the use frequency of the sensor. Further, since the accuracy of the surrounding environment information can be increased by increasing the use frequency of the sensor, the driving of the vehicle can be controlled with higher accuracy. Consequently, the vehicle system can be provided where the use frequency of the sensor can be optimized based on the conditions of the vehicle or the surrounding environment of the vehicle.

The use frequency setting module may be configured to reduce the use frequency of the sensor based on the predetermined information.

According to the configuration described above, the use frequency of the sensor is reduced based on the predetermined information related to the vehicle or the surrounding environment of the vehicle. As a result, not only can the consumed power that is consumed by the sensor and/or the generator (an electronic control unit) be reduced, but also the arithmetic calculation load given to the generator can be reduced by reducing the use frequency of the sensor.

The use frequency of the sensor may be a frame rate of the detection data, a bit rate of the detection data, a mode of the sensor, or an updating rate of the surrounding environment information.

According to the configuration described above, the frame rate of the detection data, the bit rate of the detection data, the mode (the active mode or the sleep mode) of the sensor, or the updating rate of the surrounding environment information is set based on the predetermined information related to the vehicle or the surrounding environment of the vehicle. In this way, the vehicle system can be provided in which the frame rate of the detection data, the bit rate of the detection data, the mode of the sensor, or the updating rate of the surrounding environment information can be optimized in accordance with the conditions of the vehicle or the surrounding environment of the vehicle.

The predetermined information may include at least one of information indicating brightness of the surrounding environment and information on weather for a current place of the vehicle.

According to the configuration described above, the use frequency of the sensor is set based on at least one of the information indicating the brightness in the surrounding environment of the vehicle and the weather information on the current place of the vehicle. In this way, the vehicle system can be provided in which the use frequency of the sensor can be optimized in accordance with at least one of the brightness in the surrounding environment of the vehicle and the weather at the current place of the vehicle.

The predetermined information may include information indicating a speed of the vehicle.

According to the configuration described above, the use frequency for the sensor is set based on the information indicating the speed of the vehicle. In this way, the vehicle system can be provided in which the use frequency of the sensor can be optimized in accordance with the speed of the vehicle.

The predetermined information may include information indicating that the vehicle is currently running on a highway.

According to the configuration described above, the use frequency of the sensor is set based on the information indicating that the vehicle is running on the highway. In this way, the vehicle system can be provided in which the use frequency of the sensor can be optimized in accordance with the road on which the vehicle is running currently.

The predetermined information may include information indicating a travelling direction of the vehicle.

According to the configuration described above, the use frequency of the sensor is set based on the information indicating the traveling direction of the vehicle. In this way, the vehicle system can be provided in which the use frequency of the sensor can be optimized in accordance with the traveling direction of the vehicle.

The sensor may comprise a plurality of sensors.

a) When the vehicle is moving forward, the use frequency setting module may reduce a use frequency for a sensor disposed at a rear of the vehicle.
b) When the vehicle is moving backward, the use frequency setting module may reduce a use frequency for a sensor disposed at a front of the vehicle.
c) When the vehicle turns right, the use frequency setting module may reduce a use frequency for a sensor disposed on a left-hand side of the vehicle.

According to the configuration described above, the use frequency of the sensor that is disposed at the rear of the vehicle is reduced when the vehicle is moving forward. In this way, for example, by reducing the use frequency of the sensor disposed at the rear of the vehicle, not only can the consumed power that is consumed by the sensor and/or the generator (the electronic control unit) be reduced, but also the arithmetic calculation load given to the generator can be reduced.

In addition, the use frequency of the sensor disposed at the front of the vehicle is reduced when the vehicle is moving backward. In this way, for example, by reducing the use frequency of the sensor disposed at the front of the vehicle, not only can the consumed power that is consumed by the sensor and/or the generator (the electronic control unit) be reduced, but also the arithmetic calculation load given to the generator can be reduced.

Further, the use frequency of the sensor disposed on the left-hand side of the vehicle is reduced when the vehicle turns to the right. In this way, for example, by reducing the use frequency of the sensor that is disposed on the left-hand side of the vehicle, not only can the consumed power that is consumed by the sensor and/or the generator (the electronic control unit) be reduced, but also the arithmetic calculation born by the generator can be reduced.

There is provided a vehicle that is capable of running in an autonomous driving mode, the vehicle comprising the vehicle system.

According to the configuration described above, the vehicle can be provided in which the use frequency of the sensor can be optimized in accordance with the conditions of the vehicle or the surrounding environment of the vehicle.

A vehicle system according to one aspect of the present disclosure is provided in a vehicle that is capable of running in an autonomous driving mode.

The vehicle system comprises:

a first sensor configured to acquire first detection data indicating a surrounding environment of the vehicle at a first frame rate;
a second sensor configured to acquire second detection data indicating a surrounding environment of the vehicle at a second frame rate;
a first generator configured to generate first surrounding environment information indicating a surrounding environment of the vehicle based on the first detection data; and
a second generator configured to generate second surrounding environment information indicating a surrounding environment of the vehicle based on the second detection data,
wherein an acquisition period for each frame of the first detection data and an acquisition period for each frame of the second detection data overlap each other.

According to the configuration described above, the acquisition period for each frame of the first detection data and the acquisition period for each frame of the second detection data overlap each other. As a result, a time band of the first surrounding environment information generated based on each frame of the first detection data substantially coincides with a time band of the second surrounding environment information generated based on each frame of the second detection data. In this way, the recognition accuracy with which the surrounding environment of the vehicle is recognized can be improved by using both the first surrounding environment information and the second surrounding environment information whose time bands substantially coincide with each other.

The first sensor may be a camera, and the second sensor may be a laser radar.

According to the configuration described above, the recognition accuracy with which the surrounding environment of the vehicle is recognized can be improved by using both the first surrounding environment information that is generated based on the first detection data acquired by the camera and the second surrounding environment information that is generated based on the second detection data acquired by the laser radar.

The vehicle system may further comprise:

a lighting unit configured to emit light toward an outside of the vehicle; and
a lighting control module configured to cause the lighting unit to be turned on at a third rate.

The third rate may be the same as the first frame rate, and the lighting unit may be turned on during the acquisition period for each frame of the first detection data.

According to the configuration described above, the lighting unit is turned on or illuminated during the acquisition period for each frame of the first detection data (that is, the image data). In this way, since image data indicating the surrounding environment of the vehicle is acquired by the camera while the lighting unit is illuminated, in the case where the surrounding environment of the vehicle is dark (for example, at night), the generation of a blackout in the image data can preferably be prevented.

The third rate may be a half of the first frame rate.

The lighting unit may be turned off during an acquisition period for a first frame of the first detection data and may be turned on during an acquisition period for a second frame of the first detection data, wherein the second frame is a frame that is acquired subsequent to the first frame by the first sensor.

According to the configuration described above, the lighting unit is turned off during the acquisition period for the first frame of the first detection data (that is, the image data) and is turned on during the acquisition period for the second frame, which is the subsequent frame, of the first detection data. In this way, the camera acquires the image data indicating the surrounding environment of the vehicle while the lighting unit is turned off and acquires the relevant image data while the lighting unit is illuminated. That is, by comparing the image data (the first image data) that is imaged while the lighting unit is turned off and the image data (the second image data) that is imaged while the lighting unit is illuminated, whether the target object existing on the periphery of the vehicle emits light by itself or reflects light can be identified. In this way, the attribute of the target object existing on the periphery of the vehicle can be identified more accurately. Further, by comparing the first image data with the second image data, stray light generated in the second image data can be identified.

An acquisition start time for each frame of the first detection data may coincide with an acquisition start time for each frame of the second detection data.

According to the configuration described above, since the acquisition start time for each frame of the first detection data coincides with the acquisition start time for each frame of the second detection data, a time band of the first surrounding environment information generated based on each frame of the first detection data substantially coincides with a time band of the second surrounding environment information generated based on each frame of the second detection data. In this way, the recognition accuracy with which the surrounding environment of the vehicle is recognized can be improved by using both the first surrounding environment information and the second surrounding environment information whose time bands substantially coincide with each other.

There is provided a vehicle that is capable of running in an autonomous driving mode, the vehicle comprising the vehicle system.

According to the configuration described above, the vehicle can be provided in which the recognition accuracy with which the surrounding environment of the vehicle is recognized can be improved.

A vehicle system according to one aspect of the present disclosure is provided in a vehicle that is capable of running in an autonomous driving mode.

The vehicle system comprises:

a plurality of sensors each configured to acquire detection data indicating a surrounding environment of the vehicle; and
a detection accuracy determination module configured to determine detection accuracies for the plurality of sensors.

According to the configuration described above, the detection accuracies for the plurality of sensors are determined. As a result, for example, in the case where the detection accuracy of a certain sensor continues to be low over a predetermined period of time, the vehicle system can determine that the relevant sensor fails. In addition, the vehicle system can adopt the detection data or the surrounding environment information that is acquired by the sensor whose detection accuracy is high in an overlapping area where detection areas of the plurality of sensors overlap each other. In this way, the vehicle system can be provided in which the recognition accuracy with which the surrounding environment of the vehicle is recognized can be improved.

The vehicle system may further comprise:
a surrounding environment information identification module configured to identify a surrounding environment of the vehicle, based on the plurality of detection data and the detection accuracies for the plurality of sensors.

According to the configuration described above, the surrounding environment of the vehicle is set based on the detection accuracies of the plurality of sensors. In this way, since the surrounding environment of the vehicle is identified in consideration of the detection accuracies of the plurality of sensors, the recognition accuracy with which the surrounding environment of the vehicle is recognized can be improved.

The surrounding environment information identification module may be configured to:

generate a plurality of pieces of surrounding environment information indicating a surrounding environment of the vehicle, based on the plurality of detection data, and
determine surrounding environment information that is adopted in an overlapping area where detection areas of the plurality of sensors overlap each other, based on the detection accuracies for the plurality of sensors.

According to the configuration described above, since the surrounding environment information that is adopted in the overlapping area is determined based on the detection accuracies of the plurality of sensors, the recognition accuracy with which the surrounding environment of the vehicle is recognized can be improved.

The surrounding environment information identification module may be configured to determine detection data that is adopted in an overlapping area where detection areas of the plurality of sensors overlap each other, based on the detection accuracies for the plurality of sensors.

According to the configuration described above, since the detection data that is adopted in the overlapping area is determined based on the detection accuracies of the plurality of sensors, the recognition accuracy with which the surrounding environment of the vehicle is recognized can be improved.

A detection area for a first sensor of the plurality of sensors may be divided into a plurality of partial areas, and the detection accuracy determination module may be configured to determine a detection accuracy for the first sensor in each of the plurality of partial areas.

According to the configuration described above, since the detection accuracy for the first sensor in each of the plurality of partial areas is determined, the detection accuracy for the first sensor can be determined in greater detail in accordance with the partial areas. In this way, the recognition accuracy with which the surrounding environment of the vehicle is recognized can be improved further.

The detection accuracy determination module may be configured to determine the detection accuracies for the plurality of sensors, based on information indicating a current position of the vehicle and map information.

According to the configuration described above, the detection accuracies for the plurality of sensors are determined based on the information indicating the current place of the vehicle and the map information. In this way, the detection accuracies for the plurality of sensors can be determined with relatively high accuracy by making use of the map information.

The vehicle system may further comprise:

a receiver configured to receive, from a traffic infrastructure equipment existing around the vehicle, infrastructure information associated with the traffic infrastructure equipment.

The detection accuracy determination module may be configured to determine the detection accuracies for the plurality of sensors, based on information indicating a current position of the vehicle and the infrastructure information.

According to the configuration described above, the detection accuracies for the plurality of sensors are determined based on the information indicating the current place of the vehicle and the infrastructure information received from the traffic infrastructure equipment. In this way, the detection accuracies for the plurality of sensors can be determined with relatively high accuracy by receiving the infrastructure information from the traffic infrastructure equipment.

The vehicle system may further comprise:

a surrounding environment information identification module configured to identify a surrounding environment of the vehicle, based on the plurality of detection data and the detection accuracies for the plurality of sensors.

The surrounding environment information identification module may be configured to generate a plurality of pieces of surrounding environment information indicating a surrounding environment of the vehicle, based on the plurality of detection data.

The detection accuracy determination module may be configured to determine the detection accuracies for the plurality of sensors by comparing the plurality of pieces of surrounding environment information.

According to the configuration described above, the detection accuracies for the plurality of sensors are determined by comparing the plurality of pieces of surrounding environment information. In this way, the detection accuracies for the plurality of sensors can be determined using the relatively simple method without making use of external information such as the map information or the like.

There is provided a vehicle that is capable of running in an autonomous driving mode, the vehicle comprising the vehicle system.

According to the configuration described above, the vehicle can be provided in which the recognition accuracy with which the surrounding environment of the vehicle is recognized can be improved.

A vehicle system according to one aspect of the present disclosure is provided in a vehicle that is capable of running in an autonomous driving mode.

The vehicle system comprises:

a plurality of sensors each configured to acquire detection data indicating a surrounding environment of the vehicle;
a use priority determination module configured to determine a priority for use among the plurality of sensors, based on predetermined information; and
a surrounding environment identification module configured to identify a surrounding environment of the vehicle, based on the plurality of detection data and the priority for use.

According to the configuration described above, a priority for use among the plurality of sensors is determined based on predetermined information, and a surrounding environment of the vehicle is identified based on the plurality of detection data and the priority for use. Accordingly, the surrounding environment of the vehicle can be identified in consideration of the priority for use among the plurality of sensors, and thus it is possible to provide a vehicle system where recognition accuracy with respect to the surrounding environment of the vehicle can be improved.

The surrounding environment identification module may be configured to:

generate a plurality of pieces of surrounding environment information indicating a surrounding environment of the vehicle, based on the plurality of detection data;

compare the plurality of pieces of surrounding environment information in an overlapping area where detection areas of the plurality of sensors overlap each other; and

determine surrounding environment information that is adopted in the overlapping area based on the priority for use, in the case where the plurality of pieces of surrounding environment information do not coincide with each other.

According to the configuration described above, in the case where the plurality of pieces of surrounding environment information do not coincide with each other or one another, the surrounding environment information that is adopted in the overlapping area is determined based on the use priority among the plurality of sensors, and therefore, the recognition accuracy with which the surrounding environment of the vehicle is recognized can be improved.

The surrounding environment identification module may be configured to:
determine detection data that is adopted in the overlapping area where the detection areas of the plurality of sensors overlap each other, based on the priority for use.

According to the configuration described above, the detection data that is adopted in the overlapping area is determined based on the priority for use among the plurality of sensors, and therefore, the recognition accuracy with which the surrounding environment of the vehicle is recognized can be improved.

The predetermined information may include information indicating brightness in the surrounding environment.

According to the configuration described above, the priority for use among the plurality of sensors is at first determined based on the information indicating the brightness in the surrounding environment of the vehicle and the surrounding environment of the vehicle is then identified based on the plurality of detection data and the priority for use. In this way, since the priority for use is optimized in accordance with the brightness in the surrounding environment of the vehicle, the recognition accuracy with which the surrounding environment of the vehicle is recognized can be improved.

The predetermined information may include information indicating brightness in the surrounding environment and weather information.

According to the configuration described above, the priority for use among the plurality of sensors are at first determined based on the information indicating the brightness in the surrounding environment of the vehicle and the weather information, and the surrounding environment of the vehicle is identified based on the plurality of detection data and the priority for use. In this way, since the activity preference is optimized in accordance with the brightness in the surrounding environment of the vehicle and weather. In this way, since the priority for use is optimized in accordance with the brightness and weather in the surrounding environment of the vehicle, the recognition accuracy with which the surrounding environment of the vehicle is recognized can be improved.

The predetermined information may include information on detection accuracies for the plurality of sensors.

According to the configuration described above, the priority for use among the plurality of sensors is at first determined based on the detection accuracies of the plurality of sensors, and the surrounding environment of the vehicle is then identified based on the plurality of detection data and the priority for use. In this way, since the priority for use is determined in accordance with the detection accuracies of the plurality of sensors, the recognition accuracy with which the surrounding environment of the vehicle is recognized can be improved.

There is provided a vehicle that is capable of running in an autonomous driving mode, the vehicle comprising the vehicle system.

According to the configuration described above, the vehicle can be provided in which the recognition accuracy with which the surrounding environment of the vehicle is recognized can be improved.

A vehicle system according to one aspect of the present disclosure is provided in a vehicle that is capable of running in an autonomous driving mode.

The vehicle system comprises:

a first sensor configured to acquire first detection data indicating a surrounding environment of the vehicle at a first frame rate;

a second sensor configured to acquire second detection data indicating a surrounding environment of the vehicle at a second frame rate;

a first generator configured to generate first surrounding environment information indicating a surrounding environment of the vehicle based on the first detection data; and

a second generator configured to generate second surrounding environment information indicating a surrounding environment of the vehicle based on the second detection data.

An acquisition start time for each frame of the first detection data and an acquisition start time for each frame of the second detection data are different from each other.

According to the configuration described above, the acquisition start time for each frame of the first detection data and the acquisition start time for each frame of the second detection data differ from each other. That is, the second detection data can be acquired during a time band where the first detection data cannot be acquired. As a result, a time band for the first surrounding environment information that is generated based on each frame of the first detection data differs from a time band for the second surrounding environment information that is generated based on each frame of the second detection data. In this way, for example, even though the first frame rate of the first sensor and the second frame rate of the second sensor are low, the number of times of identifying the surrounding environment of the vehicle in the different time bands can be increased by making use of both the first surrounding environment information and the second surrounding environment information (in other words, surrounding environment information can be acquired high densely in terms of time). Consequently, the vehicle system can be provided in which the recognition accuracy with which the surrounding environment of the vehicle is recognized can be improved.

The first sensor may be a camera, and the second sensor may be a laser radar.

According to the configuration described above, even though the first frame rate of the camera and the second frame rate of the laser radar are low, surrounding environment information can be acquired high densely in terms of time. In this way, the vehicle system can be provided in which the recognition accuracy with which the surrounding environment of the vehicle is recognized can be improved.

The vehicle system may further comprise:

a lighting unit configured to emit light towards an outside of the vehicle; and
a lighting control module configured to cause the lighting unit to be turned on at a third rate.

The third rate may be the same as the first frame rate.

The lighting unit may be turned on during an acquisition period for each frame of the first detection data and may be turned off during an acquisition period for each frame of the second detection data.

According to the configuration described above, the lighting unit is turned on or illuminated during the acquisition period for each frame of the first detection data (that is, the image data) and is turned off during the acquisition period for each frame of the second detection data. In this way, since the image data indicating the surrounding environment of the vehicle is acquired by the camera while the lighting unit is illuminated, in the case where the surrounding environment of the vehicle is dark (for example, at night), the generation of a blackout in the image data can preferably be prevented. On the other hand, since the second detection data indicating the surrounding environment of the vehicle is acquired by the laser radar while the lighting unit is turned off, part of light emitted from the lighting unit is incident on the laser radar, the second detection data can preferably be prevented from being affected badly.

The third rate may be a half of the first frame rate.

The lighting unit may be turned on during an acquisition period for a first frame of the first detection data and may be turned off during an acquisition period for a second frame of the first detection data.

The second frame may be a frame that is acquired subsequent to the first frame by the first sensor.

According to the configuration described above, the lighting unit is turned on or illuminated during the acquisition period for the first frame of the first detection data (the image data) and is turned off during the acquisition period for the second frame, which constitutes a subsequent frame, of the first detection data. In this way, the camera acquires image data indicating the surrounding environment of the vehicle and acquires the relevant image data while the lighting unit is kept turned off. That is, by comparing the image data (the first image data) that is imaged while the lighting unit is turned off and the image data (the second image data) that is imaged while the lighting unit is illuminated, whether the target object existing on the periphery of the vehicle emits light by itself or reflects light can be identified. In this way, the attribute of the target object existing on the periphery of the vehicle can be identified more accurately. Further, by comparing the first image data with the second image data, stray light generated in the second image data can be identified.

The second sensor may be configured to acquire the second detection data at least during a first period defined between an acquisition end time for a first frame of the first detection data and an acquisition start time for a second frame of the first detection data, wherein the second frame is a frame that is acquired subsequent to the first frame by the first sensor.

According to the configuration described above, the second detection data is acquired during the first period that is defined between the acquisition end time for the first frame of the first detection data and the acquisition start time for the second frame, which constitutes the subsequent frame, of the first detection data. In this way, even though the first frame rate of the first sensor and the second frame rate of the second sensor are low, surrounding environment information can be acquired high densely in terms of time.

An interval between an acquisition start time for a first frame of the second detection data that is acquired at least during the first period and an acquisition start time for a first frame of the first detection data may be greater than a half of an acquisition period for a first frame of the first detection data and is smaller than an acquisition period for the first detection data.

According to the configuration described above, the interval between the acquisition start time for the first frame of the second detection data and the acquisition start time for the first frame of the first detection data is greater than a half of the acquisition period for the first frame of the first detection data and is smaller than the acquisition period of the first detection data. In this way, even though the first frame rate of the first sensor and the second frame rate of the second sensor are low, surrounding environment information can be acquired highly densely in terms of time.

There is provided a vehicle that is capable of running in an autonomous driving mode, the vehicle comprising the vehicle system.

According to the configuration described above, the vehicle can be provided in which the recognition accuracy with which the surrounding environment of the vehicle is recognized can be improved.

A vehicle system according to one aspect of the present disclosure is provided in a vehicle that is capable of running in an autonomous driving mode.

The vehicle system comprises:

a first sensing system comprising:

a plurality of first sensors each disposed in a first area of the vehicle and configured to acquire first detection data indicating a surrounding environment of the vehicle; and
a first control unit configured to generate first surrounding environment information indicating a surrounding environment of the vehicle in a first peripheral area of the vehicle, based on the first detection data;
a second sensing system comprising:

a plurality of second sensors each disposed in a second area of the vehicle and configured to acquire second detection data indicating a surrounding environment of the vehicle, wherein the second area is different from the first area; and
a second control unit configured to generate second surrounding environment information indicating a surrounding environment of the vehicle in a second circumferential area of the vehicle, based on the second detection data; and
a third control unit configured to finally identify a surrounding environment of the vehicle in an overlapping peripheral area where the first peripheral area and the second peripheral area overlap each other, based on at least one of the first surrounding environment information and the second surrounding environment information.

According to the configuration described above, the surrounding environment of the vehicle in the overlapping peripheral area where the first peripheral area and the second peripheral area overlap each other is finally identified based on at least one of the first surrounding environment information and the second surrounding environment information. In this way, since the surrounding environment of the vehicle in the overlapping peripheral area can finally be identified, the vehicle system can be provided in which the recognition accuracy with which the surrounding environment of the vehicle is recognized can be improved.

The third control unit may be configured to finally identify the surrounding environment of the vehicle in the overlapping peripheral area, based on a relative positional relationship between the vehicle and the overlapping peripheral area and at least one of the first surrounding environment information and the second surrounding environment information.

According to the configuration described above, the surrounding environment of the vehicle in the overlapping peripheral area is finally identified based on the relative positional relationship between the vehicle and the overlapping peripheral area and at least one of the first surrounding environment information and the second surrounding environment information. In this way, since the surrounding environment of the vehicle in the overlapping peripheral area is finally identified in consideration of the relative positional relationship between the vehicle and the overlapping peripheral area, the recognition accuracy with which the surrounding environment of the vehicle is recognized can be improved.

The third control unit may be configured to:

finally identify a surrounding environment of the vehicle in a first partial area of the overlapping peripheral area, based on the first surrounding environment information; and
finally identify a surrounding environment of the vehicle in a second partial area of the overlapping peripheral area, based on the second surrounding environment information.

A distance between the first partial area and the first area may be smaller than a distance between the first partial area and the second area.

A distance between the second partial area and the second area may be smaller than a distance between the second partial area and the first area.

According to the configuration described above, the surrounding environment of the vehicle is finally identified based on the first surrounding environment information in the first partial area positioned on the side facing the first area where the plurality of first sensors are disposed. On the other hand, the surrounding environment of the vehicle is finally identified based on the second surrounding environment information in the second partial area positioned on the side facing the second area where the plurality of second sensors are disposed. In this way, the surrounding environment of the vehicle in the overlapping peripheral area is finally identified in consideration of the positional relationship between the overlapping peripheral area and the first and second areas, the recognition accuracy with which the surrounding environment of the vehicle is recognized can be improved.

In the case where a first value of a first parameter that is indicated by the first surrounding environment information is different from a second value of the first parameter that is indicated by the second surrounding environment information, the third control unit may be configured to finally identify an average value between the first value and the second value as a value of the first parameter.

The first parameter may be a parameter related to a relative positional relationship between a target object existing in the overlapping peripheral area and the vehicle.

According to the configuration described above, the average value between the first value and the second value of the first parameter (for example, position, distance, direction) related to the relative positional relationship between the target object and the vehicle is finally identified as the value of the first parameter. In this way, since the surrounding environment of the vehicle in the overlapping peripheral area is finally identified by adopting the average value of the first parameter, the recognition accuracy with which the surrounding environment of the vehicle is recognized can be improved.

The third control unit may be configured to finally identify a surrounding environment of the vehicle in the overlapping peripheral area, based on one of the first surrounding environment information and the second surrounding environment information, information related to detection accuracies for the plurality of first sensors, and information related to detection accuracies for the plurality of second sensors.

According to the configuration described above, since the surrounding environment of the vehicle in the overlapping peripheral area is finally identified in consideration of the information related to the detection accuracies of the plurality of first sensors and the information related to the detection accuracies of the plurality of second sensors, the recognition accuracy with which the surrounding environment of the vehicle is recognized can be improved.

There is provided a vehicle that is capable of running in an autonomous driving mode, the vehicle comprising the vehicle system.

According to the configuration described above, the vehicle can be provided in which the recognition accuracy with which the surrounding environment of the vehicle is recognized can be improved.

BRIEF DESCRIPTION OF DRAWINGS

Fig. 1 is a schematic drawing illustrating a top view of a vehicle including a vehicle system.
Fig. 2 is a block diagram illustrating the vehicle system.
Fig. 3 is a diagram illustrating functional blocks of a control unit for a left front lighting system.
Fig. 4 is a diagram illustrating a detection area of a camera, a detection area of a LiDAR unit, and a detection area of a millimeter wave radar in the left front lighting system.
Fig. 5 is a flow chart for explaining a first example of a use frequency setting method for sensors.
Fig. 6 is a flow chart for explaining a second example of a use frequency setting method for the sensors.
Fig. 7 is a flow chart for explaining a third example of a use frequency setting method for the sensors.
Fig. 8 is a flow chart for explaining a fourth example of a use frequency setting method for the sensors.
Fig. 9 is a schematic drawing illustrating a top view of a vehicle including a vehicle system.
Fig. 10 is a block diagram illustrating the vehicle system.
Fig. 11 is a diagram illustrating functional blocks of a control unit for a left front lighting system.
Fig. 12 is a diagram illustrating a detection area of a camera, a detection area of a LiDAR unit, and a detection area of a millimeter wave radar.
Fig. 13 is a diagram (Part 1) for explaining a relationship among acquisition timings of frames of image data, acquisition timings of frames of 3D mapping data, and lighting timings of a lighting unit.
Fig. 14 is a diagram (Part 2) for explaining the relationship among acquisition timings of frames of the image data, acquisition timings of frames of the 3D mapping data, and lighting timings of the lighting unit.
Fig. 15 is a schematic drawing illustrating a top view of a vehicle including a vehicle system.
Fig. 16 is a block diagram illustrating the vehicle system.
Fig. 17 is a diagram illustrating functional blocks of a control unit for a left front lighting system.
Fig. 18 is a diagram illustrating a detection area of a camera, a detection area of a LiDAR unit, and a detection area of a millimeter wave radar in the left front lighting system.

Fig. 19 is a flow chart for explaining an operation for determining a detection accuracy of each sensor according to a third embodiment.

Fig. 20 is a flow chart for explaining an example of an operation for generating fused surrounding environment information.

Fig. 21A is a flow chart for explaining an example of an operation for determining detection data to be adopted in each overlapping area.

Fig. 21B is a flow chart for explaining another example of an operation for generating fused surrounding environment information.

Fig. 22 is a flow chart for explaining an example of an operation for determining a detection accuracy of each sensor according to a first modified example of the third embodiment.

Fig. 23 is a flow chart for explaining an example of an operation for determining a detection accuracy of each sensor according to a second modified example of the third embodiment.

Fig. 24 is a diagram illustrating a state where a detection area of a camera and a detection area of a LiDAR are each divided into a plurality of sub-areas.

Fig. 25 is a schematic drawing illustrating a top view of a vehicle including a vehicle system.

Fig. 26 is a block diagram illustrating the vehicle system.

Fig. 27 is a diagram illustrating functional blocks of a control unit of a left front lighting system.

Fig. 28A is a flow chart for explaining an example of an operation for determining a priority for use.

Fig. 28B is a flow chart for explaining an example of an operation for generating fused surrounding environment information.

Fig. 29 is a diagram illustrating a detection area of a camera, a detection area of a LiDAR unit, and a detection area of a millimeter wave radar in the left front lighting system.

Fig. 30A is a flow chart for explaining an example of an operation for determining detection data to be adopted in each overlapping area.

Fig. 30B is a flow chart for explaining another example of an operation for generating fused surrounding environment information.

Fig. 31 is a schematic drawing illustrating a top view of a vehicle including a vehicle system.

Fig. 32 is a block diagram illustrating the vehicle system.

Fig. 33 is a diagram illustrating functional blocks of a control unit for a left front lighting system.

Fig. 34 is a diagram illustrating a detection area of a camera, a detection area of a LiDAR unit, and a detection area of a millimeter wave radar.

Fig. 35 is a diagram (Part 1) for explaining a relationship among acquisition timings of frames of image data, acquisition timings of frames of 3D mapping data, and lighting timings of a lighting unit.

Fig. 36 is a diagram (Part 2) for explaining the relationship among acquisition timings of frames of the image data, acquisition timings of frames of the 3D mapping data, and lighting timings of the lighting unit.

Fig. 37 is a schematic drawing illustrating a top view of a vehicle including a vehicle system according to a sixth embodiment.

Fig. 38 is a block diagram illustrating the vehicle system according to the sixth embodiment.

Fig. 39 is a diagram illustrating functional blocks of a control unit for a left front lighting system.

Fig. 40 is a flow chart for explaining an example of an operation for generating fused surrounding environment information in the left front lighting system.

Fig. 41 is a diagram illustrating a detection area of a camera, a detection area of a LiDAR unit, and a detection area of a millimeter wave radar in the left front lighting system.

Fig. 42 is a diagram illustrating functional blocks of a control unit of a right front lighting system.

Fig. 43 is a flow chart for explaining an example of an operation for generating fused surrounding environment information in the right front lighting system.

Fig. 44 is a diagram illustrating a detection area of a camera, a detection area of a LiDAR unit, and a detection area of a millimeter wave radar in the right front lighting system.

Fig. 45 is a flow chart for explaining an operation for finally identifying a surrounding environment of the vehicle in an overlapping peripheral area where a detection area of the left front lighting system and detection area of the right front lighting system overlap each other.

Fig. 46 is a diagram illustrating the detection area of the left front lighting system, the detection area of the right front lighting system, and the overlapping peripheral area where the detection areas of the left and right front lighting systems overlap.

Fig. 47 is a diagram illustrating a state where a pedestrian exists in the overlapping peripheral area where the detection area of the left front lighting system and the detection area of the right front lighting system overlap each other.

Fig. 48 is a diagram illustrating a detection area of a left rear lighting system, a detection area of a right rear lighting system, and an overlapping peripheral area where the detection areas of the left and right rear lighting systems overlap each other.

Fig. 49 is a block diagram illustrating a vehicle system according to a modified example of the sixth embodiment.

DESCRIPTION OF EMBODIMENTS

(First Embodiment)

Hereinafter, referring to drawings, a first embodiment of the present disclosure (hereinafter, referred to simply as a "present embodiment") will be described. A description of members having like reference numerals to those of members that have already been described in the present embodiment will be omitted as a matter of convenience in description. Additionally, dimensions of members shown in accompanying drawings may differ from time to time from actual dimensions of the members as a matter of convenience in description.

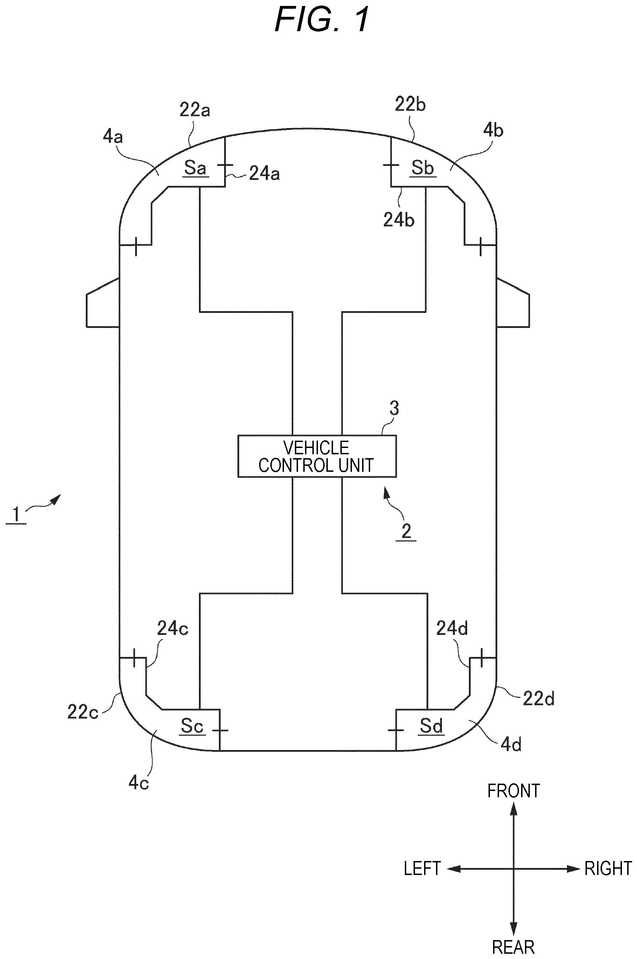

In description of the present embodiment, as a matter of convenience in description, a "left-and-right direction" and a "front-and-rear direction" will be referred to as required. These directions are relative directions set for a vehicle 1 shown in Fig. 1. Here, the "front-and rear direction" is a direction including a "front direction" and a "rear direction". The "left-and-right" direction is a direction including a "left direction" and a "right direction".

At first, referring to Fig. 1, the vehicle 1 according to the present embodiment will be described. Fig. 1 is a schematic drawing illustrating a top view of the vehicle 1 including a vehicle system 2. As shown in Fig. 1, the vehicle 1 is a vehicle (a motor vehicle) that can run in an autonomous driving mode and includes the vehicle system 2. The vehicle system 2 includes at least a vehicle control unit 3, a left front lighting system 4a (hereinafter, referred to simply as a "lighting system 4a"), a right front lighting system 4b (hereinafter, referred to simply as a "lighting system 4b"), a left rear lighting system 4c (hereinafter, referred to simply as a "lighting system 4c"), and a right rear lighting system 4d (hereinafter, referred to simply as a "lighting system 4d").

The lighting system 4a is provided at a left front of the vehicle 1. In particular, the lighting system 4a includes a housing 24a placed at the left front of the vehicle 1 and a transparent cover 22a attached to the housing 24a. The lighting system 4b is provided at a right front of the vehicle 1. In particular, the lighting system 4b includes a housing 24b placed at the right front of the vehicle 1 and a transparent cover 22b attached to the housing 24b. The lighting system 4c is provided at a left rear of the vehicle 1. In particular, the lighting system 4c includes a housing 24c placed at the left rear of the vehicle 1 and a transparent cover 22c attached to the housing 24c. The lighting system 4d is provided at a right rear of the vehicle 1. In particular, the lighting system 4d includes a housing 24d placed at the right rear of the vehicle 1 and a transparent cover 22d attached to the housing 24d.

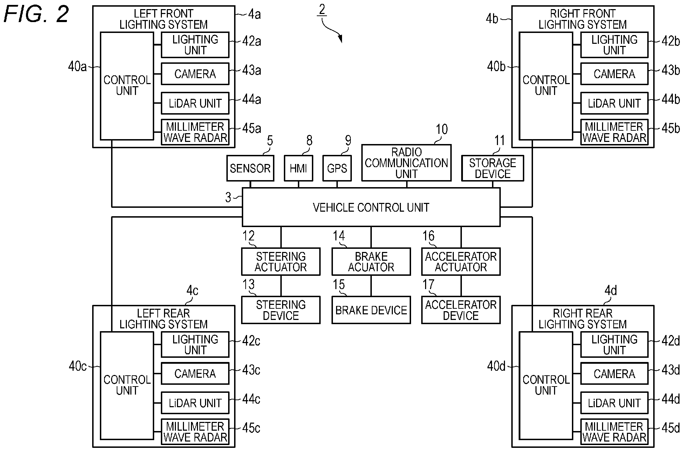

Next, referring to Fig. 2, the vehicle system 2 shown in Fig. 1 will be described specifically. Fig. 2 is a block diagram illustrating the vehicle system 2. As shown in Fig. 2, the vehicle system 2 includes the vehicle control unit 3, the lighting systems 4a to 4d, a sensor 5, a human machine interface (HMI) 8, a global positioning system (GPS) 9, a radio communication unit 10, and a storage device 11. Further, the vehicle system 2 includes a steering actuator 12, a steering device 13, a brake actuator 14, a brake device 15, an accelerator actuator 16, and an accelerator device 17. Furthermore, the vehicle system 2 includes a battery (not shown) configured to supply electric power.

The vehicle control unit 3 is configured to control the driving of the vehicle 1. The vehicle control unit 3 is made up, for example, of at least one electronic control unit (ECU). The electronic control unit may include at least one microcontroller including one or more processors and one or more memories and another electronic circuit including an active device and a passive device such as transistors. The processor is, for example, a central processing unit (CPU), a micro processing unit (MPU), a graphics processing unit (GPU) and/or a tensor processing unit (TPU). CPU may be made up of a plurality of CPU cores. GPU may be made up of a plurality of GPU cores. The memory includes a read only memory (ROM) and a random access memory (RAM). ROM may store a vehicle control program. For example, the vehicle control program may include an artificial intelligence (AI) program for autonomous driving. The AI program is a program configured by a machine learning with a teacher or without a teacher that uses a neural network such as deep learning or the like. RAM may temporarily store vehicle control data and/or surrounding environment information indicating a surrounding environment of the vehicle. The processor may be configured to deploy a program designated from the vehicle control program stored in ROM to execute various types of operations in cooperation with RAM

The electronic control unit (ECU) may be configured by at least one integrated circuit such as an application specific integrated circuit (ASIC) or a field-programmable gate array (FPGA). Further, the electronic control unit may be made up of a combination of at least one microcontroller and at least one integrated circuit (FPGA or the like).

The lighting system 4a further includes a control unit 40a, a lighting unit 42a, a camera 43a, a light detection and ranging (LiDAR) unit 44a (an example of a laser radar), and a millimeter wave radar 45a. As shown in Fig. 1, the control unit 40a, the lighting unit 42a, the camera 43a, the LiDAR unit 44a, and the millimeter wave radar 45a are disposed in a space Sa defined by the housing 24a and the transparent cover 22a (an interior of a lamp compartment). The control unit 40a may be disposed in a predetermined place of the vehicle 1 other than the space Sa. For example, the control unit 40a may be configured integrally with the vehicle control unit 3.

The control unit 40a is made up, for example, of at least one electronic control unit (ECU). The electronic control unit may include at least one microcontroller including one or more processers and one or more memories and another electronic circuit (for example, a transistor or the like). The processor is, for example, CPU, MPU, GPU and/or TPU. CPU may be made up of a plurality of CPU cores. GPU may be made up of a plurality of GPU cores. The memory includes ROM and RAM ROM may store a surrounding environment identifying program for identifying a surrounding environment of the vehicle 1. For example, the surrounding environment identifying program is a program configured by a machine learning with a teacher or without a teacher that uses a neural network such as deep learning or the like. RAM may temporarily store the surrounding environment identifying program, image data acquired by the camera 43a, three-dimensional mapping data (point group data) acquired by the LiDAR unit 44a and/or detection data acquired by the millimeter wave radar 45a and the like. The processor may be configured to deploy a program designated from the surrounding environment identifying program stored in ROM to execute various types of operations in cooperation with RAM In addition, the electronic control unit (ECU) may be made up of at least one integrated circuit such as ASIC, FPGA, or the like. Further, the electronic control unit may be made up of a combination of at least one microcontroller and at least one integrated circuit (FPGA or the like).

The lighting unit 42a is configured to form a light distribution pattern by emitting light towards an exterior (a front) of the vehicle 1. The lighting unit 42a includes a light source for emitting light and an optical system. The light source may be made up, for example, of a plurality of light emitting devices that are arranged into a matrix configuration (for example, N rows $\times$ M columns, N>1, M>1). The light emitting device is, for example, a light emitting diode (LED), a laser diode (LD) or an organic EL device. The optical system may include at least one of a reflector configured to reflect light emitted from the light source towards the front of the lighting unit 42a and a lens configured to refract light emitted directly from the light source or light reflected by the reflector. In the case where the driving mode of the vehicle 1 is a manual drive mode or a drive assist mode, the lighting unit 42a is configured to form a light distribution pattern for a driver (for example, a low beam light distribution pattern or a high beam light distribution pattern) ahead of the vehicle 1. In this way, the lighting unit 42a functions as a left headlamp unit. On the other hand, in the case where the driving mode of the vehicle 1 is a high-level drive assist mode or a complete autonomous drive mode, the lighting unit 42a may be configured to form a light distribution pattern for a camera ahead of the vehicle 1.

The control unit 40a may be configured to supply individually electric signals (for example, pulse width modulation (PWM) signals) to the plurality of light emitting devices provided on the lighting unit 42a. In this way, the control unit 40a can select individually and separately the light emitting devices to which the electric signals are supplied and control the duty ratio of the electric signal supplied to each of the light emitting devices. That is, the control unit 40a can select the light emitting elements to be turned on or turned off from the plurality of light emitting devices arranged into the matrix configuration and control the luminance of the light emitting diodes that are illuminated. As a result, the control unit 40a can change the shape and brightness of a light distribution pattern emitted towards the front of the lighting unit 42a.

The camera 43a is configured to detect a surrounding environment of the vehicle 1. In particular, the camera 43a is configured to acquire at first image data indicating a surrounding environment of the vehicle 1 at a predetermined frame rate and to then transmit the image data to the control unit 40a. The control unit 40a identifies a surrounding environment based on the transmitted image data. Here, the surrounding environment information may include information on a target object existing at an outside of the vehicle 1. For example, the surrounding environment information may include information on an attribute of a target object existing at an outside of the vehicle 1 and information on a position of the target object with respect to the vehicle 1. The camera 43a is made up of an imaging device including, for example, a charge-coupled device (CCD), a complementary metal oxide semiconductor (CMOS) or the like. The camera 43a may be configured as a monocular camera or may be configured as a stereo camera. In the case where the camera 43a is a stereo camera, the control unit 40a can identify a distance between the vehicle 1 and a target object (for example, a pedestrian or the like) existing at an outside of the vehicle 1 based on two or more image data acquired by the stereo camera by making use of a parallax. Additionally, in the present embodiment, although one camera 43a is provided in the lighting system 4a, two or more cameras 43a may be provided in the lighting system 4a.

The LiDAR unit 44a (an example of a laser radar) is configured to detect a surrounding environment of the vehicle 1. In particular, the LiDAR unit 44a is configured to acquire at first three-dimensional (3D) mapping data (point group data) indicating a surrounding environment of the vehicle 1 at a predetermined frame rate and to then transmit the 3D mapping data to the control unit 40a. The control unit 40a identifies surrounding environment information based on the 3D mapping data transmitted thereto. Here, the surrounding environment information may include information on a target object existing as an outside of the vehicle 1. For example, the surrounding environment information may include information on an attribute of a target object existing at an outside of the vehicle 1 and information on a position of the target object with respect to the vehicle 1.

More specifically, the LiDAR unit 44a can acquire at first information on a time of flight (TOF) $\Delta T1$ of a laser beam (a light pulse) at each emission angle (a horizontal angle $\theta$, a vertical angle $\varphi$) of the laser beam and can then acquire information on a distance D between the LiDAR unit 44a (the vehicle 1) and an object existing at an outside of the vehicle at each emission angle (a horizontal angle θ, a vertical angle φ) based on the time of flight ΔT1. Here, the time of flight ΔT1 can be calculated as follows, for example.

$$\text{Time of Flight } \Delta T1 = \text{a time t1 when a laser beam (a light pulse) returns to}$$

$$\text{LiDAR} - \text{a time t0 when LiDAR unit emits the laser beam}$$

In this way, the LiDAR unit 44a can acquire the 3D mapping data indicating the surrounding environment of the vehicle 1.

Additionally, the LiDAR unit 44a includes, for example, a laser light source configured to emit a laser beam, an optical deflector configured to scan a laser beam in a horizontal direction and a vertical direction, an optical system such as a lens, and a receiver configured to accept or receive a laser beam reflected by an object. There is imposed no specific limitation on a central wavelength of a laser beam emitted from the laser light source. For example, a laser beam may be invisible light whose central wavelength is near 900 nm. The optical deflector may be, for example, a micro electromechanical system (MEMS) mirror. The receiver may be, for example, a photodiode. The LiDAR unit 44a may acquire 3D mapping data without scanning the laser beam by the optical deflector. For example, the LiDAR unit 44a may acquire 3D mapping data by use of a phased array method or a flash method. In addition, in the present embodiment, although one LiDAR unit 44a is provided in the lighting system 4a, two or more LiDAR units 44a may be provided in the lighting system 4a. For example, in the case where two LiDAR units 44a are provided in the lighting system 4a, one LiDAR unit 44a may be configured to detect a surrounding environment in a front area ahead of the vehicle 1, while the other LiDAR unit 44a may be configured to detect a surrounding environment in a side area to the vehicle 1.

The millimeter wave radar 45a is configured to detect a surrounding environment of the vehicle 1. In particular, the millimeter wave radar 45a is configured to acquire at first detection data indicating a surrounding environment of the vehicle 1 at a predetermined frame rate and to then transmit the detection data to the control unit 40a. The control unit 40a identifies surrounding environment information based on the transmitted detection data. Here, the surrounding environment information may include information on a target object existing at an outside of the vehicle 1. The surrounding environment information may include, for example, information on an attribute of a target object existing at an outside of the vehicle 1, information on a position of the target object with respect to the vehicle 1, and a speed of the target object with respect to the vehicle 1.

For example, the millimeter wave radar 45a can acquire a distance D between the millimeter wave radar 45a (the vehicle 1) and an object existing at an outside of the vehicle 1 by use of a pulse modulation method, a frequency modulated-continuous wave (FM-CW) method or a dual frequency continuous wave (CW) method. In the case where the pulse modulation method is used, the millimeter wave radar 45a can acquire at first information on a time of flight ΔT2 of a millimeter wave at each emission angle of the millimeter wave and can then acquire information on a distance D between the millimeter wave radar 45a (the vehicle 1) and an object existing at an outside of the vehicle 1 at each emission angle. Here, the time of flight ΔT2 can be calculated, for example, as follows.

$$\text{Time of Flight } \Delta T2 = \text{a time t3 when a millimeter wave returns to the millimeter}$$

$$\text{wave radar} - \text{a time t2 when the millimeter wave radar emits the millimeter wave}$$

Additionally, the millimeter wave radar 45a can acquire information on a relative velocity V of an object existing at an outside of the vehicle 1 to the millimeter wave radar 45a (the vehicle 1) based on a frequency f0 of a millimeter wave emitted from the millimeter wave radar 45a and a frequency f1 of the millimeter wave that returns to the millimeter wave radar 45a.

Additionally, in the present embodiment, although one millimeter wave radar 45a is provided in the lighting system 4a, two or more millimeter wave radars 45a may be provided in the lighting system 4a. For example, the lighting system 4a may include a short-distance millimeter wave radar 45a, a middle-distance millimeter wave radar 45a, and a long-distance millimeter wave radar 45a.

The lighting system 4b further includes a control unit 40b, a lighting unit 42b, a camera 43b, a LiDAR unit 44b, and a millimeter wave radar 45b. As shown in Fig. 1, the control unit 40b, the lighting unit 42b, the camera 43b, the LiDAR unit 44b, and the millimeter wave radar 45b are disposed in a space Sb defined by the housing 24b and the transparent cover 22b (an interior of a lamp compartment). The control unit 40b may be disposed in a predetermined place on the vehicle 1 other than the space Sb. For example, the control unit 40b may be configured integrally with the vehicle control unit 3. The control unit 40b may have a similar function and configuration to those of the control unit 40a. The lighting unit 42b may have a similar function and configuration to those of the lighting unit 42a. In this regard, the lighting unit 42a functions as the left headlamp unit, while the lighting unit 42b functions as a right headlamp unit. The camera 43b may have a similar function and configuration to those of the camera 43a. The LiDAR unit 44b may have a similar function and configuration to those of the LiDAR unit 44a. The millimeter wave radar 45b may have a similar function and configuration to those of the millimeter wave radar 45a.

The lighting system 4c further includes a control unit 40c, a lighting unit 42c, a camera 43c, a LiDAR unit 44c, and a millimeter wave radar 45c. As shown in Fig. 1, the control unit 40c, the lighting unit 42c, the camera 43c, the LiDAR unit 44c, and the millimeter wave radar 45c are disposed in a space Sc defined by the housing 24c and the transparent cover 22c (an interior of a lamp compartment). The control unit 40c may be disposed in a predetermined place on the vehicle 1 other than the space Sc. For example, the control unit 40c may be configured integrally with the vehicle control unit 3. The control unit 40c may have a similar function and configuration to those of the control unit 40a.

The lighting unit 42c is configured to form a light distribution pattern by emitting light towards an exterior (a rear) of the vehicle 1. The lighting unit 42c includes a light source for emitting light and an optical system. The light source may be made up, for example, of a plurality of light emitting devices that are arranged into a matrix configuration (for example, N rows × M columns, N>1, M>1). The light emitting device is, for example, an LED, an LD or an organic EL device. The optical system may include at least one of a reflector configured to reflect light emitted from the light source towards the front of the lighting unit 42c and a lens configured to refract light emitted directly from the light source or light reflected by the reflector. In the case where the driving mode of the vehicle 1 is the manual drive mode or the drive assist mode, the lighting unit 42c may be turned off. On the other hand, in the case where the driving mode of the vehicle 1 is the high-level drive assist mode or the complete autonomous drive mode, the lighting unit 42c may be configured to form a light distribution pattern for a camera behind the vehicle 1.

The camera 43c may have a similar function and configuration to those of the camera 43a. The LiDAR unit 44c may have a similar function and configuration to those of the LiDAR unit 44c. The millimeter wave radar 45c may have a similar function and configuration to those of the millimeter wave radar 45a.

The lighting system 4d further includes a control unit 40d, a lighting unit 42d, a camera 43d, a LiDAR unit 44d, and a millimeter wave radar 45d. As shown in Fig. 1, the control unit 40d, the lighting unit 42d, the camera 43d, the LiDAR unit 44d, and the millimeter wave radar 45d are disposed in a space Sd defined by the housing 24d and the transparent cover 22d (an interior of a lamp compartment). The control unit 40d may be disposed in a predetermined place on the vehicle 1 other than the space Sd. For example, the control unit 40d may be configured integrally with the vehicle control unit 3. The control unit 40d may have a similar function and configuration to those of the control unit 40c. The lighting unit 42d may have a similar function and configuration to those of the lighting unit 42c. The camera 43d may have a similar function and configuration to those of the camera 43c. The LiDAR unit 44d may have a similar function and configuration to those of the LiDAR unit 44c. The millimeter wave radar 45d may have a similar function and configuration to those of the millimeter wave radar 45c.

The sensor 5 may include an acceleration sensor, a speed sensor, a gyro sensor, and the like. The sensor 5 detects a driving state and outputs driving state information indicating such a driving state of the vehicle 1 to the vehicle control unit 3. The sensor 5 may further include a seating sensor configured to detect whether the driver is seated on a driver's seat, a face direction sensor configured to detect a direction in which the driver directs his or her face, an exterior weather sensor configured to detect an exterior weather state, a human or motion sensor configured to detect whether a human exists in an interior of a passenger compartment. Furthermore, the sensor 5 may include an illuminance sensor configured to detect a degree of brightness (an illuminance) of a surrounding environment of the vehicle 1. The illuminance sensor may determine a degree of brightness of a surrounding environment of the vehicle 1, for example, in accordance with a magnitude of optical current outputted from a photodiode.

The human machine interface (HMI) 8 is made up of an input module configured to receive an input operation from the driver and an output module configured to output the driving state information or the like towards the driver. The input module includes a steering wheel, an accelerator pedal, a brake pedal, a driving modes changeover switch configured to switch driving modes of the vehicle 1, and the like. The output module includes a display configured to display thereon driving state information, surrounding environment information and an illuminating state of the lighting system 4, and the like.

The global positioning system (GPS) 9 acquires information on a current position of the vehicle 1 and outputs the current position information so acquired to the vehicle control unit 3. The radio communication unit 10 receives information on other vehicles running or existing on the periphery of the vehicle 1 (for example, other vehicles' running information) from the other vehicles and transmits information on the vehicle 1 (for example, subject vehicle's running information) to the other vehicles (a vehicle-vehicle communication).

The radio communication unit 10 receives infrastructural information from infrastructural equipment such as a traffic signal controller, a traffic sign lamp or the like and transmits the subject vehicle's running information of the vehicle 1 to the infrastructural equipment (a road-vehicle communication). In addition, the radio communication unit 10 receives information on a pedestrian from a mobile electronic device (a smartphone, an electronic tablet, an electronic wearable device, and the like) that the pedestrian carries and transmits the subject vehicle's running information of the vehicle 1 to the mobile electronic device (a pedestrian-vehicle communication). The vehicle 1 may communicate directly with other vehicles, infrastructural equipment or a mobile electronic device in an ad hoc mode or may communicate with them via access points. Radio communication standards include, for example, Wi-Fi (a registered trademark), Bluetooth (a registered trademark), ZigBee (a registered trademark), and LPWA. The vehicle 1 may communicate with other vehicles, infrastructural equipment or a mobile electronic device via a mobile communication network.

The storage device 11 is an external storage device such as a hard disk drive (HDD) or a solid state drive (SSD). The storage device 11 may store two-dimensional or three-dimensional map information and/or a vehicle control program. The storage device 11 outputs map information or a vehicle control program to the vehicle control unit 3 in demand for the vehicle control unit 3. The map information and the vehicle control program may be updated via the radio communication unit 10 and a communication network such as the internet.

In the case where the vehicle 1 is driven in the autonomous driving mode, the vehicle control unit 3 generates at least one of a steering control signal, an accelerator control signal, and a brake control signal based on the driving state information, the surrounding environment information and/or the map information. The steering actuator 12 receives a steering control signal from the vehicle control unit 3 and controls the steering device 13 based on the steering control signal so received. The brake actuator 14 receives a brake control signal from the vehicle control unit 3 and controls the brake device 15 based on the brake control signal so received. The accelerator actuator 16 receives an accelerator control signal from the vehicle control unit 3 and controls the accelerator device 17 based on the accelerator control signal so received. In this way, in the autonomous driving mode, the driving of the vehicle 1 is automatically controlled by the vehicle system 2.

On the other hand, in the case where the vehicle 1 is driven in the manual drive mode, the vehicle control unit 3 generates a steering control signal, an accelerator control signal, and a brake control signal as the driver manually operates the accelerator pedal, the brake pedal, and the steering wheel. In this way, in the manual drive mode, since the steering control signal, the accelerator control signal, and the brake control are generated as the driver manually operates the accelerator pedal, the brake pedal, and the steering wheel, the driving of the vehicle 1 is controlled by the driver.

Next, the driving modes of the vehicle 1 will be described. The driving modes include the autonomous driving mode and the manual drive mode. The autonomous driving mode includes a complete autonomous drive mode, a high-level drive assist mode, and a drive assist mode. In the complete autonomous drive mode, the vehicle system 2 automatically performs all the driving controls of the vehicle 1 including the steering control, the brake control, and the accelerator control, and the driver stays in a state where the driver cannot drive or control the vehicle 1 as he or she wishes. In the high-level drive assist mode, the vehicle system 2 automatically performs all the driving controls of the vehicle 1 including the steering control, the brake control, and the accelerator control, and although the driver stays in a state where the driver can drive or control the vehicle 1, the driver does not drive the vehicle 1. In the drive assist mode, the vehicle system 2 automatically performs a partial driving control of the steering control, the brake control, and the accelerator control, and the driver drives the vehicle 1 with assistance of the vehicle system 2 in driving. On the other hand, in the manual drive mode, the vehicle system 2 does not perform the driving control automatically, and the driver drives the vehicle without any assistance of the vehicle system 2 in driving.

In addition, the driving modes of the vehicle 1 may be switched over by operating a driving modes changeover switch. In this case, the vehicle control unit 3 switches over the driving modes of the vehicle among the four driving modes (the complete autonomous drive mode, the high-level drive assist mode, the drive assist mode, the manual drive mode) in response to an operation performed on the driving modes changeover switch by the driver. The driving modes of the vehicle 1 may automatically be switched over based on information on an autonomous driving permitting section where the autonomous driving of the vehicle 1 is permitted and an autonomous driving prohibiting section where the autonomous driving of the vehicle 1 is prohibited, or information on an exterior weather state. In this case, the vehicle control unit 3 switches over the driving modes of the vehicle 1 based on those pieces of information. Further, the driving modes of the vehicle 1 may automatically be switched over by use of the seating sensor or the face direction sensor. In this case, the vehicle control unit 3 may switch over the driving modes of the vehicle 1 based on an output signal from the seating sensor or the face direction sensor.

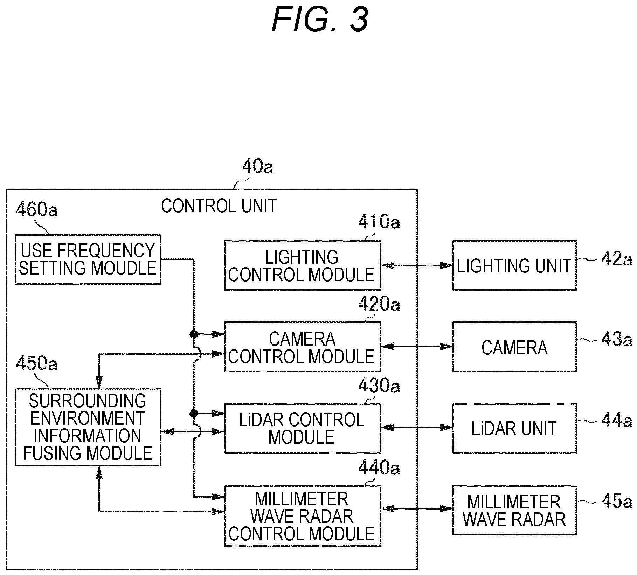

Next, referring to Fig. 3, the function of the control unit 40a will be described. Fig. 3 is a diagram illustrating functional blocks of the control unit 40a of the lighting system 4a. As shown in Fig. 3, the control unit 40a is configured to control individual operations of the lighting unit 42a, the camera 43a (an example of the sensor), the LiDAR unit 44a (an example of the sensor), and the millimeter wave radar 45a (an example of the sensor). In particular, the control unit 40a includes a lighting control module 410a, a camera control module 420a (an example of a generator), a LiDAR control module 430a (an example of the generator), a millimeter wave control module 440a (an example of the generator), a surrounding environment information fusing module 450a, and a use frequency setting module 460a. In the following description, the camera 43a, the LiDAR unit 44a, and the millimeter wave radar 45a may generally be referred to simply as a "sensor" from time to time.

The lighting control module 410a is configured to control the lighting unit 42a and cause the lighting unit 42a to emit a predetermined light distribution pattern towards a front area ahead of the vehicle 1. For example, the lighting control module 410a may change the light distribution pattern that is emitted from the lighting unit 42a in accordance with the driving mode of the vehicle 1.

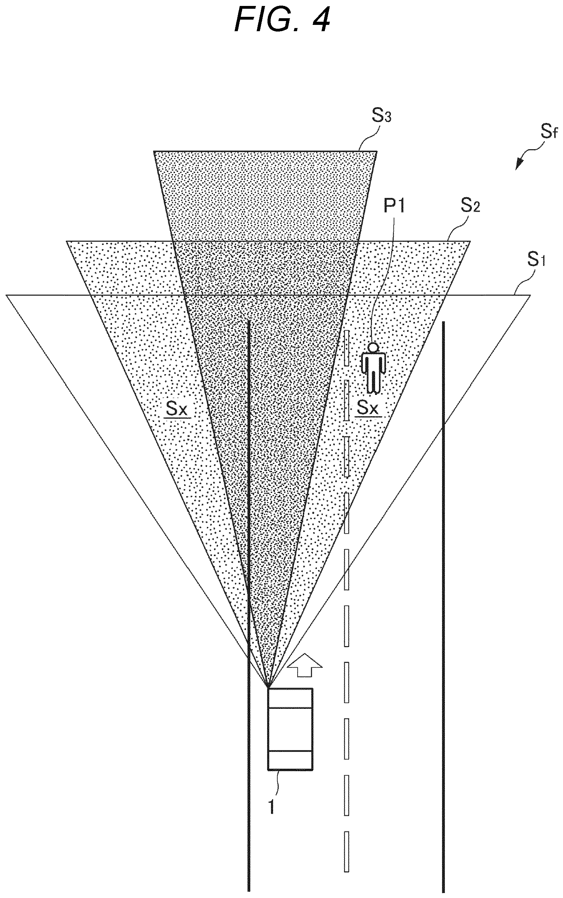

The camera control module 420a is configured not only to control the operation of the camera 43a but also to generate surrounding environment information of the vehicle 1 in a detection area S1 (refer to Fig. 4) of the camera 43a (hereinafter, referred to as surrounding environment information I1) based on image data (detection data) outputted from the camera 43a. The LiDAR control module 430a is configured not only to control the operation of the LiDAR unit 44a but also to generate surrounding environment information of the vehicle 1 in a detection area S2 (refer to Fig. 4) of the LiDAR unit 44a (hereinafter, referred to as surrounding environment information 12) based on 3D mapping data (detection data) outputted from the LiDAR unit 44a. The millimeter wave radar control module 440a is configured not only to control the operation of the millimeter wave radar 45a but also to generate surrounding environment information of the vehicle 1 in a detection area S3 (refer to Fig. 4) of the millimeter wave radar 45a (hereinafter, referred to as surrounding environment information 13) based on detection data outputted from the millimeter wave radar 45a.

The surrounding environment information fusing module 450a is configured to fuse the pieces of surrounding environment information I1, 12, 13 together so as to generate fused surrounding environment information If. Here, the surrounding environment information If may include information on a target object (for example, a pedestrian, another vehicle, or the like) existing at an outside of the vehicle 1 in a detection area Sf that is a combination of the detection area S1 of the camera 43a, the detection area S2 of the LiDAR unit 44a, and the detection area S3 of the millimeter wave radar 45a as shown in Fig. 4. For example, the surrounding environment information If may include information on an attribute of a target object, a position of the target object with respect to the vehicle 1, a distance between the vehicle 1 and the target object and/or a velocity of the target object with respect to the vehicle 1. The surrounding environment information fusing module 450a transmits the surrounding environment information If to the vehicle control unit 3.

As shown in Fig. 4, the surrounding environment information fusing module 450a may compare the surrounding environment information I1 with the surrounding environment information I2 in an overlapping area Sx where the detection area S1 of the camera 43a and the detection area S2 of the LiDAR unit 44a overlap each other. For example, in the case where the surrounding environment information I1 indicates an existence of a pedestrian P1 in the overlapping area Sx, while the surrounding environment information I2 does not indicate an existence of the pedestrian P1 in the overlapping area Sx, the surrounding environment information fusing module 450a may adopt either of the pieces of surrounding environment information I1, I2 based on predetermined information (information indicating the reliability of the sensor, or the like).

The use frequency setting module 460a is configured to set a use frequency for the camera 43a, a use frequency for the LiDAR unit 44a, and a use frequency for the millimeter wave radar 45a based on information associated with the vehicle 1 or the surrounding environment of the vehicle 1. A specific example of the "information associated with the vehicle 1 or the surrounding environment of the vehicle 1" will be described later.

The use frequency of the sensor (the camera 43a, the LiDAR unit 44a, the millimeter wave radar 45a) may be a frame rate (fps) of the detection data of the sensor (the image data, the 3D mapping data, the detection data of the millimeter wave radar 45a). Here, the frame rate of the detection data may be the number of frames of detection data acquired by the sensor for one second (the acquisition frame rate) or the number of fames of detection data transmitted from the sensor to the control unit 40a for one second (the transmission frame rate). For example, in the case where the use frequency of the camera 43a is reduced, the frame rate of the image data is reduced. On the other hand, in the case where the use frequency data is increased, the frame rate of the image data is increased.

The use frequency of the sensor may be a bit rate (bps) of the detection data of the sensor. The bit rate of the detection data may be a data amount of detection data acquired by the sensor for one second (acquisition bit rate) or a data amount of detection data transmitted from the sensor to the control unit 40a for one second (a transmission bit rate). The bit rate of the detection data can be controlled by controlling a space resolution and/or a time resolution of the detection data. For example, in the case where the use frequency of the LiDAR unit 44a is reduced, the bit rate of the 3D mapping data is reduced. On the other hand, in the case where the use frequency of the LiDAR unit 44a is increased, the bit rate of the 3D mapping data is increased.

The use frequency of the sensor may be a mode of the sensor. The sensor may have two modes of an active mode and a sleep mode. For example, in the case where the use frequency of the millimeter wave radar 45a is reduced, the mode of the millimeter wave radar 45a is set to the sleep mode. On the other hand, in the case where the use frequency of the millimeter wave radar 45a is normal, the millimeter wave radar 45a is set in the active mode.

The use frequency of the sensor may be an updating rate (Hz) of surrounding environment information. The updating rate means the number of times of updating of surrounding environment information made for one second. For example, in the case where the use frequency of the camera 43a is reduced, an updating rate of surrounding environment information I1 generated based on image data is reduced. On the other hand, in the case where the use frequency of the camera 43a is increased, the updating rate of the surrounding environment information I1 is increased. Specifically, with the transmission frame rate of image data being 60 fps, assume that a normal updating rate of the surrounding environment information I1 is 50 Hz. In this case, when the use frequency of the camera 43a is reduced, the updating rate of the surrounding environment information I1 may be set at 30 Hz. On the other hand, when the use frequency of the camera 43a is increased, the updating rate of the surrounding environment information I1 may be set at 60 Hz.

In addition, in the case where the use frequency of the sensor is changed, the use frequency setting module 460a may change at least one of the frame rate of detection data, the bit rate of detection data, the mode of the sensor (the active mode or the sleep mode), or the updating rate of the surrounding environment information. For example, the use frequency setting module 460a may reduce both the frame rate of image data and the updating rate of surrounding environment information I1, in the case where the use frequency of the sensor is reduced.

In the case where the use frequency of the camera 43a is set at a predetermined use frequency, the use frequency setting module 460a transmits an indication signal indicating a use frequency of the camera 43a to the camera control module 420a. Thereafter, the camera control module 420a controls the camera 43 a based on the indication signal so received so that the use frequency of the camera 43a is set at a predetermined use frequency. As a specific example, in the case where the frame rate of image data is reduced (in other words, in the case where the frame rate of image data is set at a frame rate a1 (< a0) that is lower than a normal frame rate a0), the use frequency setting module 460a transmits an indication signal indicating the frame rate a1 to the camera control module 420a. Thereafter, the camera control module 420a controls the camera 43a based on the indication signal so received so that the frame rate of image data is set at the frame rate a1.

In the case where the use frequency of the LiDAR unit 44a is set at a predetermined use frequency, the use frequency setting module 460a transmits an indication signal indicating a use frequency of the LiDAR unit 44a to the LiDAR control module 430a. Thereafter, the LiDAR control module 430a controls the LiDAR unit 44a based on the indication signal so received so that the use frequency of the LiDAR unit 44a is set at a predetermined use frequency. As a specific example, in the case where the use frequency setting module 460a reduces the bit rate of 3D mapping data (in other words, in the case where the use frequency setting module 460a sets the bit rate of 3D mapping data at a bit rate b1 (< b0) that is lower than a normal bit rate b0), the use frequency setting module 460a transmits an indication signal indicating the bit rate b1 to the LiDAR control module 430a. Thereafter, the LiDAR control module 430a controls the LiDAR unit 44a based on the indication signal so received so that the bit rate of 3D mapping data is set at the bit rate b 1.

In the case where the use frequency of the millimeter wave radar 45a is set at a predetermined use frequency, the use frequency setting module 460a transmits an indication signal indicating a use frequency of the millimeter wave radar 45a to the millimeter wave radar control module 440a. Thereafter, the millimeter wave radar control module 440a controls the millimeter wave radar 45a based on the indication signal so received so that the use frequency of the millimeter wave radar 45a is set at a predetermined use frequency. As a specific example, in the case where the mode of the millimeter wave radar 45a is set at the sleep mode, the use frequency setting module 460a transmits an indication signal indicating the sleep mode to the millimeter wave radar control module 440a. Thereafter, the millimeter wave radar control module 440a controls the millimeter wave radar 45a based on the indication signal so received so that the mode of the millimeter wave radar 45a is set at the sleep mode.

In the present embodiment, although the surrounding environment information fusing module 450a and the use frequency setting module 460a are realized or provided in the control unit 40a, these modules may be realized or provided in the vehicle control unit 3.

In addition, the control units 40b, 40c, 40d may also have a similar function to that of the control unit 40a. The control units 40b to 40d may each include a lighting control module, a camera control module, a LiDAR control module, a millimeter wave radar control module, a surrounding environment information fusing module, and a use frequency setting module. The surrounding environment information fusing modules of the control units 40b to 40d may each transmit fused surrounding environment information If to the vehicle control unit 3. The vehicle control unit 3 may control the driving of the vehicle 1 based on the pieces of surrounding environment information If that are transmitted from the corresponding control units 40b to 40d and the other pieces of information(driving control information, current position information, map information, and the like).

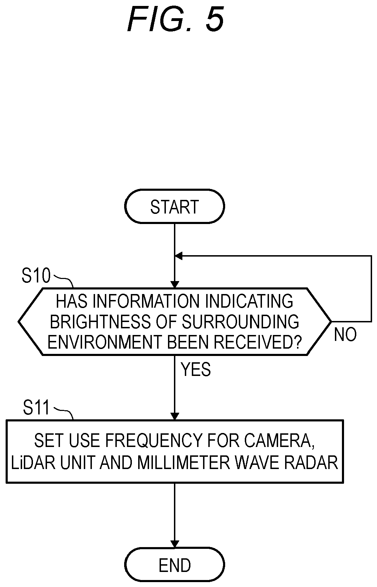

Next, referring to Fig. 5, a first example of a method for setting a use frequency for the sensor (the camera 43a, the LiDAR unit 44a, the millimeter wave radar 45a) in the lighting system 4a will be described. Fig. 5 is a flow chart for explaining a first example of a method for setting a use frequency for each sensor.

In the present embodiment, as a matter of convenience in description, although only an operation flow of the lighting system 4a will be described, it should be noted that the operation flow of the lighting system 4a can also be applied to the lighting systems 4b to 4d. In addition, in the present embodiment, a description will be made on the premise that the vehicle 1 is driven in the autonomous driving mode. In the following description, as described above, the "use frequency" of the sensor is the frame rate of detection data, the bit rate of detection data, the mode of the sensor or the updating rate of surrounding environment information.

As shown in Fig. 5, in step S10, the use frequency setting module 460a determines whether information indicating brightness of a surrounding environment of the vehicle 1 (hereinafter, referred to as "brightness information") has been received. Specifically, an illuminance sensor mounted on the vehicle 1 transmits detection data indicating brightness of a surrounding environment of the vehicle 1 to the vehicle control unit 3. Next, the vehicle control unit 3 at first generates brightness information based on the detection data so received and then transmits the brightness information so generated to the use frequency setting module 460a. The "brightness information" may include two pieces of information indicating "bright" and "dark". In this case, in the case where brightness (the illuminance) of a surrounding environment of the vehicle 1 that the detection data indicates is greater than a predetermined threshold (a threshold illuminance or the like), the vehicle control unit 3 may generate brightness information indicating that the surrounding environment of the vehicle 1 is bright. On the other hand, in the case where brightness (the illuminance) of the surrounding environment of the vehicle 1 that the detection data indicates is the predetermined threshold or smaller, the vehicle control unit 3 may generate brightness information indicating that the surrounding environment of the vehicle 1 is dark. Additionally, the "brightness information" may include information on a numeric value of the illuminance or the like. In this case, the use frequency setting module 460a may determine whether the surrounding environment of the vehicle 1 is bright or dark based on the information on the numeric value indicating the illuminance or the like.

The vehicle control unit 3 may transmit brightness information to the use frequency setting module 460a when the vehicle control unit 3 activates the vehicle system 2. Further, the vehicle control unit 3 may transmit brightness information to the use frequency setting module 460a when the brightness in the surrounding environment of the vehicle 1 changes (for example, when the surrounding environment changes from a bright state to a dark state, or when the surrounding environment changes from the dark state to the bright state). For example, when the vehicle 1 enters a tunnel or exits from the tunnel, the vehicle control unit 3 may transmit brightness information to the use frequency setting module 460a. In addition, the vehicle control unit 3 may transmit brightness information to the use frequency setting module 460a in a predetermined cycle.

If the use frequency setting module 460a determines that it receives the brightness information (YES in step S10), the use frequency setting module 460a executes an operation in step S11. On the other hand, if the result of the determination made in step S10 is NO, the use frequency setting module 460a waits until the use frequency setting module 460a receives brightness information.

In the case where the illuminance sensor is connected directly with the use frequency setting module 460a, the use frequency setting module 460a may identify the brightness of a surrounding environment based on detection data acquired from the illuminance sensor. Thereafter, the use frequency setting module 460a may execute an operation in step S 11.

Next, in step S11, the use frequency setting module 460a determines individually a use frequency for the camera 43a, a use frequency for the LiDAR unit 44a and a use frequency for the millimeter wave radar 45a based on the brightness information received. For example, the use frequency setting module 460a may set a use frequency for each sensor according to the brightness in the surrounding environment as described below.

Table 1: Use frequency for each sensor based on brightness in surrounding environment of Vehicle 1

| Brightness in Surrounding environment | Use frequency for Camera | Use frequency for LiDAR Unit | Use frequency for Millimeter Wave Radar |
|---|---|---|---|
| Bright | Normal | Normal | Normal |
| Dark | Reduced | Normal | Normal |

As shown in Table 1, in the case where the surrounding environment of the vehicle 1 is bright, the use frequency setting module 460a sets the activity frequencies for all the sensors at normal activity frequencies. On the other hand, in the case where the surrounding environment of the vehicle 1 is dark (in the case where the vehicle 1 is driven in a tunnel or at night), while the use frequency setting module 460a reduces the use frequency for the camera 43a (that is, the use frequency setting module 460a sets the use frequency for the camera 43a at a use frequency that is lower than the normal use frequency), the use frequency setting module 460a sets the activity frequencies for the remaining sensors at normal activity frequencies. In this regard, since the detection accuracy with which a surrounding environment is detected using the camera 43a is deteriorated in the case where the surrounding environment of the vehicle 1 is dark, even though the use frequency for the camera 43a is reduced, the recognition accuracy with which a surrounding environment is recognized is not affected greatly. As a result, reducing the use frequency for the camera 43a (for example, an acquisition frame rate of image data or the like) can not only reduce consumed electric power that is consumed by the camera 43a and/or the camera control module 420a but also reduce an arithmetic calculation load that is given to the camera control module 420a. In this way, the activity frequencies for the sensors can be optimized in accordance with brightness of a surrounding environment of the vehicle 1. In addition, the pieces of information on the activity frequencies shown in Table 1 may be stored in a memory of the control unit 40a or the storage device 11.

In the present embodiment, although the brightness information is generated based on the detection data acquired from the illuminance sensor, brightness information may be generated based on image data acquired by the camera 43a. In this case, the use frequency setting module 460a may at first generate brightness information based on image data acquired by the camera 43a and then set a use frequency for each sensor based on the brightness information.

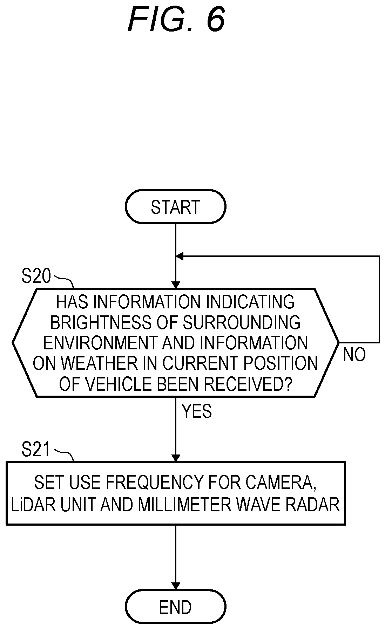

Next, referring to Fig. 6, a second example of the method for setting a use frequency for the sensor (the camera 43a, the LiDAR unit 44a, the millimeter wave radar 45a) in the lighting system 4a will be described. Fig. 6 is a flow chart for explaining a second example of the method for setting a use frequency for each sensor.

As shown in Fig. 6, in step S20, the activity frequency setting module 460a determines whether information indicating brightness of a surrounding environment of the vehicle 1 (hereinafter, referred to as "brightness information") and information on weather at a place where the vehicle 1 exists have been received. Here, since the specific acquisition method for acquiring brightness information has already been described above, an acquisition method for acquiring information on weather will be described in detail. For example, the vehicle control unit 3 acquires information on a place where the vehicle 1 exists currently using the GPS 9 and thereafter transmits the information on the current place of the vehicle 1 and a weather information request including an IP address to a server on a communication network via the radio communication unit 10. Thereafter, the vehicle control unit 3 receives weather information for the current position of the vehicle 1 from the server. The "weather information" may be information on weather (fine, cloudy, rainy, snowy, foggy, and the like) for a place where the vehicle 1 currently exists. Next, the vehicle control unit 3 transmits the brightness information and the weather information to the use frequency setting module 460a of the control unit 40a.

Weather information for a place where the vehicle 1 currently exists may be generated based on image data acquired by the camera 43a. In this case, the use frequency setting module 460a or the camera control module 420a generates weather information based on the image data acquired by the camera 43a. Further, weather information for a place where the vehicle 1 currently exists may be generated based on information indicating a state of wipers mounted on a windscreen of the vehicle. For example, in the case where the wipers are driven, weather for a place where the vehicle 1 currently exists may be determined as rain (that is, weather is bad). On the other hand, in the case where the wipers are not driven, weather for a place where the vehicle 1 currently exists may be determined as fine or cloudy (that is, weather is good). Further, the use frequency setting module 460a may acquire weather information from an external weather sensor.

Next, if the use frequency setting module 460a determines that the brightness information and the weather information have been received (YES in step S20), the use frequency setting module 460a executes an operation in step S21. On the other hand, if the result of the determination made in step S20 is NO, the use frequency setting module 460a waits until the use frequency setting module 460q receives the brightness information and the weather information.

Next, in step S21, the use frequency setting module 460a determines a use frequency for the camera 43a, a use frequency for the LiDAR unit 44a, and a use frequency for the millimeter wave radar 45a based on the brightness information and the weather information that the use frequency setting module 460a have received. For example, the use frequency setting module 460a may set a use frequency for each sensor according to the brightness in the surrounding environment as follows.

Table 2: Use frequency for each sensor based on brightness information and weather information

| Weather States | Brightness in Surrounding environment | Use frequency for Camera | Use frequency for LiDAR Unit | Use frequency for Millimeter Wave Radar |
|---|---|---|---|---|
| Bad | - | Reduced | Reduced | Normal |
| Good | Bright | Normal | Normal | Normal |
| | Dark | Reduced | Normal | Normal |

As shown in Table 2, in the case where the weather at the place where the vehicle 1 currently exists is bad (rainy, snowy, foggy), the use frequency setting module 460a reduces the activity frequencies for the camera 43a and the LiDAR unit 44a, while the use frequency setting module 460a sets the use frequency for the millimeter wave radar 45a at a normal use frequency.

In addition, in the case where the weather at the place where the vehicle 1 currently exists is good (fine, cloudy, or the like) and the surrounding environment of the vehicle 1 is bright, the use frequency setting module 460a sets the activity frequencies for all the sensors at normal activity frequencies. Further, in the case where the weather at the place where the vehicle 1 currently exists is good and the surrounding environment of the vehicle 1 is dark, the use frequency setting module 460a reduces the use frequency for the camera 43a and sets the activity frequencies for the remaining sensors at the normal activity frequencies.

According to the present embodiment, in the case where the weather is bad, since the detection accuracy of the camera 43a and the detection accuracy of the LiDAR unit 44a are reduced, even though the activity frequencies for the camera 43a and the LiDAR unit 44a are reduced, the recognition accuracy in the surrounding environment is not affected greatly by the relevant reduction. As a result, reducing the use frequency for the camera 43a can not only reduce consumed electric power that is consumed by the camera 43a and/or the camera control module 420a but also reduce an arithmetic calculation load that is given to the camera control module 420a. Further, reducing the use frequency (for example, the acquisition frame rate of 3D mapping data, or the like) for the LiDAR unit 44a can not only reduce consumed electric power that is consumed by the LiDAR unit 44a and/or the LiDAR control module 430a but also reduce an arithmetic calculation load that is given to the LiDAR control module 430a. In this way, the activity frequencies for the sensors can be optimized in accordance with the weather condition for the place where the vehicle 1 currently exists. In addition, in the case where the weather is good, the activity frequencies for the sensors are optimized in accordance with the brightness (bright or dark) in the surrounding environment of the vehicle 1.

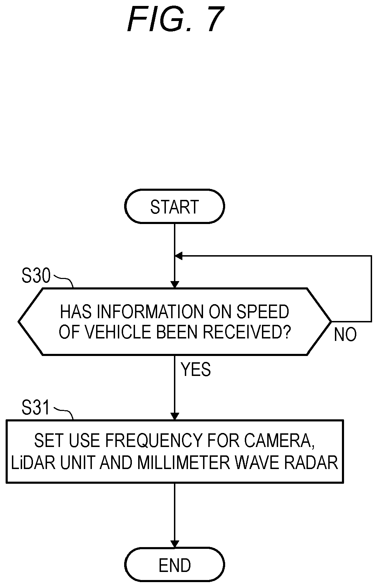

Next, referring to Fig. 7, a third example of the method for setting a use frequency for the sensor (the camera 43a, the LiDAR unit 44a, the millimeter wave radar 45a) in the lighting system 4a will be described. Fig. 7 is a flow chart for explaining a third example of the method for setting a use frequency for each sensor.

As shown in Fig. 7, in step S30, the activity frequency setting module 460a determines whether information indicating a speed of the vehicle 1 (hereinafter, referred to as "speed information") has been received. Specifically, a speed sensor mounted on the vehicle 1 transmits speed information to the vehicle control unit 3. Next, the vehicle control unit 3 transmits the received speed information to the use frequency setting module 460a. Thereafter, if the use frequency setting module 460a determines that it receives the speed information so sent (YES in step S30), the use frequency setting module 460a executes an operation in step S31. On the other hand, if the result of the determination made in step S30 is NO, the use frequency setting module 460a waits until the use frequency setting module 460a receives the speed information.

Next, in step S31, the use frequency setting module 460a sets individually a use frequency for the camera 43a, a use frequency for the LiDAR unit 44a, and a use frequency for the millimeter wave radar 45a based on the received speed information. For example, the use frequency setting module 460a may set a use frequency for each sensor based on accordance with a speed of the vehicle 1 as follows.

Table 3: Use frequency for each sensor based on speed information

| Vehicle Speed | Use frequency for Camera | Use frequency for LiDAR Unit | Use frequency for Millimeter Wave Radar |
|---|---|---|---|
| High Speed | Increased | Increased | Increased |
| Middle Speed | Normal | Normal | Normal |
| Low Speed | Normal | Reduced | Reduced |

As shown in Table 3, in the case where the speed of the vehicle 1 is a high speed, the use frequency setting module 460a increases the activity frequencies for all the sensors (that is, the activity frequencies for all the sensors are set at higher activity frequencies than normal activity frequencies). On the other hand, in the case where the speed of the vehicle 1 is a middle speed, the use frequency setting module 460a sets the activity frequencies for all the sensors at the normal activity frequencies. Further, in the case where the speed of the vehicle 1 is a low speed, the use frequency setting module 460a sets the use frequency for the camera 43a at the normal use frequency, while reducing the activity frequencies for the remaining sensors.

The "low speed" may be defined such that a speed V of the vehicle 1 is a speed that is equal to or slower than a first speed Vth1 (for example, 30 km/h). In addition, the "middle speed" may be defined such that the speed V of the vehicle 1 is a speed that is faster than the first speed Vth1 but is equal to or slower than a second speed Vth2 (for example, 80 km/h). Further, the "high speed" may be defined such that the speed V of the vehicle 1 is a speed that is faster than the second speed Vth2.

According to the present embodiment, when the vehicle 1 runs at high speeds, the activity frequencies for all the sensors are increased. In particular, since a surrounding environment of the vehicle 1 changes at high speeds while the vehicle 1 is running at high speeds, the activity frequencies for all the sensors (in particular, frame rate of detection data or updating rate of surrounding environment information) are preferably increased from the viewpoint of controlling the driving of the vehicle 1 with high accuracy. In this way, since the accuracy for the surrounding environment information If generated based on the pieces of surrounding environment information I1, I2, I3, the driving of the vehicle 1 can be controlled with higher accuracy.

On the other hand, when the vehicle 1 runs at low speeds, the driving safety of the vehicle 1 can sufficiently be secured only by the surrounding environment information I1 generated based on the image data. As a result, reducing the activity frequencies for the LiDAR unit 44a and the millimeter wave radar 45a can not only reduce consumed electric power that is consumed by the LiDAR unit 44a and/or the LiDAR camera control module 430a but also consumed electric power that is consumed by the millimeter wave radar 45a and/or the millimeter wave radar control module 440a. Further, an arithmetic calculation load that is given to the LiDAR control module 430a and an arithmetic calculation load that is given to the millimeter wave radar control module 440a can be reduced. In this way, the activity frequencies for the sensors can be optimized in accordance with the speed of the vehicle 1.

In the use frequency setting method shown in Fig. 7, the use frequency setting module 460a may set use frequency for each sensor based on not only the speed information but also information indicating that the vehicle 1 is currently running on a highway. For example, when it receives information indicating that the vehicle 1 is currently running on a highway (hereinafter, referred to as highway driving information), the use frequency setting module 460a may increase the use frequency for each sensor irrespective of the speed of the vehicle 1. In this regard, since the vehicle 1 highly possibly runs at high speeds on a highway, in order to control the driving of the vehicle 1 with high accuracy, the accuracy for the surrounding environment information If needs to be improved further. On the other hand, when it does not receive the highway driving information, the use frequency setting module 460a may set a use frequency for each sensor based on the speed of the vehicle 1 as shown in Table 3. The highway driving information may be generated based on current position information acquired by the GPS 9 and map information stored in the storage device 11. For example, the vehicle control unit 3 may at first generate highway driving information based on the current position information and the map information and then transmit the highway driving information to the use frequency setting module 460a. In this way, the use frequency for each sensor can be optimized in accordance with the road on which the vehicle is currently running.

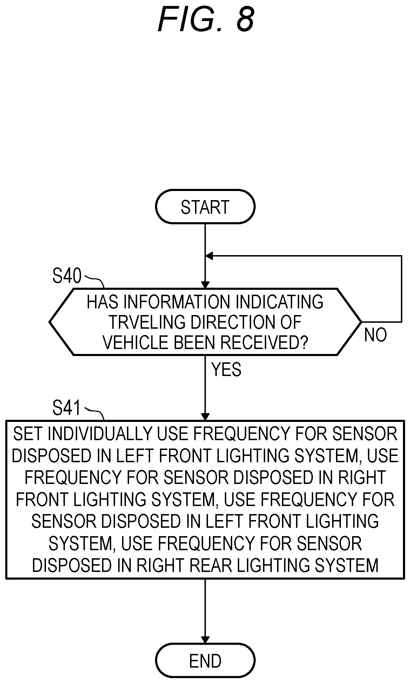

Next, referring to Fig. 8, a fourth example of the method for setting a use frequency for each sensor will be described. In particular, a method for setting a use frequency for each sensor disposed in the lighting systems 4a to 4d. Fig. 8 is a flow chart for explaining a fourth example of a method for setting a use frequency for each sensor. In the following description, the camera, the LiDAR unit, the millimeter wave radar and the like may generally be referred to simply as a "sensor" from time to time.

As shown in Fig. 8, in step S40, the use frequency setting module 460a determines whether information indicating a traveling direction of the vehicle 1 (hereinafter, referred to as traveling direction information) has been received. Specifically, the vehicle control unit 3, which is configured to control the driving of the vehicle 1, transmits traveling direction information to the use frequency setting module 460a. Thereafter, if it receives the traveling direction information sent thereto (YES in step S40), the use frequency setting module 460a executes an operation in step S41. On the other hand, if the result of the determination made in step S40 is NO, the use frequency setting module 460a waits until the use frequency setting module 460a receives the traveling direction information.

Next, in step S41, the use frequency setting module 460a sets activity frequencies for the sensors disposed in the lighting system 4a, activity frequencies for the sensors disposed in the lighting system 4b, activity frequencies for the sensors disposed in the lighting system 4c, and activity frequencies for the sensors disposed in the lighting system 4d based on the received traveling direction information (refer to Fig. 2). For example, the use frequency setting module 460a may set activity frequencies for the sensors disposed in each lighting system based on the traveling direction information as follows.

Table 4: Activity frequencies for sensors based on traveling direction information

| Travelling direction of Vehicle | Use frequency for Sensors in Lighting System 4a | Use frequency for Sensors in Lighting System 4b | Use frequency for Sensors in Lighting System 4c | Use frequency for Sensors in Lighting System 4d |
|---|---|---|---|---|
| Advancing | Normal | Normal | Reduced | Reduced |
| Reversing | Reduced | Reduced | Normal | Normal |
| Right Turn | Reduced | Normal | Reduced | Normal |

As shown in Table 4, in the case where the vehicle 1 is moving forward, the use frequency setting module 460a sets the activity frequencies for the sensors (the camera, the LiDAR unit, the millimeter wave radar) that are disposed in the lighting systems 4a, 4b that are positioned at the front of the vehicle 1 at normal activity frequencies and reduces the activity frequencies for the sensors (the camera, the LiDAR unit, the millimeter wave radar) that are disposed in the lighting systems 4c, 4c that are positioned at the rear of the vehicle 1. In this regard, when the vehicle 1 is moving forward, since surrounding environment information for an area behind the vehicle 1 is less important than surrounding environment information for an area ahead of the vehicle 1, the activity frequencies for the sensors disposed at the rear of the vehicle 1 can be reduced. In this way, not only can consumed electric power that is consumed by the sensors of the lighting system 4c and/or the control unit 40c be reduced, but also an arithmetic calculation load given to the control unit 40c can be reduced. Further, not only can consumed electric power that is consumed by the sensors of the lighting system 4d and/or the control unit 40d be reduced, but also an arithmetic calculation load given to the control unit 40d can be reduced.

In addition, as shown in Table 4, when the vehicle is moving backward, the use frequency setting module 460a reduces the activity frequencies for the sensors disposed in the lighting systems 4a, 4b, while setting the activity frequencies for the sensors disposed in the lighting systems 4c, 4d at normal activity frequencies. In this regard, when the vehicle 1 is moving backward, since the surrounding environment information for the area ahead of the vehicle 1 is less important than the surrounding environment information for the area behind the vehicle 1, the activity frequencies for the sensors disposed at the front of the vehicle 1 can be reduced. In this way, not only can consumed electric power that is consumed by the sensors of the lighting system 4a and/or the control unit 40a be reduced, but also an arithmetic calculation load given to the control unit 40a can be reduced. Further, not only can consumed electric power that is consumed by the sensors of the lighting system 4b and/or the control unit 40b be reduced, but also an arithmetic calculation load given to the control unit 40b can be reduced.

Further, as shown in Table 4, when the vehicle 1 is turning to the right, the use frequency setting module 460a reduces the activity frequencies for the sensors disposed in the lighting systems 4a, 4c that are positioned on a left-hand side of the vehicle 1, while setting the activity frequencies for the sensors disposed in the lighting systems 4b, 4d that are positioned on a right-hand side of the vehicle 1 at normal activity frequencies. In this regard, when the vehicle 1 is turning to the right, since surrounding environment information for a left-hand side area of the vehicle 1 is less important than surrounding environment information for a right-hand side area of the vehicle 1, the activity frequencies for the sensors disposed on the left-hand side of the vehicle 1 can be reduced. In this way, not only can consumed electric power that is consumed by the sensors of the lighting system 4a and/or the control unit 40a be reduced, but also an arithmetic calculation load given to the control unit 40a can be reduced. Further, not only can consumed electric power that is consumed by the sensors of the lighting system 4c and/or the control unit 40c be reduced, but also an arithmetic calculation load given to the control unit 40c can be reduced.

In this way, according to the present embodiment, since the activity frequencies for the sensors are set based on the traveling direction information, the activity frequencies for the sensors can be optimized in accordance with the traveling direction of the vehicle 1.

In the present embodiment, although the camera, the LiDAR unit, and the millimeter wave radar are raised as the plurality of sensors, the present embodiment is not limited thereto. For example, an ultrasonic sensor may be mounted in the lighting system in addition to the sensors described above. In this case, the control unit of the lighting system may control the operation of the ultrasonic sensor and may generate surrounding environment information based on detection data acquired by the ultrasonic sensor. Additionally, at least two of the camera, the LiDAR unit, the millimeter wave radar, and the ultrasonic sensor may be mounted in the lighting system.

In addition, the activity frequencies for the sensors shown in Tables 1 to 4 represent only the examples, and hence, it should be noted that the activity frequencies for the sensors can be modified as required. For example, assume a case where each lighting system includes a far-distance LiDAR unit, a near-distance LiDAR unit, a camera, a millimeter wave radar, and an ultrasonic sensor. In this case, when a weather state is bad, the use frequency setting module 460a may reduce the activity frequencies for the camera and the near-distance LiDAR unit, while setting the activity frequencies for the remaining sensors at normal activity frequencies. In addition, when the vehicle 1 is running at high speeds or the vehicle 1 is running on a highway, the use frequency setting module 460a may reduce the activity frequencies for the near-distance LiDAR unit and the ultrasonic sensor, while setting the activity frequencies for the remaining sensors at normal activity frequencies. Further, when the vehicle 1 is running at low speeds, the use frequency setting module 460a may reduce the activity frequencies for the far-distance LiDAR unit and the millimeter wave radar, while setting the activity frequencies for the remaining sensors at normal activity frequencies.

(Second Embodiment)

Hereinafter, referring to drawings, a second embodiment of the present disclosure (hereinafter, referred to simply as a "present embodiment") will be described. In describing the present embodiment, description of members having like reference numerals to those of the members that have already been described will be omitted as a matter of convenience in description. Additionally, dimensions of members shown in accompanying drawings may differ from time to time from actual dimensions of the members as a matter of convenience in description.

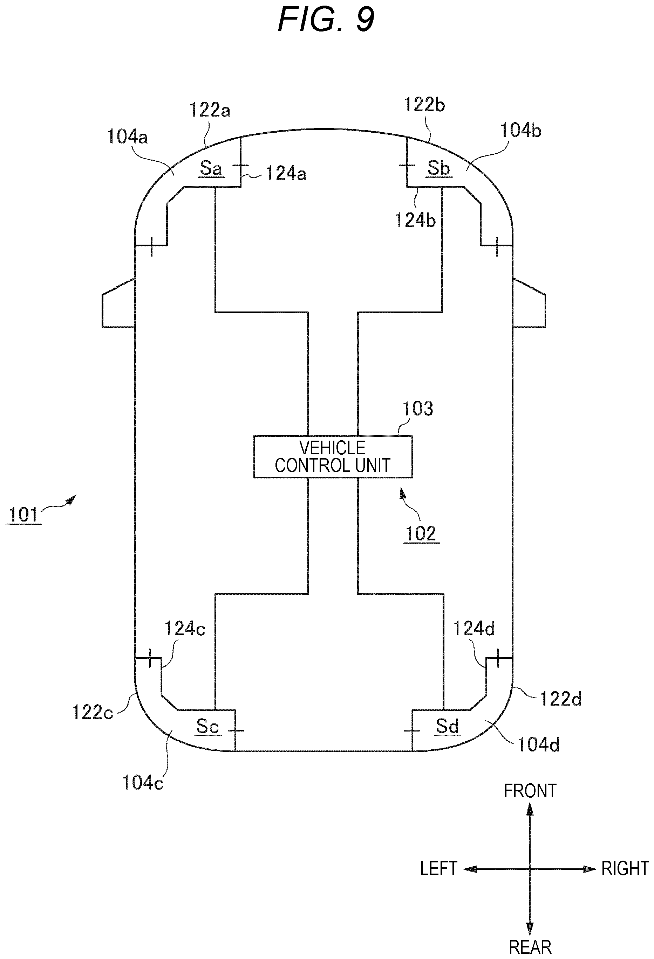

In description of the present embodiment, as a matter of convenience in description, a "left-and-right direction" and a "front-and-rear direction" will be referred to as required. These directions are relative directions set for a vehicle 101 shown in Fig. 9. Here, the "front-and-rear direction" is a direction including a "front direction" and a "rear direction". The "left-and-right" direction is a direction including a "left direction" and a "right direction".

At first, referring to Fig. 9, the vehicle 101 according to the present embodiment will be described. Fig. 9 is a schematic drawing illustrating a top view of the vehicle 101 including a vehicle 102. As shown in Fig. 9, the vehicle 101 is a vehicle (a motor vehicle) that can run in an autonomous driving mode and includes the vehicle 102. The vehicle 102 includes at least a vehicle control unit 103, a left front lighting system 104a (hereinafter, referred to simply as a "lighting system 104a"), a right front lighting system 104b (hereinafter, referred to simply as a "lighting system 104b"), a left rear lighting system 104c (hereinafter, referred to simply as a "lighting system 104c"), and a right rear lighting system 104d (hereinafter, referred to simply as a "lighting system 104d").

The lighting system 104a is provided at a left front of the vehicle 101. In particular, the lighting system 104a includes a housing 124a placed at the left front of the vehicle 101 and a transparent cover 122a attached to the housing 124a. The lighting system 104b is provided at a right front of the vehicle 101. In particular, the lighting system 104b includes a housing 124b placed at the right front of the vehicle 101 and a transparent cover 122b attached to the housing 124b. The lighting system 104c is provided at a left rear of the vehicle 101. In particular, the lighting system 104c includes a housing 124c placed at the left rear of the vehicle 101 and a transparent cover 122c attached to the housing 124c. The lighting system 104d is provided at a right rear of the vehicle 101. In particular, the lighting system 104d includes a housing 124d placed at the right rear of the vehicle 101 and a transparent cover 122d attached to the housing 124d.

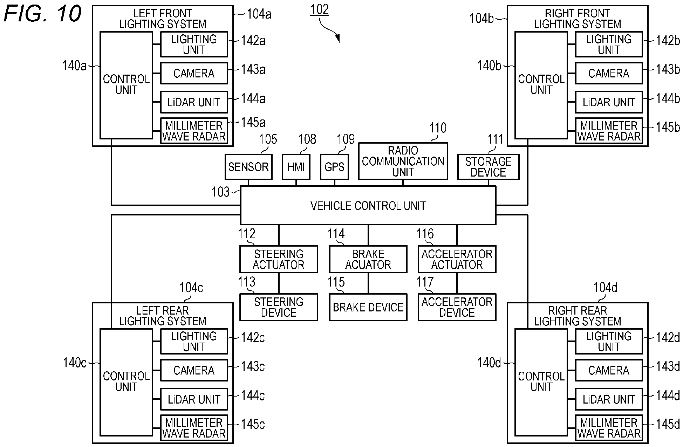

Next, referring to Fig. 10, the vehicle 102 shown in Fig. 9 will be described specifically. Fig. 10 is a block diagram illustrating the vehicle 102. As shown in Fig. 10, the vehicle system 102 includes the vehicle control unit 103, the lighting systems 104a to 104d, a sensor 105, a human machine interface (HMI) 108, a global positioning system (GPS) 109, a radio communication unit 110, and a storage device 111. Further, the vehicle 102 includes a steering actuator 112, a steering device 113, a brake actuator 114, a brake device 115, an accelerator actuator 116, and an accelerator device 117. Furthermore, the vehicle 102 includes a battery (not shown) configured to supply electric power.

The vehicle control unit 103 is configured to control the driving of the vehicle 101. The vehicle control unit 103 is made up, for example, of at least one electronic control unit (ECU). The electronic control unit may include at least one microcontroller including one or more processors and one or more memories and another electronic circuit including an active device and a passive device such as transistors. The processor is, for example, a central processing unit (CPU), a micro processing unit (MPU), a graphics processing unit (GPU) and/or a tensor processing unit (TPU). CPU may be made up of a plurality of CPU cores. GPU may be made up of a plurality of GPU cores. The memory includes a read only memory (ROM) and a random access memory (RAM). ROM may store a vehicle control program. For example, the vehicle control program may include an artificial intelligence (AI) program for autonomous driving. The AI program is a program configured by a machine learning with a teacher or without a teacher that uses a neural network such as deep learning or the like. RAM may temporarily store the vehicle control program, vehicle control data and/or surrounding environment information indicating a surrounding environment of the vehicle. The processor may be configured to deploy a program designated from the vehicle control program stored in ROM on RAM to execute various types of operations in cooperation with RAM

The electronic control unit (ECU) may be configured by at least one integrated circuit such as an application specific integrated circuit (ASIC) or a field-programmable gate array (FPGA). Further, the electronic control unit may be made up of a combination of at least one microcontroller and at least one integrated circuit (FPGA or the like).

The lighting system 104a further includes a control unit 140a, a lighting unit 142a, a camera 143a, a light detection and ranging (LiDAR) unit 144a (an example of a laser radar), and a millimeter wave radar 145a. As shown in Fig. 9, the control unit 140a, the lighting unit 142a, the camera 143a, the LiDAR unit 144a, and the millimeter wave radar 145a are disposed in a space Sa defined by the housing 124a and the transparent cover 122a (an interior of a lamp compartment). The control unit 140a may be disposed in a predetermined place of the vehicle 101 other than the space Sa. For example, the control unit 140a may be configured integrally with the vehicle control unit 103.

The control unit 140a is made up, for example, of at least one electronic control unit (ECU). The electronic control unit may include at least one microcontroller including one or more processers and one or more memories and another electronic circuit (for example, a transistor or the like). The processor is, for example, CPU, MPU, GPU and/or TPU. CPU may be made up of a plurality of CPU cores. GPU may be made up of a plurality of GPU cores. The memory includes ROM and RAM ROM may store a surrounding environment identifying program for identifying a surrounding environment of the vehicle 101. For example, the surrounding environment identifying program is a program configured by a machine learning with a teacher or without a teacher that uses a neural network such as deep learning or the like. RAM may temporarily store the surrounding environment identifying program, image data acquired by the camera 143a, three-dimensional mapping data (point group data) acquired by the LiDAR unit 144a and/or detection data acquired by the millimeter wave radar 145a and the like. The processor may be configured to deploy a program designated from the surrounding environment identifying program stored in ROM on RAM to execute various types of operation in cooperation with RAM. In addition, the electronic control unit (ECU) may be made up of at least one integrated circuit such as ASIC, FPGA, or the like. Further, the electronic control unit may be made up of a combination of at least one microcontroller and at least one integrated circuit (FPGA or the like).

The lighting unit 142a is configured to form a light distribution pattern by emitting light towards an outside (a front) of the vehicle 101. The lighting unit 142a includes a light source for emitting light and an optical system. The light source may be made up, for example, of a plurality of light emitting devices that are arranged into a matrix configuration (for example, N rows × M columns, N > 1, M > 1). The light emitting device is, for example, a light emitting diode (LED), a laser diode (LD) or an organic EL device. The optical system may include at least one of a reflector configured to reflect light emitted from the light source towards the front of the lighting unit 142a and a lens configured to refract light emitted directly from the light source or light reflected by the reflector. In the case where the driving mode of the vehicle 101 is a manual drive mode or a drive assist mode, the lighting unit 142a is configured to form a light distribution pattern for a driver (for example, a low beam light distribution pattern or a high beam light distribution pattern) ahead of the vehicle 101. In this way, the lighting unit 142a functions as a left headlamp unit. On the other hand, in the case where the driving mode of the vehicle 101 is a high-level drive assist mode or a complete autonomous drive mode, the lighting unit 142a may be configured to form a light distribution pattern for a camera ahead of the vehicle 101.

The control unit 140a may be configured to supply individually electric signals (for example, pulse width modulation (PWM) signals) to the plurality of light emitting devices provided on the lighting unit 142a. In this way, the control unit 140a can select individually and separately the light emitting devices to which the electric signals are supplied and control the duty ratio of the electric signal supplied to each of the light emitting devices. That is, the control unit 140a can select the light emitting devices to be turned on or turned off from the plurality of light emitting devices arranged into the matrix configuration and determine the luminance of the light emitting diodes that are illuminated. As a result, the control unit 140a can change the shape and brightness of a light distribution pattern emitted towards the front of the lighting unit 142a.

The camera 143a is configured to detect a surrounding environment of the vehicle 101. In particular, the camera 143a is configured to acquire at first image data indicating a surrounding environment of the vehicle 101 at a frame rate a1 (fps) and to then transmit the image data to the control unit 140a. The control unit 140a identifies a surrounding environment based on the transmitted image data. Here, the surrounding environment information may include information on a target object existing at an outside of the vehicle 101. For example, the surrounding environment information may include information on an attribute of a target object existing at an outside of the vehicle 101 and information on a position of the target object with respect to the vehicle 101. The camera 143a is made up of an imaging device including, for example, a charge-coupled device (CCD), a complementary metal oxide semiconductor (CMOS) or the like. The camera 143a may be configured as a monocular camera or may be configured as a stereo camera. In the case where the camera 143a is a stereo camera, the control unit 140a can identify a distance between the vehicle 101 and a target object (for example, a pedestrian or the like) existing at an outside of the vehicle 101 based on two or more image data acquired by the stereo camera by making use of a parallax. Additionally, in the present embodiment, although one camera 143a is provided in the lighting system 104a, two or more cameras 143a may be provided in the lighting system 104a.

The LiDAR unit 144a (an example of a laser radar) is configured to detect a surrounding environment of the vehicle 101. In particular, the LiDAR unit 144a is configured to acquire at first three-dimensional (3D) mapping data (point group data) indicating a surrounding environment of the vehicle 101 at a frame rate a2 (fps) and to then transmit the 3D mapping data to the control unit 140a. The control unit 140a identifies surrounding environment information based on the 3D mapping data transmitted thereto. Here, the surrounding environment information may include information on a target object existing as an outside of the vehicle 101. For example, the surrounding environment information may include information on an attribute of a target object existing at an outside of the vehicle 101 and information on a position of the target object with respect to the vehicle 101. The frame rate a2 (a second frame rate) at which the 3D mapping data is acquired and the frame rate a1 (a first frame rate) at which the image data is acquired may be the same or different.

More specifically, the LiDAR unit 144a can acquire at first information on a time of flight (TOF) $\Delta T1$ of a laser beam (a light pulse) at each emission angle (a horizontal angle $\theta$, a vertical angle $\varphi$) of the laser beam and can then acquire information on a distance D between the LiDAR unit 144a (the vehicle 101) and an object existing at an outside of the vehicle 101 at each emission angle (a horizontal angle $\theta$, a vertical angle $\varphi$) based on the time of flight $\Delta T1$. The time of flight $\Delta T1$ can be calculated as follows, for example.

$$\text{Time of Flight } \Delta T1 = \text{a time t1 when a laser beam (a light pulse) returns to}$$

$$\text{LiDAR} - \text{a time t0 when LiDAR unit emits the laser beam}$$

In this way, the LiDAR unit 144a can acquire the 3D mapping data indicating the surrounding environment of the vehicle 101.

Additionally, the LiDAR unit 144a includes, for example, a laser light source configured to emit a laser beam, an optical deflector configured to scan a laser beam in a horizontal direction and a vertical direction, an optical system such as a lens, and a receiver configured to accept or receive a laser beam reflected by an object. There is imposed no specific limitation on a central wavelength of a laser beam emitted from the laser light source. For example, a laser beam may be invisible light whose central wavelength is near 900 nm. The optical deflector may be, for example, a micro electromechanical system (MEMS) mirror. The receiver may be, for example, a photodiode. The LiDAR unit 144a may acquire 3D mapping data without scanning the laser beam by the optical deflector. For example, the LiDAR unit 144a may acquire 3D mapping data by use of a phased array method or a flash method. In addition, in the present embodiment, although one LiDAR unit 144a is provided in the lighting system 104a, two or more LiDAR units 144a may be provided in the lighting system 104a. For example, in the case where two LiDAR units 144a are provided in the lighting system 104a, one LiDAR unit 144a may be configured to detect a surrounding environment in a front area ahead of the vehicle 101, while the other LiDAR unit 144a may be configured to detect a surrounding environment in a side area to the vehicle 101.

The millimeter wave radar 145a is configured to detect a surrounding environment of the vehicle 101. In particular, the millimeter wave radar 145a is configured to acquire at first detection data indicating a surrounding environment of the vehicle 101 and to then transmit the detection data to the control unit 140a. The control unit 140a identifies surrounding environment information based on the transmitted detection data. Here, the surrounding environment information may include information on a target object existing at an outside of the vehicle 101. The surrounding environment information may include, for example, information on an attribute of a target object existing at an outside of the vehicle 101, information on a position of the target object with respect to the vehicle 101, and a speed of the target object with respect to the vehicle 101.

For example, the millimeter wave radar 145a can acquire a distance D between the millimeter wave radar 145a (the vehicle 101) and an object existing at an outside of the vehicle 101 by use of a pulse modulation method, a frequency modulated-continuous wave (FM-CW) method or a dual frequency continuous wave (CW) method. In the case where the pulse modulation method is used, the millimeter wave radar 145a can acquire at first information on a time of flight $\Delta T2$ of a millimeter wave at each emission angle of the millimeter wave and can then acquire information on a distance D between the millimeter wave radar 145a (the vehicle 101) and an object existing at an outside of the vehicle 101 at each emission angle based on the information on a time of flight $\Delta T2$. Here, the time of flight $\Delta T2$ can be calculated, for example, as follows.

$$\text{Time of Flight } \Delta T2 = \text{a time t3 when a millimeter wave returns to the millimeter wave radar} - \text{a time t2 when the millimeter wave radar emits the millimeter wave}$$

Additionally, the millimeter wave radar 145a can acquire information on a relative velocity V of an object existing at an outside of the vehicle 101 to the millimeter wave radar 145a (the vehicle 101) based on a frequency f0 of a millimeter wave emitted from the millimeter wave radar 145a and a frequency f1 of the millimeter wave that returns to the millimeter wave radar 145a.

Additionally, in the present embodiment, although one millimeter wave radar 145a is provided in the lighting system 104a, two or more millimeter wave radars 145a may be provided in the lighting system 104a. For example, the lighting system 104a may include a short-distance millimeter wave radar 145a, a middle-distance millimeter wave radar 145a, and a long-distance millimeter wave radar 145a.

The lighting system 104b further includes a control unit 140b, a lighting unit 142b, a camera 143b, a LiDAR unit 144b, and a millimeter wave radar 145b. As shown in Fig. 9, the control unit 140b, the lighting unit 142b, the camera 143b, the LiDAR unit 144b, and the millimeter wave radar 145b are disposed in a space Sb defined by the housing 124b and the transparent cover 122b (an interior of a lamp compartment). The control unit 140b may be disposed in a predetermined place on the vehicle 101 other than the space Sb. For example, the control unit 140b may be configured integrally with the vehicle control unit 103. The control unit 140b may have a similar function and configuration to those of the control unit 140a. The lighting unit 142b may have a similar function and configuration to those of the lighting unit 142a. In this regard, the lighting unit 142a functions as the left headlamp unit, while the lighting unit 142b functions as a right headlamp unit. The camera 143b may have a similar function and configuration to those of the camera 143a. The LiDAR unit 144b may have a similar function and configuration to those of the LiDAR unit 144a. The millimeter wave radar 145b may have a similar function and configuration to those of the millimeter wave radar 145a.

The lighting system 104c further includes a control unit 140c, a lighting unit 142c, a camera 143c, a LiDAR unit 144c, and a millimeter wave radar 145c. As shown in Fig. 9, the control unit 140c, the lighting unit 142c, the camera 143c, the LiDAR unit 144c, and the millimeter wave radar 145c are disposed in a space Sc defined by the housing 124c and the transparent cover 122c (an interior of a lamp compartment). The control unit 140c may be disposed in a predetermined place on the vehicle 101 other than the space Sc. For example, the control unit 140c may be configured integrally with the vehicle control unit 103. The control unit 140c may have a similar function and configuration to those of the control unit 140a.

The lighting unit 142c is configured to form a light distribution pattern by emitting light towards an exterior (a rear) of the vehicle 101. The lighting unit 142c includes a light source for emitting light and an optical system. The light source may be made up, for example, of a plurality of light emitting devices that are arranged into a matrix configuration (for example, N rows × M columns, N > 1, M > 1). The light emitting device is, for example, an LED, an LD or an organic EL device. The optical system may include at least one of a reflector configured to reflect light emitted from the light source towards the front of the lighting unit 142c and a lens configured to refract light emitted directly from the light source or light reflected by the reflector. In the case where the driving mode of the vehicle 101 is the manual drive mode or the drive assist mode, the lighting unit 142c may be turned off. On the other hand, in the case where the driving mode of the vehicle 101 is the high-level drive assist mode or the complete autonomous drive mode, the lighting unit 142c may be configured to form a light distribution pattern for a camera behind the vehicle 101.

The camera 143c may have a similar function and configuration to those of the camera 143a. The LiDAR unit 144c may have a similar function and configuration to those of the LiDAR unit 144c. The millimeter wave radar 145c may have a similar function and configuration to those of the millimeter wave radar 145a.

The lighting system 104d further includes a control unit 140d, a lighting unit 142d, a camera 143d, a LiDAR unit 144d, and a millimeter wave radar 145d. As shown in Fig. 9, the control unit 140d, the lighting unit 142d, the camera 143d, the LiDAR unit 144d, and the millimeter wave radar 145d are disposed in a space Sd defined by the housing 124d and the transparent cover 122d (an interior of a lamp compartment). The control unit 140d may be disposed in a predetermined place on the vehicle 101 other than the space Sd. For example, the control unit 140d may be configured integrally with the vehicle control unit 103. The control unit 140d may have a similar function and configuration to those of the control unit 140c. The lighting unit 142d may have a similar function and configuration to those of the lighting unit 142c. The camera 143d may have a similar function and configuration to those of the camera 143c. The LiDAR unit 144d may have a similar function and configuration to those of the LiDAR unit 144c. The millimeter wave radar 145d may have a similar function and configuration to those of the millimeter wave radar 145c.

The sensor 105 may include an acceleration sensor, a speed sensor, a gyro sensor, and the like. The sensor 105 detects a driving state and outputs driving state information indicating such a driving state of the vehicle 101 to the vehicle control unit 103. The sensor 105 may further include a seating sensor configured to detect whether the driver is seated on a driver's seat, a face direction sensor configured to detect a direction in which the driver directs his or her face, an exterior weather sensor configured to detect an exterior weather state, a human or motion sensor configured to detect whether a human exists in an interior of a passenger compartment. Furthermore, the sensor 105 may include an illuminance sensor configured to detect a degree of brightness (an illuminance) of a surrounding environment of the vehicle 101. The illuminance sensor may determine a degree of brightness of a surrounding environment of the vehicle 101, for example, in accordance with a magnitude of optical current outputted from a photodiode.

The human machine interface (HMI) 108 is made up of an input module configured to receive an input operation from the driver and an output module configured to output the driving state information or the like towards the driver. The input module includes a steering wheel, an accelerator pedal, a brake pedal, a driving modes changeover switch configured to switch driving modes of the vehicle 101, and the like. The output module includes a display configured to display thereon driving state information, surrounding environment information and an illuminating state of the lighting system 4, and the like.

The global positioning system (GPS) 109 acquires information on a current position of the vehicle 101 and outputs the current position information so acquired to the vehicle control unit 103. The radio communication unit 110 receives information on other vehicles running or existing on the periphery of the vehicle 101 (for example, other vehicles' running information) from the other vehicles and transmits information on the vehicle 101 (for example, subject vehicle's running information) to the other vehicles (a vehicle-vehicle communication).

The radio communication unit 110 receives infrastructural information from infrastructural equipment such as a traffic signal controller, a traffic sign lamp or the like and transmits the subject vehicle's running information of the vehicle 101 to the infrastructural equipment (a road-vehicle communication). In addition, the radio communication unit 110 receives information on a pedestrian from a mobile electronic device (a smartphone, an electronic tablet, an electronic wearable device, and the like) that the pedestrian carries and transmits the subject vehicle's running information of the vehicle 101 to the mobile electronic device (a pedestrian-vehicle communication). The vehicle 101 may communicate directly with other vehicles, infrastructural equipment or a mobile electronic device in an ad hoc mode or may communicate with them via access points. Radio communication standards include, for example, Wi-Fi (a registered trademark), Bluetooth (a registered trademark), ZigBee (a registered trademark), and LPWA. The vehicle 101 may communicate with other vehicles, infrastructural equipment or a mobile electronic device via a mobile communication network.

The storage device 111 is an external storage device such as a hard disk drive (HDD) or a solid state drive (SSD). The storage device 111 may store two-dimensional or three-dimensional map information and/or a vehicle control program. The storage device 111 outputs map information or a vehicle control program to the vehicle control unit 103 in demand for the vehicle control unit 103. The map information and the vehicle control program may be updated via the radio communication unit 110 and a communication network such as the internet.

In the case where the vehicle 101 is driven in the autonomous driving mode, the vehicle control unit 103 automatically generates at least one of a steering control signal, an accelerator control signal, and a brake control signal based on the driving state information, the surrounding environment information, the current position information and/or the map information. The steering actuator 112 receives a steering control signal from the vehicle control unit 103 and controls the steering device 113 based on the steering control signal so received. The brake actuator 114 receives a brake control signal from the vehicle control unit 103 and controls the brake device 115 based on the brake control signal so received. The accelerator actuator 116 receives an accelerator control signal from the vehicle control unit 103 and controls the accelerator device 117 based on the accelerator control signal so received. In this way, in the autonomous driving mode, the driving of the vehicle 101 is automatically controlled by the vehicle system 102.

On the other hand, in the case where the vehicle 101 is driven in the manual drive mode, the vehicle control unit 103 generates a steering control signal, an accelerator control signal, and a brake control signal as the driver manually operates the accelerator pedal, the brake pedal, and the steering wheel. In this way, in the manual drive mode, since the steering control signal, the accelerator control signal, and the brake control are generated as the driver manually operates the accelerator pedal, the brake pedal, and the steering wheel, the driving of the vehicle 101 is controlled by the driver.

Next, the driving modes of the vehicle 101 will be described. The driving modes include the autonomous driving mode and the manual drive mode. The autonomous driving mode includes a complete autonomous drive mode, a high-level drive assist mode, and a drive assist mode. In the complete autonomous drive mode, the vehicle 102 automatically performs all the driving controls of the vehicle 101 including the steering control, the brake control, and the accelerator control, and the driver stays in a state where the driver cannot drive or control the vehicle 101 as he or she wishes. In the high-level drive assist mode, the vehicle 102 automatically performs all the driving controls of the vehicle 101 including the steering control, the brake control, and the accelerator control, and although the driver stays in a state where the driver can drive or control the vehicle 101, the driver does not drive the vehicle 101. In the drive assist mode, the vehicle 102 automatically performs a partial driving control of the steering control, the brake control, and the accelerator control, and the driver drives the vehicle 101 with assistance of the vehicle 102 in driving. On the other hand, in the manual drive mode, the vehicle 102 does not perform the driving control automatically, and the driver drives the vehicle 101 without any assistance of the vehicle 102 in driving.

In addition, the driving modes of the vehicle 101 may be switched over by operating a driving modes changeover switch. In this case, the vehicle control unit 103 switches over the driving modes of the vehicle 101 among the four driving modes (the complete autonomous drive mode, the high-level drive assist mode, the drive assist mode, the manual drive mode) in response to an operation performed on the driving modes changeover switch by the driver. The driving modes of the vehicle 101 may automatically be switched over based on information on an autonomous driving permitting section where the autonomous driving of the vehicle 101 is permitted and an autonomous driving prohibiting section where the autonomous driving of the vehicle 101 is prohibited, or information on an exterior weather state. In this case, the vehicle control unit 103 switches the driving modes of the vehicle 101 based on those pieces of information. Further, the driving modes of the vehicle 101 may automatically be switched over by use of the seating sensor or the face direction sensor. In this case, the vehicle control unit 103 may switch the driving modes of the vehicle 101 based on an output signal from the seating sensor or the face direction sensor.

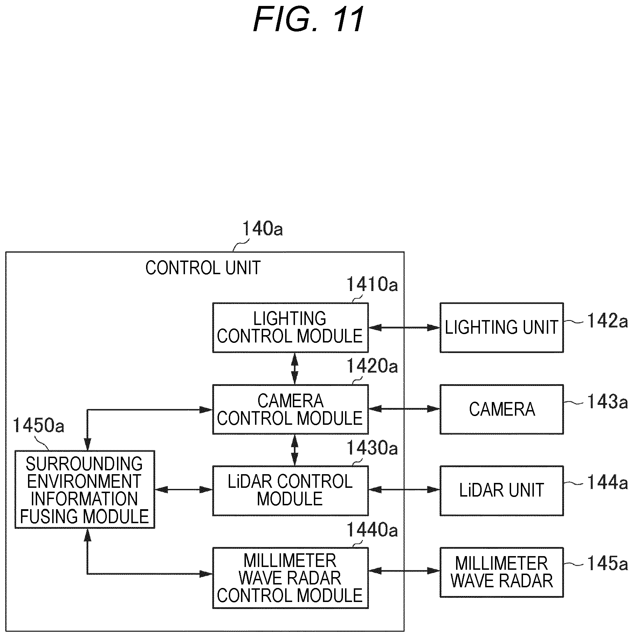

Next, referring to Fig. 11, the function of the control unit 140a will be described. Fig. 11 is a diagram illustrating functional blocks of the control unit 140a of the lighting system 104a. As shown in Fig. 11, the control unit 140a is configured to control individual operations of the lighting unit 142a, the camera 143a, the LiDAR unit 144a, and the millimeter wave radar 145a. In particular, the control unit 140a includes a lighting control module 1410a, a camera control module 1420a (an example of a first generator), a LiDAR control module 1430a (an example of a second generator), a millimeter wave control module 1440a, and a surrounding environment information fusing module 1450a.

The lighting control module 1410a controls the lighting unit 142a so that the lighting unit 142a emits a predetermined light distribution pattern towards a front area ahead of the vehicle 101. For example, the lighting control module 1410a may change the light distribution pattern that is emitted from the lighting unit 142a in accordance with the driving mode of the vehicle 101. Further, the lighting control module 1410a is configured to control the turning on and off of the lighting unit 142a based on a rate a3 (Hz). As will be described later, the rate a3 (a third rate) of the lighting unit 142a may be the same as or different from a frame rate a1 of image data acquired by the camera 143a.

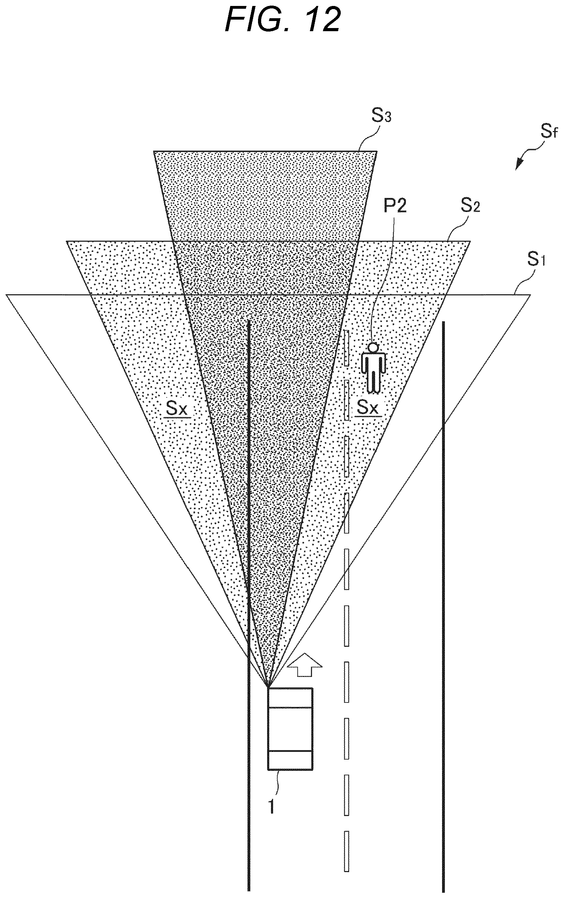

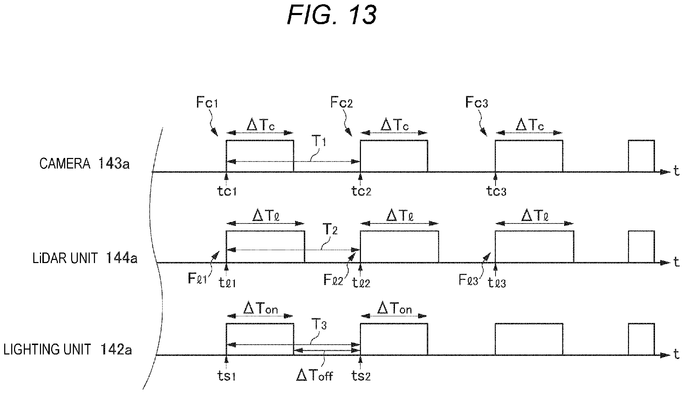

The camera control module 1420a is configured to control the operation of the camera 143a. In particular, the camera control module 1420a is configured to control the camera 143a so that the camera 143a acquires image data (first detection data) at a frame rate a1 (a first frame rate). Further, the camera control module 1420a is configured to control an acquisition timing (in particular, an acquisition start time) of each frame of image data. The camera control module 1420a is configured to generate surrounding environment information of the vehicle 101 in a detection area S1 (refer to Fig. 12) for the camera 143a (hereinafter, referred to as surrounding environment information Ic) based on image data outputted from the camera 143a. More specifically, as shown in Fig. 13, the camera control module 1420a generates surrounding environment information Ic1 of the vehicle 101 based on a frame Fc1 of image data, generates surrounding environment information Ic2 based on a frame Fc2 of the image data, and generates surrounding environment information Ic3 based on a frame Fc3 of the image data. In this way, the camera control module 1420a generates surrounding environment information for each frame of the image data.

The LiDAR control module 1430a is configured to control the operation of the LiDAR unit 144a. In particular, the LiDAR control module 1430a is configured to control the LiDAR unit 144a so that the LiDAR unit 144a acquires 3D mapping data (second detection data) at a frame rate a2 (a second frame rate). Further, the LiDAR control module 1430a is configured to control an acquisition timing (in particular, an acquisition start time) of each frame of 3D mapping data. The LiDAR control module 1430a is configured to generate surrounding environment information of the vehicle 101 in a detection area S2 (refer to Fig. 12) for the LiDAR unit 144a (hereinafter, referred to as surrounding environment information I1) based on 3D mapping data outputted from the LiDAR unit 144a. More specifically, as shown in Fig. 13, the LiDAR control module 1430a generates surrounding environment information Il1 based on a frame Fl of 3D mapping data, generates surrounding environment information 112 based on a frame Fl2 of the 3D mapping data, and generates surrounding environment information 113 based on a frame Fl3 of the 3D mapping data. In this way, the LiDAR control module 1430a generates surrounding environment information for each frame of the 3D mapping data.

The millimeter wave radar control module 1440a is configured not only to control the operation of the millimeter wave radar 145a but also to generate surrounding environment information Im of the vehicle 101 in a detection area S3 (refer to Fig. 12) for the millimeter wave radar 145a based on detection data outputted from the millimeter wave radar 145a. For example, the millimeter wave radar control module 1440a generates surrounding environment information Im1 based on a frame Fm1 (not shown) of detection data, generates surrounding environment information Im2 based on a frame F2 (not shown) of the detection data, and generates surrounding environment information Im3 based on a frame Fm3 (not shown) of the detection data.

The surrounding environment information fusing module 1450a is configured to generate fused surrounding environment information If by acquiring pieces of surrounding environment information Ic, Il, Im to thereby fuse the pieces of surrounding environment information Ic, Il, Im so acquired. In particular, in the case where an acquisition period of a frame Fc1 of image data, an acquisition period of frame Fl1 of 3D mapping data, and an acquisition period of a frame Fm1 of detection data acquired by the millimeter wave radar overlap one another, the surrounding environment information fusing module 1450a may generate fused circumferential environment information If1 by fusing together surrounding environment information Ic1 corresponding to the frame Fc1, surrounding environment information Il1 corresponding to the frame Fl1, and surrounding environment information Im1 corresponding to the frame Fm1.

As shown in Fig. 12, the surrounding environment information If may include information on a target object existing at an outside of the vehicle 101 in a detection area Sf that is a combination of the detection area S1 for the camera 143a, the detection area S2 for the LiDAR unit 144a, and the detection area S3 for the millimeter wave radar 145a. For example, the surrounding environment information If may include information on an attribute of a target object, a position of the target object with respect to the vehicle 101, a distance between the vehicle 101 and the target object and/or a speed of the target object with respect to the vehicle 101. The surrounding environment information fusing module 1450a transmits the surrounding environment information If to the vehicle control unit 103.

The control units 140b, 140c, 140d may each have a similar function to that of the control unit 140a. That is, the control units 140b to 140d may each include a lighting control module, a camera control module (an example of a first generator), a LiDAR control module (an example of a second generator), a millimeter wave radar control module, and a surrounding environment information fusing module. The surrounding environment information fusing module of each of the control units 140b to 140d may transmit fused surrounding environment information If to the vehicle control unit 103. The vehicle control unit 103 may control the driving of the vehicle 101 based on the surrounding environment information If transmitted thereto from each of the control units 140a to 140d and other pieces of information (driving control information, current position information, map information, and the like).

Next, referring to Fig. 13, a relationship between an acquisition timing of each frame of image data and an acquisition timing of each frame of 3D mapping data will be described in detail. In the following description, as a matter of convenience in description, nothing specific will be described on an acquisition timing at which the millimeter wave radar 145a acquires detection data. That is, in the present embodiment, a special attention will be paid to the relationship between the acquisition timing of the image data and the acquisition time of the 3D mapping data.

In Fig. 13, an upper level denotes acquisition timings at which frames (for example, frames Fc1, Fc2, Fc3) of image data are acquired by the camera 143a during a predetermined period. Here, a frame Fc2 (an example of a second frame of first detection data) constitutes a frame of image data that is acquired by the camera 143a subsequent to a frame Fc1 (an example of a first frame of the first detection data). A frame Fc3 constitutes a frame of the image data that is acquired by the camera 143a subsequent to the frame Fc2.

An acquisition period ΔTc during which one frame of image data is acquired corresponds to an exposure time necessary to form one frame of image data (in other words, a time during which light is taken in to form one frame of image data). A time for processing an electric signal outputted from an image sensor such as CCD or CMOS is not included in the acquisition period ΔTc.

A time period between an acquisition start time tc1 of the frame Fc1 and an acquisition start time tc2 of the frame Fc2 corresponds to a frame period T1 of image data. The frame period T1 corresponds to a reciprocal number (T1=1/a1) of a frame rate a1.

In Fig. 13, a middle level denotes acquisition timings at which frames (for example, frames FI1, FI2, FI3) of 3D mapping data are acquired by the LiDAR unit 144a during a predetermined period. A frame FI2 (an example of a second frame of second detection data) constitutes a frame of 3D mapping data that is acquired by the LiDAR unit 144a subsequent to a frame FI1 (an example of a first frame of the second detection data). A frame FI3 constitutes a frame of the 3D mapping data that is acquired by the LiDAR unit 144a subsequent to the frame FI2. An acquisition period ΔTI during which one frame of 3D mapping data does not include a time for processing an electric signal outputted from a receiver of the LiDAR unit 144a.

A time period between an acquisition start time tI1 of the frame FI1 and an acquisition start time tI2 of the frame FI2 corresponds to a frame period T2 of 3D mapping data. The frame period T2 corresponds to a reciprocal number (T2=1/a1) of a frame rate a2.

As shown in Fig. 13, in the present embodiment, the acquisition periods ΔTc during which the individual frames of the image data are acquired and the acquisition periods ΔTI during which the individual frames of the 3D mapping data are acquired overlap each other. Specifically, an acquisition period ΔTI during which the frame FI1 of the 3D mapping data is acquired overlaps an acquisition period ΔTc during which the frame Fc1 of the image data is acquired. An acquisition period ΔTI during which the frame FI2 of the 3D mapping data is acquired overlaps an acquisition period ΔTc during which the frame Fc2 of the image data is acquired. An acquisition period ΔTI during which the frame FI3 of the 3D mapping data is acquired overlaps an acquisition period ΔTc during which the frame Fc3 of the image data is acquired.

In this regard, the acquisition start time of each frame of the image data may coincide with the acquisition start time of each frame of the 3D mapping data. Specifically, the acquisition start time tI1 at which acquisition of the frame FI1 of the 3D mapping data is started may coincide with the acquisition start time tc1 at which acquisition of the frame Fc1 of the image data is started. The acquisition start time tI2 at which acquisition of the frame FI2 of the 3D mapping data is started may coincide with the acquisition start time tc2 at which acquisition of the frame Fc2 of the image data is started. The acquisition start time tI3 at which acquisition of the frame FI3 of the 3D mapping data is started may coincide with the acquisition start time tc3 at which acquisition of the frame Fc3 of the image data is started.

In this way, according to the present embodiment, the acquisition periods ΔTc during which the individual frames of the image data are acquired and the acquisition periods ΔTI during which the individual frames of the 3D mapping data are acquired overlap each other. As a result, a time band for surrounding environment information Ic1 that is generated based on the frame Fc1 substantially coincides with a time band for surrounding environment information II1 that is generated based on the frame FI1. As a result, a recognition accuracy with which surrounding environment of the vehicle 101 is recognized can be improved by using the pieces of surrounding environment information Ic1, II1 which have about the same time band. In particular, the accuracy of surrounding environment information If1 that is generated by the surrounding environment information fusing module 1450a can be improved as a result of the time band of the surrounding environment information Ic1 substantially coinciding with the time band of the surrounding environment information II1. The surrounding environment information If1 is made up of the pieces of surrounding environment information Ic1, II1, and surrounding environment information Im1 that is generated based on a frame Fm1 of the millimeter wave radar 145a. An acquisition period of the frame Fm1 of the millimeter wave radar 145a may overlap the acquisition period ΔTc of the frame Fc1 and the acquisition period ΔTI of the frame FI1. In this case, the accuracy of the surrounding environment information If1 can be improved further.

In addition, since the surrounding environment of the vehicle 101 changes at high speeds when the vehicle 101 is running at high speeds, in the case where the acquisition period ΔTc of the frame Fc1 and the acquisition period ΔTI of the frame FI1 do not overlap each other, the surrounding environment information Ic1 and the surrounding environment information II1 may differ from each other in an overlapping area Sx (refer to Fig. 12) where the detection area S1 and the detection area S2 overlap each other. For example, there is a possibility that the surrounding environment information Ic1 indicates an existence of a pedestrian P2, while the surrounding environment information II1 does not indicate the existence of the pedestrian P2. In this way, in the case where the pieces of surrounding environment information Ic1, II1 having the time bands that differ from each other are fused together, the accuracy of the surrounding environment information If1 may possibly be deteriorated.

Next, a relationship among the acquisition timing at which the individual frames of the image data are acquired, the acquisition timing at which the individual frames of the 3D mapping data are acquired, and a turning on and off timing at which the lighting unit 142a is turned on and off will be described in detail. In Fig. 13, a lower level denotes turning on and off timings at which the lighting unit 142a is turned on and off (a turning on period ΔTon and a turning off period ΔToff) during a predetermined period. A period between a turning on start time ts 1 at which the turning on period ΔTon of the lighting unit 142a starts and a turning on start time ts2 at which a subsequent turning on period ΔTon of the lighting system 142a starts corresponds to a turning on and off period T3. The turning on and off period T3 corresponds to a reciprocal number of a rate a3 (T3 = 1/a3).

As shown in Fig. 13, the turning on and off period T3 of the lighting unit 142a coincides with the frame period T1 of the image data. In other words, the rate a3 of the lighting unit 142a coincides with the frame rate a1 of the image data. Further, the lighting unit 142a is turned on or illuminated during the acquisition period ΔTc during which the individual frames (for example, the frames Fc1, Fc2, Fc3) of the image data are acquired.

In this way, according to the present embodiment, since image data indicating a surrounding environment of the vehicle 101 is acquired by the camera 143a while the lighting unit 142a is being illuminated, in the case where the surrounding environment of the vehicle 101 is dark (for example, at night), the generation of a blackout in image data can preferably be prevented.

In the example illustrated in Fig. 13, although the acquisition periods ΔTc during which the individual frames of the image data overlap completely the turning on periods ΔTon during which the lighting unit 142a is illuminated, the present embodiment is not limited thereto. The acquisition periods ΔTc during which the individual frames of the image data are acquired need only overlap partially the turning on periods ΔTon during which the lighting unit 142a is illuminated.

In the present embodiment, the camera control module 1420a may at first determine an acquisition timing at which image data is acquired (for example, including an acquisition start time for an initial frame or the like) before the camera 143a is driven and may then transmits information on the acquisition timing at which the image data is acquired to the LiDAR control module 1430a and the lighting control module 1410a. In this case, the LiDAR control module 1430a determines an acquisition timing at which 3D mapping data is acquired (an acquisition start time for an initial frame or the like) based on the received information on the acquisition timing at which 3D mapping data is acquired. Further, the lighting control module 1410a determines a turning on timing (an initial turning on start time or the like) at which the lighting unit 142a is turned on based on the received information on the acquisition timing at which image data is acquired. Thereafter, the camera control module 1420a drives the camera 143a based on the information on the acquisition timing at which image data is acquired. In addition, the LiDAR control module 1430a drives the LiDAR unit 144a based on the information on the acquisition timing at which 3D mapping data is acquired. Further, the lighting control module 1410a turns on and off the lighting unit 142a based on the information on the turning on and off timing at which the lighting unit 142 is turned on and off.

In this way, the camera 143a and the LiDAR unit 144a can be driven so that the acquisition start time at which acquisition of individual frames of image data is started and the acquisition start time at which acquisition of individual frames of 3D mapping data is started coincide with each other. Further, the lighting unit 142a can be controlled in such a manner as to be turned on or illuminated during the acquisition period ΔTc during which individual frames of image data are acquired.

On the other hand, as an alternative to the method described above, the surrounding environment information fusing module 1450a may determine an acquisition timing at which image data is acquired, an acquisition timing at which 3D mapping data is acquired, and a turning on and off timing at which the lighting unit 142a is turned on and off. In this case, the surrounding environment information fusing module 1450a transmits information on the image data acquisition timing to the camera control module 1420a, transmits information on the 3D mapping data acquisition timing to the LiDAR control module 1430a, and transmits information on the turning on and off timing of the lighting unit 142a to the lighting control module 1410a. Thereafter, the camera control module 1420a drives the camera 143 a based on the information on the image data acquisition timing. Additionally, the LiDAR control module 1430a drives the LiDAR unit 144a based on the information on the 3D mapping data acquisition timing. Further, the lighting control module 1410a causes the lighting unit 142a to be turned on and off based on the information on the turning on and off timing of the lighting unit 142a.

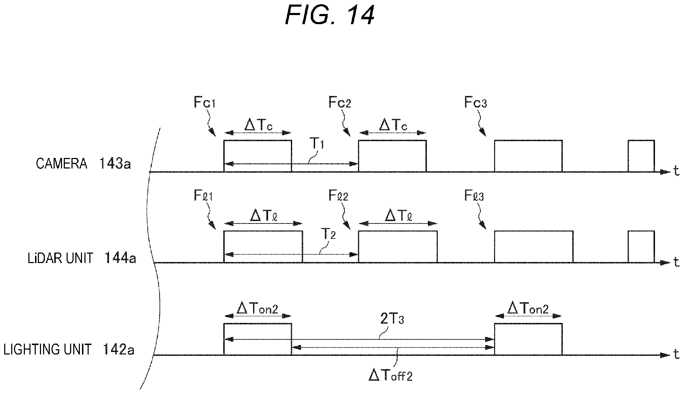

Next, referring to Fig. 14, a relationship among the acquisition timing at which the individual frames of the image data are acquired, the acquisition timing at which the individual frames of the 3D mapping data are acquired, and the turning on and off timing at which the lighting unit 142a is turned on and off when the turning on and off period T3 of the lighting unit 142a is doubled will be described. As shown in Fig. 14, the turning on and off timing of the lighting unit 142a is set at 2T3. In other words, since the rate of the lighting unit 142a is set at a3/2, the rate of the lighting unit 142a becomes a half of the frame rate a1 of the image data. Further, the lighting unit 142a is turned on or illuminated during the acquisition period ΔTc during which the frame Fc1 of the image data is acquired, while the lighting unit 142a is turned off during the acquisition period ΔTc during which the subsequent frame Fc2 of the image data is acquired. In this way, since the rate a3/2 of the lighting unit 142a becomes a half of the frame rate a1 of the image data, an acquisition period during which a predetermined frame of the image data is acquired overlaps a turning on period ΔTon2 during which the lighting unit 142a is turned on or illuminated, and an acquisition period during which a subsequent frame to the predetermined frame is acquired overlaps a turning off period ΔToff2 during which the lighting unit 142a is turned off.

In this way, the camera 143a acquires image data indicating a surrounding environment of the vehicle 101 while the lighting unit 142a is kept illuminated and acquires the relevant image data while the lighting unit 142a is kept turned off. That is, the camera 143a acquires alternately a frame of the image data when the lighting unit 142a is illuminated and a frame of the image data when the lighting unit 142a is turned off. As a result, whether a target object existing on the periphery of the vehicle 101 emits light or reflects light can be identified by comparing image data M1 imaged while the lighting unit 142a is kept turned off with image data M2 imaged while the lighting unit 142a is kept illuminated. In this way, the camera control module 1420a can more accurately identify the attribute of the target object existing on the periphery of the vehicle 101. Further, with the lighting unit 142a kept illuminated, part of light emitted from the lighting unit 142a and reflected by the transparent cover 122a is incident on the camera 143a, whereby stray light may appear in the image data M2. On the other hand, with the lighting unit 142a kept turned off, no stray light does not appear in the image data M1. In this way, the camera control module 1420a can identify the stray light appearing in the image data M2 by comparing the image data M1 with the image data M2. Consequently, the recognition accuracy with which the surrounding environment of the vehicle 101 is recognized can be improved.

(Third Embodiment)

Hereinafter, referring to drawings, a third embodiment of the present disclosure (hereinafter, referred to simply as a "present embodiment") will be described. In description of the present embodiment, a description of members having like reference numerals to those of the members that have already been described will be omitted as a matter of convenience in description. Additionally, dimensions of members shown in accompanying drawings may differ from time to time from actual dimensions of the members as a matter of convenience in description.

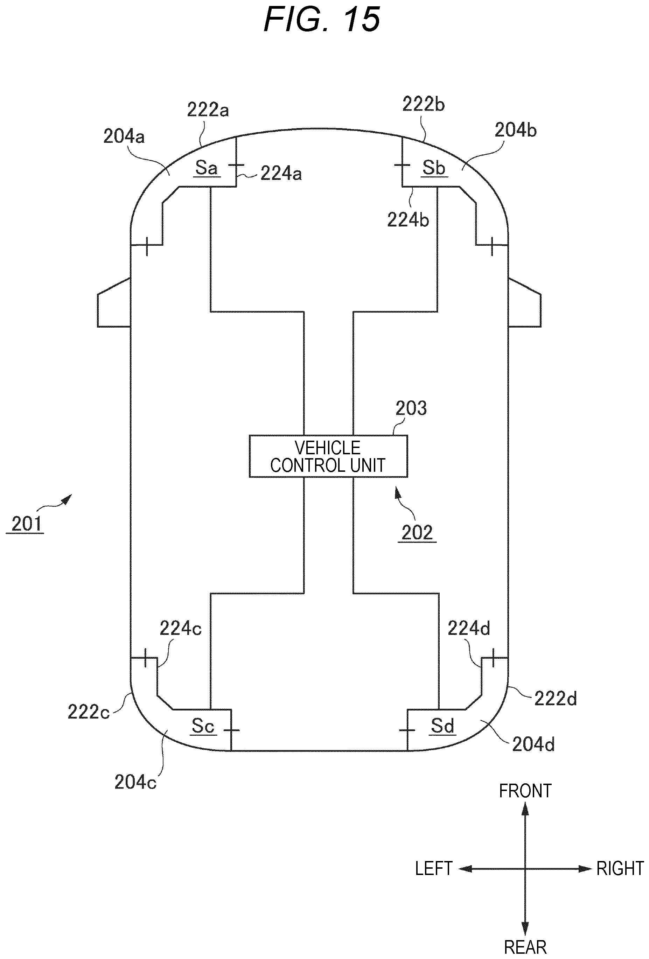

In description of the present embodiment, as a matter of convenience in description, a "left-and-right direction" and a "front-and-rear direction" will be referred to as required. These directions are relative directions set for a vehicle 201 shown in Fig. 15. Here, the "front-and rear direction" is a direction including a "front direction" and a "rear direction". The "left-and-right" direction is a direction including a "left direction" and a "right direction".

At first, referring to Fig. 15, the vehicle 201 according to the present embodiment will be described. Fig. 15 is a schematic drawing illustrating a top view of the vehicle 201 including a vehicle system 202. As shown in Fig. 15, the vehicle 201 is a vehicle (a motor vehicle) that can run in an autonomous driving mode and includes the vehicle system 202. The vehicle system 202 includes at least a vehicle control unit 203, a left front lighting system 204a (hereinafter, referred to simply as a "lighting system 204a"), a right front lighting system 204b (hereinafter, referred to simply as a "lighting system 204b"), a left rear lighting system 204c (hereinafter, referred to simply as a "lighting system 204c"), and a right rear lighting system 204d (hereinafter, referred to simply as a "lighting system 204d").

The lighting system 204a is provided at a left front of the vehicle 201. In particular, the lighting system 204a includes a housing 224a placed at the left front of the vehicle 201 and a transparent cover 222a attached to the housing 224a. The lighting system 204b is provided at a right front of the vehicle 201. In particular the lighting system 204b includes a housing 224b placed at the right front of the vehicle 201 and a transparent cover 222b attached to the housing 224b. The lighting system 204c is provided at a left rear of the vehicle 201. In particular, the lighting system 204c includes a housing 224c placed at the left rear of the vehicle 201 and a transparent cover 222c attached to the housing 224c. The lighting system 204d is provided at a right rear of the vehicle 201. In particular, the lighting system 204d includes a housing 224d placed at the right rear of the vehicle 201 and a transparent cover 222d attached to the housing 224d.

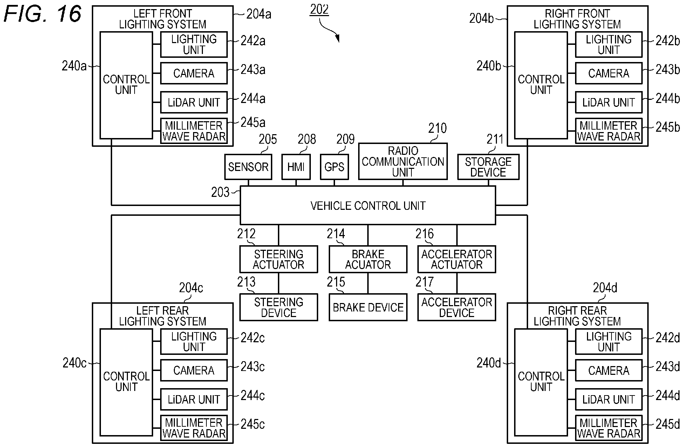

Next, referring to Fig. 16, the vehicle system 202 shown in Fig. 15 will be described specifically. Fig. 16 is a block diagram illustrating the vehicle system 202. As shown in Fig. 16, the vehicle system 202 includes the vehicle control unit 203, the lighting systems 204a to 204d, a sensor 205, a human machine interface (HMI) 208, a global positioning system (GPS) 209, a radio communication unit 210, and a storage device 211. Further, the vehicle system 202 includes a steering actuator 212, a steering device 213, a brake actuator 214, a brake device 215, an accelerator actuator 216, and an accelerator device 217. Furthermore, the vehicle system 202 includes a battery (not shown) configured to supply electric power.

The vehicle control unit 203 is configured to control the driving of the vehicle 201. The vehicle control unit 203 is made up, for example, of at least one electronic control unit (ECU). The electronic control unit may include at least one microcontroller including one or more processors and one or more memories and another electronic circuit including an active device and a passive device such as transistors. The processor is, for example, a central processing unit (CPU), a micro processing unit (MPU), a graphics processing unit (GPU) and/or a tensor processing unit (TPU). CPU may be made up of a plurality of CPU cores. GPU may be made up of a plurality of GPU cores. The memory includes a read only memory (ROM) and a random access memory (RAM). ROM may store a vehicle control program. For example, the vehicle control program may include an artificial intelligence (AI) program for autonomous driving. The AI program is a program configured by a machine learning with a teacher or without a teacher that uses a neural network such as deep learning or the like. RAM may temporarily store a vehicle control program, vehicle control data and/or surrounding environment information indicating a surrounding environment of the vehicle. The processor may be configured to deploy a program designated from the vehicle control program stored in ROM on RAM to execute various types of operations in cooperation with RAM

The electronic control unit (ECU) may be configured by at least one integrated circuit such as an application specific integrated circuit (ASIC) or a field-programmable gate array (FPGA). Further, the electronic control unit may be made up of a combination of at least one microcontroller and at least one integrated circuit (FPGA or the like).

The lighting system 204a further includes a control unit 240a, a lighting unit 242a, a camera 243a, a light detection and ranging (LiDAR) unit 244a (an example of a laser radar), and a millimeter wave radar 245a. As shown in Fig. 15, the control unit 240a, the lighting unit 242a, the camera 243a, the LiDAR unit 244a, and the millimeter wave radar 245a are disposed in a space Sa defined by the housing 224a and the transparent cover 222a (an interior of a lamp compartment). The control unit 240a may be disposed in a predetermined place on the vehicle 201 other than the space Sa. For example, the control unit 240a may be configured integrally with the vehicle control unit 203.

The control unit 240a is made up, for example, of at least one electronic control unit (ECU). The electronic control unit may include at least one microcontroller including one or more processers and one or more memories and another electronic circuit (for example, a transistor or the like). The processor is, for example, CPU, MPU, GPU and/or TPU. CPU may be made up of a plurality of CPU cores. GPU may be made up of a plurality of GPU cores. The memory includes ROM and RAM ROM may store a surrounding environment identifying program for identifying a surrounding environment of the vehicle 201. For example, the surrounding environment identifying program is a program configured by a machine learning with a teacher or without a teacher that uses a neural network such as deep learning or the like. RAM may temporarily store the surrounding environment identifying program, image data acquired by the camera 243a, three-dimensional mapping data (point group data) acquired by the LiDAR unit 244a and/or detection data acquired by the millimeter wave radar 245a and the like. The processor may be configured to deploy a program designated from the surrounding environment identifying program stored in ROM on RAM to execute various types of operation in cooperation with RAM. In addition, the electronic control unit (ECU) may be made up of at least one integrated circuit such as ASIC, FPGA, or the like. Further, the electronic control unit may be made up of a combination of at least one microcontroller and at least one integrated circuit (FPGA or the like).

The lighting unit 242a is configured to form a light distribution pattern by emitting light towards an exterior (a front) of the vehicle 201. The lighting unit 242a includes a light source for emitting light and an optical system. The light source may be made up, for example, of a plurality of light emitting devices that are arranged into a matrix configuration (for example, N rows $\times$ M columns, N>1, M>1). The light emitting device is, for example, a light emitting diode (LED), a laser diode (LD) or an organic EL device. The optical system may include at least one of a reflector configured to reflect light emitted from the light source towards the front of the lighting unit 242a and a lens configured to refract light emitted directly from the light source or light reflected by the reflector. In the case where the driving mode of the vehicle 201 is a manual drive mode or a drive assist mode, the lighting unit 242a is configured to form a light distribution pattern for a driver (for example, a low beam light distribution pattern or a high beam light distribution pattern) ahead of the vehicle 201. In this way, the lighting unit 242a functions as a left headlamp unit. On the other hand, in the case where the driving mode of the vehicle 201 is a high-level drive assist mode or a complete autonomous drive mode, the lighting unit 242a may be configured to form a light distribution pattern for a camera ahead of the vehicle 201.

The control unit 240a may be configured to supply individually electric signals (for example, pulse width modulation (PWM) signals) to the plurality of light emitting devices provided on the lighting unit 242a. In this way, the control unit 240a can select individually and separately the light emitting devices to which the electric signals are supplied and control the duty ratio of the electric signal supplied to each of the light emitting devices. That is, the control unit 240a can select the light emitting devices to be turned on or turned off from the plurality of light emitting devices arranged into the matrix configuration and control the luminance of the light emitting diodes that are illuminated. As a result, the control unit 240a can change the shape and brightness of a light distribution pattern emitted towards the front of the lighting unit 242a.

The camera 243a is configured to detect a surrounding environment of the vehicle 201. In particular, the camera 243a is configured to acquire at first image data indicating a surrounding environment of the vehicle 201 and to then transmit the image data to the control unit 240a. The control unit 240a identifies a surrounding environment based on the transmitted image data. Here, the surrounding environment information may include information on a target object existing at an outside of the vehicle 201. For example, the surrounding environment information may include information on an attribute of a target object existing at an outside of the vehicle 201 and information on a distance from the target object to the vehicle 201 or a position of the target object with respect to the vehicle 201. The camera 243a is made up of an imaging device including, for example, a charge-coupled device (CCD), a complementary metal oxide semiconductor (CMOS) or the like. The camera 243a may be configured as a monocular camera or may be configured as a stereo camera. In the case where the camera 243a is a stereo camera, the control unit 240a can identify a distance between the vehicle 201 and a target object (for example, a pedestrian or the like) existing at an outside of the vehicle 201 based on two or more image data acquired by the stereo camera by making use of a parallax. Additionally, in the present embodiment, although one camera 243a is provided in the lighting system 204a, two or more cameras 243a may be provided in the lighting system 204a.

The LiDAR unit 244a (an example of a laser radar) is configured to detect a surrounding environment of the vehicle 201. In particular, the LiDAR unit 244a is configured to acquire at first three-dimensional (3D) mapping data (point group data) indicating a surrounding environment of the vehicle 201 and to then transmit the 3D mapping data to the control unit 240a. The control unit 240a identifies surrounding environment information based on the 3D mapping data transmitted thereto. Here, the surrounding environment information may include information on a target object existing at an outside of the vehicle 201. For example, the surrounding environment information may include information on an attribute of a target object existing at an outside of the vehicle 201 and information on a distance from the target object to the vehicle 201 or a position of the target object with respect to the vehicle 201.

More specifically, the LiDAR unit 244a can acquire at first information on a time of flight (TOF) $\Delta T1$ of a laser beam (a light pulse) at each emission angle (a horizontal angle $\theta$, a vertical angle $\varphi$) of the laser beam and can then acquire information on a distance D between the LiDAR unit 244a (the vehicle 201) and an object existing at an outside of the vehicle 201 at each emission angle (a horizontal angle $\theta$, a vertical angle $\varphi$) based on the information on the time of flight $\Delta T1$. Here, the time of flight $\Delta T1$ can be calculated as follows, for example.

$$\text{Time of Flight } \Delta T1 = \text{a time t1 when a laser beam (a light pulse) returns to}$$

$$\text{LiDAR} - \text{a time t0 when LiDAR unit emits the laser beam}$$

In this way, the LiDAR unit 244a can acquire the 3D mapping data indicating the surrounding environment of the vehicle 201.

Additionally, the LiDAR unit 244a includes, for example, a laser light source configured to emit a laser beam, an optical deflector configured to scan a laser beam in a horizontal direction and a vertical direction, an optical system such as a lens, and a receiver configured to accept or receive a laser beam reflected by an object. There is imposed no specific limitation on a central wavelength of a laser beam emitted from the laser light source. For example, a laser beam may be invisible light whose central wavelength is near 900 nm. The optical deflector may be, for example, a micro electromechanical system (MEMS) mirror. The receiver may be, for example, a photodiode. The LiDAR unit 244a may acquire 3D mapping data without scanning the laser beam by the optical deflector. For example, the LiDAR unit 244a may acquire 3D mapping data by use of a phased array method or a flash method. In addition, in the present embodiment, although one LiDAR unit 244a is provided in the lighting system 204a, two or more LiDAR units 244a may be provided in the lighting system 204a. For example, in the case where two LiDAR units 244a are provided in the lighting system 204a, one LiDAR unit 244a may be configured to detect a surrounding environment in a front area ahead of the vehicle 201, while the other LiDAR unit 244a may be configured to detect a surrounding environment in a side area to the vehicle 201.

The millimeter wave radar 245a is configured to detect a surrounding environment of the vehicle 201. In particular, the millimeter wave radar 245a is configured to acquire at first detection data indicating a surrounding environment of the vehicle 201 and to then transmit the detection data to the control unit 240a. The control unit 240a identifies surrounding environment information based on the transmitted detection data. Here, the surrounding environment information may include information on a target object existing at an outside of the vehicle 201. The surrounding environment information may include, for example, information on an attribute of a target object existing at an outside of the vehicle 201, information on a position of the target object with respect to the vehicle 201, and a speed of the target object with respect to the vehicle 201.

For example, the millimeter wave radar 245a can acquire a distance D between the millimeter wave radar 245a (the vehicle 201) and an object existing at an outside of the vehicle 201 by use of a pulse modulation method, a frequency modulated-continuous wave (FM-CW) method or a dual frequency continuous wave (CW) method. In the case where the pulse modulation method is used, the millimeter wave radar 245a can acquire at first information on a time of flight $\Delta T2$ of a millimeter wave at each emission angle of the millimeter wave and can then acquire information on a distance D between the millimeter wave radar 245a (the vehicle 201) and an object existing at an outside of the vehicle 201 at each emission angle based on the information on a time of flight $\Delta T2$. Here, the time of flight $\Delta T2$ can be calculated, for example, as follows.

$$\text{Time of Flight } \Delta T2 = \text{a time t3 when a millimeter wave returns to the millimeter}$$

$$\text{wave radar} - \text{a time t2 when the millimeter wave radar emits the millimeter wave}$$

Additionally, the millimeter wave radar 245a can acquire information on a relative velocity V of an object existing at an outside of the vehicle 201 to the millimeter wave radar 245a (the vehicle 201) based on a frequency f0 of a millimeter wave emitted from the millimeter wave radar 245a and a frequency f1 of the millimeter wave that returns to the millimeter wave radar 245a.

Additionally, in the present embodiment, although one millimeter wave radar 245a is provided in the lighting system 204a, two or more millimeter wave radars 245a may be provided in the lighting system 204a. For example, the lighting system 204a may include a short-distance millimeter wave radar 245a, a middle-distance millimeter wave radar 245a, and a long-distance millimeter wave radar 245a.

The lighting system 204b further includes a control unit 240b, a lighting unit 242b, a camera 243b, a LiDAR unit 244b, and a millimeter wave radar 245b. As shown in Fig. 15, the control unit 240b, the lighting unit 242b, the camera 243b, the LiDAR unit 244b, and the millimeter wave radar 245b are disposed in a space Sb defined by the housing 224b and the transparent cover 222b (an interior of a lamp compartment). The control unit 240b may be disposed in a predetermined place on the vehicle 201 other than the space Sb. For example, the control unit 240b may be configured integrally with the vehicle control unit 203. The control unit 240b may have a similar function and configuration to those of the control unit 240a. The lighting unit 242b may have a similar function and configuration to those of the lighting unit 242a. In this regard, the lighting unit 242a functions as the left headlamp unit, while the lighting unit 242b functions as a right headlamp unit. The camera 243b may have a similar function and configuration to those of the camera 243a. The LiDAR unit 244b may have a similar function and configuration to those of the LiDAR unit 244a. The millimeter wave radar 245b may have a similar function and configuration to those of the millimeter wave radar 245a.

The lighting system 204c further includes a control unit 240c, a lighting unit 242c, a camera 243c, a LiDAR unit 244c, and a millimeter wave radar 245c. As shown in Fig. 15, the control unit 240c, the lighting unit 242c, the camera 243c, the LiDAR unit 244c, and the millimeter wave radar 245c are disposed in a space Sc defined by the housing 224c and the transparent cover 222c (an interior of a lamp compartment). The control unit 240c may be disposed in a predetermined place on the vehicle 201 other than the space Sc. For example, the control unit 240c may be configured integrally with the vehicle control unit 203. The control unit 240c may have a similar function and configuration to those of the control unit 240a.

The lighting unit 242c is configured to form a light distribution pattern by emitting light towards an exterior (a rear) of the vehicle 201. The lighting unit 242c includes a light source for emitting light and an optical system. The light source may be made up, for example, of a plurality of light emitting devices that are arranged into a matrix configuration (for example, N rows $\times$ M columns, N > 1, M > 1). The light emitting device is, for example, an LED, an LD or an organic EL device. The optical system may include at least one of a reflector configured to reflect light emitted from the light source towards the front of the lighting unit 242c and a lens configured to refract light emitted directly from the light source or light reflected by the reflector. In the case where the driving mode of the vehicle 201 is the manual drive mode or the drive assist mode, the lighting unit 242c may be turned off. On the other hand, in the case where the driving mode of the vehicle 201 is the high-level drive assist mode or the complete autonomous drive mode, the lighting unit 242c may be configured to form a light distribution pattern for a camera behind the vehicle 201.

The camera 243c may have a similar function and configuration to those of the camera 243a. The LiDAR unit 244c may have a similar function and configuration to those of the LiDAR unit 244c. The millimeter wave radar 245c may have a similar function and configuration to those of the millimeter wave radar 245a.

The lighting system 204d further includes a control unit 240d, a lighting unit 242d, a camera 243d, a LiDAR unit 244d, and a millimeter wave radar 245d. As shown in Fig. 15, the control unit 240d, the lighting unit 242d, the camera 243d, the LiDAR unit 244d, and the millimeter wave radar 245d are disposed in a space Sd defined by the housing 224d and the transparent cover 222d (an interior of a lamp compartment). The control unit 240d may be disposed in a predetermined place on the vehicle 201 other than the space Sd. For example, the control unit 240d may be configured integrally with the vehicle control unit 203. The control unit 240d may have a similar function and configuration to those of the control unit 240c. The lighting unit 242d may have a similar function and configuration to those of the lighting unit 242c. The camera 243d may have a similar function and configuration to those of the camera 243c. The LiDAR unit 244d may have a similar function and configuration to those of the LiDAR unit 244c. The millimeter wave radar 245d may have a similar function and configuration to those of the millimeter wave radar 245c.

The sensor 205 may include an acceleration sensor, a speed sensor, a gyro sensor, and the like. The sensor 205 detects a driving state of the vehicle 201 and outputs driving state information indicating such a driving state of the vehicle 201 to the vehicle control unit 203. The sensor 205 may further include a seating sensor configured to detect whether the driver is seated on a driver's seat, a face direction sensor configured to detect a direction in which the driver directs his or her face, an exterior weather sensor configured to detect an exterior weather state, a human or motion sensor configured to detect whether a human exists in an interior of a passenger compartment. Furthermore, the sensor 205 may include an illuminance sensor configured to detect a degree of brightness (an illuminance) of a surrounding environment of the vehicle 201. The illuminance sensor may determine a degree of brightness of a surrounding environment of the vehicle 201, for example, in accordance with a magnitude of optical current outputted from a photodiode.

The human machine interface (HMI) 208 is made up of an input module configured to receive an input operation from the driver and an output module configured to output the driving state information or the like towards the driver. The input module includes a steering wheel, an accelerator pedal, a brake pedal, a driving modes changeover switch configured to switch driving modes of the vehicle 201, and the like. The output module includes a display configured to display thereon driving state information, surrounding environment information and an illuminating state of the lighting system 4, and the like.

The global positioning system (GPS) 209 acquires information on a current position of the vehicle 201 and outputs the current position information so acquired to the vehicle control unit 203. The radio communication unit 210 receives information on other vehicles running or existing on the periphery of the vehicle 201 (for example, other vehicles' running information) from the other vehicles and transmits information on the vehicle 201 (for example, subject vehicle's running information) to the other vehicles (a vehicle-vehicle communication).

The radio communication unit 210 receives infrastructural information from infrastructural equipment such as a traffic signal controller, a traffic sign lamp or the like and transmits the subject vehicle's running information of the vehicle 201 to the infrastructural equipment (a road-vehicle communication). In addition, the radio communication unit 210 receives information on a pedestrian from a mobile electronic device (a smartphone, an electronic tablet, an electronic wearable device, and the like) that the pedestrian carries and transmits the subject vehicle's running information of the vehicle 201 to the mobile electronic device (a pedestrian-vehicle communication). The vehicle 201 may communicate directly with other vehicles, infrastructural equipment or a mobile electronic device in an ad hoc mode or may communicate with them via access points. Radio communication standards include, for example, Wi-Fi (a registered trademark), Bluetooth (a registered trademark), ZigBee (a registered trademark), and LPWA. The vehicle 201 may communicate with other vehicles, infrastructural equipment or a mobile electronic device via a mobile communication network.

The storage device 211 is an external storage device such as a hard disk drive (HDD) or a solid state drive (SSD). The storage device 211 may store two-dimensional or three-dimensional map information and/or a vehicle control program. For example, the three-dimensional map information may be made up of point group data. The storage device 211 outputs map information or a vehicle control program to the vehicle control unit 203 in demand for the vehicle control unit 203. The map information and the vehicle control program may be updated via the radio communication unit 210 and a communication network such as the internet.

In the case where the vehicle 201 is driven in the autonomous driving mode, the vehicle control unit 203 generates automatically at least one of a steering control signal, an accelerator control signal, and a brake control signal based on the driving state information, the surrounding environment information, the current position information and/or the map information. The steering actuator 212 receives a steering control signal from the vehicle control unit 203 and controls the steering device 213 based on the steering control signal so received. The brake actuator 214 receives a brake control signal from the vehicle control unit 203 and controls the brake device 215 based on the brake control signal so received. The accelerator actuator 216 receives an accelerator control signal from the vehicle control unit 203 and controls the accelerator device 217 based on the accelerator control signal so received. In this way, in the autonomous driving mode, the driving of the vehicle 201 is automatically controlled by the vehicle system 202.

On the other hand, in the case where the vehicle 201 is driven in the manual drive mode, the vehicle control unit 203 generates a steering control signal, an accelerator control signal, and a brake control signal as the driver manually operates the accelerator pedal, the brake pedal, and the steering wheel. In this way, in the manual drive mode, since the steering control signal, the accelerator control signal, and the brake control are generated as the driver manually operates the accelerator pedal, the brake pedal, and the steering wheel, the driving of the vehicle 201 is controlled by the driver.

Next, the driving modes of the vehicle 201 will be described. The driving modes include the autonomous driving mode and the manual drive mode. The autonomous driving mode includes a complete autonomous drive mode, a high-level drive assist mode, and a drive assist mode. In the complete autonomous drive mode, the vehicle system 202 automatically performs all the driving controls of the vehicle 201 including the steering control, the brake control, and the accelerator control, and the driver stays in a state where the driver cannot drive or control the vehicle 201 as he or she wishes. In the high-level drive assist mode, the vehicle system 202 automatically performs all the driving controls of the vehicle 201 including the steering control, the brake control, and the accelerator control, and although the driver stays in a state where the driver can drive or control the vehicle 201, the driver does not drive the vehicle 201. In the drive assist mode, the vehicle system 202 automatically performs a partial driving control of the steering control, the brake control, and the accelerator control, and the driver drives the vehicle 201 with assistance of the vehicle system 202 in driving. On the other hand, in the manual drive mode, the vehicle system 202 does not perform the driving control automatically, and the driver drives the vehicle without any assistance of the vehicle system 202 in driving.

In addition, the driving modes of the vehicle 201 may be switched over by operating a driving modes changeover switch. In this case, the vehicle control unit 203 switches the driving modes of the vehicle 201 among the four driving modes (the complete autonomous drive mode, the high-level drive assist mode, the drive assist mode, the manual drive mode) in response to an operation performed on the driving modes changeover switch by the driver. The driving modes of the vehicle 201 may automatically be switched over based on information on an autonomous driving permitting section where the autonomous driving of the vehicle 201 is permitted and an autonomous driving prohibiting section where the autonomous driving of the vehicle 201 is prohibited, or information on an exterior weather state. In this case, the vehicle control unit 203 switches the driving modes of the vehicle 201 based on those pieces of information. Further, the driving modes of the vehicle 201 may automatically be switched over by use of the seating sensor or the face direction sensor. In this case, the vehicle control unit 203 may switch the driving modes of the vehicle 201 based on an output signal from the seating sensor or the face direction sensor.

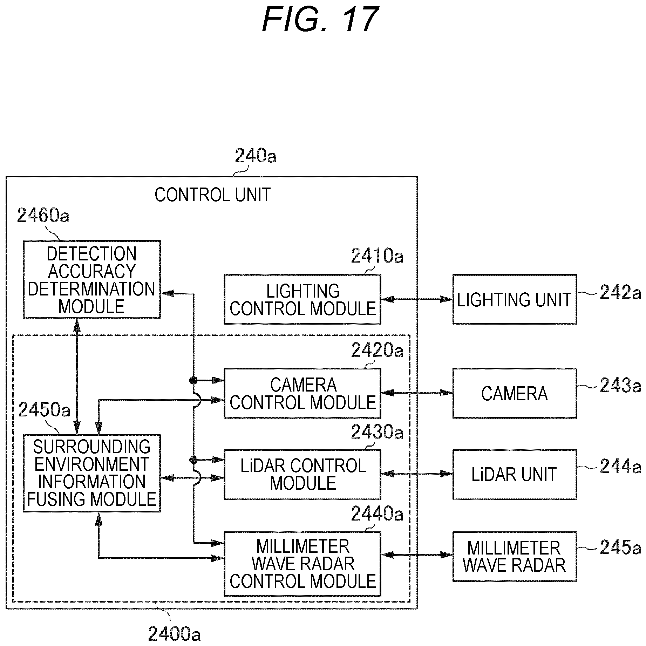

Next, referring to Fig. 17, the function of the control unit 240a will be described. Fig. 17 is a diagram illustrating functional blocks of the control unit 240a of the lighting system 204a. As shown in Fig. 17, the control unit 240a is configured to control individual operations of the lighting unit 242a, the camera 243a, the LiDAR unit 244a, and the millimeter wave radar 245a. In particular, the control unit 240a includes a lighting control module 2410a, a surrounding environment identification module 2400a, and a detection accuracy determination module 2460a.

The lighting control module 2410a is configured to control the lighting unit 242a and cause the lighting unit 242a to emit a predetermined light distribution pattern towards a front area ahead of the vehicle 201. For example, the lighting control module 2410a may change the light distribution pattern that is emitted from the lighting unit 242a in accordance with the driving mode of the vehicle 201.

A surrounding environment information identification module 2400a includes a camera control module 2420a, a LiDAR control module 2430a, a millimeter wave radar control module 2440a, and a surrounding environment information fusing module 2450a.

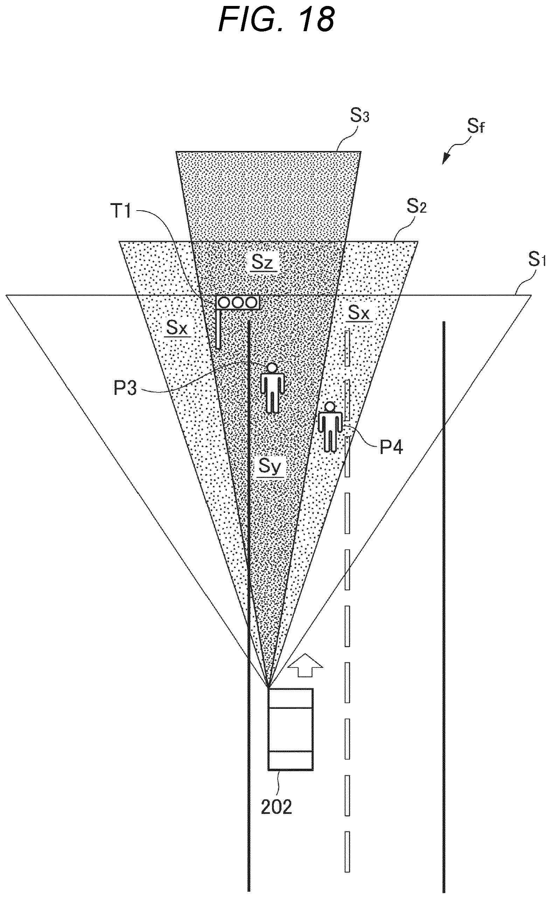

The camera control module 2420a is configured not only to control the operation of the camera 243a but also to generate surrounding environment information of the vehicle 201 (hereinafter, referred to as "surrounding environment information") in a detection area S1 (refer to Fig. 18) of the camera 243a based on image data (detection data) outputted from the camera 243a. The LiDAR control module 2430a is configured not only to control the operation of the LiDAR unit 244a but also to generate surrounding environment information of the vehicle 201 in a detection area S2 (refer to Fig. 18) of the LiDAR unit 244a (hereinafter, referred to as surrounding environment information 12) based on 3D mapping data (detection data) outputted from the LiDAR unit 244a. The millimeter wave radar control module 2440a is configured not only to control the operation of the millimeter wave radar 245a but also to generate surrounding environment information of the vehicle 201 in a detection area S3 (refer to Fig. 18) of the millimeter wave radar 245a (hereinafter, referred to as surrounding environment information 13) based on detection data outputted from the millimeter wave radar 245a.

The surrounding environment information fusing module 2450a is configured to generate fused surrounding environment information If by fusing the pieces of surrounding environment information I1, 12, 13. Here, the surrounding environment information If may include information on a target object existing at an outside of the vehicle 201 in a detection area Sf which is a combination of a detection area S1 for the camera 243a, a detection area S2 for the LiDAR unit 244a, and a detection area Sf for the millimeter wave radar 245a, as shown in Fig. 18. For example, the surrounding environment information If may include information on an attribute of the target object, a position of the target object with respect to the vehicle 201, a distance between the vehicle 201 and the target object and/or a speed of the target object with respect to the vehicle 201. The surrounding environment information fusing module 2450a may be configured to transmit the surrounding environment information If to the vehicle control unit 203.

A detection accuracy determination module 2460a is configured to determine detection accuracy for each of the sensors (the camera 243a, the LiDAR unit 244a, the millimeter wave radar 245a). Here, the detection accuracy for each sensor may be specified by percentage (0% to 100%). In this case, the detection accuracy of the sensor comes close to 100% as the detection accuracy of the sensor becomes higher. In addition, the detection accuracy for each sensor may be classified into three ranks from "A" to "C". For example, a high detection accuracy may be determined as rank A, while a low detection accuracy may be determined as rank C. In addition, in the case where the detection accuracy of a certain sensor of the sensors is kept low for a predetermined period or over a predetermined number of times of updating, the vehicle system 202 (in particular, the vehicle control unit 203 or the control unit 240a) may determine that the sensor in question fails. Further, the control unit 240a may adopt detection data or surrounding environment information of the sensor having high detection accuracy in an overlapping area where the detection areas of the sensors overlap one another. In this way, the vehicle system 202 can be provided in which the recognition accuracy with which the surrounding environment of the vehicle 201 is recognized can be improved by making use of the information on the detection accuracies of the sensors.

For example, in the case where the detection accuracy of the camera 243a is higher than the detection accuracy of the LiDAR unit 244a, image data (detection data detected by the camera 243a) is used in preference to 3D mapping data (detection data detected by the LiDAR unit 244a). In this case, in generating surrounding environment information If, the surrounding environment information fusing module 2450a adopts surrounding environment information I1 generated based on image data rather than surrounding environment information 12 generated based on 3D mapping data in an overlapping area Sx (refer to Fig. 18) where the detection area S1 and the detection area S2 overlap each other. In particular, in the case where there is caused a contradiction between the surrounding environment information I1 and the surrounding environment information I2 (in the case where the surrounding environment information I1 and the surrounding environment information I2 do not coincide with each other) in the overlapping area Sx, the surrounding environment information fusing module 2450a adopts the surrounding environment information I1.

In this way, the surrounding environment information identification module 2400a is configured to identify the surrounding environment of the vehicle 201 based on the detection data of the sensors (the camera 243a, the LiDAR unit 244a, the millimeter wave radar 245a) and the detection accuracy of the sensors.

In the present embodiment, although the surrounding environment information fusing module 2450a and the detection accuracy determination module 2460a are realized or provided by the control unit 240a, these modules may be realized or provided by the vehicle control unit 203.

The control units 240b, 240c, 240d may each have a similar function to that of the control unit 240a. That is, the control units 240b, 240c, 240d may each have a lighting control module, a surrounding environment information identification module, and a detection accuracy determination module. The surrounding environment information identification module of each of the control units 240b to 240d may have a camera control module, a LiDAR control module, a millimeter wave radar control module, and a surrounding environment information fusing module. The surrounding environment information fusing module of each of the control units 240b to 240d may transmit fused surrounding environment information If to the vehicle control unit 203. The vehicle control unit 203 may control the driving of the vehicle 201 based on the surrounding environment information If transmitted thereto from each of the control units 240a to 240d and other information (driving control information, current position information, map information, and the like).

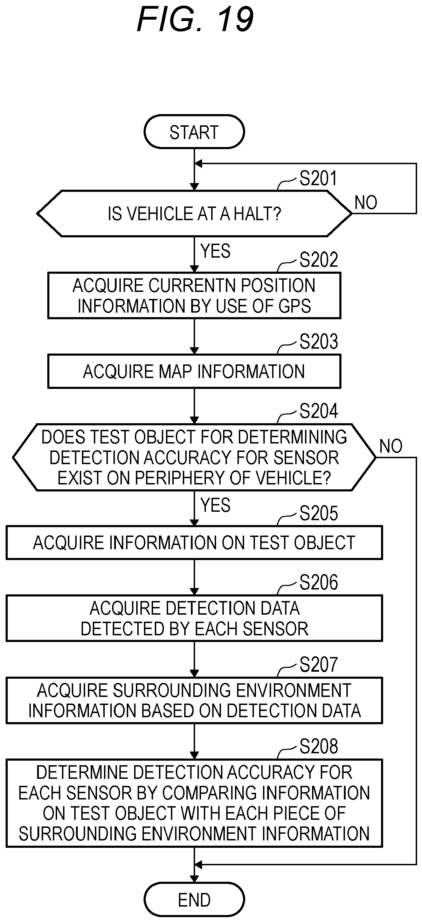

Next, referring to Fig. 19, an example of an operation for determining detection accuracies for the sensors according to the present embodiment (the camera 243a, the LiDAR unit 244a, the millimeter wave radar 245a) will be described. Fig. 19 is a flow chart for explaining an operation for determining detection accuracies for the sensors according to the present embodiment. In the present embodiment, as a matter of convenience in description, although only an operation flow of the lighting system 204a will be described, it should be noted that the operation flow of the lighting system 204a can also be applied to the lighting systems 204b to 204d.

As shown in Fig. 19, in step S201, the vehicle control unit 203 determines whether the vehicle 201 is at a halt. If the result of the determination made in step S201 is YES, the vehicle control unit 203 acquires information on a current position of the vehicle 201 by use of the GPS 209 (step S202). On the other hand, if the result of the determination made in step S201 is NO, the vehicle control unit 203 waits until the result of the determination in step S201 becomes YES. In the present embodiment, although operations in step S202 to S208 are executed with the vehicle 201 staying at a halt, these operations may be executed with the vehicle running.

Next, the vehicle control unit 203 acquires map information from the storage device 211 (step S203). The map information may be, for example, 3D map information made up of point group data. Next, the vehicle control unit 203 transmits the information on the current position of the vehicle 201 and the map information to the detection accuracy determination module 2460a. Thereafter, the detection accuracy determination module 2460a determines whether a test object for determining a detection accuracy for the sensor exists on a periphery of the vehicle 201 (step S204) based on the current position of the vehicle 201 and the map information. The test object may be traffic infrastructure equipment fixedly disposed in a predetermined position including, for example, a traffic signal controller, a traffic sign, a telegraph pole, a street lamp pole, and the like. In particular, in the case where detection accuracies for the three sensors, the test object preferably exists in an overlapping area Sy where the detection area S1 for the camera 243a, the detection area S2 for the LiDAR unit 244a, and the detection area S3 for the millimeter wave radar 245a overlap one another (for example, refer to a traffic signal controller T1 shown in Fig. 18 which constitutes an example of the test object). On the other hand, in the case where the test object exists in the overlapping area Sx, the detection accuracy determination module 2460a determines detection accuracies for the camera 243a and the LiDAR unit 244a.

If the detection accuracy determination module 2460a determines that the test object exists on a periphery of the vehicle 201 (YES in step S204), the detection accuracy determination module 2460a acquires information on the test object (step S205). For example, the detection accuracy determination module 2460a may acquire information on an attribute of the test object, information on a distance to/from the test object, and/or information on a position of the test object. Next, the surrounding environment information identification module 2400a acquires detection data detected by the individual sensors (step S206). Specifically, the camera control module 2420a acquires image data from the camera 243a. The LiDAR control module 2430a acquires 3D mapping data from the LiDAR unit 244a. The millimeter wave radar control module 2440a acquires detection data from the millimeter wave radar 245a.

Next, the surrounding environment information identification module 2440a acquires a plurality of pieces of surrounding environment information based on the detection data acquired from the sensors (step S207). Specifically, the camera control module 2420a acquires surrounding environment information I1 based on the image data. The LiDAR control module 2430a acquires surrounding environment information I2 based on the 3D mapping data. The millimeter wave radar control module 2440a acquires surrounding environment information 13 based on the detection data detected by the millimeter wave radar 245a.

Next, the detection accuracy determination module 2460a at first receive the pieces of surrounding environment information I1, 12, 13 from the surrounding environment information identification module 2400a and then determines detection accuracies for the sensors by comparing the information on the test object (for example, the traffic signal controller T1 shown in Fig. 18) that is acquired in step S205 with the individual pieces of surrounding environment information I1 to 13 (step S208).

For example, if the detection accuracy determination module 2460a determines that the information on the test object that is included in the surrounding environment information I1 coincides with the information on the test object that is acquired in step S205, the detection accuracy determination module 2460a determines that the detection accuracy of the camera 243a is high. In this case, the detection accuracy of the camera 243a may be determined as rank A. On the other hand, if the detection accuracy determination module 2460a determines that the information on the test object that is included in the surrounding environment information 12 does not completely coincide with the information on the test object that is acquired in step S205, the detection accuracy determination module 2460a determines that the detection accuracy of the LiDAR unit 244a is low. In this case, the detection accuracy of the LiDAR unit 244a may be determined as rank C. In this way, the detection accuracies of the sensors can be determined with relatively high accuracy by making use of the map information. In addition, the detection accuracy determination module 2460a may transmit the pieces of information on the detection accuracies of the individual sensors to a cloud server existing on the communication network via the radio communication unit 210 in a predetermined updating cycle. The pieces of information on the detection accuracies of the individual sensors that are stored in the cloud server may be made use of as Big data in order to improve the respective detection accuracies of the sensors. Further, the information on the detection accuracies may be made use of for determining whether the sensors fail. For example, in the case where the detection accuracy of the camera 243a continues to be low for a predetermined period, the cloud server may transmit information indicating that the camera 243a fails to the vehicle 201. When receiving the relevant information, the vehicle 201 may present the information indicating that the camera 243a fails to the driver visually, audibly, and/or through touch perception. In this way, since the failure of the camera 243a is presented to the driver, the driving safety of the vehicle 201 can be enhanced.

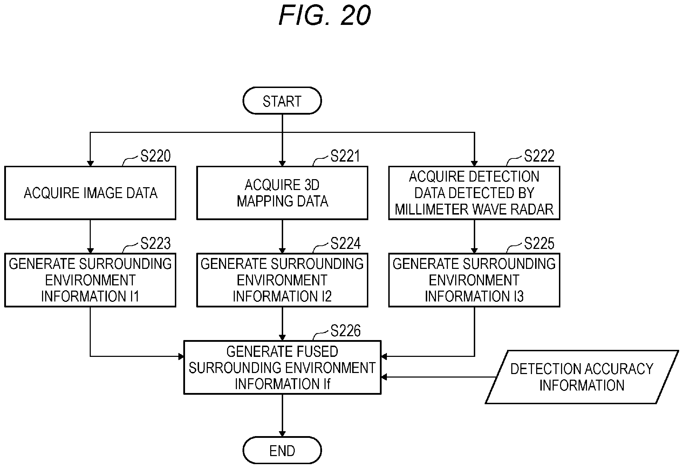

Next, referring to Fig. 20, an example of an operation for generating fused surrounding environment information If will be described. In this description, a relationship among a detection accuracy of the camera 243a, a detection accuracy of the LiDAR unit 244a, and a detection accuracy of the millimeter wave radar 245a is the camera 243a > the LiDAR unit 244a > the millimeter wave radar 245a.

As shown in Fig. 20, in step S20, the camera 243a acquires image data indicating a surrounding environment of the vehicle 201 in the detection area S1 (refer to Fig. 18). In addition, in step S21, the LiDAR unit 244a acquires 3D mapping data indicating a surrounding environment of the vehicle 201 in the detection area S2. Further, in step S222, the millimeter wave radar 245a acquires detection data indicating a surrounding environment of the vehicle 201 in the detection area S3.

Next, the camera control module 2420a at first acquires the image data from the camera 243a and then generates surrounding environment information I1 based on the image data (step S223). In addition, the LiDAR control module 2430a at first acquires the 3D mapping data from the LiDAR unit 244a and then generates surrounding environment information 12 based on the 3D mapping data (step S224). Further, the millimeter wave radar control module 2440a at first acquires the detection data from the millimeter wave radar 245a and then generates surrounding environment information 13 based on the detection data (step S225).

Next, in step S226, the circumferential environment information fusing module 2450a receives the pieces of information on the respective detection accuracies of the individual sensors from the detection accuracy determination module 2460a and compares a plurality of pieces of surrounding environment information in the individual overlapping areas Sx, Sy, Sz. Specifically, the surrounding environment information fusing section 2450a at first compares the surrounding environment information I1 with the surrounding environment information 12 in the overlapping area Sx where the detection area S1 and the detection area S2 overlap each other and then determines whether the surrounding environment information I1 and the surrounding environment information 12 coincide with each other. For example, in the case where the surrounding environment information I1 indicates a position of a pedestrian P4 as a position Z1 in the overlapping area Sx, while the surrounding environment information 12 indicates the position of the pedestrian P4 as a position Z2 in the overlapping area Sx, the surrounding environment information fusing module 2450a determines that the surrounding environment information I1 and the surrounding environment information 12 do not coincide with each other. As the result of the comparison, if the surrounding environment information fusing module 2450a determines that the surrounding environment information I1 and the surrounding environment information 12 do not coincide with each other, the surrounding environment information fusing module 2450a determines surrounding environment information adopted in the overlapping area Sx as surrounding environment information I1 based on the relationship between the detection accuracy of the camera 243a and the detection accuracy of the LiDAR unit 244a (the camera 243a > the LiDAR unit 244a).

In addition, the surrounding environment information fusing section 2450a at first compares the surrounding environment information 12 with the surrounding environment information 13 in the overlapping area Sz where the detection area S2 and the detection area S3 overlap each other and then determines whether the surrounding environment information 12 and the surrounding environment information 13 coincide with each other. As the result of the comparison, if the surrounding environment information fusing module 2450a determines that the surrounding environment information 12 and the surrounding environment information 13 do not coincide with each other, the surrounding environment information fusing module 2450a determines surrounding environment information adopted in the overlapping area Sz as surrounding environment information 12 based on the relationship between the detection accuracy of the LiDAR unit 244a and the detection accuracy of the millimeter wave radar 245a (the LiDAR unit 244a > the millimeter wave radar 245a).

Additionally, the surrounding environment information fusing section 2450a at first compares the surrounding environment information II, the surrounding environment information 12, and the surrounding environment information 13 in the overlapping area Sy where the detection area S1, the detection area S2 and the detection area S3 overlap one another and then determines whether the surrounding environment information I1, the surrounding environment information 12 and the surrounding environment information 13 coincide with one another. As the result of the comparison, if the surrounding environment information fusing module 2450a determines that the surrounding environment information I1, the surrounding environment information 12 and the surrounding environment information 13 do not coincide with one another, the surrounding environment information fusing module 2450a determines surrounding environment information adopted in the overlapping area Sy as surrounding environment information I1 based on the respective detection accuracies of the individual sensors (the camera 243a>the LiDAR unit 244a>the millimeter wave radar 245a).

Thereafter, the surrounding environment information fusing module 2450a generates fused surrounding environment information If by fusing the pieces of surrounding environment information I1, 12, 13. The surrounding environment information If may include information on a target object existing at an outside of the vehicle 201 in the detection area Sf where the detection areas S1, S2, S3 are combined together. In particular, the surrounding environment information If may be made up of the following pieces of information.

- Surrounding environment information I1 in the detection area S1
- Surrounding environment information I2 in the detection area S2 excluding the overlapping areas Sx, Sy
- Surrounding environment information 13 in the detection area S3 excluding the overlapping areas Sy, Sz

In this way, the operations for generating the surrounding environment information If shown in Fig. 20 are executed repeatedly.

In this way, according to the present embodiment, the detection accuracies f the sensors (the camera 243a, the LiDAR unit 244a, the millimeter wave radar 245a) are at first determined, and then the surrounding environment of the vehicle 201 is identified (in other words, the surrounding environment information If is generated) based on the detection data and the detection accuracy of each of the sensors. In this way, since the surrounding environment of the vehicle 201 is identified in consideration of the detection accuracies of the sensors, the lighting system 204a and the vehicle system 202 can be provided in which the recognition accuracy with which the surrounding environment of the vehicle 201 is recognized can be improved.

Additionally, according to the present embodiment, the plurality of pieces of surrounding environment information are compared in the overlapping areas Sx, Sy, Sz. As the result of the comparisons, in the case where the plurality of pieces of surrounding environment information do not coincide with one another, the surrounding environment information adopted in each of the overlapping areas Sx, Sy, Sz is determined based on the detection accuracy of each of the sensors. Thereafter, the fused surrounding environment information If is generated. In this way, since the surrounding environment information If is generated in consideration of the detection accuracy of each of the sensors, the recognition accuracy with which the surrounding environment of the vehicle 201 is recognized can be improved.

In the operation for generating the surrounding environment information If described above, the plurality of pieces of surrounding environment information do not have to be compared in the overlapping areas Sx, Sy, Sz. In this case, the surrounding environment information fusing module 2450a may generate the surrounding environment information If based on the pieces of information on the detection accuracies of the sensors and the pieces of surrounding environment information I1 to 13 without comparing the plurality of pieces of surrounding environment information in the overlapping areas Sx, Sy, Sz.

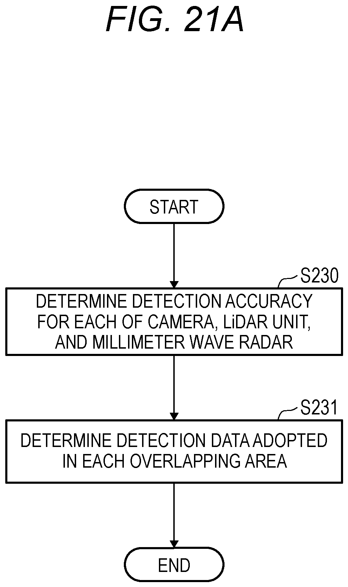

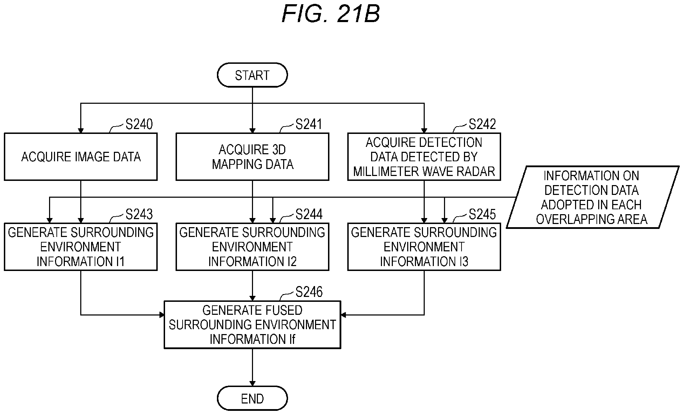

Next, referring to Fig. 21, an example of an operation flow of the lighting system 204a according a modified example of the present embodiment will be described. Fig. 21A is a flow chart for explaining an example of an operation for determining detection data that is adopted in each of the overlapping areas Sx, Sy, Sz (refer to Fig. 18). Fig. 21B is a flow chart for explaining an example of an operation for generating fused surrounding environment information If.

At first, referring to Fig. 21A, an example of an operation for determining detection data that is adopted in each of the overlapping areas Sx, Sy, Sz. In this description, a relationship among a detection accuracy of the camera 243a, a detection accuracy of the LiDAR unit 244a, and a detection accuracy of the millimeter wave radar 245a is the camera 243a>the LiDAR unit 244a>the millimeter wave radar 245a.

As shown in Fig. 21A, in step S230, the detection accuracy determination module 2460a determines detection accuracies for the camera 243a, the LiDAR unit 244a, and the millimeter wave radar 245a. Next, in step S232, the surrounding environment information fusing module 2450a receives information on the detection accuracy for each of the sensors from the detection accuracy determination module 2460a and thereafter determines detection data for the sensors that are adopted in the overlapping areas Sx, Sy, Sz based on the pieces of information on the respective detection accuracies of the sensors.

For example, the surrounding environment information fusing module 2450a determines detection data of the sensor that is adopted in the overlapping area Sx as image data of the camera 243a based on a relationship between the detection accuracy of the camera 243a and the detection accuracy of the LiDAR unit 244a (the camera 243a>the LiDAR unit 244a).

In addition, the surrounding environment information fusing module 2450a determines detection data of the sensor that is adopted in the overlapping area Sz as 3D mapping data of the LiDAR unit 244a based on a relationship between the detection accuracy of the LiDAR unit 244a and the detection accuracy of the millimeter wave radar 245a (the LiDAR unit 244a > the millimeter wave radar 2).

Additionally, the surrounding environment information fusing module 2450a determines detection data of the sensor that is adopted in the overlapping area Sy as image data of the camera 243a based on the detection accuracies of the sensors (the camera 243a > the LiDAR unit 244a > the millimeter wave radar 245a).

Next, referring to Fig. 21B, another example of the operation for generating the surrounding environment information If will be described. As shown in Fig. 21B, in step S240, the camera 243a acquires image data in the detection area S1. Additionally, in step S241, the LiDAR unit 244a acquires 3D mapping data in the detection area S2. Further, in step S242, the millimeter wave radar 245a acquires detection data in the detection area S3.

Next, the camera control module 2420a acquires the image data from the camera 243a and acquires information on the detection data of the sensors that are adopted in the overlapping areas Sx, Sy, Sz (hereinafter, referred to as "detection data priority information") from the surrounding environment information fusing module 2450a. Since the detection data priority information indicates that the image data is adopted in the overlapping areas Sx, Sy, the camera control module 2420a generates surrounding environment information I1 in the detection area S1 (step S243).

In step S224, the LiDAR control module 2430a acquires the 3D mapping data from the LiDAR unit 244a and acquires the detection data priority information from the surrounding environment information fusing module 2450a. Since the detection data priority information indicates that the image data is adopted in the overlapping areas Sx, Sy and that the 3D mapping data is adopted in the overlapping area Sz, the LiDAR control module 2430a generates surrounding environment information 12 in the detection area S2 excluding the overlapping areas Sx, Sy.

Further, in step S245, the millimeter wave radar control module 2440a acquires the detection data from the millimeter wave radar 245a and acquires the detection data priority information from the surrounding environment information fusing module 2450a. Since the detection data priority information indicates that the image data is adopted in the overlapping area Sy and that the 3D mapping data is adopted in the overlapping area Sz, the millimeter wave radar control module 2440a generates surrounding environment information 13 in the detection area S3 excluding the overlapping areas Sy, Sz.

Thereafter, in step S246, the surrounding environment information fusing module 2450a generates fused surrounding environment information If by fusing together the pieces of surrounding environment information I1, 12, 13. The surrounding environment information If is made up of the surrounding environment information I1 in the detection area S1, the surrounding environment information 12 in the detection area S2 excluding the overlapping areas Sx, Sy, and the surrounding environment information 13 in the detection area S3 excluding the overlapping areas Sy, Sz. In this way, the operation for generating surrounding environment information If shown in Fig. 21B is executed repeatedly.

According to the modified example of the present embodiment, the detection data priority information is at first generated based on the plurality of detection accuracies, and the surrounding environment information If is generated based on the detection data priority information, whereby the recognition accuracy with which the surrounding environment of the vehicle 201 is recognized can be improved. Further, the LiDAR control module 2430a generates the surrounding environment information 12 in the detection area S2 excluding the overlapping areas Sx, Sy, and the millimeter wave radar control module 2440a generates the surrounding environment information 13 in the detection area S3 excluding the overlapping areas Sy, Sz. In this way, since the operation for generating the surrounding environment information in the overlapping areas is omitted, an amount of arithmetic calculation carried out by the control unit 240a can be reduced. In particular, since the operation shown in Fig. 21B is executed repeatedly, the effect of reducing the amount of arithmetic calculation carried out by the control unit 240a becomes great.

(First Modified Example of Third Embodiment)

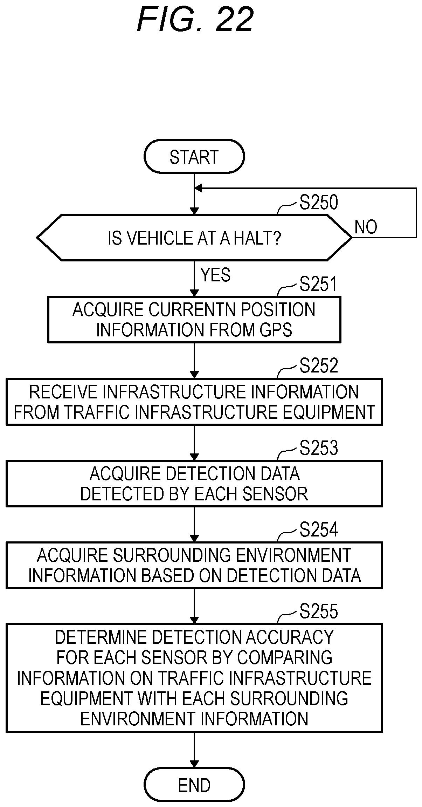

Next, referring to Fig. 22, an example of an operation for determining detection accuracies for the sensors (the camera 243a, the LiDAR unit 244a, the millimeter wave radar 245a) according to a first modified example of the third embodiment will be described. Fig. 22 is a flow chart for explaining an example of an operation for determining detection accuracies for the sensors according to a first modified example of the second embodiment.

As shown in Fig. 22, in step S250, the vehicle control unit 203 determines whether the vehicle 201 is at a halt. If the result of the determination made in step S250 is YES, the vehicle control unit 203 acquires information on a current position of the vehicle 201 by use of the GPS 209 (step S251). On the other hand, if the result of the determination made in step S250 is NO, the vehicle control unit 203 waits until the result of the determination made in step S250 becomes YES. In the present embodiment, with the vehicle 201 staying at a halt, the operations in steps S251 to S255 are executed, but these operations may be executed with the vehicle running.

Next, the vehicle control unit 203 receives infrastructure information from traffic infrastructure equipment that is fixedly disposed in a predetermined position via the radio communication unit 210. The traffic infrastructure equipment includes a radio communication function and includes, for example, a traffic signal controller T1 (refer to Fig. 18), a traffic sign, a telegraph pole, a street lamp pole, and the like. Further, the infrastructure information may include information on the traffic infrastructure equipment which constitutes an origin of the transmission such as an attribute of the traffic infrastructure equipment and/or information on a position of the traffic infrastructure equipment. Since the vehicle 201 is located within a range where the vehicle 201 can receive infrastructure information wirelessly from the traffic infrastructure equipment, it is understood that the traffic infrastructure equipment exists within the detection area of each of the sensors. A road to vehicle communication between the vehicle 201 and the traffic infrastructure equipment may be realized or provided by, for example, 5G, Wi-Fi, Bluetooth, ZigBee, or the like. Thereafter, the vehicle control unit 203 transmits the infrastructure information to the detection accuracy determination module 2460a.

Next, the surrounding environment information identification module 2400a acquires detection data that the sensors detect (step S253). Specifically, the camera control module 2420a acquires image data from the camera 243a. The LiDAR control module 2430a acquires 3D mapping data (point group data) from the LiDAR unit 244a. The millimeter wave control module 2440a acquires detection data from the millimeter wave radar 245a.

Next, the surrounding environment information identification module 2400a acquires a plurality of pieces of surrounding environment information based on the detection data that are acquired from the sensors (step S254). Specifically, the camera control module 2420a acquires surrounding environment information I1 based on the image data. The LiDAR control module 2430a acquires surrounding environment information 12 based on the 3D mapping data. The millimeter wave radar control module 2440a acquires surrounding environment information 13 based on the detection data detected by the millimeter wave radar 245a.

Next, the detection accuracy determination module 2460a at first receives the pieces of surrounding environment information I1, 12, 13 from the surrounding environment information identification module 2400a and then determines detection accuracies for the sensors by comparing the infrastructure information acquired in step S252 with the individual pieces of surrounding environment information I1 to 13 (step S255).

For example, if the detection accuracy determination module 2460a determines that information on the traffic infrastructure which constitutes an origin of the transmission that is included in the surrounding environment information I1 coincides with the infrastructure information acquired in step S252, the detection accuracy determination module 2460a determines that the detection accuracy of the camera 243a is high. On the other hand, if the detection accuracy determination module 2460a determines that information on the traffic infrastructure which constitutes the origin of the transmission that is included in the surrounding environment information 12 does not completely coincides with the infrastructure information acquired in step S252, the detection accuracy determination module 2460a determines that the detection accuracy of the LiDAR unit 244a is low. In this way, the detection accuracies for the sensors can be determined with relatively high accuracy by receiving the infrastructure information from the traffic infrastructure equipment.

(Second Modified Example of Third Embodiment)

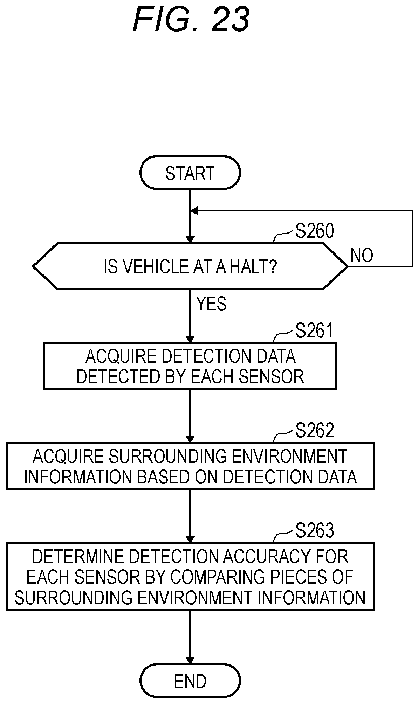

Next, referring to Fig. 23, an example of an operation for determining detection accuracies for the sensors (the camera 243a, the LiDAR unit 244a, the millimeter wave radar 245a) according to a second modified example of the third embodiment will be described. Fig. 23 is a flow chart for explaining an example of an operation for determining detection accuracies for the sensors according to a second modified example of the second embodiment.

As shown in Fig. 23, in step S260, the vehicle control unit 203 determines whether the vehicle 201 is at a halt. If the result of the determination made in step S260 is YES, the vehicle control unit 203 instructs the surrounding environment information identification module 2400a to execute an operation in step S261. On the other hand, if the result of the determination made in step S260 is NO, the vehicle control unit 203 waits until the result of the determination made in step S260 becomes YES. In the present embodiment, with the vehicle 201 staying at a halt, the operations in steps S261 to S263 are executed, but these operations may be executed with the vehicle running.

Next, in step S261, the surrounding environment information identification module 2400a acquires detection data that the sensors detect. Specifically, the camera control module 2420a acquires image data from the camera 243a. The LiDAR control module 2430a acquires 3D mapping data (point group data) from the LiDAR unit 244a. The millimeter wave control module 2440a acquires detection data from the millimeter wave radar 245a.

Next, the surrounding environment information identification module 2400a acquires a plurality of pieces of surrounding environment information based on the detection data that are acquired from the sensors (step S262). Specifically, the camera control module 2420a acquires surrounding environment information I1 based on the image data. The LiDAR control module 2430a acquires surrounding environment information 12 based on the 3D mapping data. The millimeter wave radar control module 2440a acquires surrounding environment information 13 based on the detection data detected by the millimeter wave radar 245a.

Next, the detection accuracy determination module 2460a at first receives the pieces of surrounding environment information I1, I2, I3 from the surrounding environment information identification module 2400a and then determines detection accuracies for the sensors by comparing the individual pieces of surrounding environment information I1 to I3 (step S263). For example, as shown in Fig. 18, in the case where the pieces of surrounding environment information I1, I2 indicate a position of a traffic signal controller T1 existing in the overlapping area Sy as a position X1, while in the case where the surrounding environment information I3 indicates the position of the traffic signal controller I1 existing in the overlapping area Sy as a position X2, the detection accuracy determination module 2460a may determine that the surrounding environment information I3 is wrong based on the majority decision. In this case, the detection accuracy determination module 2460a may determine that the accuracy of the millimeter wave radar 245a is low. In this way, the detection accuracies of the sensors can be determined by the relatively simple method without using external information such as map information or the like.

(Third Modified Example of Third Embodiment)

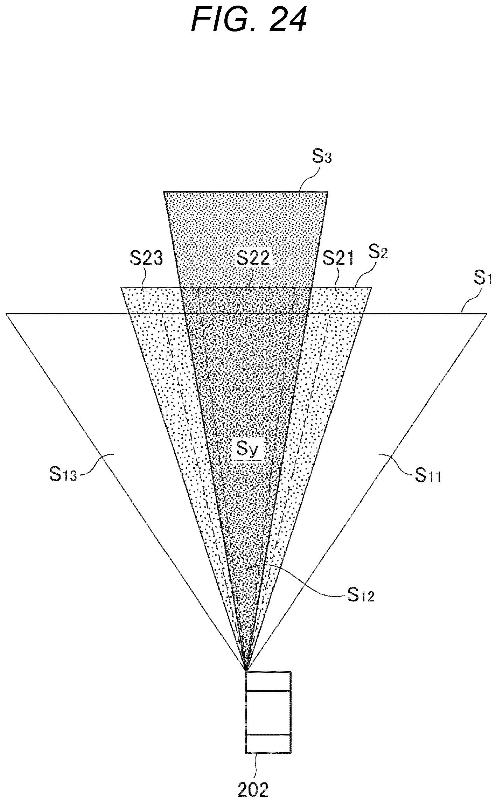

Next, referring to Fig. 24, an example of an operation for determining detection accuracies for the sensors (the camera 243a, the LiDAR unit 244a, the millimeter wave radar 245a) according to a third modified example of the third embodiment will be described. Fig. 24 is a diagram illustrating a state where the detection area S1 of the camera 243a and the detection area S2 of the LiDAR unit 244a are each divided into a plurality of partial areas. As shown in Fig. 24, the detection area S1 is divided into three partial areas (partial areas S11, S12, S13) in a horizontal direction. In addition, the detection area S2 is divided into three partial areas (partial areas S21, S22, S23) in the horizontal direction. In this example, although the detection areas S1, S2 are each divided into the plurality of partial areas that are defined as expanding over predetermined angular ranges, the detection areas S1, S2 may each be divided into the plurality of partial areas that are defined as expanding over predetermined angular ranges and predetermined distances.

The detection accuracy determination module 2460a determines a detection accuracy for the camera 243 a in each of the partial areas S11 to S13 and determines a detection accuracy for the LiDAR unit 244a in each of the partial areas S21 to S23. In addition, the detection accuracy determination module 2460a may determine surrounding environment information that is adopted in the overlapping area Sy by comparing the detection accuracy in the partial area S12, the detection accuracy in the partial area S22, and a detection accuracy for the millimeter wave radar 245a. For example, assume that the detection accuracy in the partial area S11 ranks B, the detection accuracy in the partial area S12 ranks A, and the detection accuracy in the partial area S13 ranks B. Further, assume that the detection accuracy in the partial area S21 ranks A, the detection accuracy in the partial area S22 ranks B, and the detection accuracy in the partial area S23 ranks A. Furthermore, assume that the detection accuracy of the millimeter wave radar 245a ranks B. In this case, since the detection accuracy in the partial area S12 is the highest, the detection accuracy determination module 2460a determines surrounding environment information that is adopted in the overlapping area Sy as surrounding environment information I1. In this way, since the detection accuracies for the sensors can be determined in detail based on the partial areas, the recognition accuracy with which the surrounding environment of the vehicle 201 is recognized can be improved further. In addition, the detection accuracy determination module 2460a may transmit information on the detection accuracies of the sensors for each partial area to a cloud server existing on a communication network via the radio communication unit 210 in a predetermined updating cycle.

In the present embodiment, although the camera, the LiDAR unit, and the millimeter wave radar are raised as the sensors, the present embodiment is not limited thereto. For example, in addition to these sensors, an ultrasonic sensor may be mounted in the lighting system. In this case, the control unit of the lighting system may not only control the operation of the ultrasonic sensor but also generate surrounding environment information based on detection data acquired by the ultrasonic sensor. In addition, at least two of the camera, the LiDAR unit, the millimeter wave radar, and the ultrasonic sensor may be mounted in the lighting system.

(Fourth Embodiment)

Hereinafter, referring to drawings, a fourth embodiment of the present disclosure (hereinafter, referred to simply as a "present embodiment") will be described. In description of the present embodiment, a description of members having like reference numerals to those of the members that have already been described will be omitted as a matter of convenience in description. Additionally, dimensions of members shown in accompanying drawings may differ from time to time from actual dimensions of the members as a matter of convenience in description.

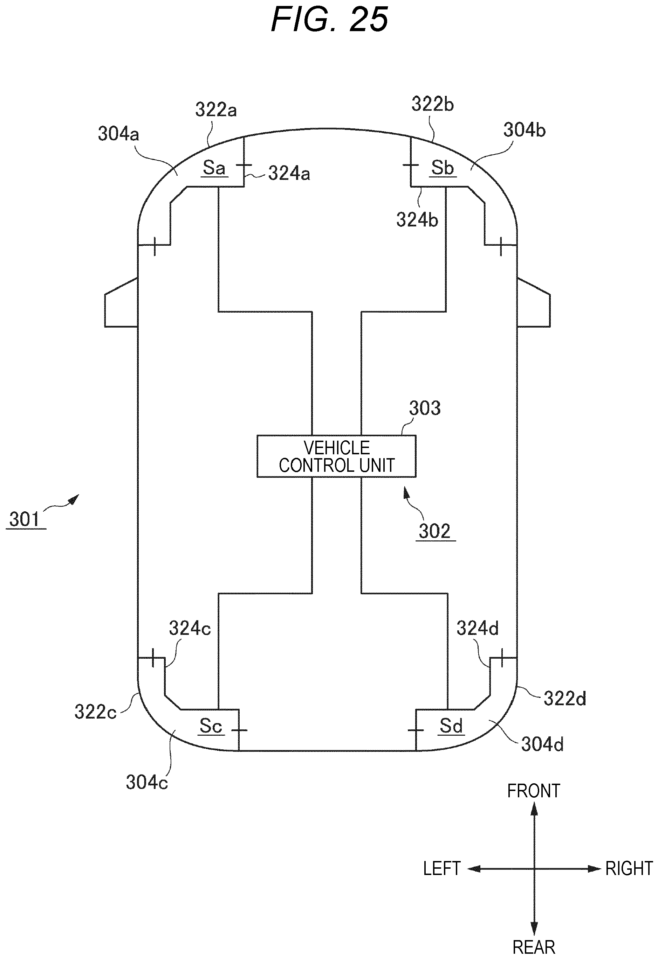

In description of the present embodiment, as a matter of convenience in description, a "left-and-right direction" and a "front-and-rear direction" will be referred to as required. These directions are relative directions set for a vehicle 301 shown in Fig. 25. Here, the "front-and rear direction" is a direction including a "front direction" and a "rear direction". The "left-and-right" direction is a direction including a "left direction" and a "right direction".

At first, referring to Fig. 25, the vehicle 301 according to the present embodiment will be described. Fig. 25 is a schematic drawing illustrating a top view of the vehicle 301 including a vehicle system 302. As shown in Fig. 25, the vehicle 301 is a vehicle (a motor vehicle) that can run in an autonomous driving mode and includes the vehicle system 302. The vehicle system 302 includes at least a vehicle control unit 303, a left front lighting system 304a (hereinafter, referred to simply as a "lighting system 304a"), a right front lighting system 304b (hereinafter, referred to simply as a "lighting system 304b"), a left rear lighting system 304c (hereinafter, referred to simply as a "lighting system 304c"), and a right rear lighting system 304d (hereinafter, referred to simply as a "lighting system 304d").

The lighting system 304a is provided at a left front of the vehicle 301. In particular, the lighting system 304a includes a housing 324a placed at the left front of the vehicle 301 and a transparent cover 322a attached to the housing 324a. The lighting system 304b is provided at a right front of the vehicle 301. In particular the lighting system 304b includes a housing 324b placed at the right front of the vehicle 301 and a transparent cover 322b attached to the housing 324b. The lighting system 304c is provided at a left rear of the vehicle 301. In particular, the lighting system 304c includes a housing 324c placed at the left rear of the vehicle 301 and a transparent cover 322c attached to the housing 324c. The lighting system 304d is provided at a right rear of the vehicle 301. In particular, the lighting system 304d includes a housing 324d placed at the right rear of the vehicle 301 and a transparent cover 322d attached to the housing 324d.

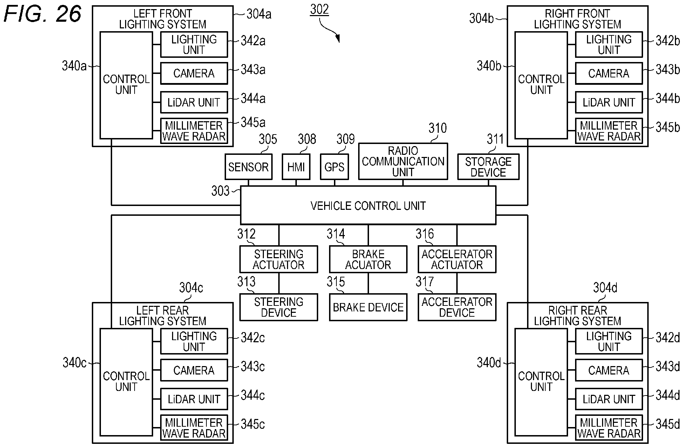

Next, referring to Fig. 26, the vehicle system 302 shown in Fig. 25 will be described specifically. Fig. 26 is a block diagram illustrating the vehicle system 302. As shown in Fig. 26, the vehicle system 302 includes the vehicle control unit 303, the lighting systems 304a to 304d, a sensor 305, a human machine interface (HMI) 308, a global positioning system (GPS) 309, a radio communication unit 310, and a storage device 311. Further, the vehicle system 302 includes a steering actuator 312, a steering device 313, a brake actuator 314, a brake device 315, an accelerator actuator 316, and an accelerator device 317. Furthermore, the vehicle system 302 includes a battery (not shown) configured to supply electric power.

The vehicle control unit 303 is configured to control the driving of the vehicle 301. The vehicle control unit 303 is made up, for example, of at least one electronic control unit (ECU). The electronic control unit may include at least one microcontroller including one or more processors and one or more memories and another electronic circuit including an active device and a passive device such as transistors. The processor is, for example, a central processing unit (CPU), a micro processing unit (MPU), a graphics processing unit (GPU) and/or a tensor processing unit (TPU). CPU may be made up of a plurality of CPU cores. GPU may be made up of a plurality of GPU cores. The memory includes a read only memory (ROM) and a random access memory (RAM). ROM may store a vehicle control program. For example, the vehicle control program may include an artificial intelligence (AI) program for autonomous driving. The AI program is a program configured by a machine learning with a teacher or without a teacher that uses a neural network such as deep learning or the like. RAM may temporarily store the vehicle control program, vehicle control data and/or surrounding environment information indicating a surrounding environment of the vehicle. The processor may be configured to deploy a program designated from the vehicle control program stored in ROM on RAM to execute various types of operation in cooperation with RAM

The electronic control unit (ECU) may be configured by at least one integrated circuit such as an application specific integrated circuit (ASIC) or a field-programmable gate array (FPGA). Further, the electronic control unit may be made up of a combination of at least one microcontroller and at least one integrated circuit (FPGA or the like).

The lighting system 304a further includes a control unit 340a, a lighting unit 342a, a camera 343a, a light detection and ranging (LiDAR) unit 344a (an example of a laser radar), and a millimeter wave radar 345a. As shown in Fig. 25, the control unit 340a, the lighting unit 342a, the camera 343a, the LiDAR unit 344a, and the millimeter wave radar 345a are disposed in a space Sa defined by the housing 324a and the transparent cover 322a (an interior of a lamp compartment). The control unit 340a may be disposed in a predetermined place on the vehicle 301 other than the space Sa. For example, the control unit 340a may be configured integrally with the vehicle control unit 303.

The control unit 340a is made up, for example, of at least one electronic control unit (ECU). The electronic control unit may include at least one microcontroller including one or more processers and one or more memories and another electronic circuit (for example, a transistor or the like). The processor is, for example, CPU, MPU, GPU and/or TPU. CPU may be made up of a plurality of CPU cores. GPU may be made up of a plurality of GPU cores. The memory includes ROM and RAM ROM may store a surrounding environment identifying program for identifying a surrounding environment of the vehicle 301. For example, the surrounding environment identifying program is a program configured by a machine learning with a teacher or without a teacher that uses a neural network such as deep learning or the like. RAM may temporarily store the surrounding environment identifying program, image data acquired by the camera 343a, three-dimensional mapping data (point group data) acquired by the LiDAR unit 344a and/or detection data acquired by the millimeter wave radar 345a, and the like. The processor may be configured to deploy a program designated from the surrounding environment identifying program stored in ROM on RAM to execute various types of operation in cooperation with RAM. In addition, the electronic control unit (ECU) may be made up of at least one integrated circuit such as ASIC, FPGA, or the like. Further, the electronic control unit may be made up of a combination of at least one microcontroller and at least one integrated circuit (FPGA or the like).

The lighting unit 342a is configured to form a light distribution pattern by emitting light towards an exterior (a front) of the vehicle 301. The lighting unit 342a includes a light source for emitting light and an optical system. The light source may be made up, for example, of a plurality of light emitting devices that are arranged into a matrix configuration (for example, N rows × M columns, N>1, M>1). The light emitting device is, for example, a light emitting diode (LED), a laser diode (LD) or an organic EL device. The optical system may include at least one of a reflector configured to reflect light emitted from the light source towards the front of the lighting unit 342a and a lens configured to refract light emitted directly from the light source or light reflected by the reflector. In the case where the driving mode of the vehicle 301 is a manual drive mode or a drive assist mode, the lighting unit 342a is configured to form a light distribution pattern for a driver (for example, a low beam light distribution pattern or a high beam light distribution pattern) ahead of the vehicle 301. In this way, the lighting unit 342a functions as a left headlamp unit. On the other hand, in the case where the driving mode of the vehicle 301 is a high-level drive assist mode or a complete autonomous drive mode, the lighting unit 342a may be configured to form a light distribution pattern for a camera ahead of the vehicle 301.

The control unit 340a may be configured to supply individually electric signals (for example, pulse width modulation (PWM) signals) to the plurality of light emitting devices provided on the lighting unit 342a. In this way, the control unit 340a can select individually and separately the light emitting devices to which the electric signals are supplied and control the duty ratio of the electric signal supplied to each of the light emitting devices. That is, the control unit 340a can select the light emitting elements to be turned on or turned off from the plurality of light emitting devices arranged into the matrix configuration and determine the luminance of the light emitting diodes that are illuminated. As a result, the control unit 340a can change the shape and brightness of a light distribution pattern emitted towards the front of the lighting unit 342a.

The camera 343a is configured to detect a surrounding environment of the vehicle 301. In particular, the camera 343a is configured to acquire at first image data indicating a surrounding environment of the vehicle 301 and to then transmit the image data to the control unit 340a. The control unit 340a identifies surrounding environment information based on the transmitted image data. Here, the surrounding environment information may include information on a target object existing at an outside of the vehicle 301. For example, the surrounding environment information may include information on an attribute of a target object existing at an outside of the vehicle 301 and information on a position of the target object with respect to the vehicle 301. The camera 343a is made up of an imaging device including, for example, a charge-coupled device (CCD), a complementary metal oxide semiconductor (CMOS) or the like. The camera 343a may be configured as a monocular camera or may be configured as a stereo camera. In the case where the camera 343a is a stereo camera, the control unit 340a can identify a distance between the vehicle 301 and a target object (for example, a pedestrian or the like) existing at an outside of the vehicle 301 based on two or more image data acquired by the stereo camera by making use of a parallax. Additionally, in the present embodiment, although one camera 343a is provided in the lighting system 304a, two or more cameras 343a may be provided in the lighting system 304a.

The LiDAR unit 344a (an example of a laser radar) is configured to detect a surrounding environment of the vehicle 301. In particular, the LiDAR unit 344a is configured to acquire at first three-dimensional (3D) mapping data (point group data) indicating a surrounding environment of the vehicle 301 and to then transmit the 3D mapping data to the control unit 340a. The control unit 340a identifies surrounding environment information based on the 3D mapping data transmitted thereto. Here, the surrounding environment information may include information on a target object existing as an outside of the vehicle 301. For example, the surrounding environment information may include information on an attribute of a target object existing at an outside of the vehicle 301 and information on a position of the target object with respect to the vehicle 301.

More specifically, the LiDAR unit 344a can acquire at first information on a time of flight (TOF) $\Delta T1$ of a laser beam (a light pulse) at each emission angle (a horizontal angle $\theta$, a vertical angle $\varphi$) of the laser beam and can then acquire information on a distance D between the LiDAR unit 344a (the vehicle 301) and an object existing at an outside of the vehicle 301 at each emission angle (a horizontal angle $\theta$, a vertical angle $\varphi$) based on the time of flight $\Delta T1$. Here, the time of flight $\Delta T1$ can be calculated as follows, for example.

$$\text{Time of Flight } \Delta T1 = \text{a time t1 when a laser beam (a light pulse) returns to}$$

$$\text{LiDAR} - \text{a time t0 when LiDAR unit emits the laser beam}$$

In this way, the LiDAR unit 344a can acquire the 3D mapping data indicating the surrounding environment of the vehicle 301.

Additionally, the LiDAR unit 344a includes, for example, a laser light source configured to emit a laser beam, an optical deflector configured to scan a laser beam in a horizontal direction and a vertical direction, an optical system such as a lens, and a receiver configured to accept or receive a laser beam reflected by an object. There is imposed no specific limitation on a central wavelength of a laser beam emitted from the laser light source. For example, a laser beam may be invisible light whose central wavelength is near 900 nm. The optical deflector may be, for example, a micro electromechanical system (MEMS) mirror. The receiver may be, for example, a photodiode. The LiDAR unit 344a may acquire 3D mapping data without scanning the laser beam by the optical deflector. For example, the LiDAR unit 344a may acquire 3D mapping data by use of a phased array method or a flash method. In addition, in the present embodiment, although one LiDAR unit 344a is provided in the lighting system 304a, two or more LiDAR units 344a may be provided in the lighting system 304a. For example, in the case where two LiDAR units 344a are provided in the lighting system 304a, one LiDAR unit 344a may be configured to detect a surrounding environment in a front area ahead of the vehicle 301, while the other LiDAR unit 344a may be configured to detect a surrounding environment in a side area to the vehicle 301.

The millimeter wave radar 345a is configured to detect a surrounding environment of the vehicle 301. In particular, the millimeter wave radar 345a is configured to acquire at first detection data indicating a surrounding environment of the vehicle 301 and to then transmit the detection data to the control unit 340a. The control unit 340a identifies surrounding environment information based on the transmitted detection data. Here, the surrounding environment information may include information on a target object existing at an outside of the vehicle 301. The surrounding environment information may include, for example, information on an attribute of a target object existing at an outside of the vehicle 301, information on a position of the target object with respect to the vehicle 301, and a speed of the target object with respect to the vehicle 301.

For example, the millimeter wave radar 345a can acquire a distance D between the millimeter wave radar 345a (the vehicle 301) and an object existing at an outside of the vehicle 301 by use of a pulse modulation method, a frequency modulated-continuous wave (FM-CW) method or a dual frequency continuous wave (CW) method. In the case where the pulse modulation method is used, the millimeter wave radar 345a can acquire at first information on a time of flight $\Delta T2$ of a millimeter wave at each emission angle of the millimeter wave and can then acquire information on a distance D between the millimeter wave radar 345a (the vehicle 301) and an object existing at an outside of the vehicle 301 at each emission angle based on the information on a time of flight $\Delta T2$. Here, the time of flight $\Delta T2$ can be calculated, for example, as follows.

$$\text{Time of Flight } \Delta T2 = \text{a time t3 when a millimeter wave returns to the millimeter}$$

$$\text{wave radar} - \text{a time t2 when the millimeter wave radar emits the millimeter wave}$$

Additionally, the millimeter wave radar 345a can acquire information on a relative velocity V of an object existing at an outside of the vehicle 301 to the millimeter wave radar 345a (the vehicle 301) based on a frequency f0 of a millimeter wave emitted from the millimeter wave radar 345a and a frequency f1 of the millimeter wave that returns to the millimeter wave radar 345a.

Additionally, in the present embodiment, although one millimeter wave radar 345a is provided in the lighting system 304a, two or more millimeter wave radars 345a may be provided in the lighting system 304a. For example, the lighting system 304a may include a short-distance millimeter wave radar 345a, a middle-distance millimeter wave radar 345a, and a long-distance millimeter wave radar 345a.

The lighting system 304b further includes a control unit 340b, a lighting unit 342b, a camera 343b, a LiDAR unit 344b, and a millimeter wave radar 345b. As shown in Fig. 25, the control unit 340b, the lighting unit 342b, the camera 343b, the LiDAR unit 344b, and the millimeter wave radar 345b are disposed in a space Sb defined by the housing 324b and the transparent cover 322b (an interior of a lamp compartment). The control unit 340b may be disposed in a predetermined place on the vehicle 301 other than the space Sb. For example, the control unit 340b may be configured integrally with the vehicle control unit 303. The control unit 340b may have a similar function and configuration to those of the control unit 340a. The lighting unit 342b may have a similar function and configuration to those of the lighting unit 342a. In this regard, the lighting unit 342a functions as the left headlamp unit, while the lighting unit 342b functions as a right headlamp unit. The camera 343b may have a similar function and configuration to those of the camera 343a. The LiDAR unit 344b may have a similar function and configuration to those of the LiDAR unit 344a. The millimeter wave radar 345b may have a similar function and configuration to those of the millimeter wave radar 345a.

The lighting system 304c further includes a control unit 340c, a lighting unit 342c, a camera 343c, a LiDAR unit 344c, and a millimeter wave radar 345c. As shown in Fig. 25, the control unit 340c, the lighting unit 342c, the camera 343c, the LiDAR unit 344c, and the millimeter wave radar 345c are disposed in a space Sc defined by the housing 324c and the transparent cover 322c (an interior of a lamp compartment). The control unit 340c may be disposed in a predetermined place on the vehicle 301 other than the space Sc. For example, the control unit 340c may be configured integrally with the vehicle control unit 303. The control unit 340c may have a similar function and configuration to those of the control unit 340a.

The lighting unit 342c is configured to form a light distribution pattern by emitting light towards an exterior (a rear) of the vehicle 301. The lighting unit 342c includes a light source for emitting light and an optical system. The light source may be made up, for example, of a plurality of light emitting devices that are arranged into a matrix configuration (for example, N rows × M columns, N>1, M>1). The light emitting device is, for example, an LED, an LD or an organic EL device. The optical system may include at least one of a reflector configured to reflect light emitted from the light source towards the front of the lighting unit 342c and a lens configured to refract light emitted directly from the light source or light reflected by the reflector. In the case where the driving mode of the vehicle 301 is the manual drive mode or the drive assist mode, the lighting unit 342c may be turned off. On the other hand, in the case where the driving mode of the vehicle 301 is the high-level drive assist mode or the complete autonomous drive mode, the lighting unit 342c may be configured to form a light distribution pattern for a camera behind the vehicle 301.

The camera 343c may have a similar function and configuration to those of the camera 343a. The LiDAR unit 344c may have a similar function and configuration to those of the LiDAR unit 344c. The millimeter wave radar 345c may have a similar function and configuration to those of the millimeter wave radar 345a.

The lighting system 304d further includes a control unit 340d, a lighting unit 342d, a camera 343d, a LiDAR unit 344d, and a millimeter wave radar 345d. As shown in Fig. 25, the control unit 340d, the lighting unit 342d, the camera 343d, the LiDAR unit 344d, and the millimeter wave radar 345d are disposed in a space Sd defined by the housing 324d and the transparent cover 322d (an interior of a lamp compartment). The control unit 340d may be disposed in a predetermined place on the vehicle 301 other than the space Sd. For example, the control unit 340d may be configured integrally with the vehicle control unit 303. The control unit 340d may have a similar function and configuration to those of the control unit 340c. The lighting unit 342d may have a similar function and configuration to those of the lighting unit 342c. The camera 343d may have a similar function and configuration to those of the camera 343c. The LiDAR unit 344d may have a similar function and configuration to those of the LiDAR unit 344c. The millimeter wave radar 345d may have a similar function and configuration to those of the millimeter wave radar 345c.

The sensor 305 may include an acceleration sensor, a speed sensor, a gyro sensor, and the like. The sensor 305 detects a driving state of the vehicle 301 and outputs driving state information indicating such a driving state of the vehicle 301 to the vehicle control unit 303. The sensor 305 may further include a seating sensor configured to detect whether the driver is seated on a driver's seat, a face direction sensor configured to detect a direction in which the driver directs his or her face, an exterior weather sensor configured to detect an exterior weather state, a human or motion sensor configured to detect whether a human exists in an interior of a passenger compartment. Furthermore, the sensor 305 may include an illuminance sensor configured to detect a degree of brightness (an illuminance) of a surrounding environment of the vehicle 301. The illuminance sensor may determine a degree of brightness of a surrounding environment of the vehicle 301, for example, in accordance with a magnitude of optical current outputted from a photodiode.

The human machine interface (HMI) 308 is made up of an input module configured to receive an input operation from the driver and an output module configured to output the driving state information or the like towards the driver. The input module includes a steering wheel, an accelerator pedal, a brake pedal, a driving modes changeover switch configured to switch driving modes of the vehicle 301, and the like. The output module includes a display configured to display thereon driving state information, surrounding environment information and an illuminating state of the lighting system 4, and the like.

The global positioning system (GPS) 309 acquires information on a current position of the vehicle 301 and outputs the current position information so acquired to the vehicle control unit 303. The radio communication unit 310 receives information on other vehicles running or existing on the periphery of the vehicle 301 (for example, other vehicles' running information) from the other vehicles and transmits information on the vehicle 301 (for example, subject vehicle's running information) to the other vehicles (a vehicle-vehicle communication).

The radio communication unit 310 receives infrastructural information from infrastructural equipment such as a traffic signal controller, a traffic sign lamp or the like and transmits the subject vehicle's running information of the vehicle 301 to the infrastructural equipment (a road-vehicle communication). In addition, the radio communication unit 310 receives information on a pedestrian from a mobile electronic device (a smartphone, an electronic tablet, an electronic wearable device, and the like) that the pedestrian carries and transmits the subject vehicle's running information of the vehicle 301 to the mobile electronic device (a pedestrian-vehicle communication). The vehicle 301 may communicate directly with other vehicles, infrastructural equipment or a mobile electronic device in an ad hoc mode or may communicate with them via access points. Radio communication standards include, for example, 5G, Wi-Fi (a registered trademark), Bluetooth (a registered trademark), ZigBee (a registered trademark), and LPWA. The vehicle 301 may communicate with other vehicles, infrastructural equipment or a mobile electronic device via a mobile communication network.

The storage device 311 is an external storage device such as a hard disk drive (HDD) or a solid state drive (SSD). The storage device 311 may store two-dimensional or three-dimensional map information and/or a vehicle control program. The storage device 311 outputs map information or a vehicle control program to the vehicle control unit 303 in demand for the vehicle control unit 303. The map information and the vehicle control program may be updated via the radio communication unit 310 and a communication network such as the internet.

In the case where the vehicle 301 is driven in the autonomous driving mode, the vehicle control unit 303 generates automatically at least one of a steering control signal, an accelerator control signal, and a brake control signal based on the driving state information, the surrounding environment information, the current position information, and/or the map information. The steering actuator 312 receives a steering control signal from the vehicle control unit 303 and controls the steering device 313 based on the steering control signal so received. The brake actuator 314 receives a brake control signal from the vehicle control unit 303 and controls the brake device 315 based on the brake control signal so received. The accelerator actuator 316 receives an accelerator control signal from the vehicle control unit 303 and controls the accelerator device 317 based on the accelerator control signal so received. In this way, in the autonomous driving mode, the driving of the vehicle 301 is automatically controlled by the vehicle system 302.

On the other hand, in the case where the vehicle 301 is driven in the manual drive mode, the vehicle control unit 303 generates a steering control signal, an accelerator control signal, and a brake control signal as the driver manually operates the accelerator pedal, the brake pedal, and the steering wheel. In this way, in the manual drive mode, since the steering control signal, the accelerator control signal, and the brake control are generated as the driver manually operates the accelerator pedal, the brake pedal, and the steering wheel, the driving of the vehicle 301 is controlled by the driver.

Next, the driving modes of the vehicle 301 will be described. The driving modes include the autonomous driving mode and the manual drive mode. The autonomous driving mode includes a complete autonomous drive mode, a high-level drive assist mode, and a drive assist mode. In the complete autonomous drive mode, the vehicle system 302 automatically performs all the driving controls of the vehicle 301 including the steering control, the brake control, and the accelerator control, and the driver stays in a state where the driver cannot drive or control the vehicle 301 as he or she wishes. In the high-level drive assist mode, the vehicle system 302 automatically performs all the driving controls of the vehicle 301 including the steering control, the brake control, and the accelerator control, and although the driver stays in a state where the driver can drive or control the vehicle 301, the driver does not drive the vehicle 301. In the drive assist mode, the vehicle system 302 automatically performs a partial driving control of the steering control, the brake control, and the accelerator control, and the driver drives the vehicle 301 with assistance of the vehicle system 302 in driving. On the other hand, in the manual drive mode, the vehicle system 302 does not perform the driving control automatically, and the driver drives the vehicle without any assistance of the vehicle system 302 in driving.

In addition, the driving modes of the vehicle 301 may be switched over by operating a driving modes changeover switch. In this case, the vehicle control unit 303 switches the driving modes of the vehicle among the four driving modes (the complete autonomous drive mode, the high-level drive assist mode, the drive assist mode, the manual drive mode) in response to an operation performed on the driving modes changeover switch by the driver. The driving modes of the vehicle 301 may automatically be switched over based on information on an autonomous driving permitting section where the autonomous driving of the vehicle 301 is permitted and an autonomous driving prohibiting section where the autonomous driving of the vehicle 301 is prohibited, or information on an exterior weather state. In this case, the vehicle control unit 303 switches the driving modes of the vehicle 301 based on those pieces of information. Further, the driving modes of the vehicle 301 may automatically be switched over by use of the seating sensor or the face direction sensor. In this case, the vehicle control unit 303 may switch the driving modes of the vehicle 301 based on an output signal from the seating sensor or the face direction sensor.

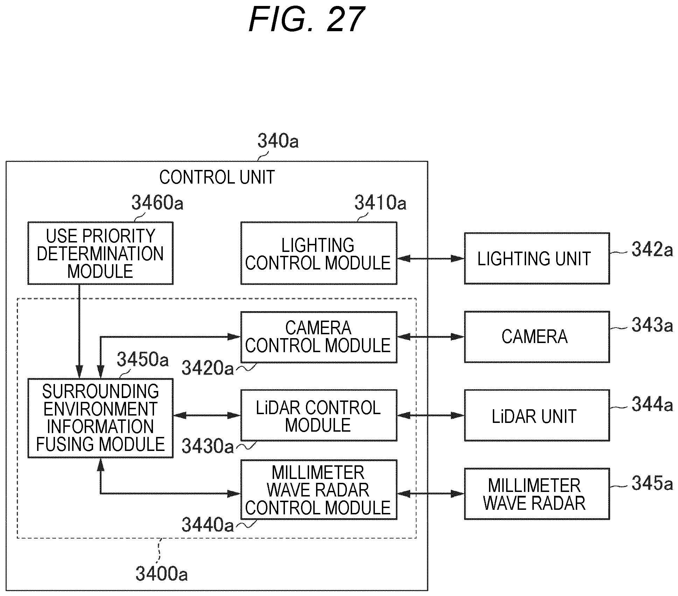

Next, referring to Fig. 27, the function of the control unit 340a will be described. Fig. 27 is a diagram illustrating functional blocks of the control unit 340a of the lighting system 304a. As shown in Fig. 27, the control unit 340a is configured to control individual operations of the lighting unit 342a, the camera 343a, the LiDAR unit 344a, and the millimeter wave radar 345a. In particular, the control unit 340a includes a lighting control module 3410a, a surrounding environment identification module 3400a, and a use priority determination module 3460a.

The lighting control module 3410a is configured to cause the lighting unit 342a to emit a predetermined light distribution pattern towards a front area ahead of the vehicle 301 for controlling the lighting unit 342a. For example, the lighting control module 3410a may change the light distribution pattern that is emitted from the lighting unit 342a in accordance with the driving mode of the vehicle 301.

The surrounding environment identification module 3400a includes a camera control module 3420a, a LiDAR control module 3430a, a millimeter wave radar control module 3440a, and a surrounding environment information fusing module 3450a.

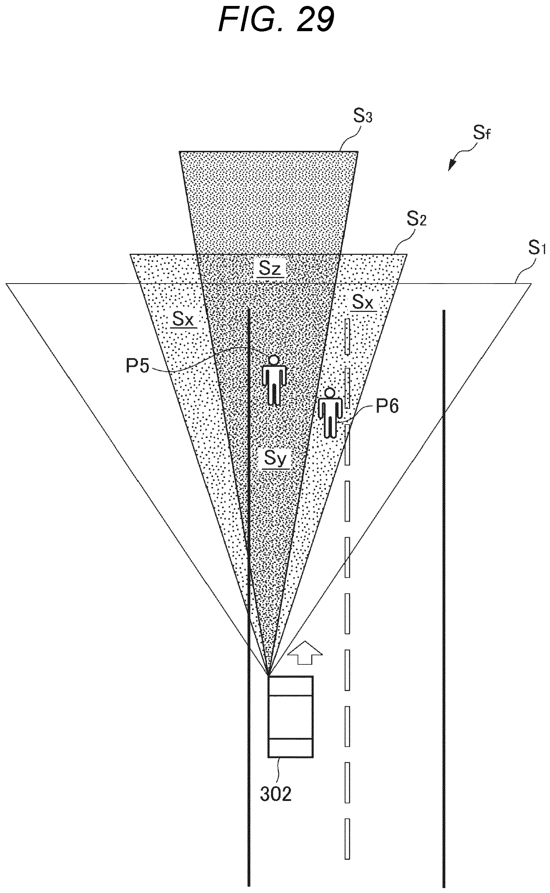

The camera control module 3420a is configured not only to control the operation of the camera 343a but also to generate surrounding environment information of the vehicle 301 in a detection area S1 (refer to Fig. 29) of the camera 343a (hereinafter, referred to as surrounding environment information I1) based on image data (detection data) outputted from the camera 343a. The LiDAR control module 3430a is configured not only to control the operation of the LiDAR unit 344a but also to generate surrounding environment information of the vehicle 301 in a detection area S2 (refer to Fig. 29) of the LiDAR unit 344a (hereinafter, referred to as surrounding environment information I2) based on 3D mapping data (detection data) outputted from the LiDAR unit 344a. The millimeter wave radar control module 3440a is configured not only to control the operation of the millimeter wave radar 345a but also to generate surrounding environment information of the vehicle 301 in a detection area S3 (refer to Fig. 29) of the millimeter wave radar 345a (hereinafter, referred to as surrounding environment information I3) based on detection data outputted from the millimeter wave radar 345a.

The surrounding environment information fusing module 3450a is configured to fuse the pieces of surrounding environment information I1, I2, I3 together so as to generate fused surrounding environment information If. Here, the surrounding environment information If may include information on a target object existing at an outside of the vehicle 301 in a detection area Sf that is a combination of the detection area S1 of the camera 343a, the detection area S2 of the LiDAR unit 344a, and the detection area S3 of the millimeter wave radar 345a as shown in Fig. 29. For example, the surrounding environment information If may include information on an attribute of a target object, a position of the target object with respect to the vehicle 301, a distance between the vehicle 301 and the target object and/or a velocity of the target object with respect to the vehicle 301. The surrounding environment information fusing module 3450a transmits the surrounding environment information If to the vehicle control unit 303.

A use priority determination module 3460a is configured to determine a use priority among the sensors (the camera 343a, the LiDAR unit 344a, the millimeter wave radar 345a). Here, the "use priority" is a parameter for determining a use priority over detection data acquired by the sensors. For example, in the case where a use priority of the camera 343a is higher than a use priority of the LiDAR unit 344a, image data (detection data acquired by the camera 343a) is used in preference to 3D mapping data (detection data acquired by the LiDAR unit 344a). In this case, in generating surrounding environment information If, the surrounding environment information fusing module 3450a adopts surrounding environment information I1 that is generated based on image data rather than surrounding environment information I2 that is generated based on 3D mapping data in the overlapping area Sx (refer to Fig. 29) where the detection area S1 and the detection area S2 overlap each other. In particular, in the case where there is caused a contradiction between the surrounding environment information I1 and the surrounding environment information I2 (in the case where the surrounding environment information I1 and the surrounding environment information I2 do not coincide with each other), the surrounding environment information fusing module 3450a trusts the surrounding environment information I1 to thereby adopt the surrounding environment information I1.

In this way, the surrounding environment identification module 3400a is configured to identify a surrounding environment of the vehicle 301 based on the activity priorities among the detection data acquired by the sensors (the camera 343a, the LiDAR unit 344a, the millimeter wave radar 345a) and the sensors.

In the present embodiment, although the surrounding environment information fusing module 3450a and the use priority determination module 3460a are realized or provided by the control unit 340a, these modules may be realized or provided by the vehicle control unit 303.

In addition, the control units 340b, 340c, 340d may each have a similar function to that of the control unit 340a. That is, each of the control units 340b to 340d may include a lighting unit, a surrounding environment identification module, and a use priority determination module. Additionally, the surrounding environment identification modules of the control unit 340b to 340d may each include a camera control module, a LiDAR control module, a millimeter wave radar control module, and a surrounding environment information fusing module. The surrounding environment information fusing modules of the control unit 340b to 340d may each transmit fused surrounding environment information If to the vehicle control unit 303. The vehicle control unit 303 may control the driving of the vehicle 301 based on the pieces of surrounding environment information If transmitted thereto from the control units 340a to 340d and other pieces of information (driving control information, current position information, map information, and the like).

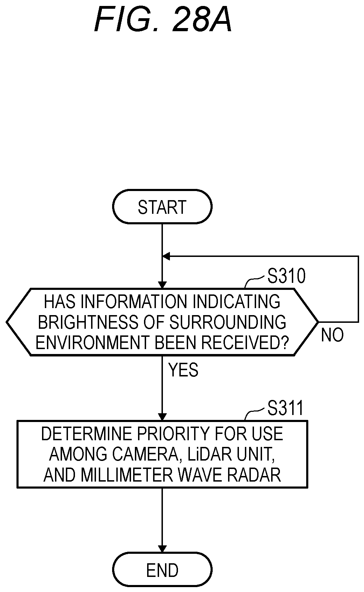

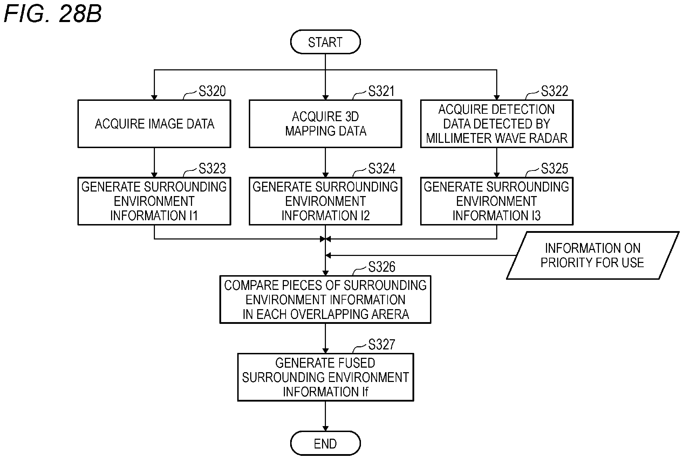

Next, referring to Figs. 28 and 29, an example of an operation flow of the lighting system 304a according to the present embodiment will be described. Fig. 28A is a flow chart for explaining an example of an operation for determining a use priority. Fig. 28B is a flow chart for explaining an example of an operation for generating fused surrounding environment information If. Fig. 29 is a diagram illustrating the detection area S1 of the camera 343a, the detection area of the LiDAR unit 344a, and the detection area S3 of the millimeter wave radar 345a in the lighting system 304a.

In the present embodiment, as a matter of convenience in description, although only an operation flow of the lighting system 304a will be described, it should be noted that the operation flow of the lighting system 304a can also be applied to the lighting systems 304b to 304d. In addition, in the present embodiment, a description will be made on the premise that the vehicle 301 is driven in the autonomous driving mode (in particular, the high-level drive assist mode or the complete autonomous drive mode).

At first, referring to Fig. 28A, an example of an operation for determining a use priority among the sensors. As shown in Fig. 28A, in step S310, the use priority determination module 3460a determines whether information indicating brightness of a surrounding environment of the vehicle 301 (hereinafter, referred to as "brightness information") has been received. Specifically, an illuminance sensor mounted on the vehicle 301 transmits detection data indicating the brightness of a surrounding environment of the vehicle 301 to the vehicle control unit 303. Next, the vehicle control unit 303 at first generates brightness information based on the detection data so received and then transmits the brightness information so generated to the use priority determination module 3460a. Here, the "brightness information" may include two pieces of information indicating "bright" and "dark". In this case, in the case where brightness (the illuminance) of a surrounding environment of the vehicle 301 that the detection data indicates is greater than a predetermined threshold (a threshold illuminance or the like), the vehicle control unit 303 may generate brightness information indicating that the surrounding environment of the vehicle 301 is bright. On the other hand, in the case where brightness (the illuminance) of the surrounding environment of the vehicle 301 that the detection data indicates is the predetermined threshold or smaller, the vehicle control unit 303 may generate brightness information indicating that the surrounding environment of the vehicle 301 is dark. Additionally, the "brightness information" may include information on a numeric value of illuminance or the like. In this case, the use priority determination module 3460a may determine whether the surrounding environment of the vehicle 301 is bright or dark.

The vehicle control unit 303 may transmit brightness information to the use priority determination module 3460a when the vehicle control unit 303 activates the vehicle system 302. Further, the vehicle control unit 303 may transmit brightness information to the use priority determination module 3460a when the brightness in the surrounding environment of the vehicle 301 changes (for example, when the surrounding environment changes from a bright state to a dark state, or when the surrounding environment changes from the dark state to the bright state). For example, when the vehicle 301 enters a tunnel or exits from the tunnel, the vehicle control unit 303 may transmit brightness information to the use priority determination module 3460a. In addition, the vehicle control unit 303 may transmit brightness information to the use priority determination module 3460a in a predetermined cycle.

If the use priority determination module 3460a determines that it receives the brightness information (YES in step S310), the use priority determination module 3460a executes an operation in step S311. On the other hand, if the result of the determination made in step S310 is NO, the use priority determination module 3460a waits until the use priority determination module 3460a receives brightness information.

In the case where the illuminance sensor is connected directly with the use priority determination module 3460a, the use priority determination module 3460a may identify brightness of a surrounding environment based on the detection data acquired from the illuminance sensor. Thereafter, the use priority determination module 3460a may execute an operation in step S311.

Next, in step S311, the use priority determination module 3460a determines individually a use frequency for the camera 343a, a use frequency for the LiDAR unit 344a and a use frequency for the millimeter wave radar 345a. For example, the use priority determination module 3460a may set a use frequency among the sensors as below.

Table 5: priority for use based on brightness in surrounding environment of vehicle

| Brightness in Surrounding environment | priority for use for Camera | priority for use for LiDAR Unit | priority for use for Millimeter Wave Radar |
|---|---|---|---|
| Bright | 1 | 2 | 3 |
| Dark | 3 | 1 | 2 |

As shown in Table 5, in the case where the surrounding environment of the vehicle 301 is bright, the use priority determination module 3460a sets the priority for use for the camera 343a at a highest priority for use, while the use priority determination module 3460a sets the priority for use for the millimeter wave radar 345a at a lowest priority for use. On the other hand, in the case where the surrounding environment of the vehicle 301 is dark (in the case where the vehicle 301 is driven in a tunnel or at night), the use priority determination module 3460a sets the priority for use for the LiDAR unit 344a at a highest priority for use, while the use priority determination module 3460a sets the priority for use for the camera 343a at a lowest priority for use. In addition, the pieces of information on the activity priorities shown in Table 1 may be stored in a memory of the control unit 340a or the storage device 311.

In the present embodiment, although the brightness information is generated based on the detection data acquired from the illuminance sensor, brightness information may be generated based on image data acquired by the camera 343a. In this case, the use priority determination module 3460a may at first generate brightness information based on image data acquired by the camera 43a and then set a use priority among the sensors based on the brightness information.

Next, referring to Figs. 28B and 29, an example of an operation for generating fused surrounding environment information If will be described. This description will be made on the premise that the surrounding environment of the vehicle 301 is bright. As a result, a use priority among the camera 343a, the LiDAR unit 344a, and the millimeter wave radar 345a is the camera 343a > the LiDAR unit 344a > the millimeter wave radar 345a.

As shown in Fig. 28B, in step S320, the camera 343a acquire image data indicating a surrounding environment of the vehicle 301 in the detection area S1 (refer to Fig. 29). In addition, in step S321, the LiDAR unit 344a acquires 3D mapping data indicating a surrounding environment of the vehicle 301 in the detection area S2. Further, in step s322, the millimeter wave radar 345a acquires detection data indicating a surrounding environment of the vehicle 301 in the detection area S3.

Next, the camera control module 3420a at first acquires the image data from the camera 343a and then generates surrounding environment information I1 based on the image data so received (step S323). Additionally, the LiDAR control module 3430a at first acquires the 3D mapping data from the LiDAR unit 344a and then generates surrounding environment information 12 based on the 3D mapping data so received (step S324). Further, the millimeter wave radar control module 3440a at first acquires the detection data from the millimeter wave radar 345a and then generates surrounding environment information I3 based on the detection data (step S325).

Next, in step 326, the surrounding environment information fusing module 3450a at first receives information on the priority for use from the use priority determination module 3460a and then compares the plurality of pieces of surrounding environment information in the individual overlapping areas Sx, Sy, Sz. Specifically, the surrounding environment information fusing module 3450a at first compares the surrounding environment information I1 with the surrounding environment information I2 in the overlapping area Sx where the detection area S1 and the detection area S2 overlap each other and then determines whether the surrounding environment information I1 and the surrounding environment information I2 coincide with each other. For example, in the case where the surrounding environment information I1 indicates an existence of a pedestrian P6 in the overlapping area Sx, while the surrounding environment information I2 does not indicate an existence of the pedestrian P6 in the overlapping area Sx, the surrounding environment information fusing module 3450a determines that the surrounding environment information I1 and the surrounding environment information I2 do not coincide with each other. If the surrounding environment information fusing module 3450a determines that the surrounding environment information I1 and the surrounding environment information I2 do not coincide with each other as the result of the comparison, the surrounding environment information fusing module 3450a determines surrounding environment information that is adopted in the overlapping area Sx as the surrounding environment information I1 based on the priority for use between the camera 343a and the LiDAR unit 344a (the camera 343a > the LiDAR unit 344a).

In addition, the surrounding environment information fusing module 3450a at first compares the surrounding environment information I2 with the surrounding environment information I3 in the overlapping area Sz where the detection area S2 and the detection area S3 overlap each other and then determines whether the surrounding environment information I2 and the surrounding environment information I3 coincide with each other. If the surrounding environment information fusing module 3450a determines that the surrounding environment information I2 and the surrounding environment information I3 do not coincide with each other as the result of the comparison, the surrounding environment information fusing module 3450a determines surrounding environment information that is adopted in the overlapping area Sz as the surrounding environment information I2 based on the priority for use between the LiDAR unit 344a and the millimeter wave radar 345a (the LiDAR unit 344a > the millimeter wave radar 345a).

Additionally, the surrounding environment information fusing module 3450a at first compares the surrounding environment information I1, the surrounding environment information I2, and the surrounding environment information I3 in the overlapping area Sy where the detection area S1, the detection area S2, and the detection area S3 overlap one another and then determines whether the surrounding environment information I1, the surrounding environment information I2, and the surrounding environment information I3 coincide with one another. If the surrounding environment information fusing module 3450a determines that the surrounding environment information I1, the surrounding environment information I2, and the surrounding environment information I3 do not coincide with one another as the result of the comparison, the surrounding environment information fusing module 3450a determines surrounding environment information that is adopted in the overlapping area Sy as the surrounding environment information I1 based on the priority for use (the camera 343a > the LiDAR unit 344a > the millimeter wave radar 345a).

Thereafter, in step S327, the surrounding environment information fusing module 3450a generates fused surrounding environment information If by fusing the pieces of surrounding environment information I1, I2, I3. The surrounding environment information If may include information on a target object existing at an outside of the vehicle 301 in the detection area Sf where the detection areas S1, S2, S3 are combined together. In particular, the surrounding environment information If may be made up of the following pieces of information.

- Surrounding environment information I1 in the detection area S1
- Surrounding environment information I2 in the detection area S2 excluding the overlapping areas Sx, Sy
- Surrounding environment information I3 in the detection area S3 excluding the overlapping areas Sy, Sz

In this way, the operations for generating the surrounding environment information If shown in Fig. 28B are executed repeatedly.

In this way, according to the present embodiment, the priority for use among the sensors (the camera 343a, the LiDAR unit 344a, the millimeter wave radar 345a) is at first determined, and then, the surrounding environment of the vehicle 301 is identified (in other words, the surrounding environment information If is generated) based on the detection data acquired by the sensors and the priority for use. In this way, since the surrounding environment of the vehicle 301 is identified in consideration of the priority for use among the sensors, the lighting system 304a and the vehicle system 302 can be provided in which the recognition accuracy with which the surrounding environment of the vehicle 301 is recognized can be improved.

Additionally, according to the present embodiment, the plurality of pieces of surrounding environment information are compared in the overlapping areas Sx, Sy, Sz. As the result of the comparisons, in the case where the plurality of pieces of surrounding environment information do not coincide with one another, the surrounding environment information adopted in each of the overlapping areas Sx, Sy, Sz is determined based on the priority for use among the sensors. Thereafter, the fused surrounding environment information If is generated. In this way, since the surrounding environment information If is generated in consideration of the priority for use among the sensors, the recognition accuracy with which the surrounding environment of the vehicle 301 is recognized can be improved.

In addition, the priority for use among the sensors is at first determined based on the information indicating the brightness of the surrounding environment of the vehicle 301, and the surrounding environment of the vehicle 301 is then identified based on the detection data acquired by the sensors and the priority for use. In this way, since the priority for use is optimized based on the brightness of the surrounding environment of the vehicle 301, the recognition accuracy with which the surrounding environment of the vehicle 301 is recognized can be improved.

In the process for generating surrounding environment information If described above, the plurality of pieces of surrounding environment information do not have to be compared in the individual overlapping areas Sx, Sy, Sz (that is, the operation in step S326 may be omitted). In this case, the surrounding environment information fusing module 3450a may generate surrounding environment information If based on the information on the priority for use among the sensors and the pieces of surrounding environment information I1, I2, I3 without comparing the plurality of pieces of surrounding environment information in the overlapping areas Sx, Sy, Sz.

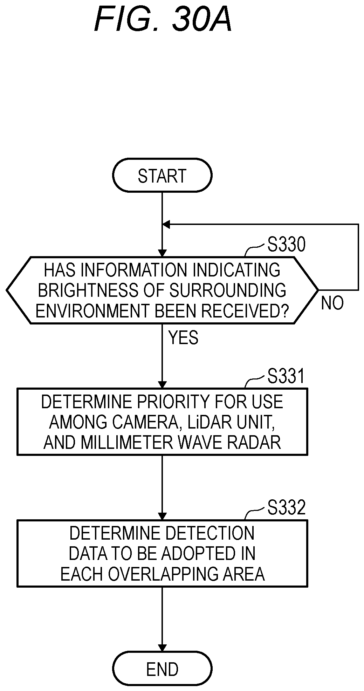

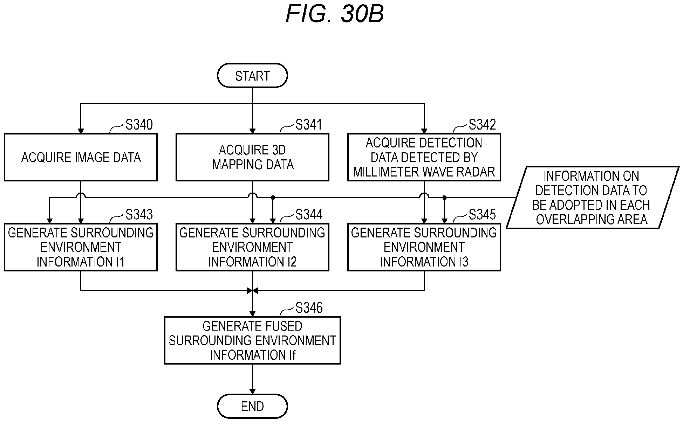

Next, referring to Figs. 29 and 30, an example of an operation flow of the lighting system 304a according to a modified example of the present embodiment will be described. Fig. 30A is a flow chart for explaining an example of an operation for determining detection data that is adopted in the individual overlapping areas Sx, Sy, Sz (refer to Fig. 29). Fig. 30B is a flow chart for explaining another example of an operation for generating fused surrounding environment information If.

At first, referring to Fig. 30A, an example of an operation for generating detection data that is adopted in the individual overlapping areas Sx, Sy, Sz will be described. This description will be made on the premise that the surrounding environment of the vehicle 301 is bright. As a result, a use priority among the camera 343a, the LiDAR unit 344a, and the millimeter wave radar 345a is the camera 343a > the LiDAR unit 344a > the millimeter wave radar 345a.

As shown in Fig. 30A, in step S330, the use priority determination module 3460a determines whether the use priority determination module 3460a has received brightness information. If the use priority determination module 3460a determines that the use priority determination module 3460a has received the brightness information (YES in step S330), the priority determination module 3460a executes an operation in step S331. On the other hand, if the result of the determination made in step S330 is NO, the use priority determination module 3460a waits until it receives brightness information.

Next, the use priority determination module 3460a determines a use priority among the camera 343a, the LiDAR unit 344a, and the millimeter wave radar 345A based on the brightness information so received (step S332). Thereafter, in step S32, the surrounding environment information fusing module 3450a not only receives information on the priority for use from the use priority determination module 3460a but also determines detection data that is adopted in the individual overlapping areas Sx, Sy, Sz based on the priority for use among the sensors.

For example, the surrounding environment information fusing module 3450a determines detection data of the sensor that is adopted in the overlapping area Sx as image data acquired by the camera 343a based on the priority for use between the camera 343a and the LiDAR unit 344a (the camera 343a > the LiDAR unit 344a).

In addition, the surrounding environment information fusing module 3450a determines detection data of the sensor that is adopted in the overlapping area Sz as 3D mapping data acquired by the LiDAR unit 344a based on the priority for use between the LiDAR unit 344a and the millimeter wave radar 345a (the LiDAR unit 344a > the millimeter wave radar 345a).

Additionally, the surrounding environment information fusing module 3450a determines detection data of the sensor that is adopted in the overlapping area Sy as image data acquired by the camera 343a based on the priority for use (the camera 343a>the LiDAR unit 344a > the millimeter wave radar 345a).

Next, referring to Figs. 29 and 30B, another example of the operation for generating surrounding environment information If will be described. As shown in Fig. 30B, in step S340, the camera 343a acquires image data in the detection area S1. Additionally, in step S341, the LiDAR unit 344a acquires 3D mapping data in the detection area S2. Further, in step S342, the millimeter wave radar 345a acquires detection data in the detection area S3.

Next, the camera control module 3420a acquires the image data from the camera 343a and acquires information on the detection data of the sensors that are adopted in the individual overlapping areas Sx, Sy, Sz (hereinafter, "detection data priority information") from the surrounding environment information fusing module 3450a. The detection data priority information indicates that the image data is adopted in the overlapping areas Sx, Sy, and therefore, the camera control module 3420a generates surrounding environment information I1 in the detection area S1 (step S343).

In addition, in step S344, the LiDAR control module 3430a acquires the 3D mapping data from the LiDAR unit 344a and acquires the detection data priority information from the surrounding environment information fusing module 3450a. The detection data priority information indicates that not only the image data is adopted in the overlapping areas Sx, Sy, but also the 3D mapping data is adopted in the overlapping area Sz, and therefore, the LiDAR control module 3430a generates surrounding environment information I2 in the detection area S2 excluding the overlapping areas Sx, Sy.

Further, in step S345, the millimeter wave radar control module 3440a acquires the detection data from the millimeter wave radar 345a and acquires the detection data priority information from the surrounding environment information fusing module 3450a. The detection data priority information indicates that the image data is adopted in the overlapping areas Sy and that the 3D mapping data is adopted in the overlapping area Sz, and therefore, the millimeter wave radar control module 3440a generates surrounding environment information I3 in the detection area S3 excluding the overlapping areas Sy, Sz.

Thereafter, in step S346, the surrounding environment information fusing module 3450a generates fused surrounding environment information If by fusing the pieces of surrounding environment information I1, I2, I3 together. The surrounding environment information If is made up of the surrounding environment information I1 in the detection area S1, the surrounding environment information I2 in the detection area S2 excluding the overlapping areas Sx, Sy, and the surrounding environment information 13 in the detection area 3 excluding the overlapping areas Sy, Sz. In this way, the operation for generating surrounding environment information If shown in Fig. 30B is executed repeatedly.

According to the modified example of the present embodiment, since the detection data priority information is at first generated based on the priority for use among the sensors and the surrounding environment information If is then generated based on the detection data priority information, the recognition accuracy with which the surrounding environment of the vehicle 301 is recognized can be improved. Further, the LiDAR control module 3430a generates the surrounding environment information I2 in the detection area S2 excluding the overlapping areas Sx, Sy, and the millimeter wave radar control module 3440a generates the surrounding environment information I3 in the detection area S3 excluding the overlapping areas Sy, Sz. In this way, since the operation for generating surrounding environment information in the overlapping areas is omitted, an amount of arithmetic calculation carried out by the control unit 340a can be reduced. In particular, since the operation shown in Fig. 30B is executed repeatedly, the effect of reducing the amount of arithmetic calculation carried out by the control unit 340a becomes great.

In the present embodiment, although the priority for use among the sensors (the camera 343a, the LiDAR unit 344a, the millimeter wave radar 345a) is determined based on the brightness information, the present embodiment is not limited thereto. For example, the priority for use among the sensors may be determined based on the brightness information and weather information.

For example, the vehicle control unit 303 acquires information on a place where the vehicle 301 exists currently using the GPS 309 and thereafter transmits a weather information request together with the information on the current place of the vehicle 301 to a server on a communication network via the radio communication unit 310. Thereafter, the vehicle control unit 303 receives weather information for the current place of the vehicle 301 from the server. Here, the "weather information" may be information on weather (fine, cloudy, rainy, snowy, foggy, and the like) for a place where the vehicle 301 currently exists. Next, the vehicle control unit 303 transmits the brightness information and the weather information to the use priority determination module 3460a of the control unit 340a. The use priority determination module 3460a determines a use priority among the sensors based on the brightness information and the weather information so received.

For example, the use priority determination module 3460a may determine a use priority among the sensors based on the brightness of the surrounding environment and the weather for the current place or position of the vehicle 301 as follows.

Table 6: Use frequency for each sensor based on brightness information and weather information

| Weather States | Brightness in Surrounding environment | priority for use for Camera | priority for use for LiDAR Unit | priority for use for Millimeter Wave Radar |
|---|---|---|---|---|
| Bad | - | 3 | 2 | 1 |
| Good | Bright | 1 | 2 | 3 |
| | Dark | 3 | 1 | 2 |

As shown in Table 6, in the case where the weather at the place where the vehicle 1 currently exists is bad (rainy, snowy, foggy), the use priority determination module 3460a sets the priority for use for the millimeter wave radar 345a at a highest priority for use, while the use priority determination module 3460a sets the priority for use for the camera 343a at a lowest priority for use. In the case where the weather at the place where the vehicle 301 exists currently is bad, the brightness in the surrounding environment does not have to be taken into consideration.

In addition, in the case where the weather at the place where the vehicle 301 currently exists is good (fine, cloudy, or the like) and the surrounding environment of the vehicle 301 is bright, the use priority determination module 3460a sets the priority for use for the camera 343a at a highest priority for use, while the use priority determination module 3460a sets the priority for use for the millimeter wave radar 345a at a lowest priority for use. Further, in the case where the weather at the place where the vehicle 301 currently exists is good and the surrounding environment of the vehicle 301 is dark, the use priority determination module 3460a sets the priority for use for the LiDAR unit 344a at a highest priority for use, while the use priority determination module 3460a sets the priority for use for the camera 343a at a lowest priority for use. The information on the priority for use shown in Table 2 may be stored in a memory of the control unit 340a or the storage device 311.

In this way, since the priority for use for the sensors can be optimized based on the brightness in the surrounding environment of the vehicle 301 and the weather condition for the place where the vehicle 301 currently exists, the recognition accuracy with which the surrounding environment of the vehicle 301 is recognized can be improved.

It should be noted that the weather information at the place where the vehicle 301 currently exists may be generated based on the image data acquired by the camera 343a. In this case, the use priority determination module 3460a may at first generate weather information based on the image data acquired by the camera 343a and then determine a use priority among the sensors based on the weather information and the brightness information. Further, weather information for a place where the vehicle 301 currently exists may be generated based on information indicating a state of wipers mounted on a windscreen of the vehicle. For example, in the case where the wipers are driven, weather for a place where the vehicle 301 currently exists may be determined as rain (that is, weather is bad). On the other hand, in the case where the wipers are not driven, weather for a place where the vehicle 301 currently exists may be determined as fine or cloudy (that is, weather is good). Further, the use priority determination module 3460a may at first acquire weather information from an external weather sensor and then determine a use priority for the sensors based on the weather information and the brightness information.

Further, a use priority for the sensors may be determined based on information on detection accuracies for the sensors (hereinafter, referred to "detection accuracy information"). For example, in the case where a detection accuracy for the camera 343a ranks A, a detection accuracy for the LiDAR unit 344a ranks B, and a detection accuracy for the millimeter wave radar 345a ranks C (here, the detection accuracies are ranked in the order of A>B>C), the use priority determination module 3460a determines a use priority among the camera 343a, the LiDAR unit 344a, and the millimeter wave radar 345a based on the detection accuracy information as follows.

Camera 343a>LiDAR unit 344a>Millimeter wave radar 345a

In this way, the priority for use among the sensors is at first determined based on the detection accuracy information, and the surrounding environment of the vehicle 301 is then determined based on the plurality of detection data and the priority for use. In this way, since the priority for use is determined based on the detection accuracies for the sensors, the recognition accuracy with which the surrounding environment of the vehicle 301 is recognized can be improved.

The detection accuracy information may be stored in a memory of the control unit 340a or the storage device 311. The detection accuracy information may be updated at a predetermined timing. Additionally, every time the detection accuracy is updated, updated detection accuracy information may be transmitted to a server on a communication network via the radio communication unit 310. In particular, every time the detection accuracy is updated, the vehicle control unit 303 may transmit the detection accuracy information, the information on the current place of the vehicle, the weather information, and time information indicating a time at which the detection accuracy information is updated to the sever on the communication network. These pieces of information stored in the server may be made effective use of a bid data in order to improve the detection accuracies for the sensors.

Additionally, the detection accuracies for the sensors may be acquired based on test information for measuring the sensor accuracy such as map information or the like. For example, assume a case where the vehicle 301 exists near an intersection and a traffic signal controller exists at the intersection. At this time, it is assumed that the vehicle control unit 303 recognizes an existence of the traffic signal controller existing at the intersection based on the current position information and the map information. Here, in the case where the surrounding environment information I1 does not indicate the existence of the traffic signal controller, the control unit 340a may determine that the detection accuracy of the camera 343a is low (for example, rank C). On the other hand, in the case where the pieces of surrounding environment information I2, I3 indicate the existence of the traffic signal controller, the control unit 340a may determine that the detection accuracies of the LiDAR unit 344a and the millimeter wave radar 345a are high (for example, rank A).

In the present embodiment, although the camera, the LiDAR unit, and the millimeter wave radar are raised as the sensors, the present embodiment is not limited thereto. For example, an ultrasonic sensor may be mounted in the lighting system in addition to the sensors described above. In this case, the control unit of the lighting system may control the operation of the ultrasonic sensor and may generate surrounding environment information based on detection data acquired by the ultrasonic sensor. Additionally, at least two of the camera, the LiDAR unit, the millimeter wave radar, and the ultrasonic sensor may be mounted in the lighting system.

(Fifth Embodiment)

Hereinafter, referring to drawings, a fifth embodiment of the present disclosure (hereinafter, referred to simply as a "present embodiment") will be described. In description of the present embodiment, a description of members having like reference numerals to those of the members that have already been described will be omitted as a matter of convenience in description. Additionally, dimensions of members shown in accompanying drawings may differ from time to time from actual dimensions of the members as a matter of convenience in description.

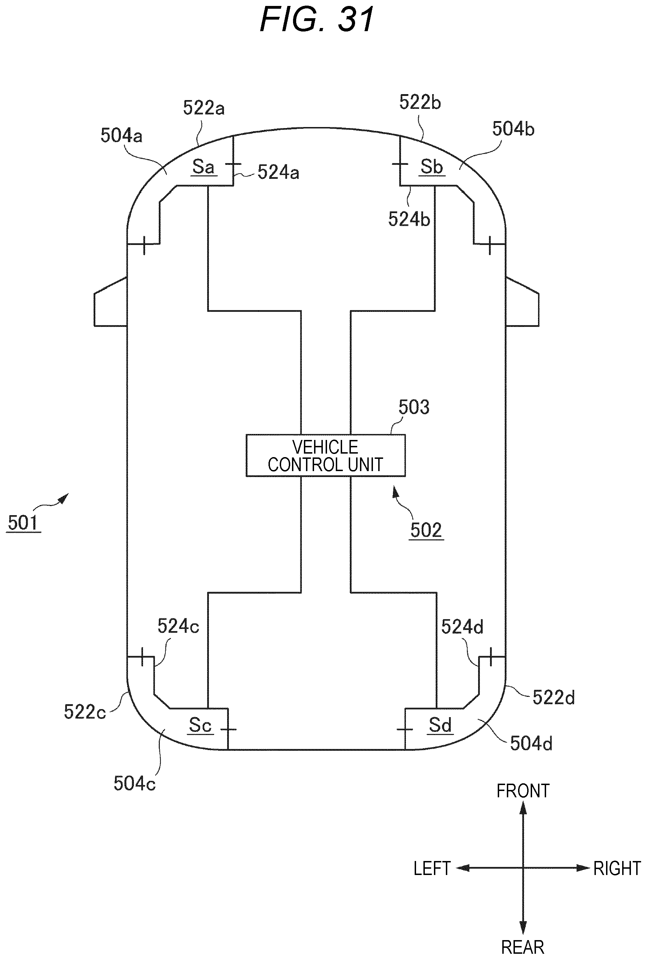

In description of the present embodiment, as a matter of convenience in description, a "left-and-right direction" and a "front-and-rear direction" will be referred to as required. These directions are relative directions set for a vehicle 501 shown in Fig. 31. Here, the "front-and rear direction" is a direction including a "front direction" and a "rear direction". The "left-and-right" direction is a direction including a "left direction" and a "right direction".

At first, referring to Fig. 31, the vehicle 501 according to the present embodiment will be described. Fig. 31 is a schematic drawing illustrating a top view of the vehicle 501 including a vehicle system 502. As shown in Fig. 31, the vehicle 501 is a vehicle (a motor vehicle) that can run in an autonomous driving mode and includes the vehicle system 502. The vehicle system 502 includes at least a vehicle control unit 503, a left front lighting system 504a (hereinafter, referred to simply as a "lighting system 504a"), a right front lighting system 504b (hereinafter, referred to simply as a "lighting system 504b"), a left rear lighting system 504c (hereinafter, referred to simply as a "lighting system 504c"), and a right rear lighting system 504d (hereinafter, referred to simply as a "lighting system 504d").

The lighting system 504a is provided at a left front of the vehicle 501. In particular, the lighting system 504a includes a housing 524a placed at the left front of the vehicle 501 and a transparent cover 522a attached to the housing 524a. The lighting system 504b is provided at a right front of the vehicle 501. In particular the lighting system 504b includes a housing 524b placed at the right front of the vehicle 501 and a transparent cover 522b attached to the housing 524b. The lighting system 504c is provided at a left rear of the vehicle 501. In particular, the lighting system 504c includes a housing 524c placed at the left rear of the vehicle 501 and a transparent cover 522c attached to the housing 524c. The lighting system 504d is provided at a right rear of the vehicle 501. In particular, the lighting system 504d includes a housing 524d placed at the right rear of the vehicle 501 and a transparent cover 522d attached to the housing 524d.

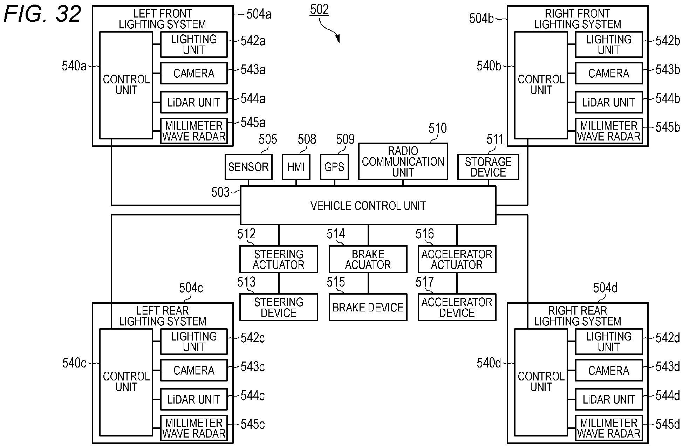

Next, referring to Fig. 32, the vehicle system 502 shown in Fig. 31 will be described specifically. Fig. 32 is a block diagram illustrating the vehicle system 502. As shown in Fig. 32, the vehicle system 502 includes the vehicle control unit 503, the lighting systems 504a to 504d, a sensor 505, a human machine interface (HMI) 508, a global positioning system (GPS) 509, a radio communication unit 510, and a storage device 511. Further, the vehicle system 502 includes a steering actuator 512, a steering device 513, a brake actuator 514, a brake device 515, an accelerator actuator 516, and an accelerator device 517. Furthermore, the vehicle system 502 includes a battery (not shown) configured to supply electric power.

The vehicle control unit 503 is configured to control the driving of the vehicle 501. The vehicle control unit 503 is made up, for example, of at least one electronic control unit (ECU). The electronic control unit may include at least one microcontroller including one or more processors and one or more memories and another electronic circuit including an active device and a passive device such as transistors. The processor is, for example, a central processing unit (CPU), a micro processing unit (MPU), a graphics processing unit (GPU) and/or a tensor processing unit (TPU). CPU may be made up of a plurality of CPU cores. GPU may be made up of a plurality of GPU cores. The memory includes a read only memory (ROM) and a random access memory (RAM). ROM may store a vehicle control program. For example, the vehicle control program may include an artificial intelligence (AI) program for autonomous driving. The AI program is a program configured by a machine learning with a teacher or without a teacher that uses a neural network such as deep learning or the like. RAM may temporarily store a vehicle control program, vehicle control data and/or surrounding environment information indicating a surrounding environment of the vehicle. The processor may be configured to deploy a program designated from the vehicle control program stored in ROM on RAM to execute various types of operation in cooperation with RAM

The electronic control unit (ECU) may be configured by at least one integrated circuit such as an application specific integrated circuit (ASIC) or a field-programmable gate array (FPGA). Further, the electronic control unit may be made up of a combination of at least one microcontroller and at least one integrated circuit (FPGA or the like).

The lighting system 504a further includes a control unit 540a, a lighting unit 542a, a camera 543a, a light detection and ranging (LiDAR) unit 544a (an example of a laser radar), and a millimeter wave radar 545a. As shown in Fig. 31, the control unit 540a, the lighting unit 542a, the camera 543a, the LiDAR unit 544a, and the millimeter wave radar 545a are disposed in a space Sa defined by the housing 524a and the transparent cover 522a (an interior of a lamp compartment). The control unit 540a may be disposed in a predetermined place on the vehicle 501 other than the space Sa. For example, the control unit 540a may be configured integrally with the vehicle control unit 503.

The control unit 540a is made up, for example, of at least one electronic control unit (ECU). The electronic control unit may include at least one microcontroller including one or more processers and one or more memories and another electronic circuit (for example, a transistor or the like). The processor is, for example, CPU, MPU, GPU and/or TPU. CPU may be made up of a plurality of CPU cores. GPU may be made up of a plurality of GPU cores. The memory includes ROM and RAM ROM may store a surrounding environment identifying program for identifying a surrounding environment of the vehicle 501. For example, the surrounding environment identifying program is a program configured by a machine learning with a teacher or without a teacher that uses a neural network such as deep learning or the like. RAM may temporarily store the surrounding environment identifying program, image data acquired by the camera 543a, three-dimensional mapping data (point group data) acquired by the LiDAR unit 544a and/or detection data acquired by the millimeter wave radar 545a and the like. The processor may be configured to deploy a program designated from the surrounding environment identifying program stored in ROM on RAM to execute various types of operation in cooperation with RAM. In addition, the electronic control unit (ECU) may be made up of at least one integrated circuit such as ASIC, FPGA, or the like. Further, the electronic control unit may be made up of a combination of at least one microcontroller and at least one integrated circuit (FPGA or the like).

The lighting unit 542a is configured to form a light distribution pattern by emitting light towards an exterior (a front) of the vehicle 501. The lighting unit 542a includes a light source for emitting light and an optical system. The light source may be made up, for example, of a plurality of light emitting devices that are arranged into a matrix configuration (for example, N rows × M columns, N > 1, M > 1). The light emitting device is, for example, a light emitting diode (LED), a laser diode (LD) or an organic EL device. The optical system may include at least one of a reflector configured to reflect light emitted from the light source towards the front of the lighting unit 542a and a lens configured to refract light emitted directly from the light source or light reflected by the reflector. In the case where the driving mode of the vehicle 501 is a manual drive mode or a drive assist mode, the lighting unit 542a is configured to form a light distribution pattern for a driver (for example, a low beam light distribution pattern or a high beam light distribution pattern) ahead of the vehicle 501. In this way, the lighting unit 542a functions as a left headlamp unit. On the other hand, in the case where the driving mode of the vehicle 501 is a high-level drive assist mode or a complete autonomous drive mode, the lighting unit 542a may be configured to form a light distribution pattern for a camera ahead of the vehicle 501.

The control unit 540a may be configured to supply individually electric signals (for example, pulse width modulation (PWM) signals) to the plurality of light emitting devices provided on the lighting unit 542a. In this way, the control unit 540a can select individually and separately the light emitting devices to which the electric signals are supplied and control the duty ratio of the electric signal supplied to each of the light emitting devices. That is, the control unit 540a can select the light emitting devices to be turned on or turned off from the plurality of light emitting devices arranged into the matrix configuration and determine the luminance of the light emitting diodes that are illuminated. As a result, the control unit 540a can change the shape and brightness of a light distribution pattern emitted towards the front of the lighting unit 542a.

The camera 543a is configured to detect a surrounding environment of the vehicle 501. In particular, the camera 543a is configured to acquire at first image data indicating a surrounding environment of the vehicle 501 at a frame rate a1 (fps) and to then transmit the image data to the control unit 540a. The control unit 540a identifies surrounding environment information based on the transmitted image data. Here, the surrounding environment information may include information on a target object existing at an outside of the vehicle 501. For example, the surrounding environment information may include information on an attribute of a target object existing at an outside of the vehicle 501 and information on a position of the target object with respect to the vehicle 501. The camera 543a is made up of an imaging device including, for example, a charge-coupled device (CCD), a complementary metal oxide semiconductor (CMOS) or the like. The camera 543a may be configured as a monocular camera or may be configured as a stereo camera. In the case where the camera 543a is a stereo camera, the control unit 540a can identify a distance between the vehicle 501 and a target object (for example, a pedestrian or the like) existing at an outside of the vehicle 501 based on two or more image data acquired by the stereo camera by making use of a parallax. Additionally, in the present embodiment, although one camera 543a is provided in the lighting system 504a, two or more cameras 543a may be provided in the lighting system 504a.

The LiDAR unit 544a (an example of a laser radar) is configured to detect a surrounding environment of the vehicle 501. In particular, the LiDAR unit 544a is configured to acquire at first three-dimensional (3D) mapping data (point group data) indicating a surrounding environment of the vehicle 501 at a frame rate a2 (fps) and to then transmit the 3D mapping data to the control unit 540a. The control unit 540a identifies surrounding environment information based on the 3D mapping data transmitted thereto. Here, the surrounding environment information may include information on a target object existing as an outside of the vehicle 501. For example, the surrounding environment information may include information on an attribute of a target object existing at an outside of the vehicle 501 and information on a position of the target object with respect to the vehicle 501. The frame rate a2 (a second frame rate) of the 3D mapping data may be the same as or different from the frame rate a1 (a first frame rate).

More specifically, the LiDAR unit 544a can acquire at first information on a time of flight (TOF) $\Delta T1$ of a laser beam (a light pulse) at each emission angle (a horizontal angle $\theta$, a vertical angle $\varphi$) of the laser beam and can then acquire information on a distance D between the LiDAR unit 544a (the vehicle 501) and an object existing at an outside of the vehicle 501 at each emission angle (a horizontal angle $\theta$, a vertical angle $\varphi$) based on the information on the time of flight ΔT1. Here, the time of flight ΔT1 can be calculated as follows, for example.

$$\text{Time of Flight } \Delta T1 = \text{a time } t1 \text{ when a laser beam (a light pulse) returns to}$$

$$\text{LiDAR} - \text{a time } t0 \text{ when LiDAR unit emits the laser beam}$$

In this way, the LiDAR unit 544a can acquire the 3D mapping data indicating the surrounding environment of the vehicle 501.

Additionally, the LiDAR unit 544a includes, for example, a laser light source configured to emit a laser beam, an optical deflector configured to scan a laser beam in a horizontal direction and a vertical direction, an optical system such as a lens, and a receiver configured to accept or receive a laser beam reflected by an object. There is imposed no specific limitation on a central wavelength of a laser beam emitted from the laser light source. For example, a laser beam may be invisible light whose central wavelength is near 900 nm. The optical deflector may be, for example, a micro electromechanical system (MEMS) mirror. The receiver may be, for example, a photodiode. The LiDAR unit 544a may acquire 3D mapping data without scanning the laser beam by the optical deflector. For example, the LiDAR unit 544a may acquire 3D mapping data by use of a phased array method or a flash method. In addition, in the present embodiment, although one LiDAR unit 544a is provided in the lighting system 504a, two or more LiDAR units 544a may be provided in the lighting system 504a. For example, in the case where two LiDAR units 544a are provided in the lighting system 504a, one LiDAR unit 544a may be configured to detect a surrounding environment in a front area ahead of the vehicle 501, while the other LiDAR unit 544a may be configured to detect a surrounding environment in a side area to the vehicle 501.

The millimeter wave radar 545a is configured to detect a surrounding environment of the vehicle 501. In particular, the millimeter wave radar 545a is configured to acquire at first detection data indicating a surrounding environment of the vehicle 501 and to then transmit the detection data to the control unit 540a. The control unit 540a identifies surrounding environment information based on the transmitted detection data. Here, the surrounding environment information may include information on a target object existing at an outside of the vehicle 501. The surrounding environment information may include, for example, information on an attribute of a target object existing at an outside of the vehicle 501, information on a position of the target object with respect to the vehicle 501, and a speed of the target object with respect to the vehicle 501.

For example, the millimeter wave radar 545a can acquire a distance D between the millimeter wave radar 545a (the vehicle 501) and an object existing at an outside of the vehicle 501 by use of a pulse modulation method, a frequency modulated-continuous wave (FM-CW) method or a dual frequency continuous wave (CW) method. In the case where the pulse modulation method is used, the millimeter wave radar 545a can acquire at first information on a time of flight ΔT2 of a millimeter wave at each emission angle of the millimeter wave and can then acquire information on a distance D between the millimeter wave radar 545a (the vehicle 501) and an object existing at an outside of the vehicle 501 at each emission angle based on the information on a time of flight ΔT2. Here, the time of flight ΔT2 can be calculated, for example, as follows.

$$\text{Time of Flight } \Delta T2 = \text{a time } t3 \text{ when a millimeter wave returns to the millimeter}$$

$$\text{wave radar} - \text{a time } t2 \text{ when the millimeter wave radar emits the millimeter wave}$$

Additionally, the millimeter wave radar 545a can acquire information on a relative velocity V of an object existing at an outside of the vehicle 501 to the millimeter wave radar 545a (the vehicle 501) based on a frequency f0 of a millimeter wave emitted from the millimeter wave radar 545a and a frequency f1 of the millimeter wave that returns to the millimeter wave radar 545a.

Additionally, in the present embodiment, although one millimeter wave radar 545a is provided in the lighting system 504a, two or more millimeter wave radars 545a may be provided in the lighting system 504a. For example, the lighting system 504a may include a short-distance millimeter wave radar 545a, a middle-distance millimeter wave radar 545a, and a long-distance millimeter wave radar 545a.

The lighting system 504b further includes a control unit 540b, a lighting unit 542b, a camera 543b, a LiDAR unit 544b, and a millimeter wave radar 545b. As shown in Fig. 31, the control unit 540b, the lighting unit 542b, the camera 543b, the LiDAR unit 544b, and the millimeter wave radar 545b are disposed in a space Sb defined by the housing 524b and the transparent cover 522b (an interior of a lamp compartment). The control unit 540b may be disposed in a predetermined place on the vehicle 501 other than the space Sb. For example, the control unit 540b may be configured integrally with the vehicle control unit 503. The control unit 540b may have a similar function and configuration to those of the control unit 540a. The lighting unit 542b may have a similar function and configuration to those of the lighting unit 542a. In this regard, the lighting unit 542a functions as the left headlamp unit, while the lighting unit 542b functions as a right headlamp unit. The camera 543b may have a similar function and configuration to those of the camera 543a. The LiDAR unit 544b may have a similar function and configuration to those of the LiDAR unit 544a. The millimeter wave radar 545b may have a similar function and configuration to those of the millimeter wave radar 545a.

The lighting system 504c further includes a control unit 540c, a lighting unit 542c, a camera 543c, a LiDAR unit 544c, and a millimeter wave radar 545c. As shown in Fig. 31, the control unit 540c, the lighting unit 542c, the camera 543c, the LiDAR unit 544c, and the millimeter wave radar 545c are disposed in a space Sc defined by the housing 524c and the transparent cover 522c (an interior of a lamp compartment). The control unit 540c may be disposed in a predetermined place on the vehicle 501 other than the space Sc. For example, the control unit 540c may be configured integrally with the vehicle control unit 503. The control unit 540c may have a similar function and configuration to those of the control unit 540a.

The lighting unit 542c is configured to form a light distribution pattern by emitting light towards an exterior (a rear) of the vehicle 501. The lighting unit 542c includes a light source for emitting light and an optical system. The light source may be made up, for example, of a plurality of light emitting devices that are arranged into a matrix configuration (for example, N rows × M columns, N > 1, M > 1). The light emitting device is, for example, an LED, an LD or an organic EL device. The optical system may include at least one of a reflector configured to reflect light emitted from the light source towards the front of the lighting unit 542c and a lens configured to refract light emitted directly from the light source or light reflected by the reflector. In the case where the driving mode of the vehicle 501 is the manual drive mode or the drive assist mode, the lighting unit 542c may be turned off. On the other hand, in the case where the driving mode of the vehicle 501 is the high-level drive assist mode or the complete autonomous drive mode, the lighting unit 542c may be configured to form a light distribution pattern for a camera behind the vehicle 501.

The camera 543c may have a similar function and configuration to those of the camera 543a. The LiDAR unit 544c may have a similar function and configuration to those of the LiDAR unit 544c. The millimeter wave radar 545c may have a similar function and configuration to those of the millimeter wave radar 545a.

The lighting system 504d further includes a control unit 540d, a lighting unit 542d, a camera 543d, a LiDAR unit 544d, and a millimeter wave radar 545d. As shown in Fig. 31, the control unit 540d, the lighting unit 542d, the camera 543d, the LiDAR unit 544d, and the millimeter wave radar 545d are disposed in a space Sd defined by the housing 524d and the transparent cover 522d (an interior of a lamp compartment). The control unit 540d may be disposed in a predetermined place on the vehicle 501 other than the space Sd. For example, the control unit 540d may be configured integrally with the vehicle control unit 503. The control unit 540d may have a similar function and configuration to those of the control unit 540c. The lighting unit 542d may have a similar function and configuration to those of the lighting unit 542c. The camera 543d may have a similar function and configuration to those of the camera 543c. The LiDAR unit 544d may have a similar function and configuration to those of the LiDAR unit 544c. The millimeter wave radar 545d may have a similar function and configuration to those of the millimeter wave radar 545c.

The sensor 505 may include an acceleration sensor, a speed sensor, a gyro sensor, and the like. The sensor 505 detects a driving state of the vehicle 501 and outputs driving state information indicating such a driving state of the vehicle 501 to the vehicle control unit 503. The sensor 505 may further include a seating sensor configured to detect whether the driver is seated on a driver's seat, a face direction sensor configured to detect a direction in which the driver directs his or her face, an exterior weather sensor configured to detect an exterior weather state, a human or motion sensor configured to detect whether a human exists in an interior of a passenger compartment. Furthermore, the sensor 505 may include an illuminance sensor configured to detect a degree of brightness (an illuminance) of a surrounding environment of the vehicle 501. The illuminance sensor may determine a degree of brightness of a surrounding environment of the vehicle 501, for example, in accordance with a magnitude of optical current outputted from a photodiode.

The human machine interface (HMI) 508 is made up of an input module configured to receive an input operation from the driver and an output module configured to output the driving state information or the like towards the driver. The input module includes a steering wheel, an accelerator pedal, a brake pedal, a driving modes changeover switch configured to switch driving modes of the vehicle 501, and the like. The output module includes a display configured to display thereon driving state information, surrounding environment information and an illuminating state of the lighting system 4, and the like.

The global positioning system (GPS) 509 acquires information on a current position of the vehicle 501 and outputs the current position information so acquired to the vehicle control unit 503. The radio communication unit 510 receives information on other vehicles running or existing on the periphery of the vehicle 501 (for example, other vehicles' running information) from the other vehicles and transmits information on the vehicle 501 (for example, subject vehicle's running information) to the other vehicles (a vehicle-vehicle communication).

The radio communication unit 510 receives infrastructural information from infrastructural equipment such as a traffic signal controller, a traffic sign lamp or the like and transmits the subject vehicle's running information of the vehicle 501 to the infrastructural equipment (a road-vehicle communication). In addition, the radio communication unit 510 receives information on a pedestrian from a mobile electronic device (a smartphone, an electronic tablet, an electronic wearable device, and the like) that the pedestrian carries and transmits the subject vehicle's running information of the vehicle 501 to the mobile electronic device (a pedestrian-vehicle communication). The vehicle 501 may communicate directly with other vehicles, infrastructural equipment or a mobile electronic device in an ad hoc mode or may communicate with them via access points. Radio communication standards include, for example, 5G, Wi-Fi (a registered trademark), Bluetooth (a registered trademark), ZigBee (a registered trademark), and LPWA. The vehicle 501 may communicate with other vehicles, infrastructural equipment or a mobile electronic device via a mobile communication network.

The storage device 511 is an external storage device such as a hard disk drive (HDD) or a solid state drive (SSD). The storage device 511 may store two-dimensional or three-dimensional map information and/or a vehicle control program. The storage device 511 outputs map information or a vehicle control program to the vehicle control unit 503 in demand for the vehicle control unit 503. The map information and the vehicle control program may be updated via the radio communication unit 510 and a communication network such as the internet.

In the case where the vehicle 501 is driven in the autonomous driving mode, the vehicle control unit 503 generates automatically at least one of a steering control signal, an accelerator control signal, and a brake control signal based on the driving state information, the surrounding environment information and/or the map information. The steering actuator 512 receives a steering control signal from the vehicle control unit 503 and controls the steering device 513 based on the steering control signal so received. The brake actuator 514 receives a brake control signal from the vehicle control unit 503 and controls the brake device 515 based on the brake control signal so received. The accelerator actuator 516 receives an accelerator control signal from the vehicle control unit 503 and controls the accelerator device 517 based on the accelerator control signal so received. In this way, in the autonomous driving mode, the driving of the vehicle 501 is automatically controlled by the vehicle system 502.

On the other hand, in the case where the vehicle 501 is driven in the manual drive mode, the vehicle control unit 503 generates a steering control signal, an accelerator control signal, and a brake control signal as the driver manually operates the accelerator pedal, the brake pedal, and the steering wheel. In this way, in the manual drive mode, since the steering control signal, the accelerator control signal, and the brake control are generated as the driver manually operates the accelerator pedal, the brake pedal, and the steering wheel, the driving of the vehicle 501 is controlled by the driver.

Next, the driving modes of the vehicle 501 will be described. The driving modes include the autonomous driving mode and the manual drive mode. The autonomous driving mode includes a complete autonomous drive mode, a high-level drive assist mode, and a drive assist mode. In the complete autonomous drive mode, the vehicle system 502 automatically performs all the driving controls of the vehicle 501 including the steering control, the brake control, and the accelerator control, and the driver stays in a state where the driver cannot drive or control the vehicle 501 as he or she wishes. In the high-level drive assist mode, the vehicle system 502 automatically performs all the driving controls of the vehicle 501 including the steering control, the brake control, and the accelerator control, and although the driver stays in a state where the driver can drive or control the vehicle 501, the driver does not drive the vehicle 501. In the drive assist mode, the vehicle system 502 automatically performs a partial driving control of the steering control, the brake control, and the accelerator control, and the driver drives the vehicle 501 with assistance of the vehicle system 502 in driving. On the other hand, in the manual drive mode, the vehicle system 502 does not perform the driving control automatically, and the driver drives the vehicle without any assistance of the vehicle system 502 in driving.

In addition, the driving modes of the vehicle 501 may be switched over by operating a driving modes changeover switch. In this case, the vehicle control unit 503 switches the driving modes of the vehicle 501 among the four driving modes (the complete autonomous drive mode, the high-level drive assist mode, the drive assist mode, the manual drive mode) in response to an operation performed on the driving modes changeover switch by the driver. The driving modes of the vehicle 501 may automatically be switched over based on information on an autonomous driving permitting section where the autonomous driving of the vehicle 501 is permitted and an autonomous driving prohibiting section where the autonomous driving of the vehicle 501 is prohibited, or information on an exterior weather state. In this case, the vehicle control unit 503 switches the driving modes of the vehicle 501 based on those pieces of information. Further, the driving modes of the vehicle 501 may automatically be switched over by use of the seating sensor or the face direction sensor. In this case, the vehicle control unit 503 may switch the driving modes of the vehicle 501 based on an output signal from the seating sensor or the face direction sensor.

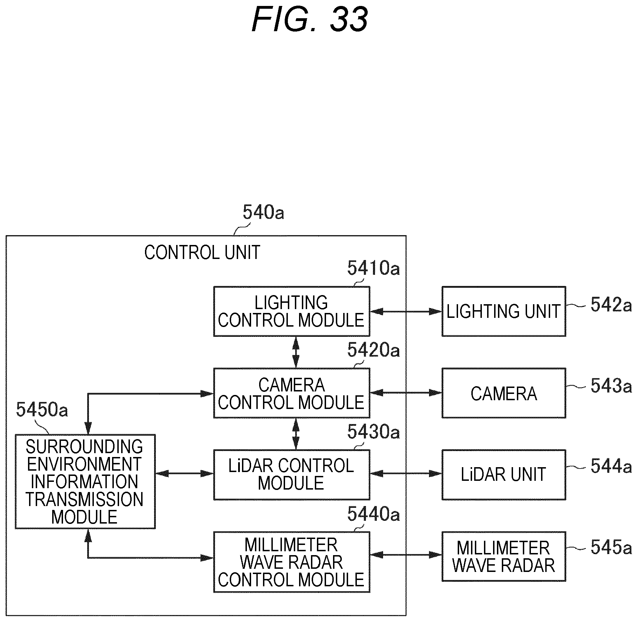

Next, referring to Fig. 33, the function of the control unit 540a will be described. Fig. 33 is a diagram illustrating functional blocks of the control unit 540a of the lighting system 504a. As shown in Fig. 33, the control unit 540a is configured to control individual operations of the lighting unit 542a, the camera 543a, the LiDAR unit 544a, and the millimeter wave radar 545a. In particular, the control unit 540a includes a lighting control module 5410a, a camera control module 5420a (an example of a first generator), a LiDAR control module 5430a (an example of a second generator), a millimeter wave control module 5440a, and a surrounding environment information transmission module 5450a.

The lighting control module 5410a is configured to control the lighting unit 542a and cause the lighting unit 542a to emit a predetermined light distribution pattern towards a front area ahead of the vehicle 501. For example, the lighting control module 5410a may change the light distribution pattern that is emitted from the lighting unit 542a in accordance with the driving mode of the vehicle 501. Further, the lighting control unit 5410a is configured to cause the lighting unit 542a to be turned on and off at a rate a3 (Hz). As will be described later, the rate a3 (a third rate) of the lighting unit 542a may be the same as or different from the frame rate a1 at which the image data is acquired by the camera 543a.

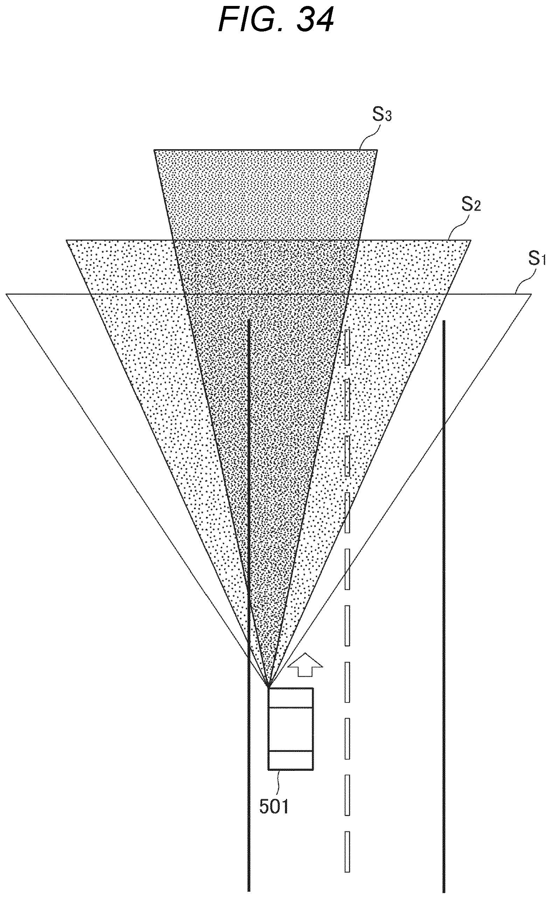

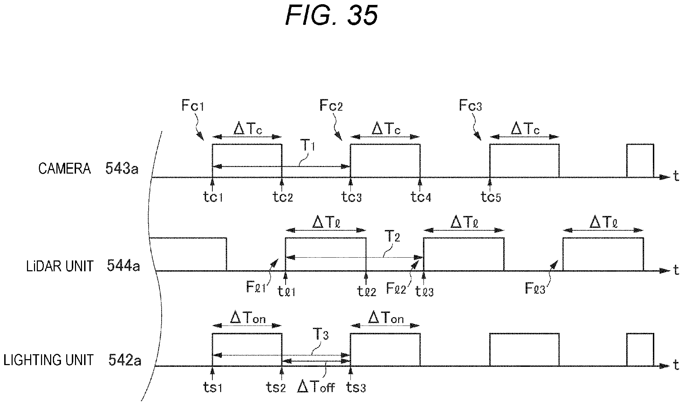

The camera control module 5420a is configured to control the operation of the camera 543a. In particular, the camera control module 5420a is configured to cause the camera 543a to acquire image data (first detection data) at a frame rate a1 (a first frame rate). Further, the camera control module 5420a is configured to control an acquisition timing (in particular, an acquisition start time) of each frame of image data. The camera control module 5420a is configured to generate surrounding environment information of the vehicle 501 in a detection area S1 (refer to Fig. 34) for the camera 543a (hereinafter, referred to as surrounding environment information Ic) based on image data outputted from the camera 543a. More specifically, as shown in Fig. 35, the camera control module 5420a generates surrounding environment information Ic1 of the vehicle 501 based on a frame Fc1 of image data, generates surrounding environment information Ic2 based on a frame Fc2 of the image data, and generates surrounding environment information Ic3 based on a frame Fc3 of the image data. In this way, the camera control module 5420a generates surrounding environment information for each frame of the image data.

The LiDAR control module 5430a is configured to control the operation of the LiDAR unit 544a. In particular, the LiDAR control module 5430a is configured to cause the LiDAR unit 544a to acquire 3D mapping data (second detection data) at a frame rate a2 (a second frame rate). Further, the LiDAR control module 5430a is configured to control an acquisition timing (in particular, an acquisition start time) of each frame of 3D mapping data. The LiDAR control module 5430a is configured to generate surrounding environment information of the vehicle 501 in a detection area S2 (refer to Fig. 34) for the LiDAR unit 544a (hereinafter, referred to as surrounding environment information Il) based on 3D mapping data outputted from the LiDAR unit 544a. More specifically, as shown in Fig. 35, the LiDAR control module 5430a generates surrounding environment information Il1 based on a frame Fl1 of 3D mapping data, generates surrounding environment information Il2 based on a frame Fl2 of the 3D mapping data, and generates surrounding environment information Il3 based on a frame Fl3 of the 3D mapping data. In this way, the LiDAR control module 5430a generates surrounding environment information for each frame of the 3D mapping data.

The millimeter wave radar control module 5440a is configured not only to control the operation of the millimeter wave radar 545a but also to generate surrounding environment information Im of the vehicle 501 in the detection area S3 of the millimeter wave radar 545a (refer to Fig. 34) based on detection data outputted from the millimeter wave radar 545a.

The surrounding environment information transmission module 5450a is configured not only to acquire pieces of surrounding environment information Ic, Il, Im but also to transmit the pieces of surrounding environment information Ic, Il, Im so acquired to the vehicle control unit 503. For example, as shown in Fig. 35, since an acquisition start time tc1 for a frame Fc1 of image data starts before an acquisition start time tl1 for a frame Fl1 of 3D mapping data, the surrounding environment information transmission module 5450a acquires surrounding environment information Ic1 that corresponds to the frame Fc1 of the image data from the camera control module 5420a and thereafter transmits the surrounding environment information Ic1 to the vehicle control unit 305. Thereafter, the surrounding environment information transmission module 5450a acquires surrounding environment information Il1 that corresponds to the frame Fl1 of the 3D mapping data from the LiDAR control module 5430a and thereafter transmits the surrounding environment information Il1 to the vehicle control unit 503.

The control units 540b, 540c, 540d may each have a similar function to that of the control unit 540a. That is, the control units 540b to 540d may each include a lighting control module, a camera control module (an example of a first generator), a LiDAR control module (an example of a second generator), a millimeter wave radar control module, and a surrounding environment information transmission module. The respective surrounding environment information transmission modules of the control units 540b to 540c may transmit pieces of surrounding environment information Ic, Il, Im to the vehicle control unit 503. The vehicle control unit 503 may control the driving of the vehicle 501 based on the surrounding environment information transmitted from the control units 540a to 540d and other pieces of information (driving control information, current position information, map information, and the like).

Next, referring to Fig. 35, a relationship between acquisition timings at which individual frames of image data are acquired and acquisition timings at which individual frames of 3D mapping data are acquired will be described in detail. In the following description, as a matter of convenience in description, acquisition timings at which the millimeter wave radar 545a acquires detection data will not particularly be described. That is, in the present embodiment, a special attention will be paid to the relationship between the acquisition timings at which image data is acquired and the acquisition timings at which 3D mapping data is acquired.

In Fig. 35, an upper level denotes acquisition timings at which frames (for example, frames Fc1, Fc2, Fc3) of image data are acquired by the camera 543a during a predetermined period. Here, a frame Fc2 (an example of a second frame of first detection data) constitutes a frame of image data that is acquired by the camera 543a subsequent to a frame Fc1 (an example of a first frame of the first detection data). A frame Fc3 constitutes a frame of the image data that is acquired by the camera 543a subsequent to the frame Fc2.

An acquisition period ΔTc during which one frame of image data is acquired corresponds to an exposure time necessary to form one frame of image data (in other words, a time during which light is taken in to form one frame of image data). A time for processing an electric signal outputted from an image sensor such as CCD or CMOS is not included in the acquisition period ΔTc.

A time period between an acquisition start time tc1 of the frame Fc1 and an acquisition start time tc2 of the frame Fc2 corresponds to a frame period T1 of image data. The frame period T1 corresponds to a reciprocal number (T1=1/a1) of a frame rate a1.

In Fig. 35, a middle level denotes acquisition timings at which frames (for example, frames FI1, FI2, FI3) of 3D mapping data are acquired by the LiDAR unit 544a during a predetermined period. Here, a frame FI2 (an example of a second frame of second detection data) constitutes a frame of 3D mapping data that is acquired by the LiDAR unit 544a subsequent to a frame FI1 (an example of a first frame of the second detection data). A frame F13 constitutes a frame of the 3D mapping data that is acquired by the LiDAR unit 544a subsequent to the frame FI2. An acquisition period ΔT1 during which one frame of 3D mapping data does not include a time for processing an electric signal outputted from a receiver of the LiDAR unit 544a.

A time period between an acquisition start time tl1 of the frame FI1 and an acquisition start time tl3 of the frame FI2 corresponds to a frame period T2 of 3D mapping data. The frame period T2 corresponds to a reciprocal number (T2=1/a1) of a frame rate a2.

As shown in Fig. 35, in the present embodiment, the acquisition start timed tl1 for the frames of the image data and the acquisition start time for the frames of the 3D mapping data differ from each other. Specifically, the acquisition start time tl1 for the frame FI1 of the 3D mapping data differs from the acquisition start time tc1 for the frame Fc1 of the image data. Further, the acquisition start time tl3 for the frame FI2 of the 3D mapping data differs from the acquisition start time tc3 for the frame Fc2 of the image data. In this regard, the frame FI1 of the 3D mapping data is preferably acquired during a period (a first period) between an acquisition end time tc2 for the fame Fc1 of the image data and the acquisition start time tc3 for the frame Fc2 of the image data. Similarly, the frame FI2 of the 3D mapping data is preferably acquired during a period between an acquisition end time tc4 for the frame Fc2 and an acquisition start time tc5 for the frame Fc3. Here, at least part of the frame FI1 need only be acquired between the time tc2 and the time tc3. Similarly, at least part of the frame FI2 need only be acquired between the time tc4 and the time tc5.

Further, an interval between the acquisition start time tl1 for the frame FI1 of the 3D mapping data and the acquisition start time tc1 for the frame Fc1 of the image data is preferably greater than a half of the acquisition period ΔTc for the frame Fc1 and is smaller than a frame period T1 (an acquisition period) for the image data. Similarly, an interval between the acquisition start time tl3 for the frame FI2 of the 3D mapping data and the acquisition start time tc3 for the frame Fc2 of the image data is preferably a half of the acquisition period ΔTc for the frame Fc2 and is smaller than the frame period T1 of the image data.

In the example shown in Fig. 35, the interval between the time tl1 and the time tc1 is greater than the acquisition period ΔTc for the frame Fc1 and is smaller than the frame period T1 of the image data.

In this way, according to the present embodiment, the acquisition start times for the individual frames of the image data and the acquisition start times for the individual frames of the 3D mapping data differ from each other. That is, the 3D mapping data (for example, the frame FI1) can be acquired during a time band where the image data cannot be acquired (for example, a time band between the time tc2 and the time tc3). On the other hand, the image data (for example, the frame Fc2) can be acquired during a time band where the 3D mapping data cannot be acquired (for example, a time band between the time tl2 and the time tl3). As a result, a time band for the surrounding environment information Ic that is generated based on the individual frames of the image data differs from a time band for the surrounding environment information II that is generated based on the individual frames of the 3D mapping data. For example, a time band for the surrounding environment information Ic1that corresponds to the frame Fc1 differs from a time band for the surrounding environment information II1 that corresponds to the frame FI1. Similarly, a time band for the surrounding environment information Ic2 that corresponds to the frame Fc2 differs from a time band for the surrounding environment information II2 that corresponds to the frame FI2. In this way, even though the frame rate a1 of the camera 543a and the frame rate a2 of the LiDAR unit 544a are low, by using both the surrounding environment information Ic and the surrounding environment information II, the number of times of identifying the surrounding environment of the vehicle 501 can be increased. In other words, the control unit 503 can acquire surrounding environment information highly densely from the surrounding environment information transmission module 5450a in terms of time. Consequently, the vehicle system 502 can be provided in which the recognition accuracy with which the surrounding environment of the vehicle is recognized can be improved.

Next, a relationship among the acquisition timings at which the individual frames of the image data are acquired, the acquisition timings at which the individual frames of the 3D mapping data are acquired, and turning on and off timings at which the lighting unit 542a is turned on and off will be described in detail. In Fig. 35, a lower level denotes turning on and off timings at which the lighting unit 542a is turned on and off (a turning on or illumination period ΔTon and a turning off period ΔToff) during a predetermined period. A period between a turning on start time ts1 of a turning on period ΔTon of the lighting unit 542a and a turning on start time ts3 of a subsequent turning on period ΔTon corresponds to a turning on and off period T3. The turning on and off period T3 corresponds to a reciprocal number (T3=1/a3) of a rate a3.

As shown in Fig. 35, the turning on and off period T3 of the lighting unit 542a coincides with the frame period T1 of the image data. In other words, the rate a3 of the lighting unit 542a coincides with the frame rate a1 of the image data. Further, the lighting unit 542a is turned on or illuminated during the acquisition period ΔTc during which the individual frames (for example, the frames Fc1, Fc2, Fc3) of the image data are acquired. On the other hand, the lighting unit 542a is turned off during the acquisition period ΔT1 during which the individual frames (for example, the frames Fl1, Fl2, fl3) of the 3D mapping data are acquired.

In this way, according to the present embodiment, since image data indicating a surrounding environment of the vehicle 501 is acquired by the camera 543a while the lighting unit 542a is being illuminated, in the case where the surrounding environment of the vehicle 501 is dark (for example, at night), the generation of a blackout in image data can preferably be prevented. On the other hand, since 3D mapping data indicating a surrounding environment of the vehicle 501 is acquired by the LiDAR unit 544a, part of light emitted from the lighting unit 542a and reflected by the transparent cover 522a is incident on a receiver of the LiDAR unit 544a, whereby the 3D mapping data can preferably be prevented from being affected badly.

In the example illustrated in Fig. 35, although the acquisition periods ΔTc during which the individual frames of the image data overlap completely the turning on periods ΔTon during which the lighting unit 542a is illuminated, the present embodiment is not limited thereto. The acquisition periods ΔTc during which the individual frames of the image data are acquired need only overlap partially the turning on periods ΔTon during which the lighting unit 542a is illuminated. In addition, the acquisition periods ΔT1 during which the individual frame of the 3D mapping data are acquired need only overlap partially the turning off periods ΔToff during which the lighting unit 542a is turned off.

In the present embodiment, the camera control module 5420a may at first determine an acquisition timing at which image data is acquired (for example, including an acquisition start time for an initial frame or the like) before the camera 543a is driven and may then transmit information on the acquisition timing at which the image data is acquired to the LiDAR control module 5430a and the lighting control module 5410a. In this case, the LiDAR control module 5430a determines an acquisition timing at which 3D mapping data is acquired (an acquisition start time for an initial frame or the like) based on the received information on the acquisition timing at which 3D mapping data is acquired. Further, the lighting control module 5410a determines a turning on timing (an initial turning on start time or the like) at which the lighting unit 542a is turned on based on the received information on the acquisition timing at which the image data is acquired. Thereafter, the camera control module 5420a drives the camera 543a based on the information on the acquisition timing at which the image data is acquired. In addition, the LiDAR control module 5430a drives the LiDAR unit 544a based on the information on the acquisition timing at which 3D mapping data is acquired. Further, the lighting control module 5410a turns on and off the lighting unit 542a based on the information on the turning on and off timing at which the lighting unit 542a is turned on and off.

In this way, the camera 543a and the LiDAR unit 544a can be driven so that the acquisition start time at which acquisition of the individual frames of the image data is started and the acquisition start time at which acquisition of the individual frames of the 3D mapping data is started coincide with each other. Further, the lighting unit 542a can be controlled in such a manner as to be turned on or illuminated during the acquisition period ΔTc during which the individual frames of the image data are acquired and to be turned off during the acquisition period ΔTl during which the individual frames of the 3D mapping data are acquired.

On the other hand, as an alternative to the method described above, the surrounding environment information transmission module 5450a may determine an acquisition timing at which image data is acquired, an acquisition timing at which 3D mapping data is acquired, and a turning on and off timing at which the lighting unit 542a is turned on and off. In this case, the surrounding environment information transmission module 5450a transmits information on the image data acquisition timing to the camera control module 5420a, transmits information on the 3D mapping data acquisition timing to the LiDAR control module 5430a, and transmits information on the turning on and off timing of the lighting unit 542a to the lighting control module 5410a. Thereafter, the camera control module 5420a drives the camera 543a based on the information on the image data acquisition timing. Additionally, the LiDAR control module 5430a drives the LiDAR unit 544a based on the information on the 3D mapping data acquisition timing. Further, the lighting control module 5410a causes the lighting unit 542a to be turned on and off based on the information on the turning on and off timing of the lighting unit 542a.

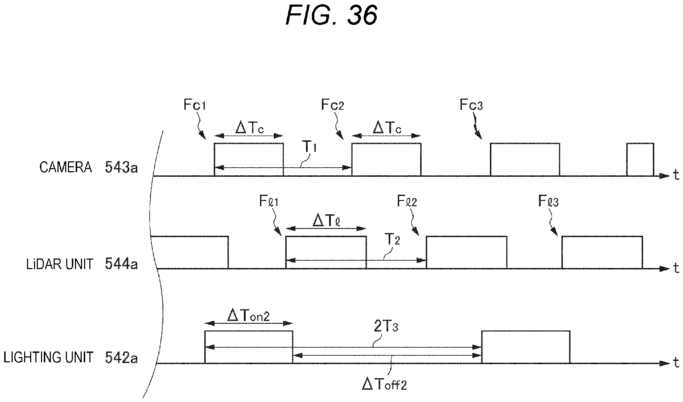

Next, referring to Fig. 36, a relationship among the acquisition timing at which the individual frames of the image data are acquired, the acquisition timing at which the individual frames of the 3D mapping data are acquired, and the turning on and off timing at which the lighting unit 542a is turned on and off when the turning on and off period T3 of the lighting unit 542a is doubled will be described. As shown in Fig. 36, the turning on and off timing of the lighting unit 542a is set at 2T3. In other words, since the rate of the lighting unit 542a is set at a3/2, the rate of the lighting unit 542a becomes a half of the frame rate a1 of the image data. Further, the lighting unit 542a is turned on or illuminated during the acquisition period ΔTc during which the frame Fc1 of the image data is acquired, while the lighting unit 542a is turned off during the acquisition period ΔTc during which the subsequent frame Fc2 of the image data is acquired. In this way, since the rate a3/2 of the lighting unit 542a becomes a half of the frame rate a1 of the image data, a predetermined frame of the image data overlaps a turning on period ΔTon2 during which the lighting unit 542a is turned on or illuminated, and a subsequent frame to the predetermined frame overlaps a turning off period ΔToff2 during which the lighting unit 542a is turned off.

In this way, the camera 543a acquires image data indicating a surrounding environment of the vehicle 501 while the lighting unit 542a is kept illuminated and acquires the relevant image data while the lighting unit 542a is kept turned off. That is, the camera 543a acquires alternately a frame of the image data when the lighting unit 542a is illuminated and a frame of the image data when the lighting unit 542a is turned off. As a result, whether a target object existing on the periphery of the vehicle 501 emits light or reflects light can be identified by comparing image data M1 imaged while the lighting unit 542a is kept turned off with image data M2 imaged while the lighting unit 542a is kept illuminated. In this way, the camera control module 5420a can more accurately identify the attribute of the target object existing on the periphery of the vehicle 501. Further, with the lighting unit 542a kept illuminated, part of light emitted from the lighting unit 542a and reflected by the transparent cover 522a is incident on the camera 543a, whereby there is caused a possibility that stray light is produced in the image data M2. On the other hand, with the lighting unit 542a kept turned off, no stray light is produced in the image data M1. In this way, the camera control module 5420a can identify the stray light produced in the image data M2 by comparing the image data M1 with the image data M2. Consequently, the recognition accuracy with which the surrounding environment of the vehicle 501 is recognized can be improved.

(Sixth Embodiment)

Hereinafter, referring to drawings, a sixth embodiment of the present disclosure (hereinafter, referred to simply as a "present embodiment") will be described. In description of the present embodiment, a description of members having like reference numerals to those of the members that have already been described will be omitted as a matter of convenience in description. Additionally, dimensions of members shown in accompanying drawings may differ from time to time from actual dimensions of the members as a matter of convenience in description.

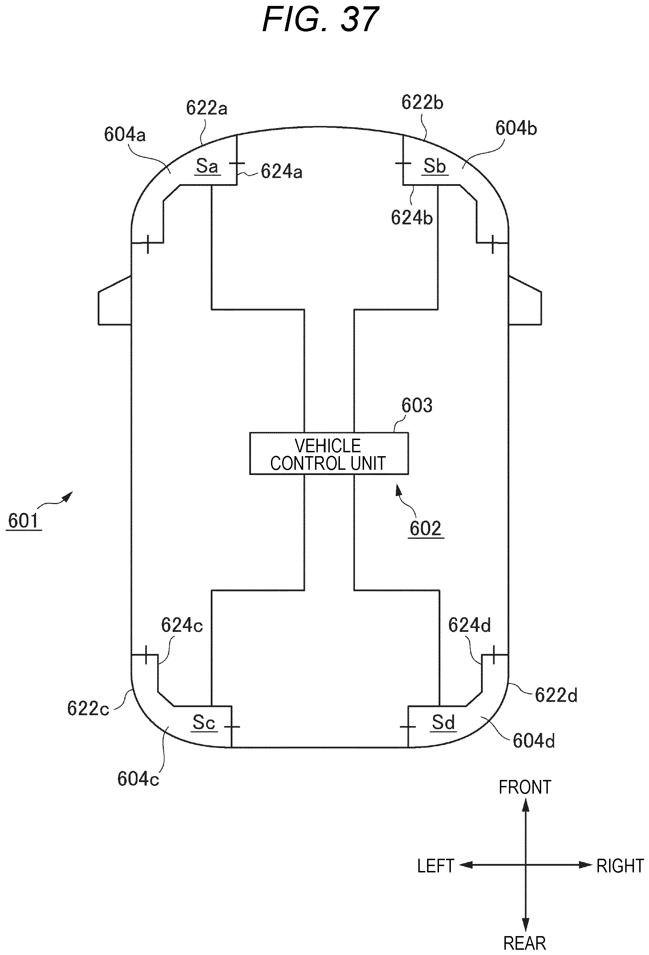

In description of the present embodiment, as a matter of convenience in description, a "left-and-right direction" and a "front-and-rear direction" will be referred to as required. These directions are relative directions set for a vehicle 601 shown in Fig. 37. Here, the "front-and-rear direction" is a direction including a "front direction" and a "rear direction". The "left-and-right" direction is a direction including a "left direction" and a "right direction".

At first, referring to Fig. 37, the vehicle 601 according to the present embodiment will be described. Fig. 37 is a schematic drawing illustrating a top view of the vehicle 601 including a vehicle system 602. As shown in Fig. 37, the vehicle 601 is a vehicle (a motor vehicle) that can run in an autonomous driving mode and includes the vehicle system 602. The vehicle system 602 includes at least a vehicle control unit 603, a left front lighting system 604a (hereinafter, referred to simply as a "lighting system 604a"), a right front lighting system 604b (hereinafter, referred to simply as a "lighting system 604b"), a left rear lighting system 604c (hereinafter, referred to simply as a "lighting system 604c"), and a right rear lighting system 604d (hereinafter, referred to simply as a "lighting system 604d").

The lighting system 604a is provided at a left front of the vehicle 601. In particular, the lighting system 604a includes a housing 624a placed at the left front of the vehicle 601 and a transparent cover 622a attached to the housing 624a. The lighting system 604b is provided at a right front of the vehicle 601. In particular the lighting system 604b includes a housing 624b placed at the right front of the vehicle 601 and a transparent cover 622b attached to the housing 624b. The lighting system 604c is provided at a left rear of the vehicle 601. In particular, the lighting system 604c includes a housing 624c placed at the left rear of the vehicle 601 and a transparent cover 622c attached to the housing 624c. The lighting system 604d is provided at a right rear of the vehicle 601. In particular, the lighting system 604d includes a housing 624d placed at the right rear of the vehicle 601 and a transparent cover 622d attached to the housing 624d.

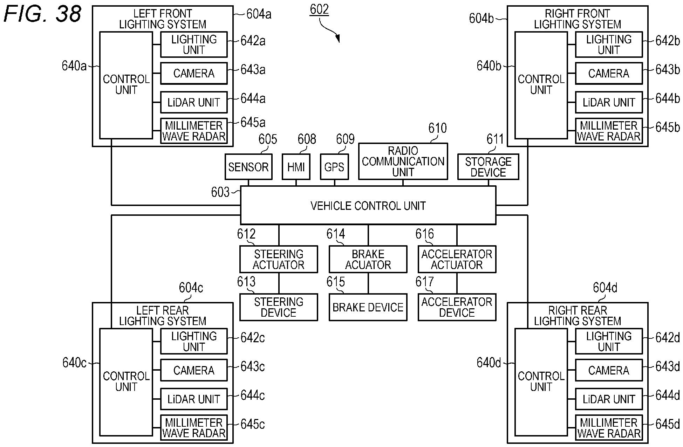

Next, referring to Fig. 38, the vehicle system 602 shown in Fig. 37 will be described specifically. Fig. 38 is a block diagram illustrating the vehicle system 602 according to the present embodiment. As shown in Fig. 38, the vehicle system 602 includes the vehicle control unit 603, the lighting systems 604a to 604d, a sensor 5, a human machine interface (HMI) 608, a global positioning system (GPS) 609, a radio communication unit 610, and a storage device 611. Further, the vehicle system 602 includes a steering actuator 612, a steering device 613, a brake actuator 614, a brake device 615, an accelerator actuator 616, and an accelerator device 617. Furthermore, the vehicle system 602 includes a battery (not shown) configured to supply electric power.

The vehicle control unit 603 (an example of a third control unit) is configured to control the driving of the vehicle 601. The vehicle control unit 603 is made up, for example, of at least one electronic control unit (ECU). The electronic control unit may include at least one microcontroller including one or more processors and one or more memories and another electronic circuit including an active device and a passive device such as transistors. The processor is, for example, a central processing unit (CPU), a micro processing unit (MPU), a graphics processing unit (GPU) and/or a tensor processing unit (TPU). CPU may be made up of a plurality of CPU cores. GPU may be made up of a plurality of GPU cores. The memory includes a read only memory (ROM) and a random access memory (RAM). ROM may store a vehicle control program. For example, the vehicle control program may include an artificial intelligence (AI) program for autonomous driving. The AI program is a program configured by a machine learning with a teacher or without a teacher that uses a neural network such as deep learning or the like. RAM may temporarily store a vehicle control program, vehicle control data and/or surrounding environment information indicating a surrounding environment of the vehicle. The processor may be configured to deploy a program designated from the vehicle control program stored in ROM on RAM to execute various types of operation in cooperation with RAM

The electronic control unit (ECU) may be configured by at least one integrated circuit such as an application specific integrated circuit (ASIC) or a field-programmable gate array (FPGA). Further, the electronic control unit may be made up of a combination of at least one microcontroller and at least one integrated circuit (FPGA or the like).

The lighting system 604a (an example of a first sensing system) further includes a control unit 640a, a lighting unit 642a, a camera 643a, a light detection and ranging (LiDAR) unit 644a (an example of a laser radar), and a millimeter wave radar 645a. As shown in Fig. 37, the control unit 640a, the lighting unit 642a, the camera 643a, the LiDAR unit 644a, and the millimeter wave radar 645a are disposed in a space Sa defined by the housing 624a and the transparent cover 622a (an interior of a lamp compartment). The control unit 640a may be disposed in a predetermined place on the vehicle 601 other than the space Sa. For example, the control unit 640a may be configured integrally with the vehicle control unit 603.

The control unit 640a (an example of a first control unit) is made up, for example, of at least one electronic control unit (ECU). The electronic control unit may include at least one microcontroller including one or more processers and one or more memories and another electronic circuit (for example, a transistor or the like). The processor is, for example, CPU, MPU, GPU and/or TPU. CPU may be made up of a plurality of CPU cores. GPU may be made up of a plurality of GPU cores. The memory includes ROM and RAM ROM may store a surrounding environment identifying program for identifying a surrounding environment of the vehicle 601. For example, the surrounding environment identifying program is a program configured by a machine learning with a teacher or without a teacher that uses a neural network such as deep learning or the like. RAM may temporarily store the surrounding environment identifying program, image data acquired by the camera 643a, three-dimensional mapping data (point group data) acquired by the LiDAR unit 644a and/or detection data acquired by the millimeter wave radar 645a and the like. The processor may be configured to deploy a program designated from the surrounding environment identifying program stored in ROM on RAM to execute various types of operations in cooperation with RAM In addition, the electronic control unit (ECU) may be made up of at least one integrated circuit such as ASIC, FPGA, or the like. Further, the electronic control unit may be made up of a combination of at least one microcontroller and at least one integrated circuit (FPGA or the like).

The lighting unit 642a is configured to form a light distribution pattern by emitting light towards an exterior (a front) of the vehicle 601. The lighting unit 642a includes a light source for emitting light and an optical system. The light source may be made up, for example, of a plurality of light emitting devices that are arranged into a matrix configuration (for example, N rows × M columns, N > 1, M > 1). The light emitting device is, for example, a light emitting diode (LED), a laser diode (LD) or an organic EL device. The optical system may include at least one of a reflector configured to reflect light emitted from the light source towards the front of the lighting unit 642a and a lens configured to refract light emitted directly from the light source or light reflected by the reflector. In the case where the driving mode of the vehicle 601 is a manual drive mode or a drive assist mode, the lighting unit 642a is configured to form a light distribution pattern for a driver (for example, a low beam light distribution pattern or a high beam light distribution pattern) ahead of the vehicle 601. In this way, the lighting unit 642a functions as a left headlamp unit. On the other hand, in the case where the driving mode of the vehicle 601 is a high-level drive assist mode or a complete autonomous drive mode, the lighting unit 642a may be configured to form a light distribution pattern for a camera ahead of the vehicle 601.

The control unit 640a may be configured to supply individually electric signals (for example, pulse width modulation (PWM) signals) to the plurality of light emitting devices provided on the lighting unit 642a. In this way, the control unit 640a can select individually and separately the light emitting devices to which the electric signals are supplied and control the duty ratio of the electric signal supplied to each of the light emitting devices. That is, the control unit 640a can select the light emitting elements to be turned on or turned off from the plurality of light emitting devices arranged into the matrix configuration and the luminance of the light emitting diodes that are illuminated. As a result, the control unit 640a can change the shape and brightness of a light distribution pattern emitted towards the front of the lighting unit 642a.

The camera 643a (an example of a first sensor) is configured to detect a surrounding environment of the vehicle 601. In particular, the camera 643a is configured to acquire at first image data indicating a surrounding environment of the vehicle 601 (an example of first detection data) and to then transmit the image data to the control unit 640a. The control unit 640a identifies surrounding environment information based on the transmitted image data. Here, the surrounding environment information may include information on a target object existing at an outside of the vehicle 601.

For example, the surrounding environment information may include information on an attribute of a target object existing at an outside of the vehicle 601 and information on a distance from the target object to the vehicle 601 or a position of the target object with respect to the vehicle 601. The camera 643a is made up of an imaging device including, for example, a charge-coupled device (CCD), a complementary metal oxide semiconductor (CMOS) or the like. The camera 643a may be configured as a monocular camera or may be configured as a stereo camera. In the case where the camera 643a is a stereo camera, the control unit 640a can identify a distance between the vehicle 601 and a target object (for example, a pedestrian or the like) existing at an outside of the vehicle 601 based on two or more image data acquired by the stereo camera by making use of a parallax. Additionally, in the present embodiment, although one camera 643a is provided in the lighting system 604a, two or more cameras 643a may be provided in the lighting system 604a.

The LiDAR unit 644a (an example of the first sensor) is configured to detect a surrounding environment of the vehicle 601. In particular, the LiDAR unit 644a is configured to acquire at first three-dimensional (3D) mapping data (point group data) indicating a surrounding environment of the vehicle 601 and to then transmit the 3D mapping data to the control unit 640a. The control unit 640a identifies surrounding environment information based on the 3D mapping data (an example of the first detection data) transmitted thereto. Here, the surrounding environment information may include information on a target object existing as an outside of the vehicle 601. For example, the surrounding environment information may include information on an attribute of a target object existing at an outside of the vehicle 601 and information on a distance from the target object to the vehicle 601 or a position of the target object with respect to the vehicle 601.

More specifically, the LiDAR unit 644a can acquire at first information on a time of flight (TOF) $\Delta T1$ of a laser beam (a light pulse) at each emission angle (a horizontal angle $\theta$, a vertical angle $\varphi$) of the laser beam and can then acquire information on a distance D between the LiDAR unit 644a (the vehicle 601) and an object existing at an outside of the vehicle at each emission angle (a horizontal angle $\theta$, a vertical angle $\varphi$) based on the time of flight $\Delta T1$. Here, the time of flight $\Delta T1$ can be calculated as follows, for example.

$$\text{Time of Flight } \Delta T1 = \text{a time t1 when a laser beam (a light pulse) returns to}$$
$$\text{LiDAR} - \text{a time t0 when LiDAR unit emits the laser beam}$$

In this way, the LiDAR unit 644a can acquire the 3D mapping data indicating the surrounding environment of the vehicle 601.

Additionally, the LiDAR unit 644a includes, for example, a laser light source configured to emit a laser beam, an optical deflector configured to scan a laser beam in a horizontal direction and a vertical direction, an optical system such as a lens, and a receiver configured to accept or receive a laser beam reflected by an object. There is imposed no specific limitation on a central wavelength of a laser beam emitted from the laser light source. For example, a laser beam may be invisible light whose central wavelength is near 900 nm. The optical deflector may be, for example, a micro electromechanical system (MEMS) mirror. The receiver may be, for example, a photodiode. The LiDAR unit 644a may acquire 3D mapping data without scanning the laser beam by the optical deflector. For example, the LiDAR unit 644a may acquire 3D mapping data by use of a phased array method or a flash method. In addition, in the present embodiment, although one LiDAR unit 644a is provided in the lighting system 604a, two or more LiDAR units 644a may be provided in the lighting system 604a. For example, in the case where two LiDAR units 644a are provided in the lighting system 604a, one LiDAR unit 644a may be configured to detect a surrounding environment in a front area ahead of the vehicle 601, while the other LiDAR unit 644a may be configured to detect a surrounding environment in a side area to the vehicle 601.

The millimeter wave radar 645a (an example of the first sensor) is configured to detect a surrounding environment of the vehicle 601. In particular, the millimeter wave radar 645a is configured to acquire at first detection data indicating a surrounding environment of the vehicle 601 (an example of first detection data) and to then transmit the detection data to the control unit 640a. The control unit 640a identifies surrounding environment information based on the transmitted detection data. Here, the surrounding environment information may include information on a target object existing at an outside of the vehicle 601. The surrounding environment information may include, for example, information on an attribute of a target object existing at an outside of the vehicle 601, information on a position of the target object with respect to the vehicle 601, and a speed of the target object with respect to the vehicle 601.

For example, the millimeter wave radar 645a can acquire a distance D between the millimeter wave radar 645a (the vehicle 601) and an object existing at an outside of the vehicle 601 by use of a pulse modulation method, a frequency modulated-continuous wave (FM-CW) method or a dual frequency continuous wave (CW) method. In the case where the pulse modulation method is used, the millimeter wave radar 645a can acquire at first information on a time of flight $\Delta T2$ of a millimeter wave at each emission angle of the millimeter wave and can then acquire information on a distance D between the millimeter wave radar 645a (the vehicle 601) and an object existing at an outside of the vehicle 601 at each emission angle based on the information on the time of flight ΔT2. Here, the time of flight ΔT2 can be calculated, for example, as follows.

$$\text{Time of Flight } \Delta T2 = \text{a time t3 when a millimeter wave returns to the millimeter}$$

$$\text{wave radar} - \text{a time t2 when the millimeter wave radar emits the millimeter wave}$$

Additionally, the millimeter wave radar 645a can acquire information on a relative velocity V of an object existing at an outside of the vehicle 601 to the millimeter wave radar 645a (the vehicle 601) based on a frequency f0 of a millimeter wave emitted from the millimeter wave radar 645a and a frequency f1 of the millimeter wave that returns to the millimeter wave radar 645a.

Additionally, in the present embodiment, although one millimeter wave radar 645a is provided in the lighting system 604a, two or more millimeter wave radars 645a may be provided in the lighting system 604a. For example, the lighting system 604a may include a short-distance millimeter wave radar 645a, a middle-distance millimeter wave radar 645a, and a long-distance millimeter wave radar 645a.

The lighting system 604b (an example of a second sensing system) further includes a control unit 640b (an example of a second control unit), a lighting unit 642b, a camera 643b, a LiDAR unit 644b, and a millimeter wave radar 645b. As shown in Fig. 37, the control unit 640b, the lighting unit 642b, the camera 643b, the LiDAR unit 644b, and the millimeter wave radar 645b are disposed in a space Sb defined by the housing 624b and the transparent cover 622b (an example of a second area). The control unit 640b may be disposed in a predetermined place on the vehicle 601 other than the space Sb. For example, the control unit 640b may be configured integrally with the vehicle control unit 603. The control unit 640b may have a similar function and configuration to those of the control unit 640a. The lighting unit 642b may have a similar function and configuration to those of the lighting unit 642a. In this regard, the lighting unit 642a functions as the left headlamp unit, while the lighting unit 642b functions as a right headlamp unit. The camera 643b (an example of the second sensor) may have a similar function and configuration to those of the camera 643a. The LiDAR unit 644b (an example of the second sensor) may have a similar function and configuration to those of the LiDAR unit 644a. The millimeter wave radar 645b (an example of the second sensor) may have a similar function and configuration to those of the millimeter wave radar 645a.

The lighting system 604c further includes a control unit 640c, a lighting unit 642c, a camera 643c, a LiDAR unit 644c, and a millimeter wave radar 645c. As shown in Fig. 37, the control unit 640c, the lighting unit 642c, the camera 643c, the LiDAR unit 644c, and the millimeter wave radar 645c are disposed in a space Sc defined by the housing 624c and the transparent cover 622c (an interior of a lamp compartment). The control unit 640c may be disposed in a predetermined place on the vehicle 601 other than the space Sc. For example, the control unit 640c may be configured integrally with the vehicle control unit 603. The control unit 640c may have a similar function and configuration to those of the control unit 640a.

The lighting unit 642c is configured to form a light distribution pattern by emitting light towards an exterior (a rear) of the vehicle 601. The lighting unit 642c includes a light source for emitting light and an optical system. The light source may be made up, for example, of a plurality of light emitting devices that are arranged into a matrix configuration (for example, N rows × M columns, N > 1, M > 1). The light emitting device is, for example, an LED, an LD or an organic EL device. The optical system may include at least one of a reflector configured to reflect light emitted from the light source towards the front of the lighting unit 642c and a lens configured to refract light emitted directly from the light source or light reflected by the reflector. In the case where the driving mode of the vehicle 601 is the manual drive mode or the drive assist mode, the lighting unit 642c may be turned off. On the other hand, in the case where the driving mode of the vehicle 601 is the high-level drive assist mode or the complete autonomous drive mode, the lighting unit 642c may be configured to form a light distribution pattern for a camera behind the vehicle 601.

The camera 643c may have a similar function and configuration to those of the camera 643a. The LiDAR unit 644c may have a similar function and configuration to those of the LiDAR unit 644c. The millimeter wave radar 645c may have a similar function and configuration to those of the millimeter wave radar 645a.

The lighting system 604d further includes a control unit 640d, a lighting unit 642d, a camera 643d, a LiDAR unit 644d, and a millimeter wave radar 645d. As shown in Fig. 37, the control unit 640d, the lighting unit 642d, the camera 643d, the LiDAR unit 644d, and the millimeter wave radar 645d are disposed in a space Sd defined by the housing 624d and the transparent cover 622d (an interior of a lamp compartment). The control unit 640d may be disposed in a predetermined place on the vehicle 601 other than the space Sd. For example, the control unit 640d may be configured integrally with the vehicle control unit 603. The control unit 640d may have a similar function and configuration to those of the control unit 640c. The lighting unit 642d may have a similar function and configuration to those of the lighting unit 642c. The camera 643d may have a similar function and configuration to those of the camera 643c. The LiDAR unit 644d may have a similar function and configuration to those of the LiDAR unit 644c. The millimeter wave radar 645d may have a similar function and configuration to those of the millimeter wave radar 645c.

The sensor 5 may include an acceleration sensor, a speed sensor, a gyro sensor, and the like. The sensor 5 detects a driving state of the vehicle 601 and outputs driving state information indicating such a driving state of the vehicle 601 to the vehicle control unit 603. The sensor 5 may further include a seating sensor configured to detect whether the driver is seated on a driver's seat, a face direction sensor configured to detect a direction in which the driver directs his or her face, an exterior weather sensor configured to detect an exterior weather state, a human or motion sensor configured to detect whether a human exists in an interior of a passenger compartment. Furthermore, the sensor 5 may include an illuminance sensor configured to detect a degree of brightness (an illuminance) of a surrounding environment of the vehicle 601. The illuminance sensor may determine a degree of brightness of a surrounding environment, for example, in accordance with a magnitude of optical current outputted from a photodiode.

The human machine interface (HMI) 608 is made up of an input module configured to receive an input operation from the driver and an output module configured to output the driving state information or the like towards the driver. The input module includes a steering wheel, an accelerator pedal, a brake pedal, a driving modes changeover switch configured to switch the driving modes of the vehicle 601, and the like. The output module includes a display configured to display thereon driving state information, surrounding environment information and an illuminating state of the lighting system 4, and the like.

The global positioning system (GPS) 609 acquires information on a current position of the vehicle 601 and outputs the current position information so acquired to the vehicle control unit 603. The radio communication unit 610 receives information on other vehicles running or existing on the periphery of the vehicle 601 (for example, other vehicles' running information) from the other vehicles and transmits information on the vehicle 601 (for example, subject vehicle's running information) to the other vehicles (a vehicle-vehicle communication).

The radio communication unit 610 receives infrastructural information from infrastructural equipment such as a traffic signal controller, a traffic sign lamp or the like and transmits the subject vehicle's running information of the vehicle 601 to the infrastructural equipment (a road-vehicle communication). In addition, the radio communication unit 610 receives information on a pedestrian from a mobile electronic device (a smartphone, an electronic tablet, an electronic wearable device, and the like) that the pedestrian carries and transmits the subject vehicle's running information of the vehicle 601 to the mobile electronic device (a pedestrian-vehicle communication). The vehicle 601 may communicate directly with other vehicles, infrastructural equipment or a mobile electronic device in an ad hoc mode or may communicate with them via access points. Radio communication standards include, for example, Wi-Fi (a registered trademark), Bluetooth (a registered trademark), ZigBee (a registered trademark), and LPWA. The vehicle 601 may communicate with other vehicles, infrastructural equipment or a mobile electronic device via a mobile communication network.

The storage device 611 is an external storage device such as a hard disk drive (HDD) or a solid state drive (SSD). The storage device 611 may store two-dimensional or three-dimensional map information and/or a vehicle control program. For example, the three-dimensional map information may be made up of point group data. The storage device 611 outputs map information or a vehicle control program to the vehicle control unit 603 in demand for the vehicle control unit 603. The map information and the vehicle control program may be updated via the radio communication unit 610 and a communication network such as the internet.

In the case where the vehicle 601 is driven in the autonomous driving mode, the vehicle control unit 603 generates automatically at least one of a steering control signal, an accelerator control signal, and a brake control signal based on the driving state information, the surrounding environment information and/or the map information. The steering actuator 612 receives a steering control signal from the vehicle control unit 603 and controls the steering device 613 based on the steering control signal so received. The brake actuator 614 receives a brake control signal from the vehicle control unit 603 and controls the brake device 615 based on the brake control signal so received. The accelerator actuator 616 receives an accelerator control signal from the vehicle control unit 603 and controls the accelerator device 617 based on the accelerator control signal so received. In this way, in the autonomous driving mode, the driving of the vehicle 601 is automatically controlled by the vehicle system 602.

On the other hand, in the case where the vehicle 601 is driven in the manual drive mode, the vehicle control unit 603 generates a steering control signal, an accelerator control signal, and a brake control signal as the driver manually operates the accelerator pedal, the brake pedal, and the steering wheel. In this way, in the manual drive mode, since the steering control signal, the accelerator control signal, and the brake control are generated as the driver manually operates the accelerator pedal, the brake pedal, and the steering wheel, the driving of the vehicle 601 is controlled by the driver.

Next, the driving modes of the vehicle 601 will be described. The driving modes include the autonomous driving mode and the manual drive mode. The autonomous driving mode includes a complete autonomous drive mode, a high-level drive assist mode, and a drive assist mode. In the complete autonomous drive mode, the vehicle system 602 automatically performs all the driving controls of the vehicle 601 including the steering control, the brake control, and the accelerator control, and the driver stays in a state where the driver cannot drive or control the vehicle 601 as he or she wishes. In the high-level drive assist mode, the vehicle system 602 automatically performs all the driving controls of the vehicle 601 including the steering control, the brake control, and the accelerator control, and although the driver stays in a state where the driver can drive or control the vehicle 601, the driver does not drive the vehicle 601. In the drive assist mode, the vehicle system 602 automatically performs a partial driving control of the steering control, the brake control, and the accelerator control, and the driver drives the vehicle 601 with assistance of the vehicle system 602 in driving. On the other hand, in the manual drive mode, the vehicle system 602 does not perform the driving control automatically, and the driver drives the vehicle 601 without any assistance of the vehicle system 602 in driving.

In addition, the driving modes of the vehicle 601 may be switched over by operating a driving modes changeover switch. In this case, the vehicle control unit 603 switches the driving modes of the vehicle 601 among the four driving modes (the complete autonomous drive mode, the high-level drive assist mode, the drive assist mode, the manual drive mode) in response to an operation performed on the driving modes changeover switch by the driver. The driving modes of the vehicle 601 may automatically be switched over based on information on an autonomous driving permitting section where the autonomous driving of the vehicle 601 is permitted and an autonomous driving prohibiting section where the autonomous driving of the vehicle 601 is prohibited, or information on an exterior weather state. In this case, the vehicle control unit 603 switches the driving modes of the vehicle 601 based on those pieces of information. Further, the driving modes of the vehicle 601 may automatically be switched over by use of the seating sensor or the face direction sensor. In this case, the vehicle control unit 603 may switch the driving modes of the vehicle 601 based on an output signal from the seating sensor or the face direction sensor.

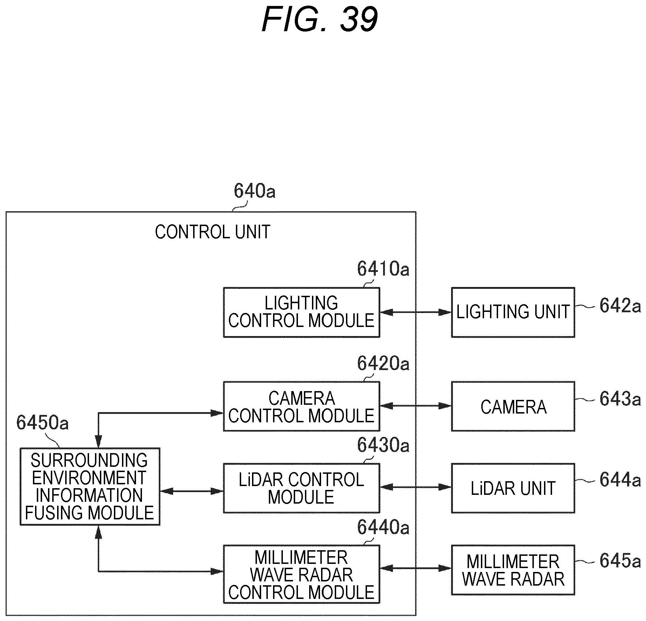

Next, referring to Fig. 39, the function of the control unit 640a will be described. Fig. 39 is a diagram illustrating functional blocks of the control unit 640a (an example of a first control unit) of the lighting system 604a. As shown in Fig. 39, the control unit 640a is configured to control individual operations of the lighting unit 642a, the camera 643a, the LiDAR unit 644a, and the millimeter wave radar 645a. In particular, the control unit 640a includes a lighting control module 6410a, a camera control module 6420a, a LiDAR control module 6430a, a millimeter wave control module 6440a, a surrounding environment information fusing module 6450a

The lighting control module 6410a is configured to control the lighting unit 642a and cause the lighting unit 642a to emit a predetermined light distribution pattern towards a front area ahead of the vehicle 601. For example, the lighting control module 6410a may change the light distribution pattern that is emitted from the lighting unit 642a in accordance with the driving mode of the vehicle 601.

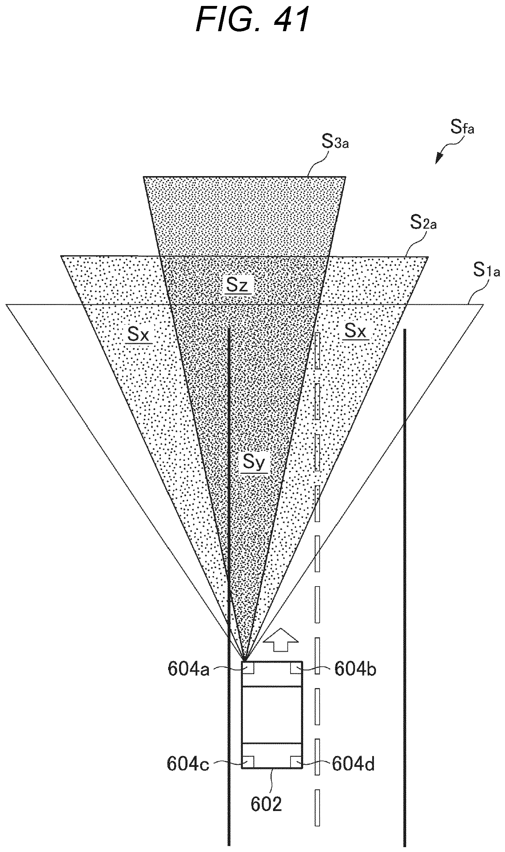

The camera control module 6420a is configured not only to control the operation of the camera 643a but also to generate surrounding environment information of the vehicle 601 in a detection area S1 (refer to Fig. 41) of the camera 643a (hereinafter, referred to as surrounding environment information I1a) based on image data outputted from the camera 643a. The LiDAR control module 6430a is configured not only to control the operation of the LiDAR unit 644a but also to generate surrounding environment information of the vehicle 601 in a detection area S2 (refer to Fig. 41) of the LiDAR unit 644a (hereinafter, referred to as surrounding environment information I2a) based on 3D mapping data outputted from the LiDAR unit 644a. The millimeter wave radar control module 6440a is configured not only to control the operation of the millimeter wave radar 645a but also to generate surrounding environment information of the vehicle 601 in a detection area S3 (refer to Fig. 41) of the millimeter wave radar 645a (hereinafter, referred to as surrounding environment information I3a) based on detection data outputted from the millimeter wave radar 645a.

The surrounding environment information fusing module 6450a is configured to fuse the pieces of surrounding environment information I1a, I2a, I3a together so as to generate fused surrounding environment information Ifa. Here, the surrounding environment information Ifa may include information on a target object existing at an outside of the vehicle 601 in a detection area Sfa (an example of a first peripheral area) that is a combination of the detection area S1a of the camera 643a, the detection area S2a of the LiDAR unit 644a, and the detection area S3a of the millimeter wave radar 645a, as shown in Fig. 41. For example, the surrounding environment information Ifa may include information on an attribute of a target object, a position of the target object with respect to the vehicle 601, an angle of the target object with respect to the vehicle 601, a distance between the vehicle 1 and the target object and/or a speed of the target object with respect to the vehicle 601. The surrounding environment information fusing module 6450a transmits the surrounding environment information Ifa to the vehicle control unit 603.

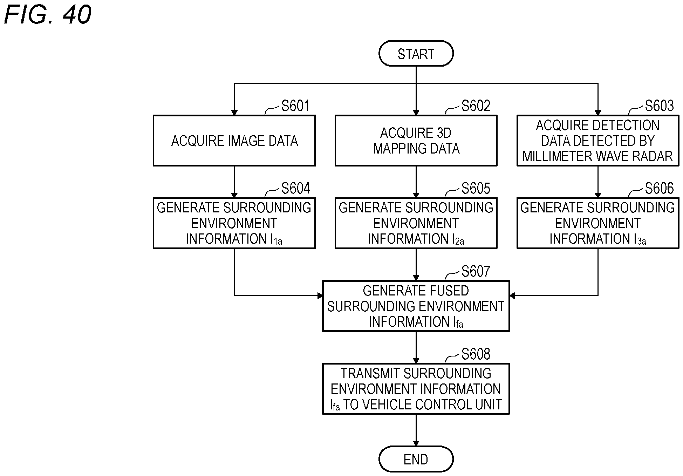

Next, referring to Fig. 40, an example of an operation for generating surrounding environment information Ifa will be described. As shown in Fig. 40, in step S601, the camera 643a acquires image data indicating a surrounding environment of the vehicle 601 in the detection area S1a (refer to Fig. 41). In step S602, the LiDAR unit 644a acquires 3D mapping data indicating a surrounding environment of the vehicle 601 in the detection area S2a. In step S603, the millimeter wave radar 645a acquires detection data indicating a surrounding environment of the vehicle 601 in the detection area S3a.

Next, the camera control module 6420a at first acquires the image data from the camera 643a and then generates surrounding environment information I1a based on the image data (step S604). The LiDAR control module 6430a at first acquires the 3D mapping data from the LiDAR unit 644a and then generates surrounding environment information I2a based on the 3D mapping data (step S605). The millimeter wave radar control module 6440a at first acquires the detection data from the millimeter wave radar 645a and then generates surrounding environment information I3a based on the detection data (step S606).

Next, in step S607, the surrounding environment information fusing module 6450a compares the plurality of pieces of surrounding environment information in individual overlapping areas Sx, Sy, Sz (refer to Fig. 41) based on a use priority among the sensors. In the present embodiment, assume that a use priority among the sensors is the camera 643a > the LiDAR unit 644a > the millimeter wave radar 645a. Specifically, the surrounding environment information fusing module 6450a at first compares the surrounding environment information I1a with the surrounding environment information I2a in the overlapping area Sx where the detection area S1a and the detection area S2a overlap each other and then determines whether the surrounding environment information I1a and the surrounding environment information I2a coincide with each other. For example, in the case where the surrounding environment information I1a indicates a position of a pedestrian as a position Z1 in the overlapping area Sx, while the surrounding environment information I2a indicates a position of a pedestrian P2 as a position Z2 in the overlapping area Sx, the surrounding environment information fusing module 6450a determines that the surrounding environment information I1a and the surrounding environment information I2a do not coincide with each other. If the surrounding environment information fusing module 6540a determines, as the result of the comparison, that the surrounding environment information I1a and the surrounding environment information I2a do not coincide with each other, the surrounding environment information fusing module 6450a determines the surrounding environment information I1a as surrounding environment information that is adopted in the overlapping area Sx based on the priority for use among the sensors (the camera 643a > the LiDAR unit 644a).

In addition, the surrounding environment information fusing module 6450a at first compares the surrounding environment information I2a with the surrounding environment information I3a in the overlapping area Sz where the detection area S2a and the detection area S3a overlap each other and then determines whether the surrounding environment information I2a and the surrounding environment information I3a coincide with each other. If the surrounding environment information fusing module 6540a determines, as the result of the comparison, that the surrounding environment information I2a and the surrounding environment information I3a do not coincide with each other, the surrounding environment information fusing module 6450a determines the surrounding environment information I2a as surrounding environment information that is adopted in the overlapping area Sz based on the priority for use among the sensors (the camera 643a > the LiDAR unit 644a > the millimeter wave radar 645a).

Additionally, the surrounding environment information fusing module 6450a at first compares the surrounding environment information I1a, the surrounding environment information I2a, and the surrounding environment information I3a in the overlapping area Sy where the detection area S1a, the detection area S2a and the detection area S3a overlap one another and then determines whether the surrounding environment information I1a, the surrounding environment information I2a, and the surrounding environment information I3a coincide with one another. If the surrounding environment information fusing module 6540a determines, as the result of the comparison, that the surrounding environment information I1a, the surrounding environment information I2a, and the surrounding environment information I3a do not coincide with one another, the surrounding environment information fusing module 6450a determines the surrounding environment information I1a as surrounding environment information that is adopted in the overlapping area Sy based on the priority for use among the sensors (the camera 643a > the LiDAR unit 644a > the millimeter wave radar 645a).

Thereafter, the surrounding environment information fusing module 6450a generates fused surrounding environment information Ifa (an example of first surrounding environment information) by fusing the pieces of surrounding environment information I1a, I2a, I3a together. The surrounding environment information Ifa may include information on a target object existing at an outside of the vehicle 601 in a detection area Sfa (an example of a first peripheral area) where the detection areas S1a, S2a, S3a are combined together. In particular, the surrounding environment information Ifa may be made up of the following pieces of information.

- Surrounding environment information I1a in the detection area S1a
- Surrounding environment information I2a in the detection area S2a excluding the overlapping areas Sx, Sy
- Surrounding environment information I3a in the detection area S3a excluding the overlapping areas Sy, Sz

Next, in step S608, the surrounding environment information fusing module 6450a transmits the surrounding environment information Ifa to the vehicle control unit 603. In this way, the operation for generating surrounding environment information Ifa shown in Fig. 40 is executed repeatedly.

In the operation for generating surrounding environment information Ifa described above, the plurality of pieces of information do not have to be compared in the individual overlapping areas Sx, Sy, Sz. In this case, the surrounding environment information fusing module 6450a may generate surrounding environment information Ifa based on the information on the priority for use among the sensors and the pieces of surrounding environment information I1a to I3a without comparing the plurality of pieces of information in the overlapping areas Sx, Sy, Sz.

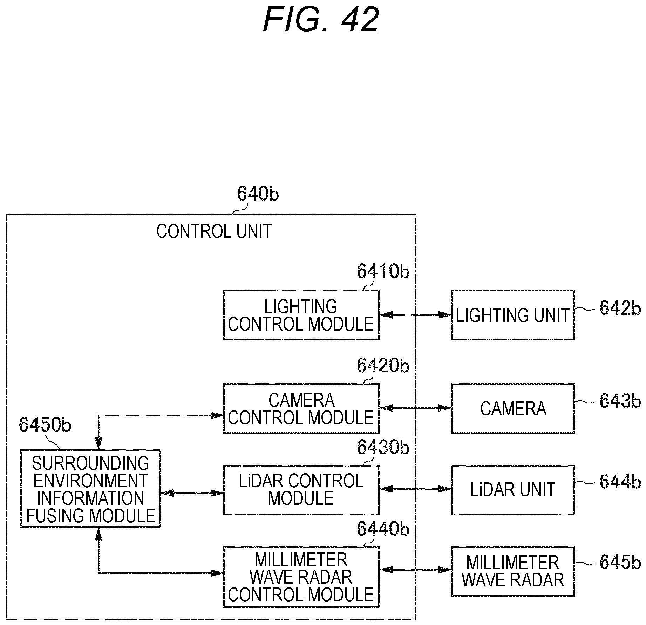

Next, referring to Fig. 42, the function of the control unit 640b will be described. Fig. 42 is a diagram illustrating functional blocks of the control unit 640b (an example of a second control unit) of the lighting system 604b. As shown in Fig. 42, the control unit 640b is configured to control respective operations of a lighting unit 642b, a camera 643b (an example of a second sensor), a LiDAR unit 644a (an example of a second sensor), and a millimeter wave radar 645b (an example of a second sensor). In particular, the control unit 640b includes a lighting control module 6410b, a camera control module 6420b, a LiDAR control module 6430b, a millimeter wave radar control module 6440b, and a surrounding environment information fusing module 6450b. The lighting control module 6410b may have the same function as that of the lighting control module 6410a. The camera control module 6420b may have the same function as that of the camera control module 6420a. The LiDAR control module 6430b may have the same function as that of the LiDAR control module 6430a. The millimeter wave radar control module 6440b may have the same function as that of the millimeter wave radar control module 6440a.

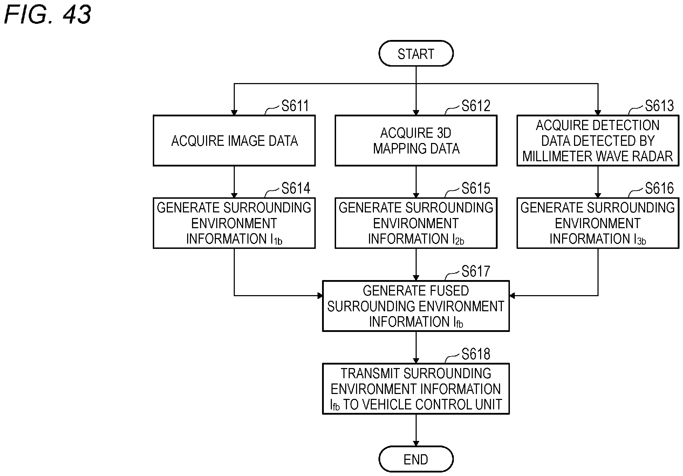

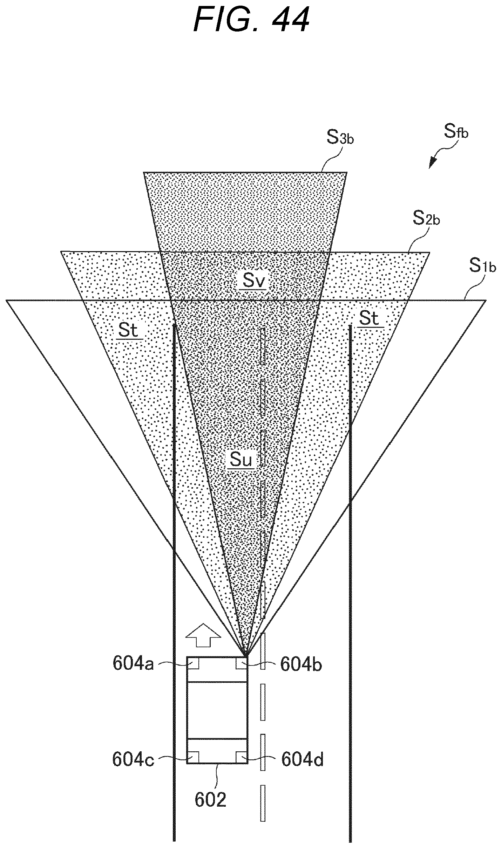

Next, referring to Fig. 43, an example of an operation for generating fused surrounding environment information Ifb will be described. As shown in Fig. 43, in step S611, the camera 643b acquires image data (an example of second detection data) indicating a surrounding environment of the vehicle 601 in a detection area S1b (refer to Fig. 44). In addition, in step S612, the LiDAR unit 644b acquires 3D mapping data (an example of second detection data) indicating a surrounding environment of the vehicle 601 in a detection area S2b. Further, in step S613, the millimeter wave radar 645b acquires detection data (an example of second detection data) indicating a surrounding environment of the vehicle 601 in a detection area S3b.

Next, the camera control module 6420b at first acquires the image data from the camera 643b and then generates surrounding environment information I1b based on the image data (step S614). The LiDAR control module 6430b at first acquires the 3D mapping data from the LiDAR unit 644b and then generates surrounding environment information I2b based on the 3D mapping data (step S615). The millimeter wave radar control module 6440b at first acquires the detection data from the millimeter wave radar 645b and then generates surrounding environment information I3b based on the detection data (step S616).

Next, in step S617, the surrounding environment information fusing module 6450b compares the plurality of pieces of surrounding environment information in individual overlapping areas St, Su, Sv (refer to Fig. 44) based on the priority for use among the sensors. In the present embodiment, assume that a use priority among the sensors is the camera 643b > the LiDAR unit 644b > the millimeter wave radar 645b. Specifically, the surrounding environment information fusing module 6450b at first compares the surrounding environment information I1b with the surrounding environment information I2b in the overlapping area St where a detection area S1b and a detection area S2b overlap each other and then determines whether the surrounding environment information I1b and the surrounding environment information I2b coincide with each other. For example, in the case where the surrounding environment information I1b indicates a position of a pedestrian as a position Z3 in the overlapping area St, while the surrounding environment information I2b indicates a position of a pedestrian as a position Z4 in the overlapping area St, the surrounding environment information fusing module 6450b determines that the surrounding environment information I1b and the surrounding environment information I2b do not coincide with each other. If the surrounding environment information fusing module 6540b determines, as the result of the comparison, that the surrounding environment information I1b and the surrounding environment information I2b do not coincide with each other, the surrounding environment information fusing module 6450b determines the surrounding environment information I1b as surrounding environment information that is adopted in the overlapping area St based on the priority for use among the sensors (the camera 643b > the LiDAR unit 644b).

In addition, the surrounding environment information fusing module 6450b at first compares the surrounding environment information I2b with the surrounding environment information I3b in the overlapping area Sv where the detection area S2a and a detection area S3a overlap each other and then determines whether the surrounding environment information I2b and the surrounding environment information I3b coincide with each other. If the surrounding environment information fusing module 6540b determines, as the result of the comparison, that the surrounding environment information I2b and the surrounding environment information I3b do not coincide with each other, the surrounding environment information fusing module 6450b determines the surrounding environment information I2b as surrounding environment information that is adopted in the overlapping area Sv based on the priority for use among the sensors (the LiDAR unit 644b > the millimeter wave radar 645b).

Additionally, the surrounding environment information fusing module 6450b at first compares the surrounding environment information I1b, the surrounding environment information I2b, and the surrounding environment information I3b in the overlapping area Su where the detection area S1b, the detection area S2b and the detection area S3b overlap one another and then determines whether the surrounding environment information I1a, the surrounding environment information I2b, and the surrounding environment information I3b coincide with one another. If the surrounding environment information fusing module 6540b determines, as the result of the comparison, that the surrounding environment information I1b, the surrounding environment information I2ba, and the surrounding environment information I3b do not coincide with one another, the surrounding environment information fusing module 6450b determines the surrounding environment information I1b as surrounding environment information that is adopted in the overlapping area Su based on the priority for use among the sensors (the camera 643b > the LiDAR unit 644b > the millimeter wave radar 645b).

Thereafter, the surrounding environment information fusing module 6450b generates fused surrounding environment information Ifb (an example of second surrounding environment information) by fusing the pieces of surrounding environment information I1b, I2b, I3b together. The surrounding environment information Ifb may include information on a target object existing at an outside of the vehicle 601 in a detection area Sfb (an example of a second peripheral area) where the detection areas S1b, S2b, S3b are combined together. In particular, the surrounding environment information Ifb may be made up of the following pieces of information.

- Surrounding environment information I1ba in the detection area S1b
- Surrounding environment information I2 b in the detection area S2b excluding the overlapping areas St, Su
- Surrounding environment information I3b in the detection area S3b excluding the overlapping areas Su, Sv

Next, in step S618, the surrounding environment information fusing module 6450b transmits the surrounding environment information Ifb to the vehicle control unit 603. In this way, the operation for generating surrounding environment information Ifb shown in Fig. 43 is executed repeatedly.

In the operation for generating surrounding environment information Ifb described above, the plurality of pieces of information do not have to be compared in the individual overlapping areas St, Su, Sv. In this case, the surrounding environment information fusing module 6450b may generate surrounding environment information Ifb based on the information on the priority for use among the sensors and the pieces of surrounding environment information I1b to I3b without comparing the plurality of pieces of information.

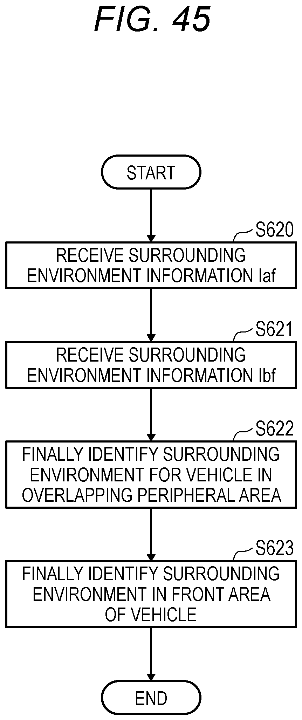

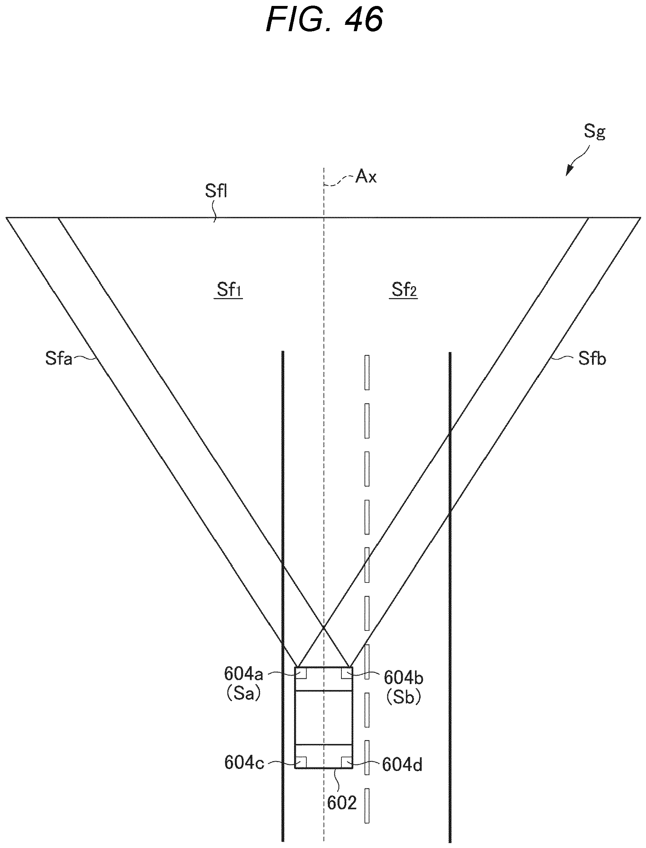

Next, referring to Figs. 45 and 46, an operation will be described in which a surrounding environment of the vehicle 601 is finally identified in an overlapping peripheral area Sfl where the detection area Sfa of the lighting system 604a and the detection area Sfb of the lighting system 604b overlap each other. Fig. 45 is a flow chart for explaining an operation for finally identifying a surrounding environment of the vehicle 601 in the overlapping peripheral area Sfl. Fig. 46 is a diagram illustrating the detection area Sfa, the detection area Sfb, and the overlapping peripheral area Sfl where the detection area Sfa and the detection area Sfb overlap each other. It should be noted that for the sake of simplifying the description, the shape of the detection area Sfa shown in Fig. 41 and the shape of the detection area Sfa shown in Fig. 46 are not made to coincide with each other. Similarly, it should be noted that the shape of the detection area Sfb shown in Fig. 44 and the shape of the detection area Sfb shown in Fig. 46 are not made to coincide with each other.

As shown in Fig. 45, in step S620, the vehicle control unit 603 receives the surrounding environment information Ifa in the detection area Sfa from the surrounding environment information fusing module 6450a. Next, the vehicle control unit 603 receives the surrounding environment information Sfb in the detection area Sfb from the surrounding environment information fusing module 6450b (step S621). Thereafter, the vehicle control unit 603 finally identifies a surrounding environment for the vehicle 601 in the overlapping peripheral area Sfl based on at least one of the received pieces of surrounding environment information Ifa, Ifb. In other words, the vehicle control unit 603 identifies surrounding environment information indicating a surrounding environment for the vehicle 601 in the overlapping peripheral area Sfl (step S622).

A specific example of the operation in step S622 will be described by reference to Fig. 46. As shown in Fig. 46, the overlapping peripheral area Sfl is divided into a first partial area Sfl and a second partial area Sf2. The first partial area Sfl is an area that is positioned on a left-hand side of a center axis Ax, while the second partial area Sf2 is an area that is positioned on a right-hand side of the center axis Ax. Here, the center axis Ax is an axis that not only extends parallel to a longitudinal direction of the vehicle 601 but also passes through a center of the vehicle 601. A distance between the first partial area Sf1 and a space Sa of the lighting system 604a is smaller than a distance between the first partial area Sf1 and a space Sb of the lighting system 604b. To describe this in greater detail, a distance between a predetermined position Pa in the first partial area Sf1 and the space Sa is smaller than a distance between the predetermined position Pa and the space Sb. Similarly, a distance between the second partial area Sf2 and the space Sb of the lighting system 604b is smaller than a distance between the second partial area Sf2 and the space Sa of the lighting system 604a. To describe this in greater detail, a distance between a predetermined position Pb in the second partial area Sf2 and the space Sb is smaller than a distance between the predetermined position Pb and the space Sa.

The vehicle control unit 603 finally identifies a surrounding environment for the vehicle 601 in the first partial area Sf1 based on the surrounding environment information Ifa indicating the surrounding environment in the detection area Sfa. In other words, the vehicle control unit 603 adopts the surrounding environment information Ifa as surrounding environment information in the first partial area Sf1. On the other hand, the vehicle control unit 603 finally identifies a surrounding environment for the vehicle 601 in the second partial area Sf2 based on the surrounding environment information Ifb indicating the surrounding environment in the detection area Sfb. In other words, the vehicle control unit 603 adopts the surrounding environment information Ifb as surrounding environment information in the second partial area Sf2. In this way, the vehicle control unit 603 finally identifies a surrounding environment for the vehicle 601 in the overlapping peripheral area Sf1 based on a relative positional relationship between the vehicle 601 and the overlapping peripheral area Sfl and at least one of the pieces of surrounding environment information Ifa, Ifb.

Next, in step S623, the vehicle control unit 603 finally identifies a surrounding environment for the vehicle 601 in a front area ahead of the vehicle 601. In particular, the vehicle control unit 603 generates fused surrounding environment information Ig by fusing the pieces of surrounding environment information Ifa, Ifb. The surrounding environment information Ig may include information on a target object existing at an outside of the vehicle 601 in a detection area Sg that is a combination of the detection areas Sfa, Sfb. In particular, in the present embodiment, the surrounding environment information Ig may be made up of the following pieces of information.

- Surrounding environment information Ifa in the detection area Sfa excluding the second partial area Sf2
- Surrounding environment information Ifb in the detection area Sfb excluding the first partial area Sf1

In this way, according to the present embodiment, the surrounding environment of the vehicle 601 in the overlapping peripheral area Sfl where the detection area Sfa and the detection area Sfb overlap each other is finally identified based on at least one of the pieces of surrounding environment information Ifa, Ifb. In this way, since the surrounding environment of the vehicle 601 in the overlapping peripheral area Sfl can finally be identified, it is possible to provide the vehicle system 602 where the recognition accuracy with which the surrounding environment of the vehicle 601 is recognized can be improved.

Further, the surrounding environment for the vehicle 601 is finally identified based on the surrounding environment information Ifa in the first partial area Sf1 positioned on a side facing the lighting system 604a (the space Sa). On the other hand, the surrounding environment for the vehicle 601 is finally identified based on the surrounding environment information Ifb in the second partial area Sf2 positioned on a side facing the lighting system 604b (the space Sb). In this way, since the surrounding environment for the vehicle 601 in the overlapping peripheral area Sfl is finally identified in consideration of a positional relationship between the overlapping peripheral area Sfl and the lighting systems 604a, 604b, the recognition accuracy with which the surrounding environment of the vehicle 601 is recognized can be improved.

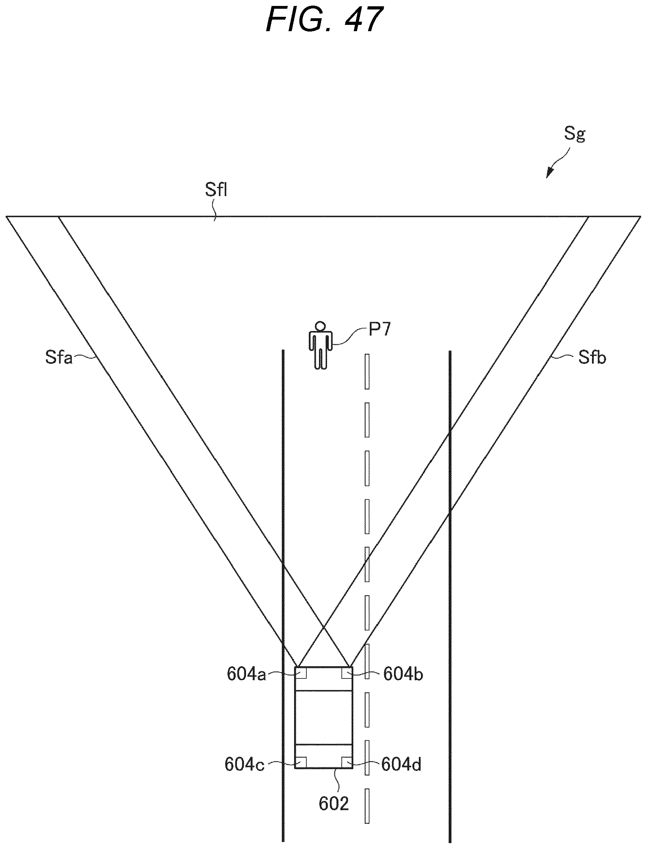

Next, referring to Fig. 47, there will be described another example of the operation for finally identifying a surrounding environment for the vehicle 601 in the overlapping peripheral area Sfl where the detection area Sfa of the lighting system 604a and the detection area Sfb of the lighting system 604b overlap each other. Fig. 47 is a diagram illustrating a state where a pedestrian P7 exists in the overlapping peripheral area Sf1. In this example, the operation in step S622 shown in Fig. 45 will be described as below.

As shown in Fig. 47, assume that in the case where the pedestrian P7 exists in the overlapping peripheral area Sfl, the surrounding environment information Ifa in the detection area Sfa differs from the surrounding environment information Ifb in the detection area Sfb. Specifically, a parameter (position, distance, angle, or the like) related to a relative positional relationship between the vehicle 601 and the pedestrian P7 that is indicated by the surrounding environment information Ifa differs from a parameter (position, distance, angle, or the like) related to a relative positional relationship between the vehicle 601 and the pedestrian P7 that is indicated by the surrounding environment information Ifb. Here, an angle between the vehicle 601 and the pedestrian P7 is, for example, an angle that is formed by a line connecting a center point of the pedestrian P7 with a center point of the vehicle 601 and a center axis Ax (refer to Fig. 46).

For example, assume that a distance between the vehicle 601 and the pedestrian P7 indicated by the surrounding environment information Ifa is D1, while a distance between the vehicle 601 and the pedestrian P7 indicated by the surrounding environment information Ifb is D2 (D1≠D2). In this case, the vehicle control unit 603 finally identifies an average value between the distance D1 and the distance D2 as a distance between the vehicle 601 and the pedestrian P7. In this way, the vehicle control unit 603 identifies surrounding environment information in the overlapping peripheral area Sf1 by making use of the average value between the parameter indicated by the surrounding environment information Ifa and the parameter indicated by the surrounding environment information Ifb.

In the case where the surrounding environment information Ifa indicates the existence of the passenger P7, while the surrounding environment information Ifb does not indicate the existence of the passenger P7, the vehicle control unit 603 may determine that the pedestrian P7 exists irrespective of a use priority between the surrounding environment information Ifa and the surrounding environment information Ifb. In this way, in the case where at least one of the two pieces of surrounding environment information indicates the existence of a target object, the driving safety of the vehicle 601 can be improved further by determining that there exists the target object.

A surrounding environment for the vehicle 601 in the overlapping peripheral area Sfl may be identified based on information related to the detection accuracies of the three sensors of the lighting system 604a and information on the detection accuracies of the three sensors of the lighting system 604b in place of the method for identifying the surrounding environment information in the overlapping peripheral area Sfl based on the average value of the two parameters. Specifically, the vehicle control unit 603 may identify a surrounding environment information in the overlapping peripheral area Sf1 by comparing an average value (a center value) of the detection accuracies of the three sensors of the lighting system 604a and an average value (a center value) of the three sensors of the lighting system 604b.

For example, assume that the detection accuracy of the camera 643a, the detection accuracy of the LiDAR unit 644a, and the millimeter wave radar 645a are 95%, 97%, and 90%, respectively, while the detection accuracy of the camera 643b, the detection accuracy of the LiDAR unit 644b, and the millimeter wave radar 645b are 90%, 92%, and 90%, respectively. In this case, an average value of the detection accuracies of the three sensors of the lighting system 604a becomes about 94%. On the other hand, an average value of the detection accuracies of the three sensors of the lighting system 604b becomes about 91%. As a result, since the average value of the detection accuracy of the lighting system 604a is greater than the average value of the lighting system 604b, the vehicle control unit 603 adopts the surrounding environment information Ifa as surrounding environment information in the overlapping peripheral area Sfl. In this way, since the surrounding environment of the vehicle 601 is finally identified in consideration of the information related to the detection accuracies of the three sensors of the lighting system 604a and the information related to the detection accuracies of the three sensors of the lighting system 604b, the recognition accuracy with which the surrounding environment of the vehicle 601 is recognized can be improved. In this example, although the accuracies of the sensors are specified in percentage, the accuracies of the sensors may be specified in terms of a plurality of ranks (for example, rank A, rank B, rank C).

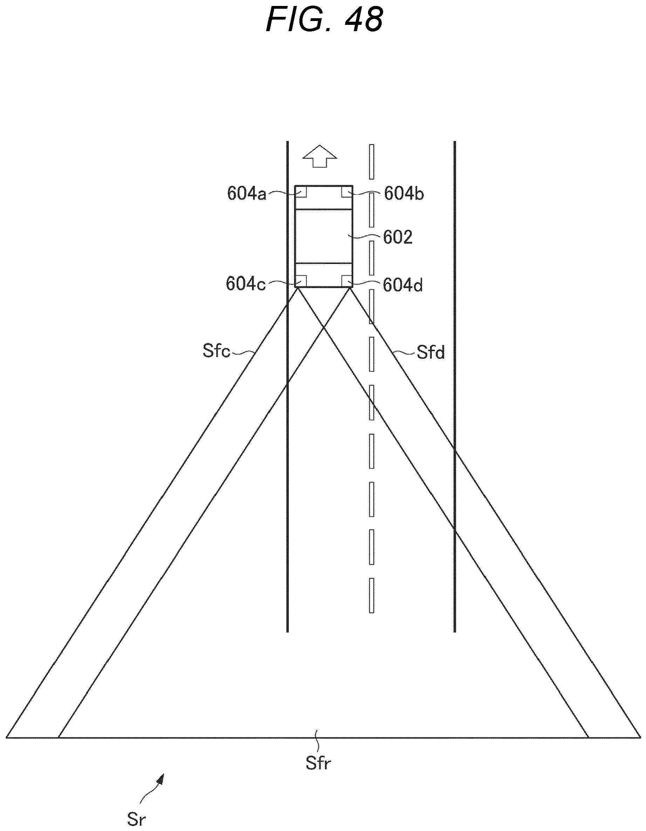

Next, referring to Fig. 48, there will be described an operation for finally identifying a surrounding environment for the vehicle 601 in the overlapping peripheral area Sfr where a detection area Sfc of the lighting system 604c and a detection area Sfd of the lighting system 604d overlap each other. Fig. 48 is a diagram illustrating the detection area Sfc, the detection area Sfd, and the overlapping peripheral area Sfr where the detection area Sfc and the detection area Sfd overlap each other.

Firstly, the vehicle control unit 603 receives fused surrounding environment information Ifc in the detection area Sfc from a surrounding environment information fusing module of the control unit 640c. Next, the vehicle unit 603 receives fused surrounding environment information Ifd in the detection area Sfd from a surrounding environment information fusing module of the control unit 604d. Here, the detection area Sfc is a detection area that is obtained by combining detection areas of three sensors of the lighting system 604c. Similarly, the detection area Sfd is a detection area that is obtained by combining detection areas of three sensors of the lighting system 604d. Thereafter, the control unit 603 finally identifies a circumferential environment for the vehicle 601 in the overlapping peripheral area Sfr based on at least one of the two received pieces of surrounding environment information Ifc, Ifd. In other words, the vehicle control unit 603 identifies surrounding environment information indicating a surrounding environment for the vehicle 601 in the overlapping peripheral area Sfr. Next, the vehicle control unit 603 finally identifies a surrounding environment for the vehicle 601 in a rear area behind the vehicle 601. In particular, the vehicle control unit 603 generates fused surrounding environment information Ir by fusing the pieces of surrounding environment information Ifc, Ifd. The surrounding environment information Ir may include information related to a target object existing at an outside of the vehicle 601 in a detection area Sr where the detection areas Sfc, Sfd are combined together. In this way, since the surrounding environment of the vehicle 601 in the overlapping area Sfr can finally be identified, the vehicle system 602 can be provided in which the recognition accuracy with which the surrounding environment of the vehicle 601 is recognized can be improved.

Thus, according to the present embodiment, the control units 640a to 640d each generate the fused surrounding environment information based on the detection data acquired by the three sensors (the camera, the LiDAR unit, the millimeter wave radar) that are mounted in the corresponding lighting system. The vehicle control unit 603 at first receives the pieces of surrounding environment information from the control units 640a to 640d and then finally identifies the surrounding environments of the vehicle 601 in the front area and the rear area of the vehicle 601. The vehicle control unit 603 at first generate automatically at least one of a steering control signal, an accelerator control signal and a brake control signal based on the finally identified pieces of surrounding environment information Ig, Ir, the driving state information, the current position information and/or the map information and then automatically controls the driving of the vehicle 601. In this way, the surrounding environment information of the vehicle 601 can finally be identified by fusing the pieces of surrounding environment information that are generated based on the respective detection data of the sensors mounted in the lighting systems.

In the case where the detection area Sg shown in Fig. 47 and the detection area Sr shown in Fig. 48 overlap each other, the vehicle control unit 603 may identify the surrounding environment information in the overlapping area where the detection area Sg and the detection area Sr overlap each other. For example, an average value of a parameter related to a relative positional relationship between the vehicle 601 and a target object indicated by the surrounding environment information Ig and a parameter related to a relative positional relationship between the vehicle 601 and a target object indicated by the surrounding environment information Ir may be adopted. In addition, the vehicle control unit 603 may identify the surrounding environment information in the overlapping area of comparing information on the detection accuracies of the plurality of sensors of the lighting systems 604a, 604b and information on the detection accuracies of the plurality of sensors of the lighting systems 604c, 604d.

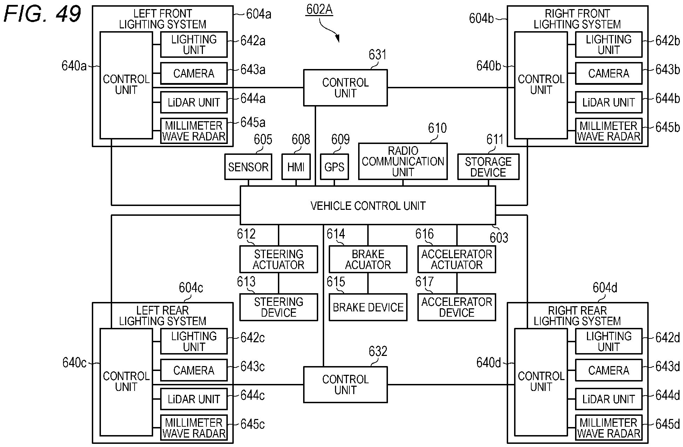

Next, referring to Fig. 49, a vehicle lighting system 602A according to a modified example of the present embodiment will be described. Fig. 49 is a block diagram illustrating the vehicle system 602A. As shown in Fig. 49, the vehicle system 602A differs from the vehicle system 602 shown in Fig. 38 in that the vehicle system 602A includes control units 631, 632. The control unit 631 is connected to the control unit 640a of the lighting system 604a and the control unit 640b of the lighting system 604b in such a manner as to communicate therewith and is also connected with the vehicle control unit 603 in such a manner as to communicate therewith. In addition, the control unit 632 is connected to the control unit 640c of the lighting system 604c and the control unit 640d of the lighting system 604d in such a manner as to communicate therewith and is also connected with the vehicle control unit 603 in such a manner as to communicate therewith.

The control units 631, 632 are each made up of at least one electronic control unit (ECU). The electronic control unit may include at least one microcontroller including one or more processors and one or more memories and other electronic circuits (for example, transistors or the like). In addition, the electronic control unit (ECU) may be made up of at least one integrated circuit such as ASI or FPGA. Further, the electronic control unit may be made up of a combination of at least one microcontroller and at least one integrated circuit (FPGA or the like).

In this example, the control units 631, 532 may finally identify a surrounding environment for the vehicle 601 in the overlapping area in place of the vehicle control unit 603. In this respect, as shown in Fig. 45, the control unit 631 not only receives surrounding environment information Iaf from the surrounding environment information fusing module 6450a of the control unit 640a (step S621) and receives surrounding environment information Ibf from the surrounding environment information fusing module 6450b of the control unit 640b (step S622). Next, the control unit 631 finally identifies a surrounding environment for the vehicle 601 in the overlapping peripheral area Sf1 based on at least one of the received pieces of surrounding environment information Ifa, Ifb. Thereafter, the control unit 631 at first generates surrounding environment information Ig in the front area of the vehicle 601 (step S623) and then transmits the surrounding environment information Ig to the vehicle control unit 603.

On the other hand, the control unit 632 at first not only receives surrounding environment information Ifc from the surrounding environment information fusing module of the control unit 640c but also receives surrounding environment information Ifd from the surrounding environment information fusing module of the control unit 640d. Next, the control unit 632 finally identifies a surrounding environment for the vehicle 601 in the overlapping peripheral area Sfr based on at least one of the received pieces of surrounding environment information Ifc, Ifd. Thereafter, the control unit 632 at first generates surrounding environment information Ir in the rear area of the vehicle 601 and then transmits the surrounding environment information Ig to the vehicle control unit 603.

Thereafter, the vehicle control unit 603 at first receives the pieces of surrounding environment information Ig, Ir and then generates automatically at least one of a steering control signal, an accelerator control signal and a brake control signal based on the pieces of surrounding environment information Ig, Ir, the driving state information, the current position information and/or map information to thereby automatically control the driving of the vehicle 601.

In the vehicle system 602A shown in Fig. 49, since the control units 631, 632 are provided, part of the operation executed by the vehicle control unit 603 can be executed by the control units 631, 632. In this way, since the arithmetic calculation load that is given to the vehicle control unit 603 can be dispersed, the throughput and stability of the vehicle system 602A can be improved.

In addition, in the present embodiment, although the camera, the LiDAR unit, and the millimeter wave radar are raised as the plurality of sensors, the present embodiment is not limited thereto. For example, an ultrasonic sensor may be mounted in addition to those sensors. In this case, the control unit of the lighting system may not only control the operation of the ultrasonic sensor but also generate surrounding environment information based on detection data acquired by the ultrasonic sensor. Additionally, the number of sensors that are mounted in each lighting system is not limited to three, and hence, at least two of the camera, the LiDAR unit, the millimeter wave radar, and the ultrasonic sensor may be mounted in the lighting system.

Thus, while the embodiments of the present invention have been described heretofore, needless to say, the technical scope of the present invention should not be construed as being limited by those embodiments. The embodiments represent only the examples, and hence, it is obvious to those skilled in the art to which the present invention pertains that the embodiments can be modified variously without departing from the scope of the present invention that is to be defined by claims to be made hereunder. The technical scope of the present invention should be defined based on a scope defined by inventions described under claims and a scope of equivalents thereof.

In the embodiments, while the driving modes of the vehicle are described as being made up of the complete autonomous drive mode, the high-level drive assist mode, the drive assist mode, and the manual drive mode, the driving modes of the vehicle should not be limited to those four driving modes. The driving modes of the vehicle need only be modified as required in accordance with laws or regulations related to the autonomous driving in counties involved. Similarly, the definitions of "complete autonomous drive mode", "high-level drive assist mode", "drive assist mode", and "manual drive mode" that are described in the embodiments only represent the examples, and hence, the definitions may be modified as required in accordance with laws or regulations related to the autonomous driving in counties involved.

The present patent application incorporates herein by reference the contents disclosed in Japanese Patent Application No. 2017-150693 filed on August 3, 2017, the contents disclosed in Japanese Patent Application No. 2017-150694 filed on August 3, 2017, the contents disclosed in Japanese Patent Publication No. 2017-150695 filed on August 3, 2017, the contents disclosed in Japanese Patent Application No. 2017-198532 filed on October 12, 2017, the contents disclosed in Japanese Patent Application No. 2017-198533 filed on October 12, 2017, and the contents of Japanese Patent Application (No. 2017-207498 filed on October 26, 2017.

**Claims**

1.  A vehicle system provided in a vehicle that is capable of running in an autonomous driving mode, the vehicle system comprising:

    a sensor configured to acquire detection data indicating a surrounding environment of the vehicle;
    a generator configured to generate surrounding environment information indicating a surrounding environment of the vehicle, based on the detection data; and
    a use frequency setting module configured to set a use frequency for the sensor, based on predetermined information related to the vehicle or surrounding environment of the vehicle.

2.  The vehicle system according to claim 1,
    wherein the use frequency setting module is configured to reduce the use frequency of the sensor based on the predetermined information.

3.  The vehicle system according to claim 1 or 2,
    wherein the use frequency of the sensor is a frame rate of the detection data, a bit rate of the detection data, a mode of the sensor, or an updating rate of the surrounding environment information.

4.  The vehicle system according to any one of claims 1 to 3,
    wherein the predetermined information includes at least one of information indicating brightness of the surrounding environment and information on weather for a current place of the vehicle.

5.  The vehicle system according to any one of claims 1 to 4,
    wherein the predetermined information includes information indicating a speed of the vehicle.

6.  The vehicle system according to any one of claims 1 to 5,
    wherein the predetermined information includes information indicating that the vehicle is currently running on a highway.

7.  The vehicle system according to any one of claims 1 to 3,
    wherein the predetermined information includes information indicating a travelling direction of the vehicle.

8.  The vehicle system according to claim 7,
    wherein the sensor comprises a plurality of sensors, and
    wherein:

    a) when the vehicle is moving forward, the use frequency setting module reduces a use frequency for a sensor disposed at a rear of the vehicle,
    b) when the vehicle is moving backward, the use frequency setting module reduces a use frequency for a sensor disposed at a front of the vehicle, and
    c) when the vehicle turns right, the use frequency setting module reduces a use frequency for a sensor disposed on a left-hand side of the vehicle.

9.  A vehicle that is capable of running in an autonomous driving mode, the vehicle comprising the vehicle system according to any one of claims 1 to 8.

10. A vehicle system provided in a vehicle that is capable of running in an autonomous driving mode, the vehicle system comprising:

    a first sensor configured to acquire first detection data indicating a surrounding environment of the vehicle at a first frame rate;
    a second sensor configured to acquire second detection data indicating a surrounding environment of the vehicle at a second frame rate;
    a first generator configured to generate first surrounding environment information indicating a surrounding environment of the vehicle based on the first detection data; and
    a second generator configured to generate second surrounding environment information indicating a surrounding environment of the vehicle based on the second detection data,

wherein an acquisition period for each frame of the first detection data and an acquisition period for each frame of the second detection data overlap each other.

**11.** The vehicle system according to claim 10,
wherein the first sensor is a camera, and
wherein the second sensor is a laser radar.

**12.** The vehicle system according to claim 11, further comprising:

a lighting unit configured to emit light toward an outside of the vehicle; and
a lighting control module configured to cause the lighting unit to be turned on at a third rate.

**13.** The vehicle system according to claim 12,
wherein the third rate is the same as the first frame rate, and
wherein the lighting unit is turned on during the acquisition period for each frame of the first detection data.

**14.** The vehicle system according to claim 12,
wherein the third rate is a half of the first frame rate,
wherein the lighting unit is turned off during an acquisition period for a first frame of the first detection data and is turned on during an acquisition period for a second frame of the first detection data, wherein the second frame is a frame that is acquired subsequent to the first frame by the first sensor.

**15.** The vehicle system according to any one of claims 10 to 14,
wherein an acquisition start time for each frame of the first detection data coincides with an acquisition start time for each frame of the second detection data.

**16.** A vehicle that is capable of running in an autonomous driving mode, the vehicle comprising the vehicle system according to any one of claims 10 to 15.

**17.** A vehicle system provided in a vehicle that is capable of running in an autonomous driving mode, the vehicle system comprising:

a plurality of sensors each configured to acquire detection data indicating a surrounding environment of the vehicle; and
a detection accuracy determination module configured to determine detection accuracies for the plurality of sensors.

**18.** The vehicle system according to claim 17, further comprising:
a surrounding environment information identification module configured to identify a surrounding environment of the vehicle, based on the plurality of detection data and the detection accuracies for the plurality of sensors.

**19.** The vehicle system according to claim 17,
wherein the surrounding environment information identification module is configured to:

generate a plurality of pieces of surrounding environment information indicating a surrounding environment of the vehicle, based on the plurality of detection data, and
determine surrounding environment information that is adopted in an overlapping area where detection areas of the plurality of sensors overlap each other, based on the detection accuracies for the plurality of sensors.

**20.** The vehicle system according to claim 18,
wherein the surrounding environment information identification module is configured to determine detection data that is adopted in an overlapping area where detection areas of the plurality of sensors overlap each other, based on the detection accuracies for the plurality of sensors.

**21.** The vehicle system according to any one of claims 17 to 20,
wherein a detection area for a first sensor of the plurality of sensors is divided into a plurality of partial areas, and
wherein the detection accuracy determination module is configured to determine a detection accuracy for the first sensor in each of the plurality of partial areas.

**22.** The vehicle system according to any one of claims 17 to 21,
wherein the detection accuracy determination module is configured to determine the detection accuracies for the plurality of sensors, based on information indicating a current position of the vehicle and map information.

**23.** The vehicle system according to any one of claims 17 to 21, further comprising:

a receiver configured to receive, from a traffic infrastructure equipment existing around the vehicle, infrastructure information associated with the traffic infrastructure equipment,
wherein the detection accuracy determination module is configured to determine the detection accuracies for the plurality of sensors, based on information indicating a current position of the vehicle and the infrastructure information.

**24.** The vehicle system according to any one of claims 17 to 21, further comprising:

a surrounding environment information identification module configured to identify a surrounding environment of the vehicle, based on the plurality of detection data and the detection accuracies for the plurality of sensors,
wherein the surrounding environment information identification module is configured to generate a plurality of pieces of surrounding environment information indicating a surrounding environment of the vehicle, based on the plurality of detection data, and
wherein the detection accuracy determination module is configured to determine the detection accuracies for the plurality of sensors by comparing the plurality of pieces of surrounding environment information.

**25.** A vehicle that is capable of running in an autonomous driving mode, the vehicle comprising the vehicle system according to any one of claims 17 to 24.

**26.** A vehicle system provided in a vehicle that is capable of running in an autonomous driving mode, the vehicle system comprising:

a plurality of sensors each configured to acquire detection data indicating a surrounding environment of the vehicle;
a use priority determination module configured to determine a priority for use among the plurality of sensors, based on predetermined information; and
a surrounding environment identification module configured to identify a surrounding environment of the vehicle, based on the plurality of detection data and the priority for use.

**27.** The vehicle system according to claim 26, wherein
the surrounding environment identification module is configured to:

generate a plurality of pieces of surrounding environment information indicating a surrounding environment of the vehicle, based on the plurality of detection data;
compare the plurality of pieces of surrounding environment information in an overlapping area where detection areas of the plurality of sensors overlap each other; and
determine surrounding environment information that is adopted in the overlapping area based on the priority for use, in the case where the plurality of pieces of surrounding environment information do not coincide with each other.

**28.** The vehicle system according to claim 26,
wherein the surrounding environment identification module is configured to:
determine detection data that is adopted in the overlapping area where the detection areas of the plurality of sensors overlap each other, based on the priority for use.

**29.** The vehicle system according to claim 26 or 27,
wherein the predetermined information includes information indicating brightness in the surrounding environment.

**30.** The vehicle system according to claim 26 or 27,
wherein the predetermined information includes information indicating brightness in the surrounding environment and weather information.

**31.** The vehicle system according to claim 26 or 27,
wherein the predetermined information includes information on detection accuracies for the plurality of sensors.

**32.** A vehicle that is capable of running in an autonomous driving mode, the vehicle comprising the vehicle system according to any one of claims 26 to 31.

**33.** A vehicle system provided in a vehicle that is capable of running in an autonomous driving mode, the vehicle system comprising:

a first sensor configured to acquire first detection data indicating a surrounding environment of the vehicle at a first frame rate;
a second sensor configured to acquire second detection data indicating a surrounding environment of the vehicle at a second frame rate;
a first generator configured to generate first surrounding environment information indicating a surrounding environment of the vehicle based on the first detection data; and
a second generator configured to generate second surrounding environment information indicating a surrounding environment of the vehicle based on the second detection data,
wherein an acquisition start time for each frame of the first detection data and an acquisition start time for each frame of the second detection data are different from each other.

**34.** The vehicle system according to claim 33,
wherein the first sensor is a camera, and
wherein the second sensor is a laser radar.

**35.** The vehicle system according to claim 34, further comprising:

a lighting unit configured to emit light towards an outside of the vehicle; and
a lighting control module configured to cause the lighting unit to be turned on at a third rate.

**36.** The vehicle system according to claim 35,
wherein the third rate is the same as the first frame rate, and
wherein the lighting unit is turned on during an acquisition period for each frame of the first detection data and is turned off during an acquisition period for each frame of the second detection data.

**37.** The vehicle system according to claim 35,
wherein the third rate is a half of the first frame rate,
wherein the lighting unit is turned on during an acquisition period for a first frame of the first detection data and is turned off during an acquisition period for a second frame of the first detection data, and
wherein the second frame is a frame that is acquired subsequent to the first frame by the first sensor.

**38.** The vehicle system according to any one of claims 33 to 37,
wherein the second sensor is configured to acquire the second detection data at least during a first period defined between an acquisition end time for a first frame of the first detection data and an acquisition start time for a second frame of the first detection data, wherein the second frame is a frame that is acquired subsequent to the first frame by the first sensor.

**39.** The vehicle system according to claim 38,
wherein an interval between an acquisition start time for a first frame of the second detection data that is acquired at least during the first period and an acquisition start time for a first frame of the first detection data is greater than a half of an acquisition period for a first frame of the first detection data and is smaller than an acquisition period for the first detection data.

**40.** A vehicle that is capable of running in an autonomous driving mode, the vehicle comprising the vehicle system according to any one of claims 33 to 39.

**41.** A vehicle system provided in a vehicle that is capable of running in an autonomous driving mode, the vehicle system comprising:

a first sensing system comprising:

a plurality of first sensors each disposed in a first area of the vehicle and configured to acquire first detection data indicating a surrounding environment of the vehicle; and
a first control unit configured to generate first surrounding environment information indicating a surrounding environment of the vehicle in a first peripheral area of the vehicle, based on the first detection data;

a second sensing system comprising:

a plurality of second sensors each disposed in a second area of the vehicle and configured to acquire second detection data indicating a surrounding environment of the vehicle, wherein the second area is different from the first area; and
a second control unit configured to generate second surrounding environment information indicating a surrounding environment of the vehicle in a second circumferential area of the vehicle, based on the second detection data; and
a third control unit configured to finally identify a surrounding environment of the vehicle in an overlapping peripheral area where the first peripheral area and the second peripheral area overlap each other, based on at least one of the first surrounding environment information and the second surrounding environment information.

42. The vehicle system according to claim 41,
wherein the third control unit is configured to finally identify the surrounding environment of the vehicle in the overlapping peripheral area, based on a relative positional relationship between the vehicle and the overlapping peripheral area and at least one of the first surrounding environment information and the second surrounding environment information.

43. The vehicle system according to claim 42,
wherein the third control unit is configured to:

finally identify a surrounding environment of the vehicle in a first partial area of the overlapping peripheral area, based on the first surrounding environment information; and
finally identify a surrounding environment of the vehicle in a second partial area of the overlapping peripheral area, based on the second surrounding environment information,
wherein a distance between the first partial area and the first area is smaller than a distance between the first partial area and the second area, and
wherein a distance between the second partial area and the second area is smaller than a distance between the second partial area and the first area.

44. The vehicle system according to claim 41, wherein
in the case where a first value of a first parameter that is indicated by the first surrounding environment information is different from a second value of the first parameter that is indicated by the second surrounding environment information, the third control unit is configured to finally identify an average value between the first value and the second value as a value of the first parameter, and
wherein the first parameter is a parameter related to a relative positional relationship between a target object existing in the overlapping peripheral area and the vehicle.

45. The vehicle system according to claim 41, wherein
the third control unit is configured to finally identify a surrounding environment of the vehicle in the overlapping peripheral area, based on one of the first surrounding environment information and the second surrounding environment information, information related to detection accuracies for the plurality of first sensors, and information related to detection accuracies for the plurality of second sensors.

46. A vehicle that is capable of running in an autonomous driving mode, the vehicle comprising the vehicle system according to any one of claims 41 to 45.

# FIG. 1

VEHICLE CONTROL UNIT

FRONT

LEFT ←→ RIGHT

REAR

*FIG. 2*

LEFT FRONT LIGHTING SYSTEM — 4a

40a — CONTROL UNIT

LIGHTING UNIT — 42a
CAMERA — 43a
LiDAR UNIT — 44a
MILLIMETER WAVE RADAR — 45a

2

RIGHT FRONT LIGHTING SYSTEM

4b — 

40b — CONTROL UNIT

LIGHTING UNIT — 42b
CAMERA — 43b
LiDAR UNIT — 44b
MILLIMETER WAVE RADAR — 45b

5 — SENSOR
8 — HMI
9 — GPS
10 — RADIO COMMUNICATION UNIT
11 — STORAGE DEVICE

3 — VEHICLE CONTROL UNIT

12 — STEERING ACTUATOR
14 — BRAKE ACUATOR
16 — ACCELERATOR ACTUATOR

13 — STEERING DEVICE
15 — BRAKE DEVICE
17 — ACCELERATOR DEVICE

4c

LEFT REAR LIGHTING SYSTEM

40c — CONTROL UNIT

LIGHTING UNIT — 42c
CAMERA — 43c
LiDAR UNIT — 44c
MILLIMETER WAVE RADAR — 45c

4d

RIGHT REAR LIGHTING SYSTEM

40d — CONTROL UNIT

LIGHTING UNIT — 42d
CAMERA — 43d
LiDAR UNIT — 44d
MILLIMETER WAVE RADAR — 45d

# FIG. 3

40a
CONTROL UNIT

460a
USE FREQUENCY SETTING MOUDLE

410a
LIGHTING CONTROL MODULE → LIGHTING UNIT — 42a

420a
CAMERA CONTROL MODULE → CAMERA — 43a

450a
SURROUNDING ENVIRONMENT INFORMATION FUSING MODULE

430a
LiDAR CONTROL MODULE → LiDAR UNIT — 44a

440a
MILLIMETER WAVE RADAR CONTROL MODULE → MILLIMETER WAVE RADAR — 45a

# FIG. 4

# FIG. 5

```
                    ┌─────────────┐
                    │    START    │
                    └─────────────┘
                           │
                           ▼
S10 ╮
    ╱─────────────────────────────────────╲
   ╱   HAS INFORMATION INDICATING           ╲  NO
   ╲   BRIGHTNESS OF SURROUNDING            ╱─────┐
    ╲  ENVIRONMENT BEEN RECEIVED?          ╱      │
      ╲─────────────────────────────────╱        │
                    │ YES                          │
                    ▼                              │
S11 ╮                                              │
    ┌─────────────────────────────────────┐       │
    │  SET USE FREQUENCY FOR CAMERA,       │       │
    │ LiDAR UNIT AND MILLIMETER WAVE RADAR │       │
    └─────────────────────────────────────┘       │
                    │                              │
                    ▼                              │
            ┌─────────────┐                        │
            │     END     │                        │
            └─────────────┘
```

# FIG. 6

```
                    ┌─────────────┐
                    │    START    │
                    └──────┬──────┘
                           │          ┌──────────┐
                           ▼          │          │
  S20 ─┐  ╱────────────────────────────╲         │
       │ │ HAS INFORMATION INDICATING   │        │
       │ │ BRIGHTNESS OF SURROUNDING     │ NO     │
       │ │ ENVIRONMENT AND INFORMATION   ├────────┘
       │ │ ON WEATHER IN CURRENT POSITION│
       │  ╲OF VEHICLE BEEN RECEIVED?    ╱
          └──────────────┬────────────┘
                         │ YES
                         ▼
  S21 ─┐  ┌──────────────────────────────┐
       │  │ SET USE FREQUENCY FOR CAMERA, │
       │  │ LiDAR UNIT AND MILLIMETER WAVE RADAR │
          └──────────────┬────────────┘
                         │
                         ▼
                  ┌─────────────┐
                  │     END     │
                  └─────────────┘
```

# FIG. 7

```
                      ┌─────────────┐
                      │    START    │
                      └──────┬──────┘
                             │
                             ▼ ◄─────────────────┐
S30 ┐                                            │
      ╱─────────────────────────────────╲        │
     ╱   HAS INFORMATION ON SPEED         ╲      │
     ╲   OF VEHICLE BEEN RECEIVED?         ╱ NO ─┘
      ╲─────────────────────────────────╱
                     │
                     ▼ YES
S31 ┐
    ┌─────────────────────────────────────┐
    │   SET USE FREQUENCY FOR CAMERA,      │
    │ LiDAR UNIT AND MILLIMETER WAVE RADAR │
    └───────────────────┬─────────────────┘
                        │
                        ▼
                 ┌─────────────┐
                 │     END     │
                 └─────────────┘
```

# FIG. 8

START

S40 — HAS INFORMATION INDICATING TRVELING DIRECTION OF VEHICLE BEEN RECEIVED?

NO

YES

S41 — SET INDIVIDUALLY USE FREQUENCY FOR SENSOR DISPOSED IN LEFT FRONT LIGHTING SYSTEM, USE FREQUENCY FOR SENSOR DISPOSED IN RIGHT FRONT LIGHTING SYSTEM, USE FREQUENCY FOR SENSOR DISPOSED IN LEFT FRONT LIGHTING SYSTEM, USE FREQUENCY FOR SENSOR DISPOSED IN RIGHT REAR LIGHTING SYSTEM

END

# FIG. 9

*FIG. 10*

LEFT FRONT LIGHTING SYSTEM — 104a

CONTROL UNIT

LIGHTING UNIT — 142a

CAMERA — 143a

LiDAR UNIT — 144a

MILLIMETER WAVE RADAR — 145a

140a

102

RIGHT FRONT LIGHTING SYSTEM

104b

140b

CONTROL UNIT

LIGHTING UNIT — 142b

CAMERA — 143b

LiDAR UNIT — 144b

MILLIMETER WAVE RADAR — 145b

105 SENSOR

108 HMI

109 GPS

110 RADIO COMMUNICATION UNIT

111 STORAGE DEVICE

103 — VEHICLE CONTROL UNIT

112 STEERING ACTUATOR

114 BRAKE ACUATOR

116 ACCELERATOR ACTUATOR

113 STEERING DEVICE

115 BRAKE DEVICE

117 ACCELERATOR DEVICE

104c LEFT REAR LIGHTING SYSTEM

140c

CONTROL UNIT

LIGHTING UNIT — 142c

CAMERA — 143c

LiDAR UNIT — 144c

MILLIMETER WAVE RADAR — 145c

104d RIGHT REAR LIGHTING SYSTEM

140d

CONTROL UNIT

LIGHTING UNIT — 142d

CAMERA — 143d

LiDAR UNIT — 144d

MILLIMETER WAVE RADAR — 145d

# FIG. 11

CONTROL UNIT 140a

LIGHTING CONTROL MODULE 1410a ⟷ LIGHTING UNIT 142a

CAMERA CONTROL MODULE 1420a ⟷ CAMERA 143a

SURROUNDING ENVIRONMENT INFORMATION FUSING MODULE 1450a

LiDAR CONTROL MODULE 1430a ⟷ LiDAR UNIT 144a

MILLIMETER WAVE RADAR CONTROL MODULE 1440a ⟷ MILLIMETER WAVE RADAR 145a

# FIG. 12

## FIG. 13

## FIG. 14

# FIG. 15

*FIG. 16*

EP 3 664 064 A1

# FIG. 17

96

# FIG. 18

# FIG. 19

START

S201

IS VEHICLE AT A HALT? — NO

YES

S202

ACQUIRE CURRENTN POSITION
INFORMATION BY USE OF GPS

S203

ACQUIRE MAP INFORMATION

S204

DOES TEST OBJECT FOR DETERMINING
DETECTION ACCURACY FOR SENSOR
EXIST ON PERIPHERY OF VEHICLE? — NO

YES

S205

ACQUIRE INFORMATION ON TEST OBJECT

S206

ACQUIRE DETECTION DATA
DETECTED BY EACH SENSOR

S207

ACQUIRE SURROUNDING ENVIRONMENT
INFORMATION BASED ON DETECTION DATA

S208

DETERMINE DETECTION ACCURACY FOR
EACH SENSOR BY COMPARING INFORMATION
ON TEST OBJECT WITH EACH PIECE OF
SURROUNDING ENVIRONMENT INFORMATION

END

## FIG. 20

START

S220
ACQUIRE IMAGE DATA

S221
ACQUIRE 3D
MAPPING DATA

S222
ACQUIRE DETECTION
DATA DETECTED BY
MILLIMETER WAVE RADAR

S223
GENERATE SURROUNDING
ENVIRONMENT
INFORMATION I1

S224
GENERATE SURROUNDING
ENVIRONMENT
INFORMATION I2

S225
GENERATE SURROUNDING
ENVIRONMENT
INFORMATION I3

S226
GENERATE FUSED
SURROUNDING ENVIRONMENT
INFORMATION If

DETECTION ACCURACY
INFORMATION

END

# FIG. 21A

```
        ╭─────────╮
        │  START  │
        ╰────┬────╯
             │
             ▼                        ╭─S230
  ┌────────────────────────────────┐
  │  DETERMINE DETECTION ACCURACY  │
  │  FOR EACH OF CAMERA, LiDAR UNIT,│
  │   AND MILLIMETER WAVE RADAR    │
  └────────────────┬───────────────┘
             │
             ▼                        ╭─S231
  ┌────────────────────────────────┐
  │ DETERMINE DETECTION DATA ADOPTED│
  │    IN EACH OVERLAPPING AREA     │
  └────────────────┬───────────────┘
             │
             ▼
        ╭─────────╮
        │   END   │
        ╰─────────╯
```

# FIG. 21B

START

ACQUIRE IMAGE DATA — S240

ACQUIRE 3D MAPPING DATA — S241

ACQUIRE DETECTION DATA DETECTED BY MILLIMETER WAVE RADAR — S242

INFORMATION ON DETECTION DATA ADOPTED IN EACH OVERLAPPING AREA

GENERATE SURROUNDING ENVIRONMENT INFORMATION I1 — S243

GENERATE SURROUNDING ENVIRONMENT INFORMATION I2 — S244

GENERATE SURROUNDING ENVIRONMENT INFORMATION I3 — S245

GENERATE FUSED SURROUNDING ENVIRONMENT INFORMATION If — S246

END

# FIG. 22

START

S250

IS VEHICLE AT A HALT? — NO

YES

S251

ACQUIRE CURRENTN POSITION
INFORMATION FROM GPS

S252

RECEIVE INFRASTRUCTURE INFORMATION
FROM TRAFFIC INFRASTRUCTURE EQUIPMENT

S253

ACQUIRE DETECTION DATA
DETECTED BY EACH SENSOR

S254

ACQUIRE SURROUNDING ENVIRONMENT
INFORMATION BASED ON DETECTION DATA

S255

DETERMINE DETECTION ACCURACY
FOR EACH SENSOR BY COMPARING
INFORMATION ON TRAFFIC INFRASTRUCTURE
EQUIPMENT WITH EACH SURROUNDING
ENVIRONMENT INFORMATION

END

# FIG. 23

START

S260

IS VEHICLE AT A HALT? — NO

YES

S261

ACQUIRE DETECTION DATA
DETECTED BY EACH SENSOR

S262

ACQUIRE SURROUNDING ENVIRONMENT
INFORMATION BASED ON DETECTION DATA

S263

DETERMINE DETECTION ACCURACY FOR
EACH SENSOR BY COMPARING PIECES OF
SURROUNDING ENVIRONMENT INFORMATION

END

# FIG. 24

# FIG. 25

VEHICLE CONTROL UNIT

FRONT

LEFT ← → RIGHT

REAR

FIG. 26

# FIG. 27

340a

CONTROL UNIT

3460a

| USE PRIORITY DETERMINATION MODULE |
|---|

3410a

| LIGHTING CONTROL MODULE | ⟷ | LIGHTING UNIT |
|---|---|---|

342a

3450a   3420a

| SURROUNDING ENVIRONMENT INFORMATION FUSING MODULE | | CAMERA CONTROL MODULE | ⟷ | CAMERA |
|---|---|---|---|---|

343a

3430a

| LiDAR CONTROL MODULE | ⟷ | LiDAR UNIT |
|---|---|---|

344a

3440a

| MILLIMETER WAVE RADAR CONTROL MODULE | ⟷ | MILLIMETER WAVE RADAR |
|---|---|---|

345a

3400a

# FIG. 28A

START

S310

HAS INFORMATION INDICATING
BRIGHTNESS OF SURROUNDING
ENVIRONMENT BEEN RECEIVED?

NO

YES

S311

DETERMINE PRIORITY FOR USE
AMONG CAMERA, LiDAR UNIT,
AND MILLIMETER WAVE RADAR

END

*FIG. 28B*

```
                            ┌─────────┐
                            │  START  │
                            └────┬────┘
        ┌────────────────────────┼────────────────────────┐
        │                        │                         │
       ╭S320                    ╭S321                     ╭S322
 ┌──────────────┐      ┌──────────────┐      ┌─────────────────────┐
 │              │      │              │      │  ACQUIRE DETECTION   │
 │ ACQUIRE IMAGE│      │  ACQUIRE 3D  │      │  DATA DETECTED BY    │
 │     DATA     │      │ MAPPING DATA │      │ MILLIMETER WAVE RADAR│
 └──────┬───────┘      └──────┬───────┘      └──────────┬──────────┘
       ╭S323                 ╭S324                      ╭S325
 ┌──────────────┐      ┌──────────────┐      ┌─────────────────────┐
 │GENERATE SUR- │      │GENERATE SUR- │      │GENERATE SUR-        │
 │ROUNDING      │      │ROUNDING      │      │ROUNDING             │
 │ENVIRONMENT   │      │ENVIRONMENT   │      │ENVIRONMENT          │
 │INFORMATION I1│      │INFORMATION I2│      │INFORMATION I3       │
 └──────┬───────┘      └──────┬───────┘      └──────────┬──────────┘
        │                     │                         │
        └─────────────────────┼─────────────────────────┘
                              │              ┌──────────────────┐
                              │◄─────────────┤  INFORMATION ON  │
                             ╭S326           │ PRIORITY FOR USE │
                   ┌──────────────────────┐  └──────────────────┘
                   │ COMPARE PIECES OF    │
                   │ SURROUNDING          │
                   │ ENVIRONMENT INFORMA- │
                   │ TION IN EACH OVER-   │
                   │ LAPPING ARERA        │
                   └──────────┬───────────┘
                             ╭S327
                   ┌──────────────────────┐
                   │   GENERATE FUSED     │
                   │ SURROUNDING ENVIRON- │
                   │ MENT INFORMATION If  │
                   └──────────┬───────────┘
                              │
                         ┌────┴────┐
                         │   END   │
                         └─────────┘
```

# FIG. 29

# FIG. 30A

```
                    ┌─────────┐
                    │  START  │
                    └────┬────┘
                         │           ┌──────────────┐
                         ▼           │              │
                  ╱──────────────────╲             │
                 ╱  HAS INFORMATION    ╲   S330     │
                ╱  INDICATING            ╲──────────┘
                ╲  BRIGHTNESS OF        ╱  NO
                 ╲ SURROUNDING        ╱
                  ╲ ENVIRONMENT      ╱
                   ╲ BEEN RECEIVED? ╱
                    ╲──────┬───────╱
                           │ YES
                           ▼              S331
              ┌────────────────────────────┐
              │  DETERMINE PRIORITY FOR USE │
              │  AMONG CAMERA, LiDAR UNIT,  │
              │  AND MILLIMETER WAVE RADAR  │
              └─────────────┬──────────────┘
                            │              S332
                            ▼
              ┌────────────────────────────┐
              │   DETERMINE DETECTION       │
              │   DATA TO BE ADOPTED IN     │
              │   EACH OVERLAPPING AREA     │
              └─────────────┬──────────────┘
                            │
                            ▼
                       ┌─────────┐
                       │   END   │
                       └─────────┘
```

## FIG. 30B

```
                          ┌──────────┐
                          │  START   │
                          └──────────┘

        ┌─S340              ┌─S341               ┌─S342
┌──────────────────┐ ┌──────────────────┐ ┌──────────────────┐
│                  │ │                  │ │ ACQUIRE DETECTION │           ┌──────────────────┐
│ ACQUIRE IMAGE    │ │  ACQUIRE 3D      │ │ DATA DETECTED BY  │           │  INFORMATION ON  │
│ DATA             │ │  MAPPING DATA    │ │ MILLIMETER WAVE   │           │ DETECTION DATA TO│
│                  │ │                  │ │ RADAR             │           │ BE ADOPTED IN EACH│
└──────────────────┘ └──────────────────┘ └──────────────────┘           │ OVERLAPPING AREA │
                                                                          └──────────────────┘
        ┌─S343              ┌─S344               ┌─S345
┌──────────────────┐ ┌──────────────────┐ ┌──────────────────┐
│ GENERATE         │ │ GENERATE         │ │ GENERATE         │
│ SURROUNDING      │ │ SURROUNDING      │ │ SURROUNDING      │
│ ENVIRONMENT      │ │ ENVIRONMENT      │ │ ENVIRONMENT      │
│ INFORMATION I1   │ │ INFORMATION I2   │ │ INFORMATION I3   │
└──────────────────┘ └──────────────────┘ └──────────────────┘

                    ┌─S346
          ┌──────────────────────┐
          │ GENERATE FUSED       │
          │ SURROUNDING          │
          │ ENVIRONMENT          │
          │ INFORMATION If       │
          └──────────────────────┘

                  ┌──────────┐
                  │   END    │
                  └──────────┘
```

# FIG. 31

*FIG. 32*

LEFT FRONT LIGHTING SYSTEM — 504a

502

RIGHT FRONT LIGHTING SYSTEM — 504b

540a

CONTROL UNIT

LIGHTING UNIT — 542a

CAMERA — 543a

LiDAR UNIT — 544a

MILLIMETER WAVE RADAR — 545a

540b

CONTROL UNIT

LIGHTING UNIT — 542b

CAMERA — 543b

LiDAR UNIT — 544b

MILLIMETER WAVE RADAR — 545b

505 | 508 | 509 | 510

SENSOR | HMI | GPS | RADIO COMMUNICATION UNIT

511

STORAGE DEVICE

503 — VEHICLE CONTROL UNIT

512 | 514 | 516

STEERING ACTUATOR | BRAKE ACUATOR | ACCELERATOR ACTUATOR

513 | 515 | 517

STEERING DEVICE | BRAKE DEVICE | ACCELERATOR DEVICE

504c

LEFT REAR LIGHTING SYSTEM

540c

CONTROL UNIT

LIGHTING UNIT — 542c

CAMERA — 543c

LiDAR UNIT — 544c

MILLIMETER WAVE RADAR — 545c

504d

RIGHT REAR LIGHTING SYSTEM

540d

CONTROL UNIT

LIGHTING UNIT — 542d

CAMERA — 543d

LiDAR UNIT — 544d

MILLIMETER WAVE RADAR — 545d

EP 3 664 064 A1

# FIG. 33

115

# FIG. 34

# FIG. 35

## FIG. 36

CAMERA 543a

LiDAR UNIT 544a

LIGHTING UNIT 542a

# FIG. 37

VEHICLE CONTROL UNIT

FRONT

LEFT ← → RIGHT

REAR

*FIG. 38*

LEFT FRONT LIGHTING SYSTEM ~604a

602

RIGHT FRONT LIGHTING SYSTEM ~604b

640a~

CONTROL UNIT

LIGHTING UNIT ~642a

CAMERA ~643a

LiDAR UNIT ~644a

MILLIMETER WAVE RADAR ~645a

604b~

640b~

CONTROL UNIT

LIGHTING UNIT ~642b

CAMERA ~643b

LiDAR UNIT ~644b

MILLIMETER WAVE RADAR ~645b

605  608  609  610  611

SENSOR  HMI  GPS  RADIO COMMUNICATION UNIT  STORAGE DEVICE

603~ VEHICLE CONTROL UNIT

612  614  616

STEERING ACTUATOR  BRAKE ACUATOR  ACCELERATOR ACTUATOR

613  615  617

STEERING DEVICE  BRAKE DEVICE  ACCELERATOR DEVICE

604c

LEFT REAR LIGHTING SYSTEM

604d

RIGHT REAR LIGHTING SYSTEM

640c~

CONTROL UNIT

LIGHTING UNIT ~642c

CAMERA ~643c

LiDAR UNIT ~644c

MILLIMETER WAVE RADAR ~645c

640d~

CONTROL UNIT

LIGHTING UNIT ~642d

CAMERA ~643d

LiDAR UNIT ~644d

MILLIMETER WAVE RADAR ~645d

# FIG. 39

640a
CONTROL UNIT

6410a
LIGHTING
CONTROL MODULE

LIGHTING UNIT ~ 642a

6420a
CAMERA
CONTROL MODULE

CAMERA ~ 643a

6450a
SURROUNDING
ENVIRONMENT
INFORMATION
FUSING MODULE

6430a
LiDAR CONTROL
MODULE

LiDAR UNIT ~ 644a

6440a
MILLIMETER
WAVE RADAR
CONTROL MODULE

MILLIMETER
WAVE RADAR ~ 645a

FIG. 40

START

S601
ACQUIRE IMAGE DATA

S602
ACQUIRE 3D
MAPPING DATA

S603
ACQUIRE DETECTION
DATA DETECTED BY
MILLIMETER WAVE RADAR

S604
GENERATE SURROUNDING
ENVIRONMENT
INFORMATION $I_{1a}$

S605
GENERATE SURROUNDING
ENVIRONMENT
INFORMATION $I_{2a}$

S606
GENERATE SURROUNDING
ENVIRONMENT
INFORMATION $I_{3a}$

S607
GENERATE FUSED
SURROUNDING ENVIRONMENT
INFORMATION $I_{fa}$

S608
TRANSMIT SURROUNDING
ENVIRONMENT INFORMATION
$I_{fa}$ TO VEHICLE CONTROL UNIT

END

# FIG. 41

# FIG. 42

640b

CONTROL UNIT

6410b

| LIGHTING CONTROL MODULE | ⟷ | LIGHTING UNIT | ~ 642b |

6420b

| CAMERA CONTROL MODULE | ⟷ | CAMERA | ~ 643b |

6450b

| SURROUNDING ENVIRONMENT INFORMATION FUSING MODULE |

6430b

| LiDAR CONTROL MODULE | ⟷ | LiDAR UNIT | ~ 644b |

6440b

| MILLIMETER WAVE RADAR CONTROL MODULE | ⟷ | MILLIMETER WAVE RADAR | ~ 645b |

*FIG. 43*

START

┌─────────────────────┐   ┌─────────────────────┐   ┌─────────────────────────┐
│ S611                │   │ S612                │   │ S613                    │
│ ACQUIRE IMAGE DATA  │   │ ACQUIRE 3D          │   │ ACQUIRE DETECTION       │
│                     │   │ MAPPING DATA        │   │ DATA DETECTED BY        │
│                     │   │                     │   │ MILLIMETER WAVE RADAR   │
└─────────────────────┘   └─────────────────────┘   └─────────────────────────┘

S611 — ACQUIRE IMAGE DATA

S612 — ACQUIRE 3D MAPPING DATA

S613 — ACQUIRE DETECTION DATA DETECTED BY MILLIMETER WAVE RADAR

S614 — GENERATE SURROUNDING ENVIRONMENT INFORMATION $I_{1b}$

S615 — GENERATE SURROUNDING ENVIRONMENT INFORMATION $I_{2b}$

S616 — GENERATE SURROUNDING ENVIRONMENT INFORMATION $I_{3b}$

S617 — GENERATE FUSED SURROUNDING ENVIRONMENT INFORMATION $I_{fb}$

S618 — TRANSMIT SURROUNDING ENVIRONMENT INFORMATION $I_{fb}$ TO VEHICLE CONTROL UNIT

END

# FIG. 44

# FIG. 45

```
            ┌─────────────┐
            │    START    │
            └─────────────┘
                   │
                   ▼              ⌐S620
      ┌───────────────────────────┐
      │   RECEIVE SURROUNDING      │
      │ ENVIRONMENT INFORMATION Iaf│
      └───────────────────────────┘
                   │
                   ▼              ⌐S621
      ┌───────────────────────────┐
      │   RECEIVE SURROUNDING      │
      │ ENVIRONMENT INFORMATION Ibf│
      └───────────────────────────┘
                   │
                   ▼              ⌐S622
      ┌───────────────────────────┐
      │ FINALLY IDENTIFY SURROUNDING│
      │  ENVIRONMENT FOR VEHICLE IN │
      │ OVERLAPPING PERIPHERAL AREA │
      └───────────────────────────┘
                   │
                   ▼              ⌐S623
      ┌───────────────────────────┐
      │ FINALLY IDENTIFY SURROUNDING│
      │ ENVIRONMENT IN FRONT AREA  │
      │       OF VEHICLE           │
      └───────────────────────────┘
                   │
                   ▼
            ┌─────────────┐
            │     END     │
            └─────────────┘
```

## FIG. 46

## FIG. 47

# FIG. 48

FIG. 49

## INTERNATIONAL SEARCH REPORT

| | International application No. |
|---|---|
| | PCT/JP2018/022790 |

**A. CLASSIFICATION OF SUBJECT MATTER**

Int.Cl. G08G1/16(2006.01)i, B60Q1/00(2006.01)i, B60Q1/04(2006.01)i,
B60Q1/14(2006.01)i, B60Q1/24(2006.01)i, B60W40/02(2006.01)i,
G01S17/93(2006.01)i

According to International Patent Classification (IPC) or to both national classification and IPC

**B. FIELDS SEARCHED**

Minimum documentation searched (classification system followed by classification symbols)

Int.Cl. G08G1/00-99/00, B60Q1/00-1/56, B60W10/00-10/30, B60W30/00-50/16,
G01S7/48-7/51, G01S17/00-17/95

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2005-184395 A (SUMITOMO ELECTRIC INDUSTRIES, LTD.) 07 July 2005, paragraphs [0023]-[0061], fig. 1-5 (Family: none) | 1-9 |
| X | JP 2015-212941 A (GOOGLE INC.) 26 November 2015, | 10-11, 33-34 |
| Y | paragraphs [0011]-[0138], fig. 1-7 & US 9098753 | 1-9, 12-16, |
| | B1, column 3, line 8 to column 4, line 49, fig. 1-7 & US 2015/0310281 A1 & EP 2937757 A2 | 26-32, 35-46 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 September 2018 (07.09.2018) | 18 September 2018 (18.09.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2018/022790

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2017/110413 A1 (KOITO MANUFACTURING CO., LTD.) 29 June 2017, paragraphs [0060]-[0142], fig. 1-20 (Family: none) | 4-6, 9, 12-16, 29-30, 32, 35-40 |
| X Y | WO 2016/158238 A1 (DENSO CORP.) 06 October 2016, paragraphs [0013]-[0068], fig. 1-9 & US 2018/0120417 A1, paragraphs [0023]-[0078], fig. 1-9 & JP 2016-191685 A | 17-23 24-25 |
| Y | JP 2013-187862 A (TOPCON CORPORATION) 19 September 2013, paragraphs [0018]-[0140], fig. 1-9 (Family: none) | 24-32, 41-16 |
| Y | JP 2014-2566 A (NEC CORP.) 09 January 2014, paragraphs [0016]-[0120], fig. 1-19 (Family: none) | 27-32 |
| A | WO 2016/158237 A1 (DENSO CORP.) 06 October 2016, paragraphs [0013]-[0069], fig. 1-7 & US 2018/0118201 A1, paragraphs [0020]-[0076], fig. 1-7 & JP 2016-191682 A | 1-46 |
| A | WO 2004/102222 A1 (FUJITSU LTD.) 25 November 2004, page 14, line 23 to page 23, line 6, fig. 1-16 & US 2005/0206553 A1, paragraphs [0022]-[0058], fig. 1-10 | 1-46 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9277887 A
- JP 2017150693 A
- JP 2017150694 A
- JP 2017150695 A
- JP 2017198532 A
- JP 2017198533 A
- JP 2017207498 A